(19) Europäisches Patentamt
European Patent Office
Office européen des brevets

(11) **EP 4 564 763 A1**

(12) **EUROPEAN PATENT APPLICATION**
published in accordance with Art. 153(4) EPC

(43) Date of publication:
**04.06.2025 Bulletin 2025/23**

(21) Application number: **23845899.6**

(22) Date of filing: **15.03.2023**

(51) International Patent Classification (IPC):
**H04L 27/36** (2006.01)    **H04W 52/38** (2009.01)

(52) Cooperative Patent Classification (CPC):
**H04L 27/36; H04W 52/38**

(86) International application number:
**PCT/JP2023/010005**

(87) International publication number:
**WO 2024/024159 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.07.2022 JP 2022120648**

(71) Applicant: **Panasonic Intellectual Property
Corporation
of America
Torrance, CA 90504 (US)**

(72) Inventor: **MURAKAMI, Yutaka
Kadoma-shi, Osaka 571-0057 (JP)**

(74) Representative: **Grünecker Patent- und
Rechtsanwälte
PartG mbB
Leopoldstraße 4
80802 München (DE)**

(54) **COMMUNICATION DEVICE AND COMMUNICATION METHOD**

(57) A communication device according to the present invention comprises: a communication unit that transmits a first signal and receives the first signal in a state in which there is at least one communication device that uses the same frequency and the same time period to perform processing for transmission and reception, and in which in a first time period in a frequency band in which the processing can be carried out, no signal is transmitted from another communication device or a plurality of communication devices; and a control unit that determines a transmission power based on the received first signal, wherein in a second time period in the frequency band, the communication unit uses the transmission power to transmit a second signal to said one communication device or a communication device among the plurality of communication devices.

FIG. 22A

EP 4 564 763 A1

**Description**

Technical Field

The present disclosure relates to a communication apparatus and a communication method.

Background Art

For example, a communication method of improving data transmission efficiency in a radio communication system and improving delay in communication includes Full Duplex communication.

An example of the Full Duplex communication is disclosed in Patent Literature (hereinafter referred to as "PTL") 1, and FIG. 37 of the present disclosure illustrates an example of a radio communication system described in PTL 1.

For example, in the radio communication system described in PTL 1, access point 11 can perform Full Duplex communication as illustrated in FIG. 37, and at the same frequency band (same channel), it is possible to perform frame reception from terminal 1 labeled 21 and frame transmission to terminal 2 labeled 22 simultaneously. In addition, the frame reception at access point 11 from terminal 2 labeled 22 and the frame transmission from access point 11 to terminal 1 labeled 21 may be performed simultaneously at the same frequency band.

Citation List

Patent Literature

PTL 1
Japanese Patent Application Laid Open No. 2018-152723

Summary of Invention

Technical Problem

However, access point 11 is provided with a mechanism for canceling a self-interference signal generated in its own apparatus during the Full Duplex communication. That is, during the Full Duplex communication, signals wrap around from a transmitter to a receiver of access point 11, or signal reflection occurs, which involves a problem in that these signals serve as self-interference signals and thus deteriorate characteristics of received signals.

A non-limiting and exemplary embodiment of the present disclosure facilitates providing a technology for achieving suppression of deterioration of signal characteristics due to self-interference signals during the Full Duplex communication.

Solution to Problem

A communication apparatus according to an exemplary embodiment of the present disclosure includes: a communicator, which in operation, at a frequency band, transmits a first signal and receives the first signal in first time, under a situation where there is no signal transmission from another communication apparatus or a plurality of communication apparatuses, the frequency band being a band where at least one communication apparatus that performs processing of transmission and reception using the same frequency and the same time band is present and where the processing is possible; and a controller, which in operation, determines transmission power that is based on the received first signal, in which the communicator, at the frequency band, transmits a second signal in second time to the another communication apparatus or a communication apparatus of the plurality of communication apparatuses, using the transmission power.

A communication method according to an exemplary embodiment of the present disclosure includes: at a frequency band, transmitting a first signal and receiving the first signal, by a communication apparatus in first time, under a situation where there is no signal transmission from another communication apparatus or a plurality of communication apparatuses, the frequency band being a band where at least one communication apparatus that performs processing of transmission and reception using the same frequency and the same time band is present and where the processing is possible; determining, by the communication apparatus, transmission power that is based on the received first signal; and, at the frequency band, transmitting, by the communication apparatus in second time, a second signal to the another communication apparatus or a communication apparatus of the plurality of communication apparatuses, using the transmission power.

It should be noted that general or specific embodiments may be implemented as a system, an apparatus, a method, an integrated circuit, a computer program, a storage medium, or any selective combination thereof.

Advantageous Effects of Invention

According to a non-limiting and exemplary embodiment of the present disclosure, it is possible to achieve suppression of deterioration of signal characteristics due to self-interference signals during the Full Duplex communication.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

Brief Description of Drawings

FIG. 1A illustrates an exemplary configuration of a communication apparatus in Embodiment 1;
FIG. 1B illustrates an exemplary configuration of the communication apparatus different from the configuration in FIG. 1A in Embodiment 1;
FIG. 1C illustrates an exemplary configuration of the communication apparatus different from the configurations in FIGS. 1A and 1B in Embodiment 1;
FIG. 2 illustrates an exemplary configuration of an i-th transmitter;
FIG. 3 illustrates an exemplary configuration of transmission panel antenna i in FIGS. 1A, 1B, and 1C;
FIG. 4 illustrates an exemplary configuration of reception panel antenna i in FIGS. 1A, 1B, and 1C;
FIG. 5 illustrates an exemplary configuration of a transmission apparatus in a case of using an OFDM scheme;
FIG. 6 illustrates an exemplary configuration of a reception apparatus in a case of using an OFDM scheme;
FIG. 7 illustrates an exemplary configuration of the reception apparatus in a case of using a single-carrier scheme based on DFT;
FIG. 8 illustrates an exemplary configuration of the reception apparatus in a case of using a single-carrier scheme based on time domain;
FIG. 9 illustrates another exemplary configuration of the communication apparatus in Embodiment 1;
FIG. 10 illustrates still another exemplary configuration of the communication apparatus in Embodiment 1;
FIG. 11A illustrates an exemplary radio system related to the present invention;
FIG. 11B illustrates exemplary communication statuses of TRP 1 and NR-UE 1 in a frequency axis in FIG. 11A;
FIG. 12A illustrates exemplary transmission statuses of TRP 1 and NR-UE 1 in a time axis in FIG. 11A and FIG. 11B;
FIG. 12B illustrates exemplary transmission statuses of TRP 1 and NR-UE 1 in the time axis in FIG. 11A and FIG. 11B, which are different from those in FIG. 12A;
FIG. 12C illustrates other exemplary transmission statuses of TRP 1 and NR-UE 1 in the time axis in FIG. 11A and FIG. 11B, which are different from those in FIG. 12A;
FIG. 12D illustrates still other exemplary transmission statuses of TRP 1 and NR-UE 1 in the time axis in FIG. 11A and FIG. 11B, which are different from those in FIG. 12A;
FIG. 12E illustrates yet other exemplary transmission statuses of TRP 1 and NR-UE 1 in the time axis in FIG. 11A and FIG. 11B, which are different from those in FIG. 12A;
FIG. 13 illustrates an exemplary configuration of an apparatus of TRP 1;
FIG. 14 illustrates an exemplary configuration of an apparatus of NR-UE 1;
FIG. 15A illustrates an exemplary radio system different from that in FIG. 11A;
FIG. 15B illustrates exemplary communication statuses of TRP 1 and NR-UE 1 in a frequency axis in FIG. 15A;
FIG. 15C illustrates exemplary communication statuses of TRP and NR-UE 1 in a time axis in FIG. 15A;
FIG. 15D illustrates other exemplary communication statuses of TRP 1 and NR-UE 1 in a frequency axis in FIG. 15A;
FIG. 16 illustrates an exemplary configuration of a transmission power controller included in TRP 1 of FIG. 13 and NR-UE 1 FIG. 14;
FIG. 17 illustrates an example when an NR-UE and a TRP perform TDD communication;
FIG. 18A illustrates an example when an NR-UE and a TRP perform FDD communication;
FIG. 18B illustrates an example when an NR-UE and a TRP perform the FDD communication, which is different from that in FIG. 18A;
FIG. 18C illustrates an example when an NR-UE and a TRP perform the FDD communication, which is different from those in FIG. 18A and FIG. 18B;
FIG. 18D illustrates an example when an NR-UE and a TRP perform the FDD communication, which is different from those in FIG. 18A, FIG. 18B, and FIG. 18C;

FIG. 19 illustrates an example when TRP 1 and NR-UE 1 perform the TDD communication or FDD communication;

FIG. 20A illustrates an example of exchange between TRP 1 and NR-UE 1 for open loop transmission power control in NR-UE 1 of a case where TRP 1 and NR-UE 1 perform the TDD communication or FDD communication;

FIG. 20B illustrates an example of exchange between TRP 1 and NR-UE 1 for closed loop transmission power control in NR-UE 1 of a case where TRP 1 and NR-UE 1 perform the TDD communication or FDD communication;

FIG. 21 illustrates an example of exchange between TRP 1 and NR-UE 1 for open loop transmission power control in TRP 1 of a case where TRP 1 and NR-UE 1 perform the TDD communication or FDD communication;

FIG. 22A illustrates an example of exchange between TRP 1 and NR-UE 1 for the open loop transmission power control in NR-UE 1 of a case where TRP 1 and NR-UE 1 perform communication based on FIG. 11A and the like;

FIG. 22B illustrates an example of exchange between TRP 1 and NR-UE 1 for the closed loop transmission power control in NR-UE 1 of a case where TRP 1 and NR-UE 1 perform the communication based on FIG. 11A and the like;

FIG. 22C illustrates another example of exchange between TRP 1 and NR-UE 1 for the closed loop transmission power control in NR-UE 1 of a case where TRP 1 and NR-UE 1 perform the communication based on FIG. 11A and the like;

FIG. 23A illustrates an exemplary radio system in Embodiment 2;

FIG. 23B illustrates exemplary communication statuses of TRP 1, TRP 2, and NR-UE 1 in a frequency axis in FIG. 23A;

FIG. 23C illustrates other exemplary communication statuses of TRP 1, TRP 2, and NR-UE 1 in a frequency axis in FIG. 23A;

FIG. 24A illustrates an exemplary configuration of an apparatus of TRP 1;

FIG. 24B illustrates an exemplary configuration of an apparatus of TRP 2;

FIG. 25A illustrates an example of exchange between TRP 1, TRP 2, and NR-UE 1 for open loop transmission power control in NR-UE 1 of a case where TRP 1, TRP 2, and NR-UE 1 perform communication based on FIG. 23A and the like;

FIG. 25B illustrates an example of exchange between TRP 1, TRP 2, and NR-UE 1 for open loop transmission power control in TRP 1 and closed loop transmission power control in NR-UE 1 of a case where TRP 1, TRP 2, and NR-UE 1 perform the communication based on FIG. 23A and the like;

FIG. 25C illustrates an example of exchange between TRP 1, TRP 2, and NR-UE 1 for the closed loop transmission power control in NR-UE 1 of a case where TRP 1, TRP 2, and NR-UE 1 perform the communication based on FIG. 23A and the like;

FIG. 26 illustrates an example when NR-UE 1 perform communication with TRP 1 and TRP 2;

FIG. 27A1 illustrates exemplary frequencies used by modulation signals transmitted by apparatuses of TRP 1, TRP 2, and NR-UE 1.

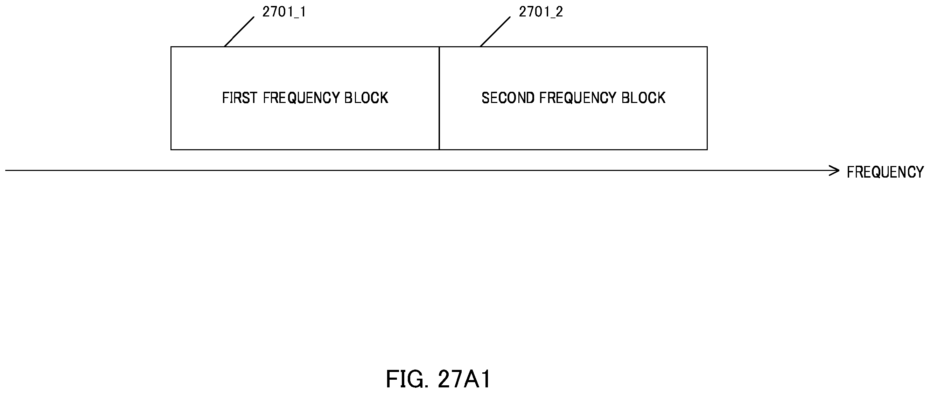

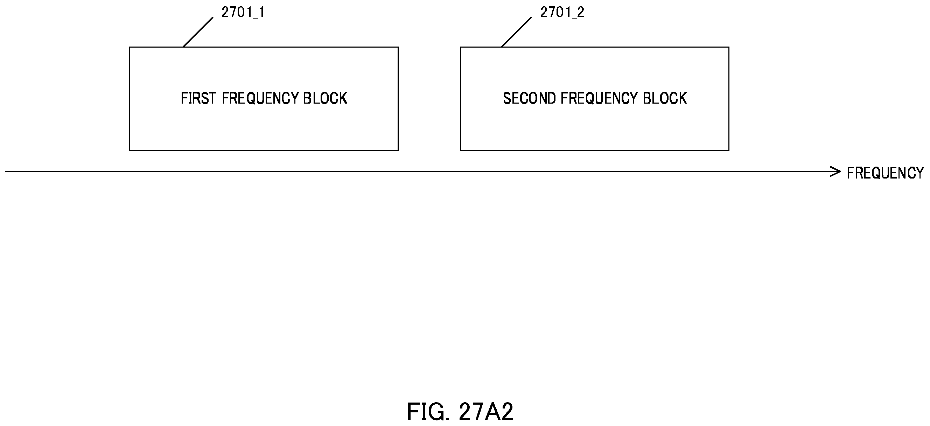

FIG. 27A2 illustrates other exemplary frequencies used by the modulation signals transmitted by the apparatuses of TRP 1, TRP 2, and NR-UE 1, which are different from those in FIG. 27A1;

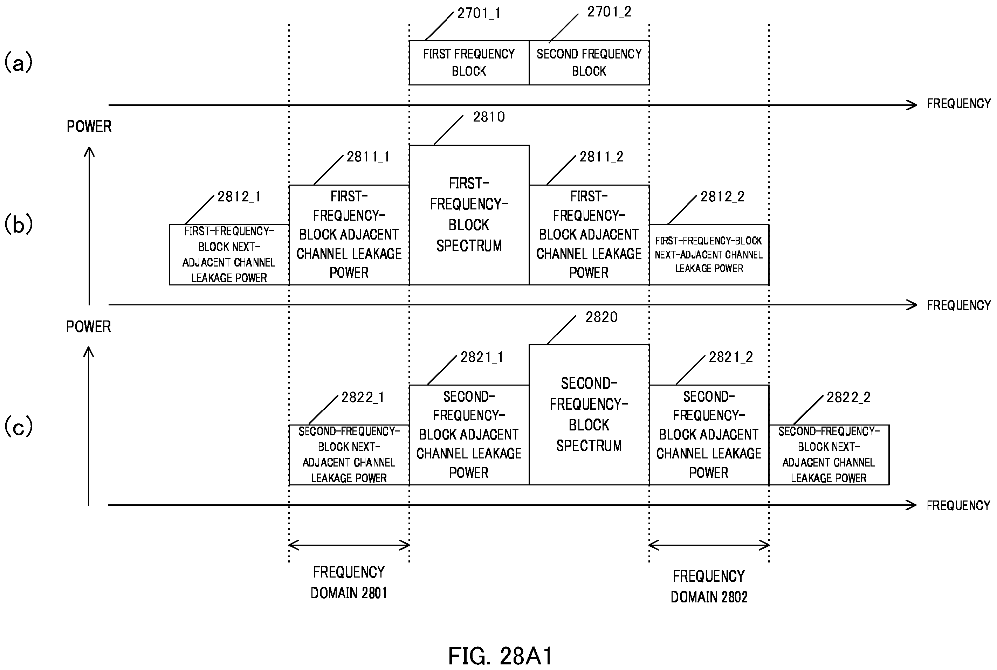

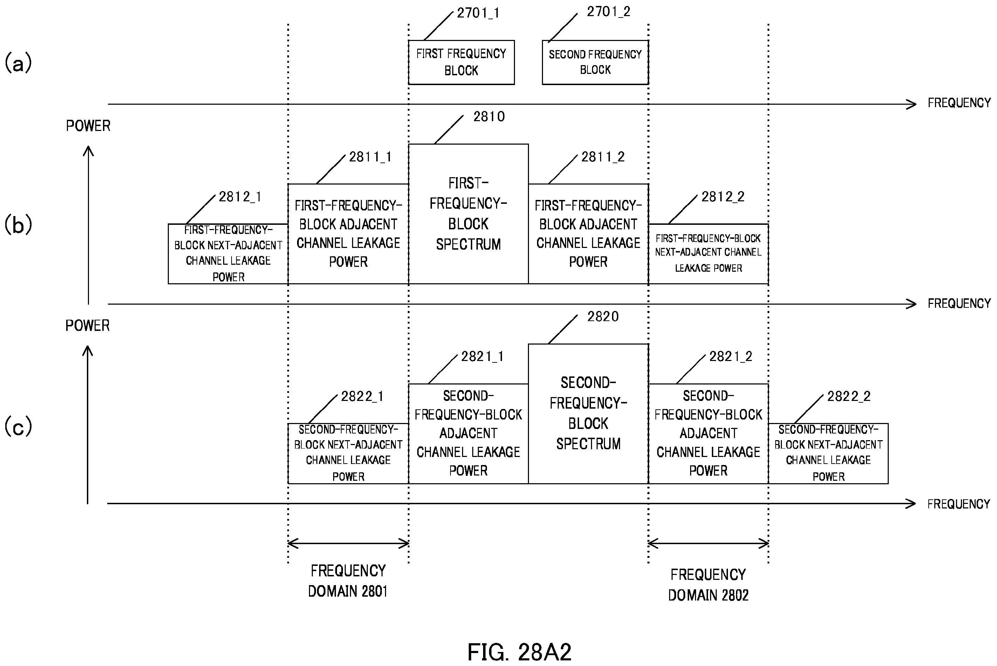

FIG. 28A1 illustrates exemplary spectra of a case where the modulation signals transmitted by the apparatuses of TRP 1, TRP 2, and NR-UE 1 use the frequencies as illustrated in FIG. 27A1;

FIG. 28A2 illustrates exemplary spectra of a case where the modulation signals transmitted by the apparatuses of TRP 1, TRP 2, and NR-UE 1 use the frequencies as illustrated in FIG. 27A2;

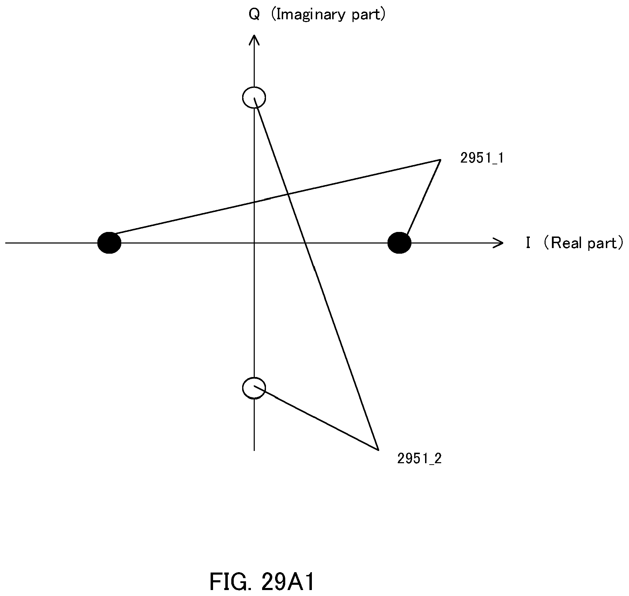

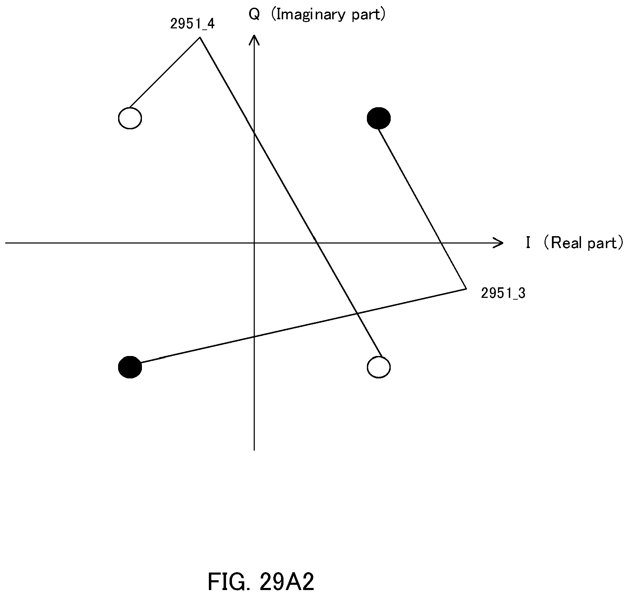

FIG. 29A1 illustrates an example of signal-point arrangement in In-phase Quadrature (I-Q) of Binary Phase Shift Keying (BPSK);

FIG. 29A2 illustrates another example of the signal-point arrangement in I-Q of the BPSK;

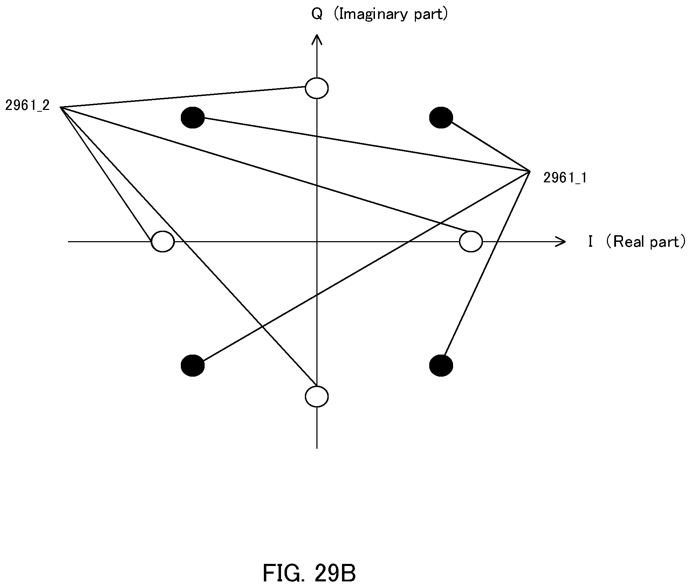

FIG. 29B illustrates an example of signal-point arrangement in I-Q of Quadrature Phase Shift Keying (QPSK);

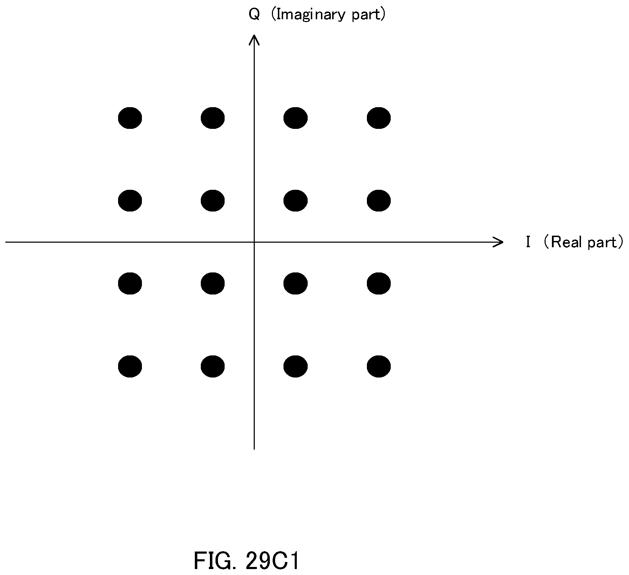

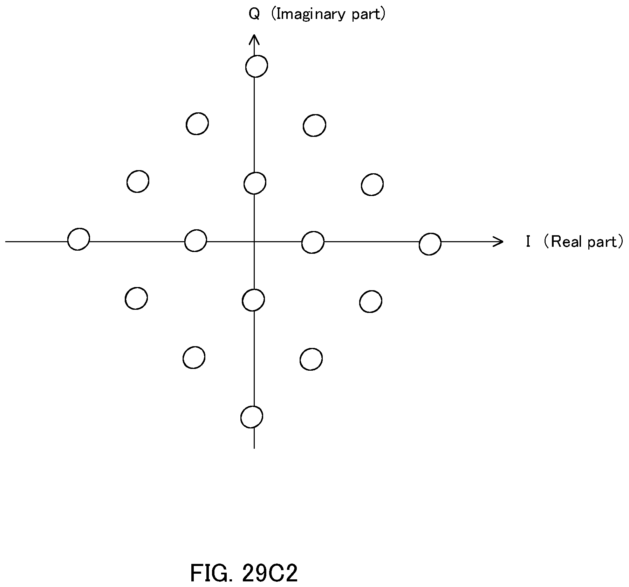

FIG. 29C1 illustrates an example of signal-point arrangement in I-Q of 16 Quadrature Amplitude Modulation (16QAM);

FIG. 29C2 illustrates another example of the signal-point arrangement in I-Q of the 16QAM;

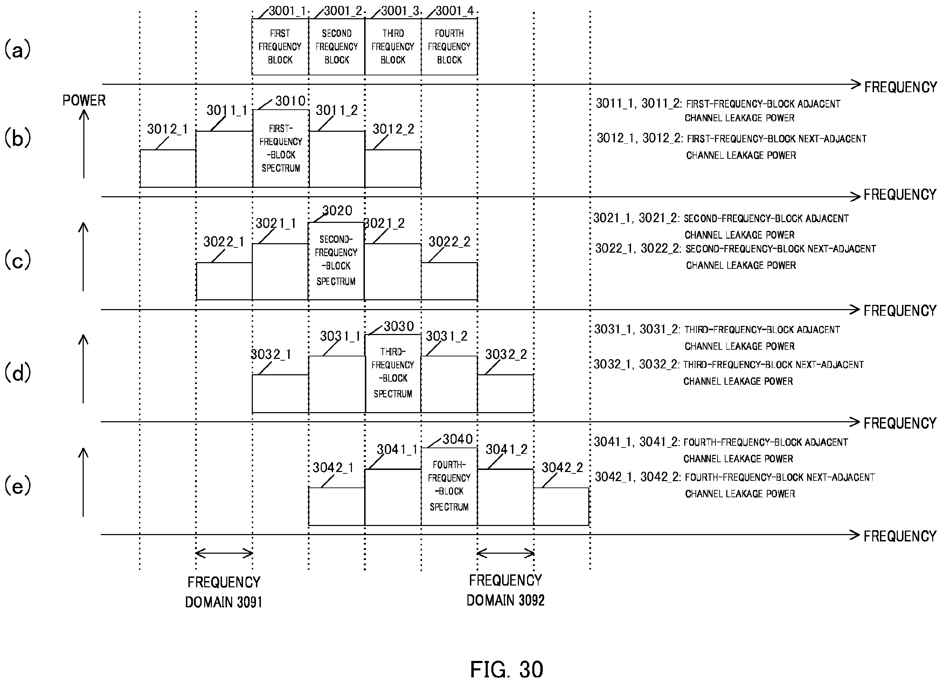

FIG. 30 illustrates exemplary frequencies used by modulation signals transmitted by the apparatuses of TRP 1, TRP 2, and NR-UE 1 and exemplary spectra of the first frequency block to the fourth frequency block;

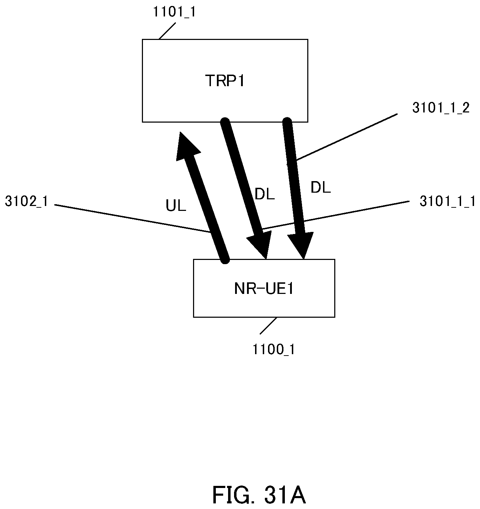

FIG. 31A illustrates an example of communication between TRP 1 and NR-UE 1;

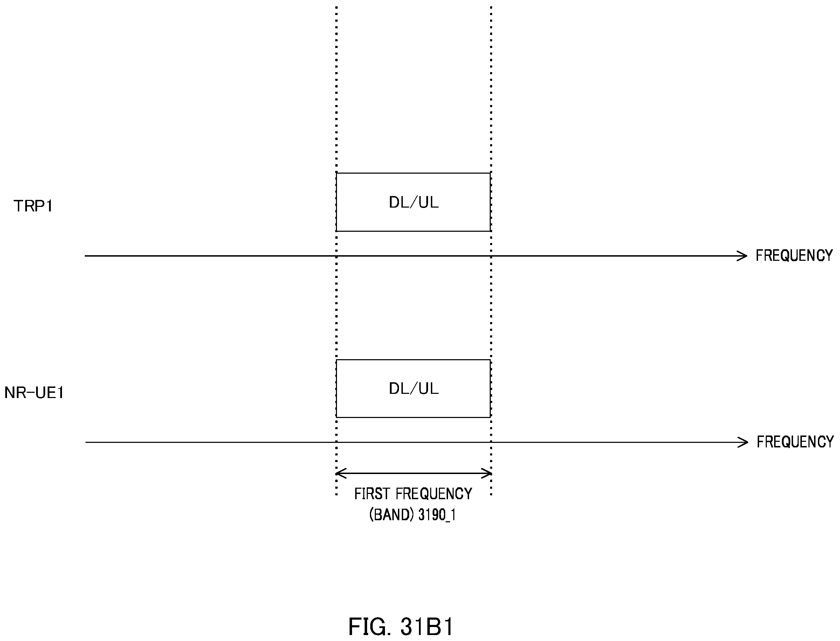

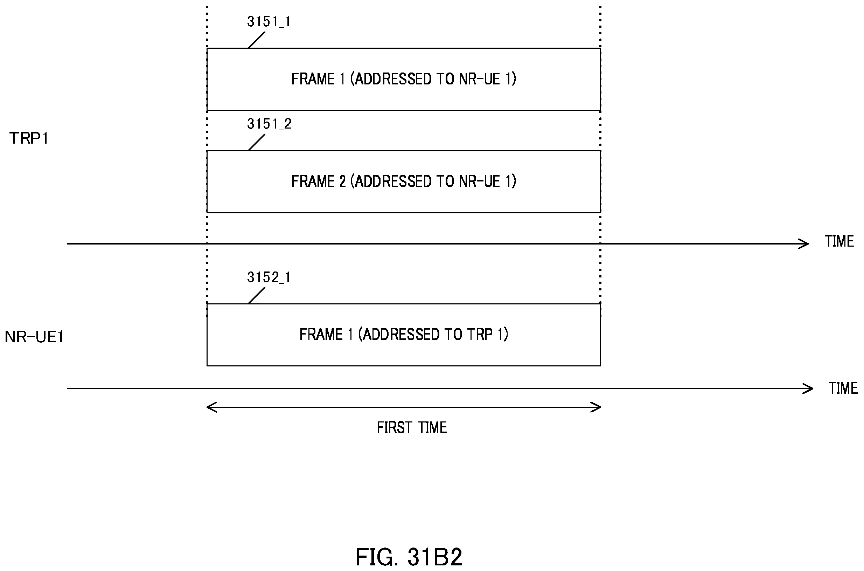

FIG. 31B 1 illustrates exemplary usage statuses of frequencies when TRP 1 and NR-UE 1 perform the communication as illustrated in FIG. 31A;

FIG. 31B2 illustrates exemplary communication statuses in a time axis when TRP 1 and NR-UE 1 perform the communication as illustrated in FIG. 31A and FIG. 31B1;

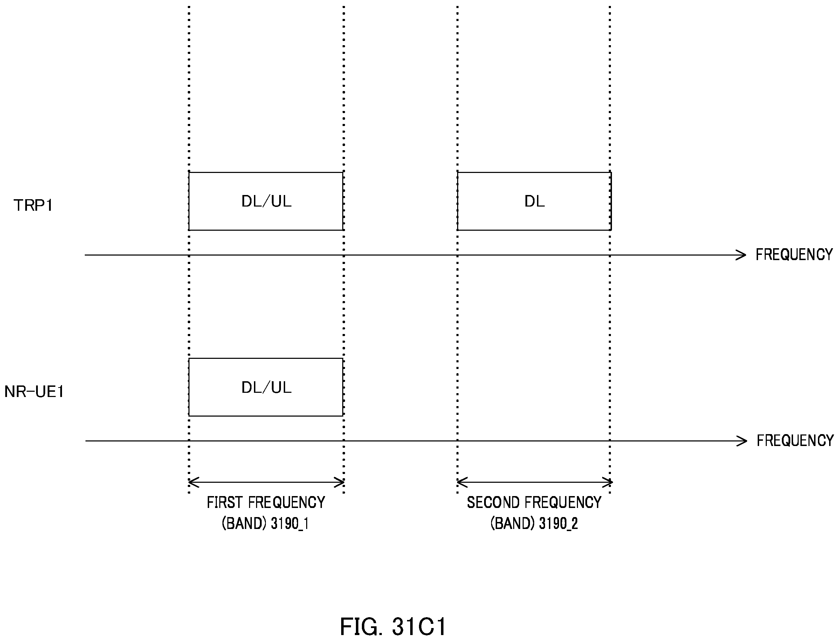

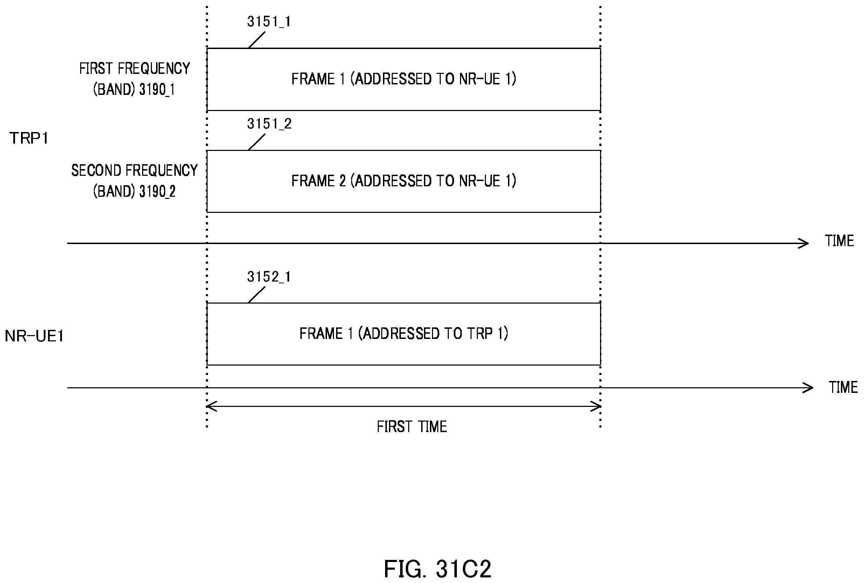

FIG. 31C1 illustrates other exemplary usage statuses of frequencies when TRP 1 and NR-UE 1 perform the communication as illustrated in FIG. 31A;

FIG. 31C2 illustrates exemplary communication statuses in a time axis when TRP 1 and NR-UE 1 perform the communication as illustrated in FIG. 31A and FIG. 31C1;

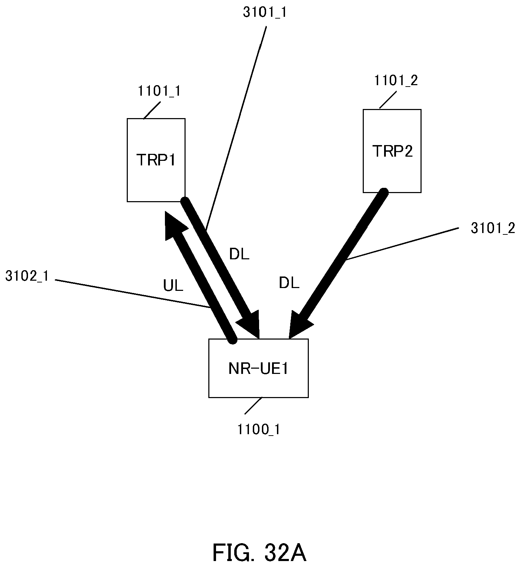

FIG. 32A illustrates an example of communication between TRP 1, TRP 2, and NR-UE 1;

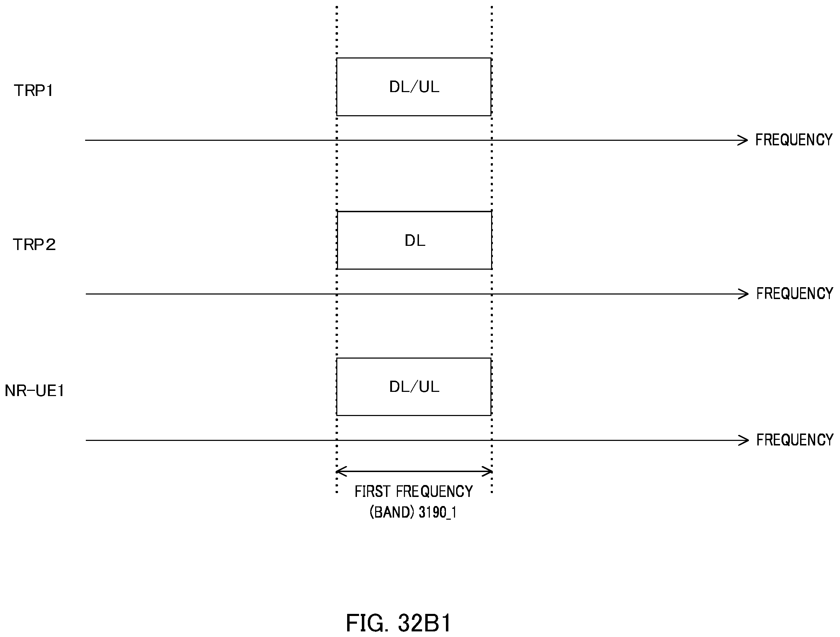

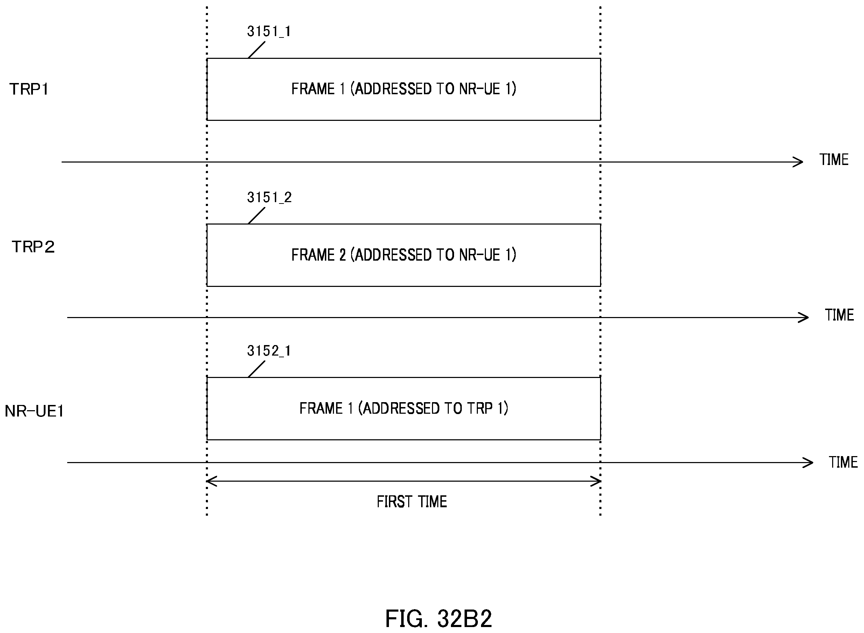

FIG. 32B1 illustrates exemplary usage statuses of frequencies when TRP 1, TRP 2, and NR-UE 1 perform the communication as illustrated in FIG. 32A;

FIG. 32B2 illustrates exemplary communication statuses in a time axis when TRP 1, TRP 2, and NR-UE 1 perform the communication as illustrated in FIG. 32A and FIG. 32B1;

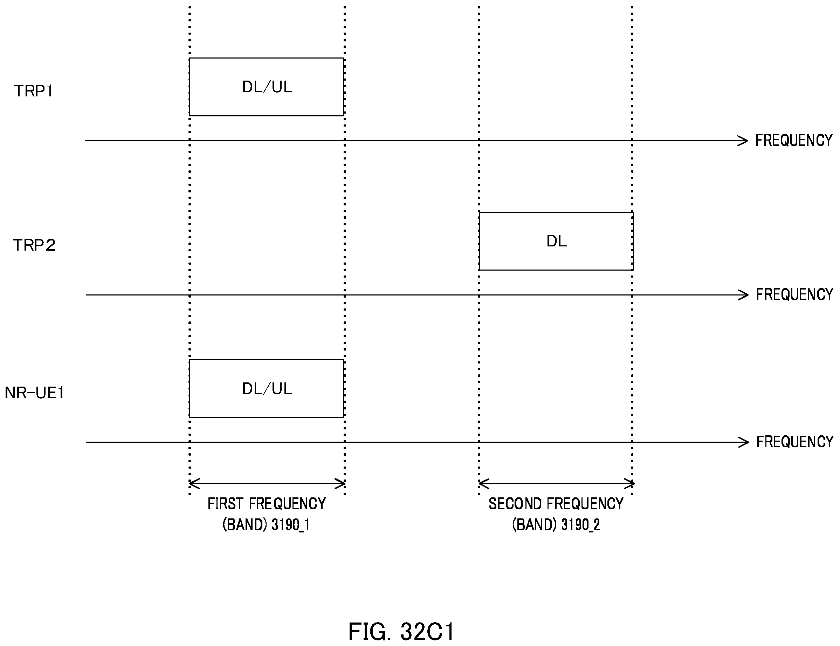

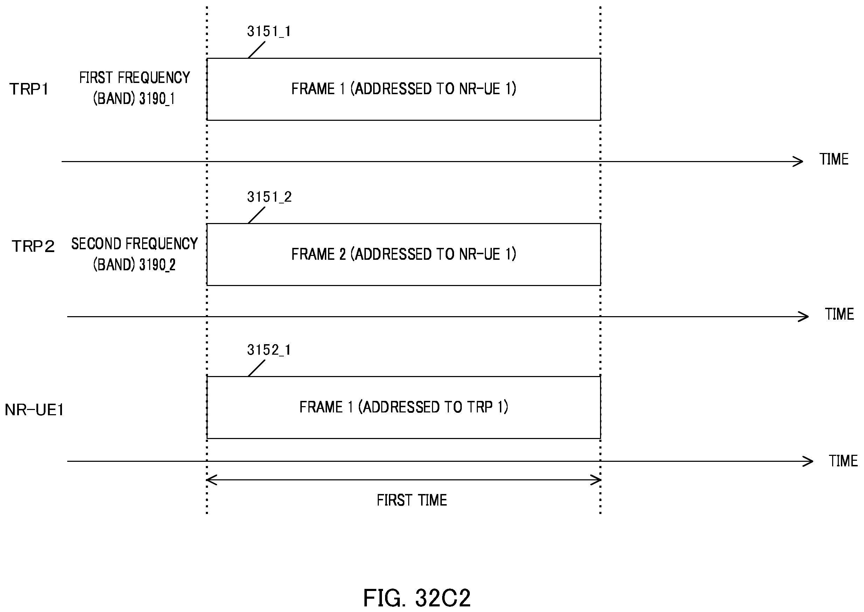

FIG. 32C1 illustrates other exemplary usage statuses of frequencies when TRP 1, TRP 2, and NR-UE 1 perform the communication as illustrated in FIG. 32A;

FIG. 32C2 illustrates exemplary communication statuses in a time axis when TRP 1, TRP 2, and NR-UE 1 perform the communication as illustrated in FIG. 32A and FIG. 32C1;

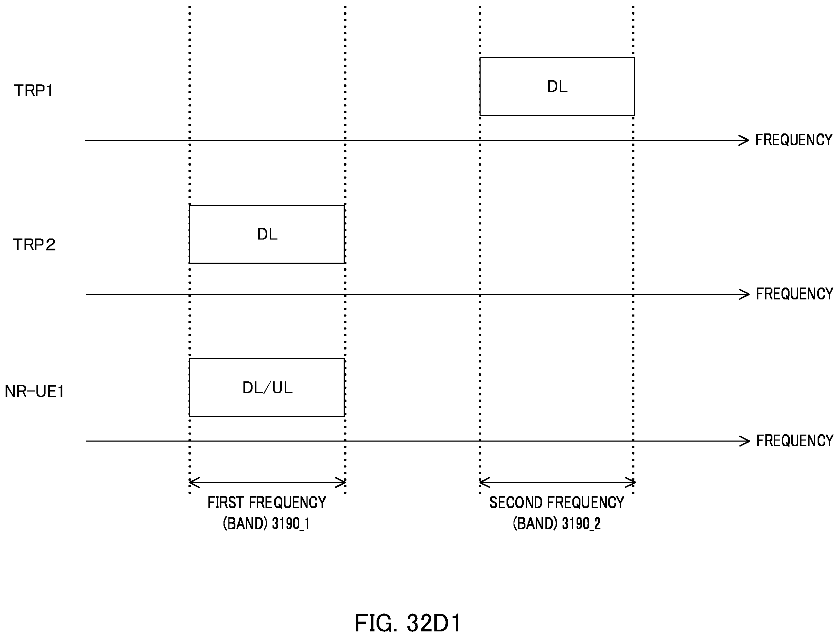

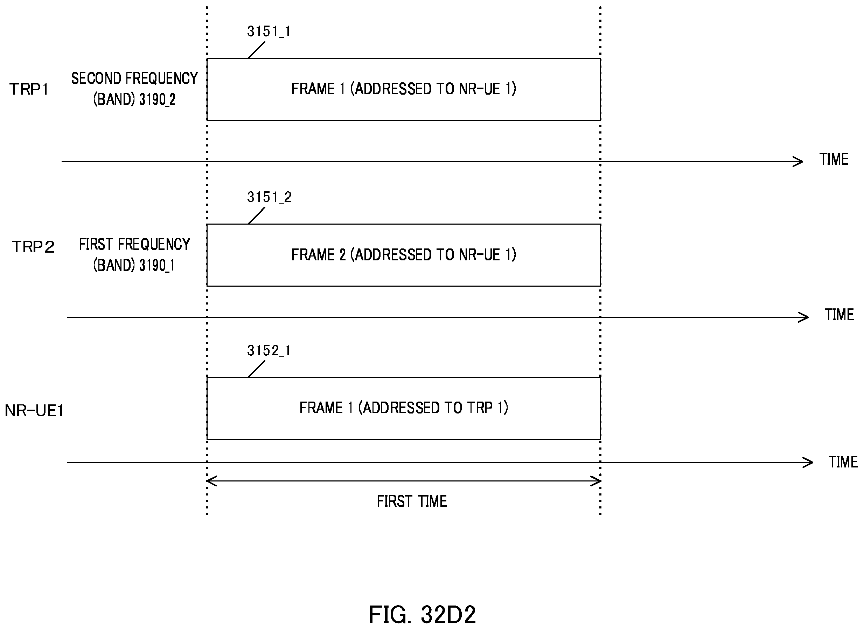

FIG. 32D1 illustrates still other exemplary usage statuses of frequencies when TRP 1, TRP 2, and NR-UE 1 perform the communication as illustrated in FIG. 32A;

FIG. 32D2 illustrates exemplary communication statuses in a time axis when TRP 1, TRP 2, and NR-UE 1 perform the communication as illustrated in FIG. 32A and FIG. 32D1;

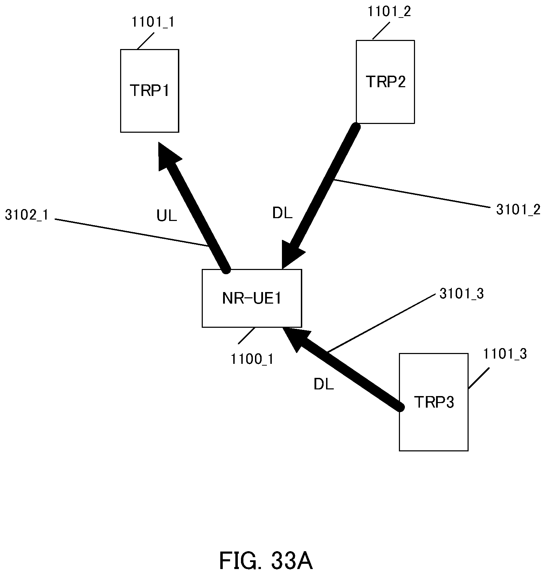

FIG. 33A illustrates an example of communication between TRP 1, TRP 2, TRP 3, and NR-UE 1;

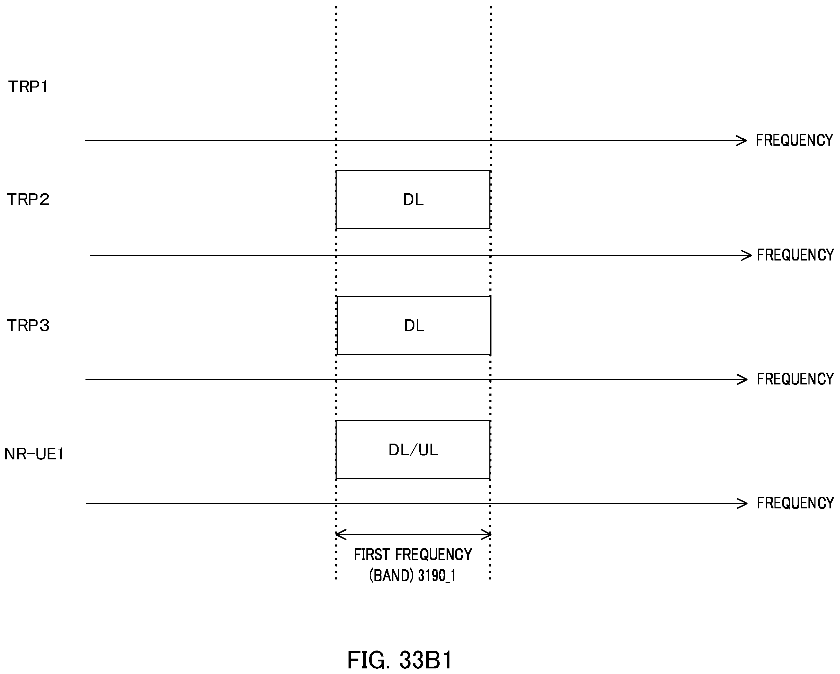

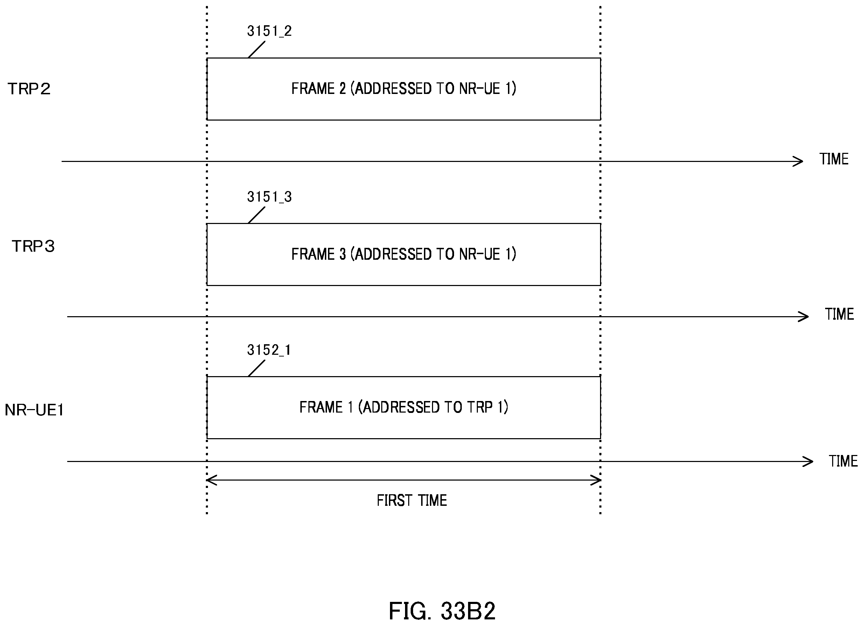

FIG. 33B1 illustrates exemplary usage statuses of frequencies when TRP 1, TRP 2, TRP 3, and NR-UE 1 perform the communication as illustrated in FIG. 33A;

FIG. 33B2 illustrates exemplary communication statuses in a time axis when TRP 1, TRP 2, TRP 3, and NR-UE 1 perform the communication as illustrated in FIG. 33A and FIG. 33B1;

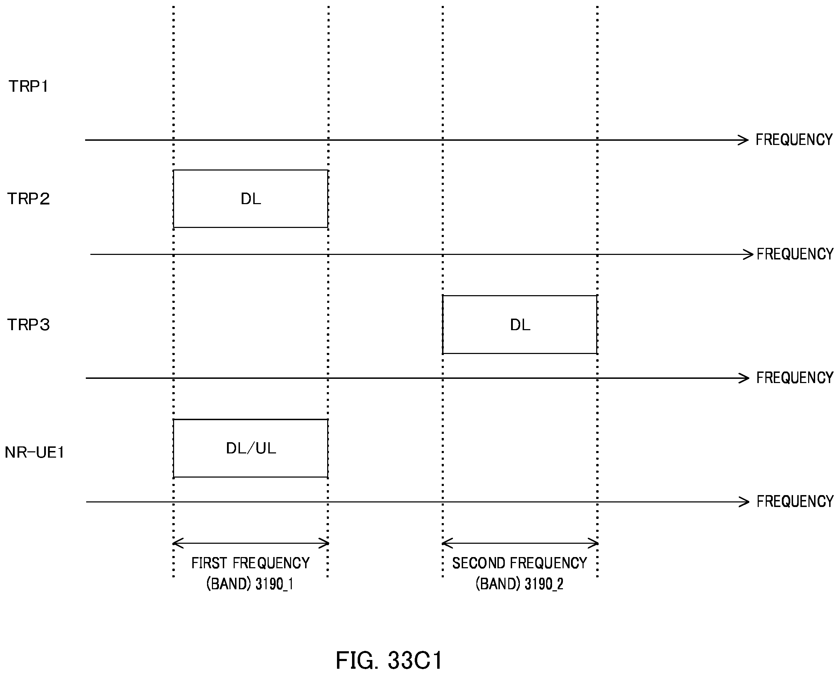

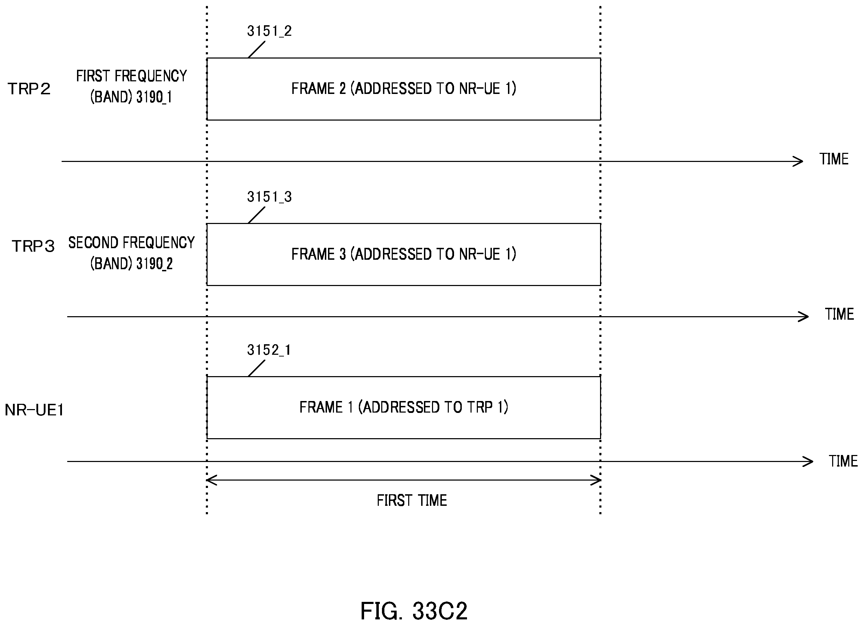

FIG. 33C1 illustrates other exemplary usage statuses of frequencies when TRP 1, TRP 2, TRP 3, and NR-UE 1 perform the communication as illustrated in FIG. 33A;

FIG. 33C2 illustrates exemplary communication statuses in a time axis when TRP 1, TRP 2, TRP 3, and NR-UE 1 perform the communication as illustrated in FIG. 33A and FIG. 33C1;

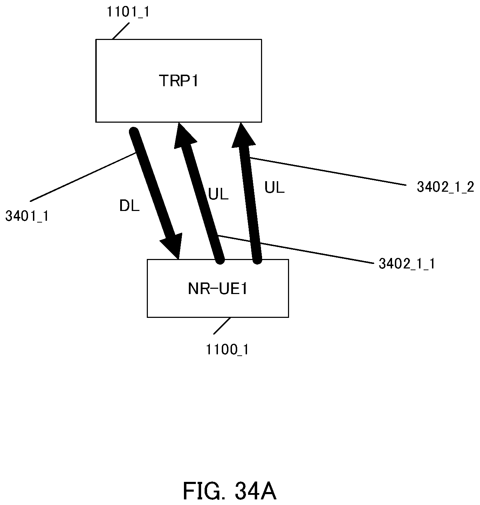

FIG. 34A illustrates another example of communication between TRP 1 and NR-UE 1;

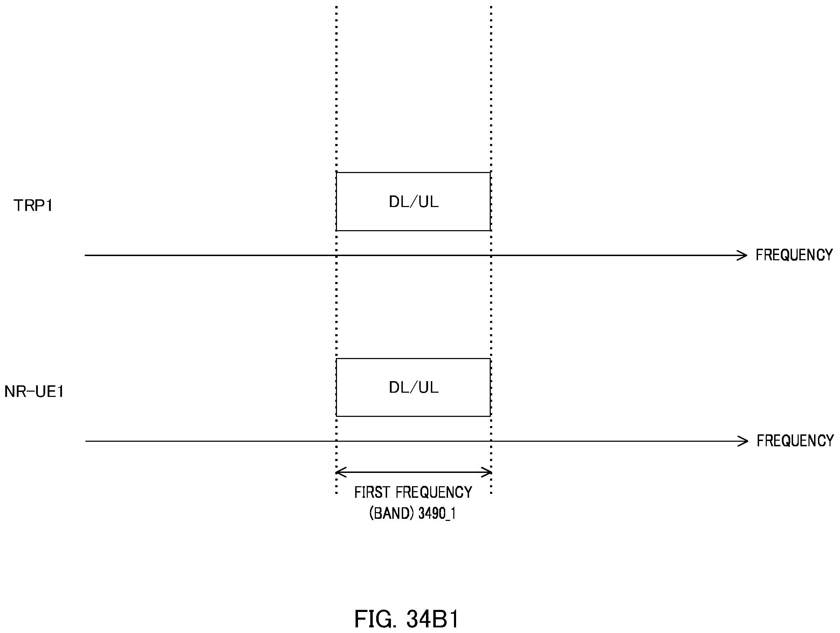

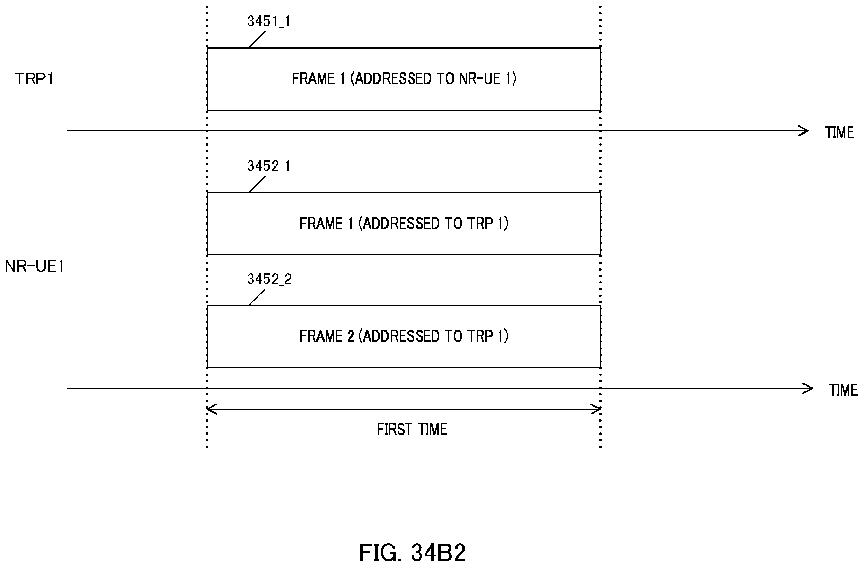

FIG. 34B1 illustrates exemplary usage statuses of frequencies when TRP 1 and NR-UE 1 perform the communication as illustrated in FIG. 34A;

FIG. 34B2 illustrates exemplary communication statuses in a time axis when TRP 1 and NR-UE 1 perform the communication as illustrated in FIG. 34A and FIG. 34B1;

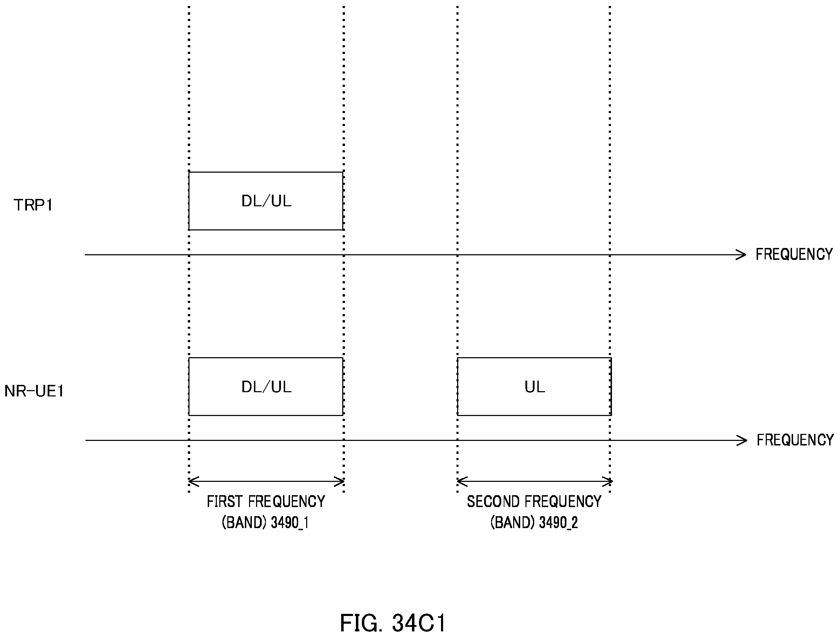

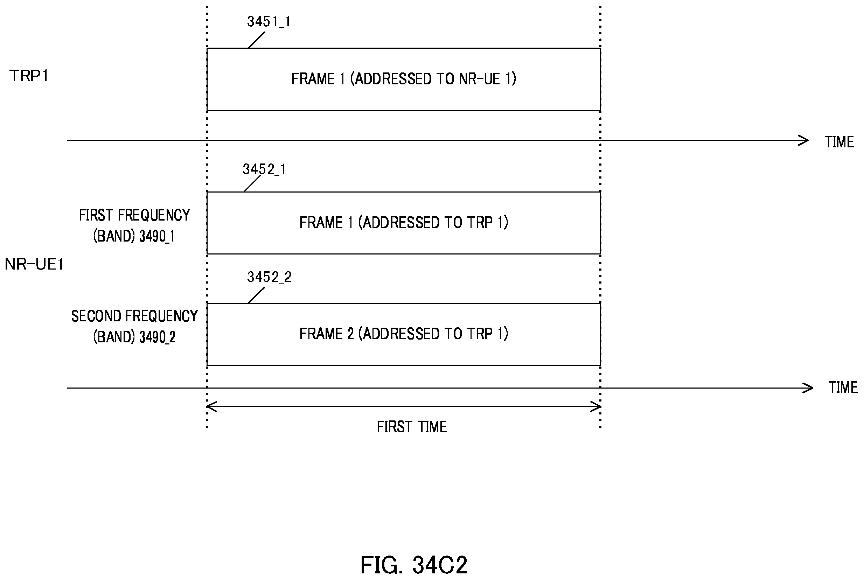

FIG. 34C1 illustrates other exemplary usage statuses of frequencies when TRP 1 and NR-UE 1 perform the communication as illustrated in FIG. 34A;

FIG. 34C2 illustrates exemplary communication statuses in a time axis when TRP 1 and NR-UE 1 perform the communication as illustrated in FIG. 34A and FIG. 34C1;

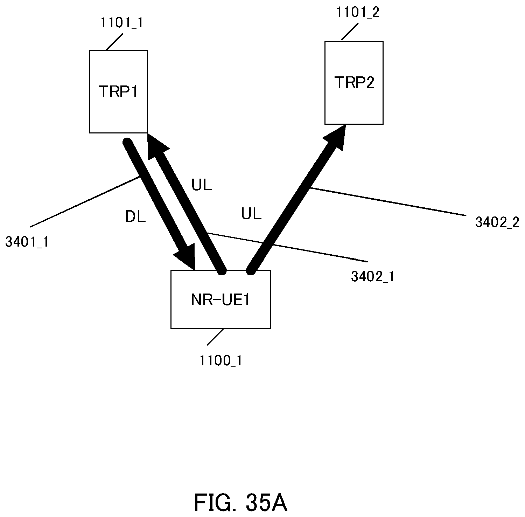

FIG. 35A illustrates another example of communication between TRP 1, TRP 2, and NR-UE 1;

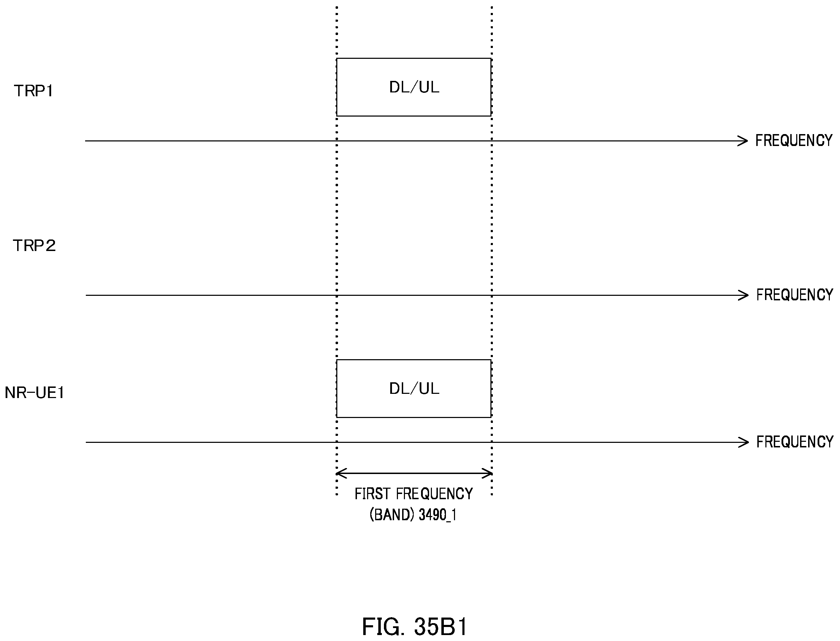

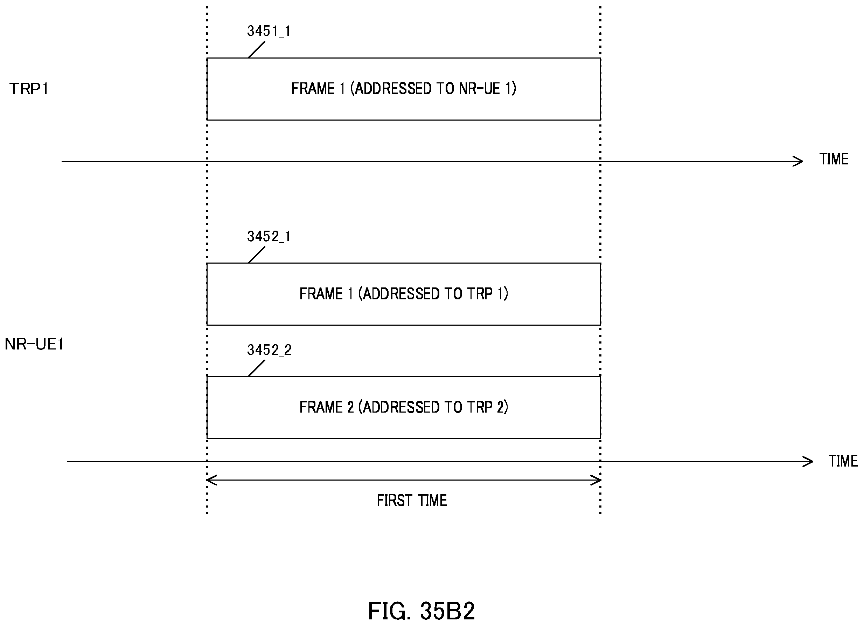

FIG. 35B1 illustrates exemplary usage statuses of frequencies when TRP 1, TRP 2, and NR-UE 1 perform the communication as illustrated in FIG. 35A;

FIG. 35B2 illustrates exemplary communication statuses in a time axis when TRP 1, TRP 2, and NR-UE 1 perform the communication as illustrated in FIG. 35A and FIG. 35B1;

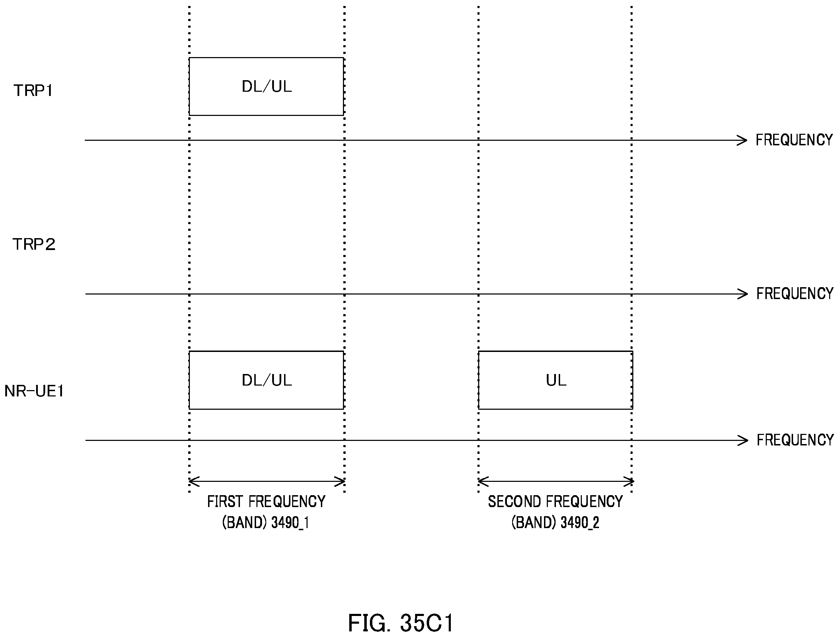

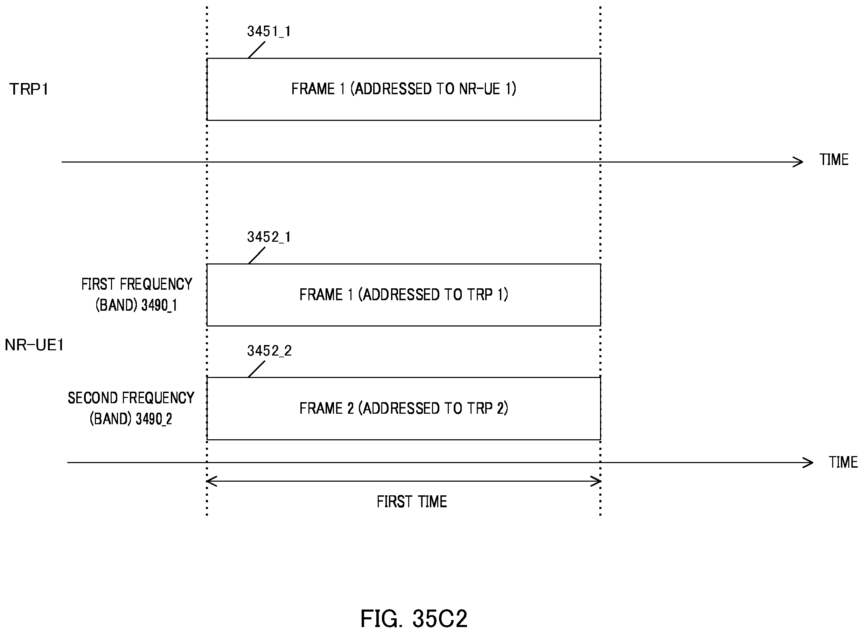

FIG. 35C1 illustrates other exemplary usage statuses of frequencies when TRP 1, TRP 2, and NR-UE 1 perform the communication as illustrated in FIG. 35A;

FIG. 35C2 illustrates exemplary communication statuses in a time axis when TRP 1, TRP 2, and NR-UE 1 perform the communication as illustrated in FIG. 35A and FIG. 35C1;

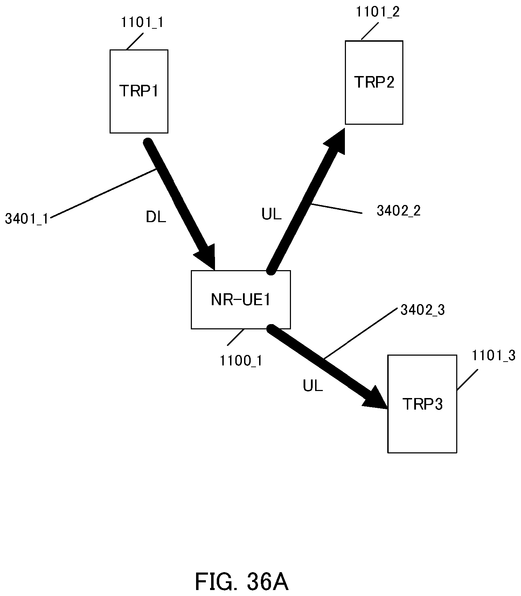

FIG. 36A illustrates another example of communication between TRP 1, TRP 2, TRP 3, and NR-UE 1;

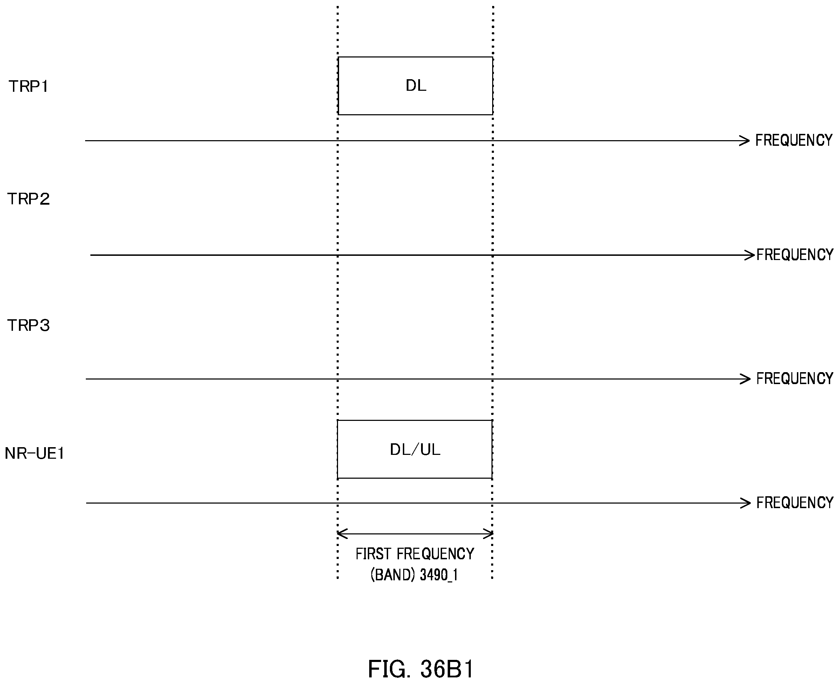

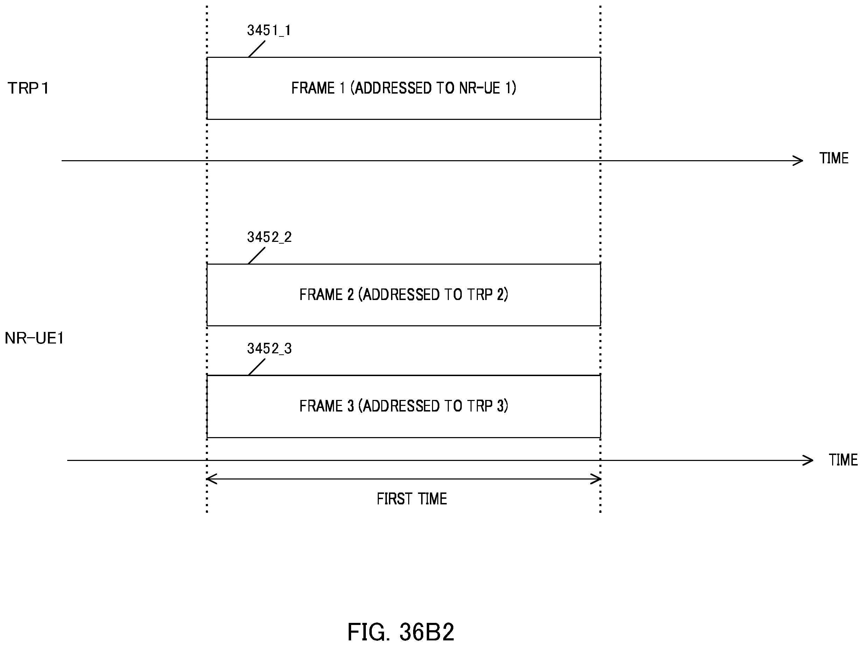

FIG. 36B1 illustrates exemplary usage statuses of frequencies when TRP 1, TRP 2, TRP 3, and NR-UE 1 perform the communication as illustrated in FIG. 36A;

FIG. 36B2 illustrates exemplary communication statuses in a time axis when TRP 1, TRP 2, TRP 3, and NR-UE 1 perform the communication as illustrated in FIG. 36A and FIG. 36B1;

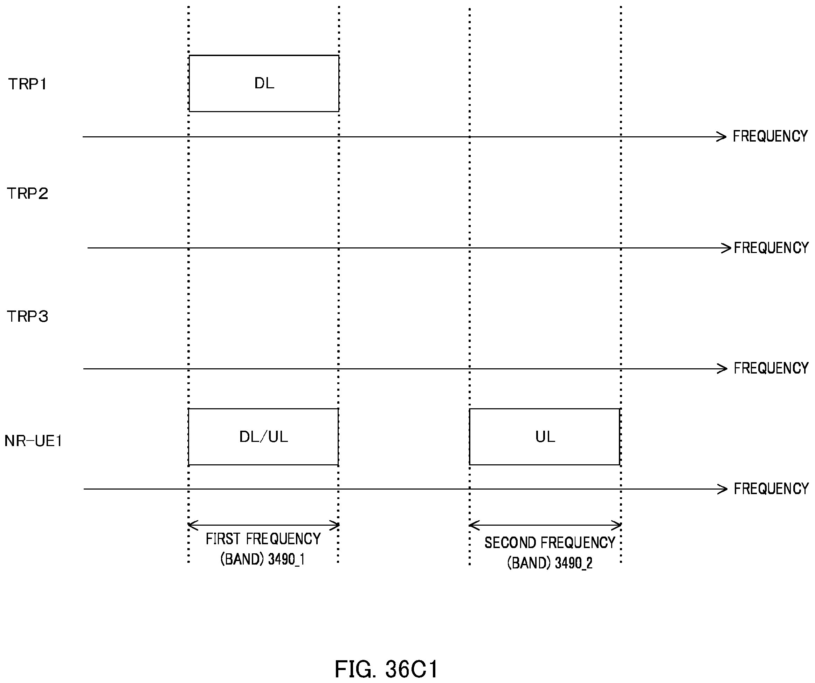

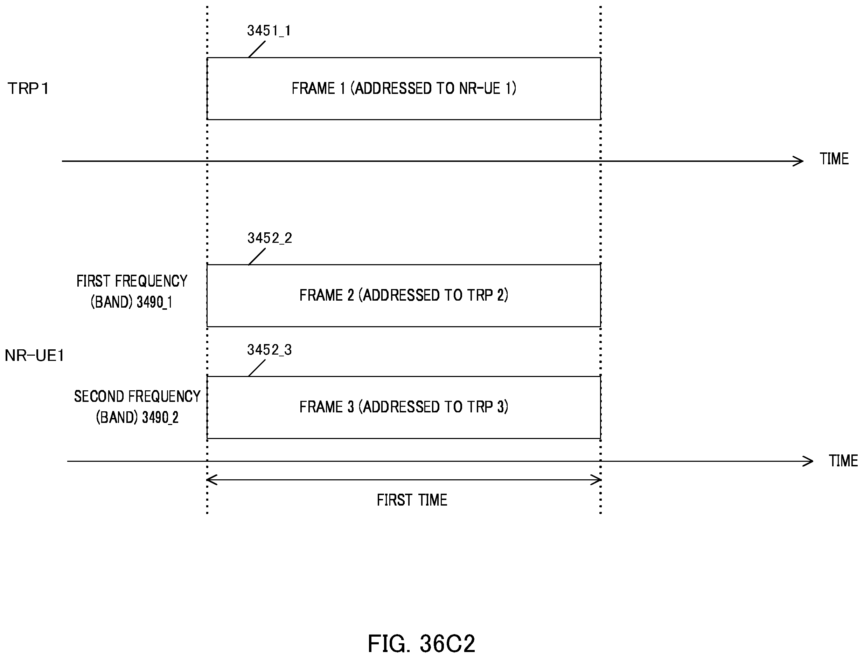

FIG. 36C1 illustrates other exemplary usage statuses of frequencies when TRP 1, TRP 2, TRP 3, and NR-UE 1 perform the communication as illustrated in FIG. 36A;

FIG. 36C2 illustrates exemplary communication statuses in a time axis when TRP 1, TRP 2, TRP 3, and NR-UE 1 perform the communication as illustrated in FIG. 36A and FIG. 36C1; and

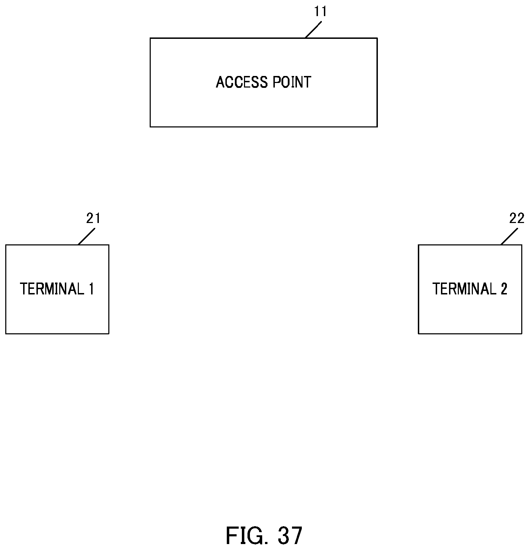

FIG. 37 illustrates an example of Full Duplex communication.

Description of Embodiments

Hereinafter, embodiments of the present disclosure will be described in detail with reference to the accompanying drawings.

(Embodiment 1)

In Embodiment 1, a description will be given of a communication system, a communication apparatus, and a communication method.

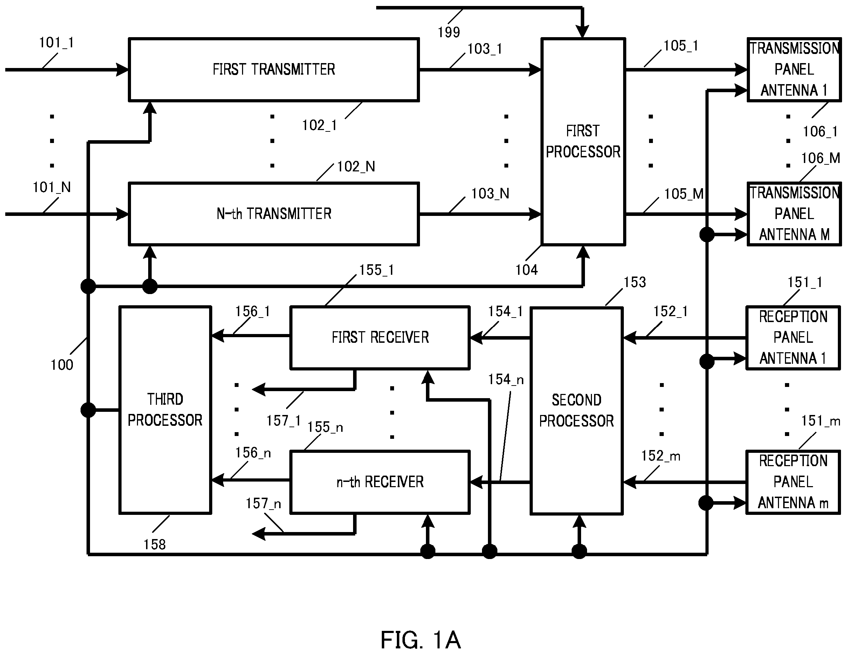

FIG. 1A illustrates an exemplary configuration of a communication apparatus, such as a base station, an access point, a terminal, a repeater, gNodeB (gNB), and user equipment (UE), TRP (transmission (Tx) / reception (RX) point) in Embodiment 1.

Note that a radio system of new radio (NR) will be exemplified in the following description. The NR radio system includes a base station and a terminal, for example. The base station of NR may be referred to as gNB. The terminal of NR may be referred to as UE. Note that the names are not limited to these. The terminal of NR may also be referred to as "NR-UE" below.

The communication apparatus in FIG. 1A includes N transmitters, which are "first transmitter 102_1 to N-th transmitter 102_N." Note that N is an integer equal to or greater than 1 or an integer equal to or greater than 2.

The communication apparatus in FIG. 1A also includes M transmission panel antennas, which are "transmission panel antenna 1 labeled 106_1 to transmission panel antenna M labeled 106_M," for transmission. Note that M is an integer equal to or greater than 1 or an integer equal to or greater than 2.

The communication apparatus in FIG. 1A includes n receivers, which are "first receiver 155_1 to n-th receiver 155_n." Note that n is an integer equal to or greater than 1 or an integer equal to or greater than 2.

The communication apparatus in FIG. 1A includes m reception panel antennas, which are "reception panel antenna 1 labeled 151_1 to reception panel antenna m labeled 151_m," for reception. Note that m is an integer equal to or greater than 1 or an integer equal to or greater than 2.

The i-th transmitter 102_i takes control signal 100 and i-th data 101_i as input, performs processing such as error correction coding and mapping based on a modulation scheme, and outputs i-th modulation signal 103_i. Note that i is an integer from 1 to N (both inclusive).

Note that i-th data 101_i may be configured to include data of one or more users. In this case, an error correction code, a modulation scheme, and a transmission method may be configured for each user.

First processor 104 takes i-th modulation signal 103_i (i is an integer from 1 to N (both inclusive)), control signal 100, and reference signal 199 as input, controls a transmission timing and a channel, and outputs j-th transmission signal 105_j (j is an integer from 1 to M (both inclusive)) based on frame configuration information included in control signal 100. Note that some of i-th modulation signals 103_i may include no signal, and some of j-th transmission signals 105_j may include no signal.

Then, j-th transmission signal 105_j is outputted as a radio wave from transmission panel antenna j labeled 106_j. Note that transmission panel antenna j labeled 106_j may perform beamforming and change the transmission directivity taking control signal 100 as input. In addition, transmission panel antenna j labeled 106_j may be switched by control signal 100 in transmitting a modulation signal to a communication counterpart. This will be described later.

Reception panel antenna i labeled 151_i receives i-th received signal 152_i. Note that reception panel antenna i labeled 151_i may perform beamforming and change the reception directivity taking control signal 100 as input. This will be described later.

Second processor 153 performs processing such as frequency conversion taking i-th received signal 152_i and control signal 100 as input, and outputs j-th signal-processing-subjected signal (i.e., j-th signal that has been subjected to signal processing) 154_j. Note that some of i-th received signals 152_i may include no signal, and some of j-th signal-processing-subjected signals 154_j may include no signal.

Then, j-th receiver 155_j takes j-th signal-processing-subjected signal 154_j and control signal 100 as input, performs processing such as demodulation and error correction decoding on j-th signal-processing-subjected signal 154_j based on control signal 100, and outputs j-th control data 156_j and j-th data 157_j.

Note that j-th control data 156_j may be configured to include control data of one or more users. In addition, j-th data 157_j may be configured to include data of one or more users.

Third processor 158 takes j-th control data 156_j as input, generates control signal 100 based on information obtained from the communication counterpart, and outputs generated control signal 100.

Incidentally, first processor 104 of the communication apparatus in FIG. 1A may perform processing for transmit beamforming (transmission directivity control), for example, precoding processing. Meanwhile, second processor 153 may perform processing for reception directivity control. As another example, first processor 104 may perform processing of outputting first modulation signal 103_1 as first transmission signal 105_1, second modulation signal 103_2 as second transmission signal 105_2, and third modulation signal 103_3 as third transmission signal 105_3, for example. Alternatively, first processor 104 may perform processing of outputting second modulation signal 103_2 as first transmission signal 105_1. In addition, second processor 153 may perform processing of outputting first received signal 152_1 as first signal-processing-subjected signal 154_1, second received signal 152_2 as second signal-processing-subjected signal 154_2, and third received signal 152_3 as third signal-processing-subjected signal 154_3. Alternatively, the second processor 153 may perform processing of outputting first received signal 152_1 as second signal-processing-subjected signal 154_2.

The configuration in FIG. 1A may include a processor not illustrated in FIG. 1A. For example, an interleaver for sorting symbols and/or data, a padder for padding, and the like may be included in the communication apparatus.

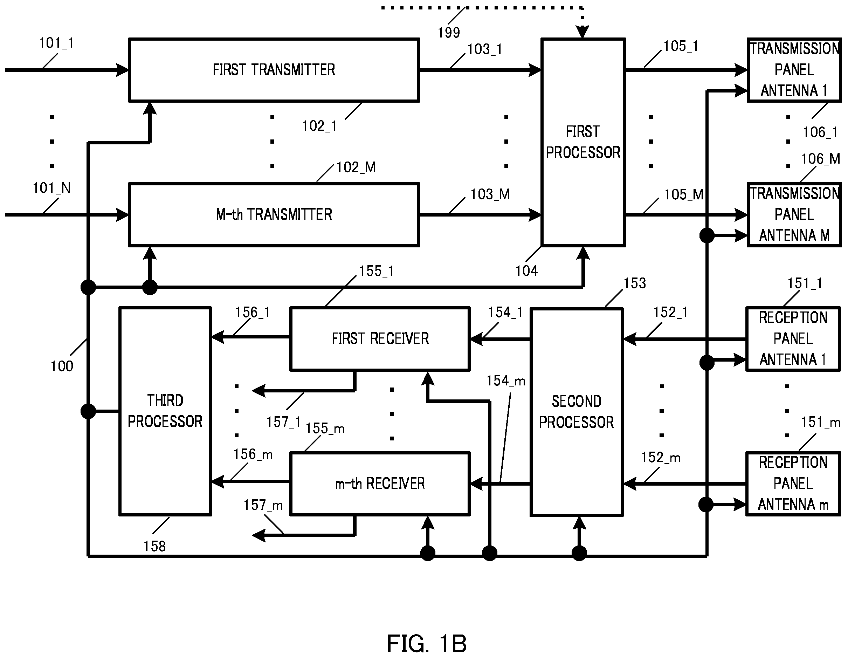

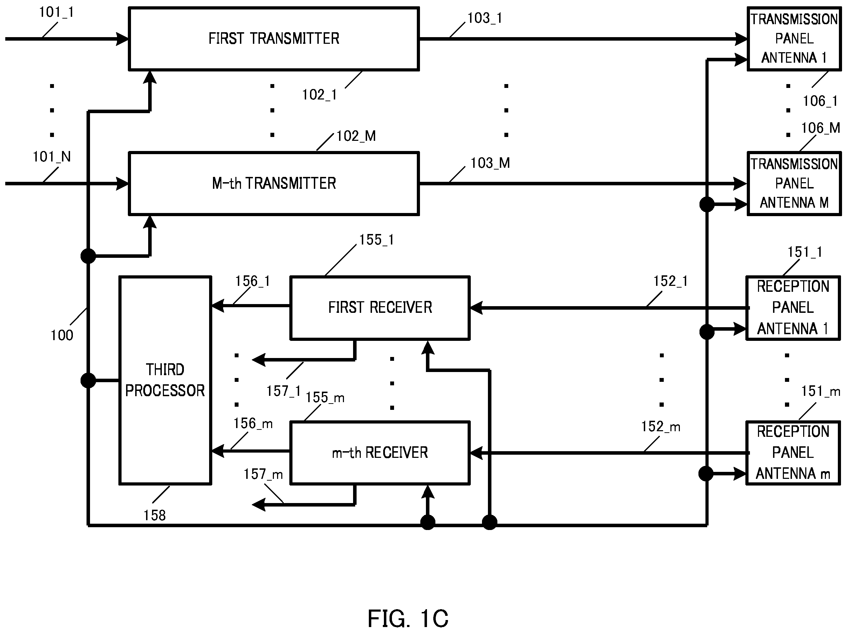

Moreover, the communication apparatus in FIG. 1A (also in FIG. 1B and FIG. 1C) may perform transmission and/or reception corresponding to multiple input multiple output (MIMO) transmission for transmitting a plurality of modulation signals (a plurality of streams), using a plurality of antennas. Further, the communication apparatus in FIG. 1A (also in FIG. 1B and FIG. 1C) may perform transmission corresponding to multi-user MIMO transmission for transmitting, using a first frequency (band), modulation signals to a plurality of terminals in a first time section at least.

FIG. 1B illustrates an exemplary configuration of the communication apparatus in Embodiment 1, such as a base station, an access point, a terminal, a repeater, a TRP, and the like, different from the configuration in FIG. 1A. In FIG. 1B, the components that operate in the same manner as in FIG. 1A are denoted by the same reference numerals, and descriptions thereof will be omitted.

The configuration in FIG. 1B is characterized in that the number of transmitters and the number of transmission panel antennas are the same. In this case, first processor 104 may perform processing for transmit beamforming (transmission directivity control), for example, precoding processing. First processor 104 may output y-th modulation signal 103_y as x-th transmission signal 105_x. Note that x is an integer from 1 to M (both inclusive), and y is an integer from 1 to M (both inclusive).

In addition, the number of receivers and the number of reception panel antennas are the same. In this case, second processor 153 may perform processing for the reception directivity control. Second processor 153 may output y-th received signal 152_y as x-th signal-processing-subjected signal 154_x. Note that x is an integer from 1 to m (both inclusive), and y is an integer from 1 to m (both inclusive).

FIG. 1C illustrates an exemplary configuration of the communication apparatus in Embodiment 1, such as a base station, an access point, a terminal, a repeater, a TRP, and the like, different from the configurations in FIGS. 1A and 1B. In FIG. 1C, the components that operate in the same manner as in FIG. 1A are denoted by the same reference numerals, and descriptions thereof will be omitted.

The configuration in FIG. 1C is characterized in that the number of transmitters and the number of transmission panel antennas are the same and the first processor is not present. In addition, the number of receivers and the number of reception panel antennas are the same and the second processor is not present.

Note that FIGS. 1A, 1B, and 1C illustrate exemplary configurations of the communication apparatus, such as a base station, an access point, a terminal, a repeater, a TRP, and the like, and the configuration of the communication apparatus is not limited to these examples.

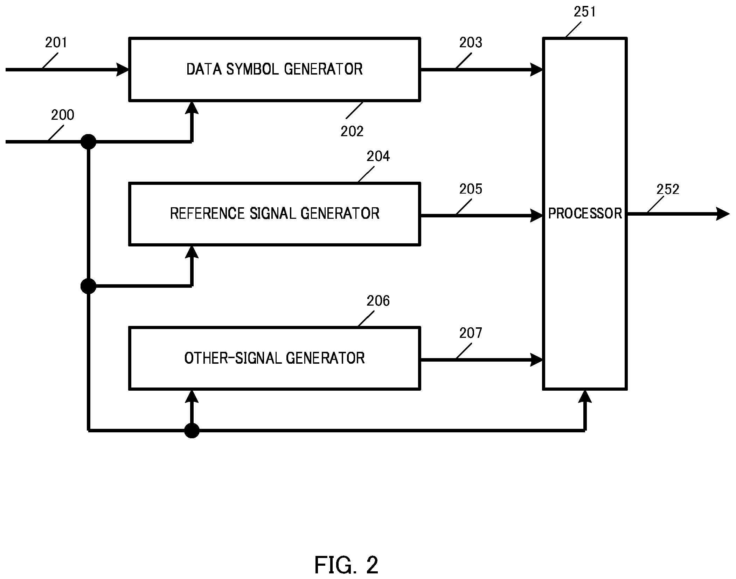

FIG. 2 illustrates an exemplary configuration of i-th transmitter 102_i. Note that i is "an integer from 1 to N (both inclusive) " or "an integer from 1 to M (both inclusive)."

Data symbol generator 202 takes data 201 and control signal 200 as input, performs error correction coding, mapping, signal processing for transmission, etc. on the basis of information on an error correction coding method, information on a modulation scheme, information on a transmission method, information on a frame configuration method, etc. included in control signal 200, and outputs data symbol modulation signal 203. Note that data 201 corresponds to i-th data 101_i, and control signal 200 corresponds to control signal 100. Thus, data 201 may include data of one or more users.

Reference signal generator 204 receives control signal 200, generates reference signal 205 based on information on the frame configuration included in control signal 200, and outputs the generated reference signal. Note that reference signal 205 is a signal to be transmitted in order to achieve various-noise estimation and channel estimation for determination of a transmission beam used for communication with a communication counterpart and/or a reception beam, a transmission method, a reception method, and the like.

Other-signal generator 206 takes control signal 200 as input, generates other signals 207 based on the control signal, and outputs the generated signals.

Processor 251 takes data symbol modulation signal 203, reference signal 205, other signals 207, and control signal 200 as input, generates frame configuration-based modulation signal (i.e., modulation signal in accordance with frame configuration) 252 based on the frame configuration information included in control signal 200, and outputs the generated signal. Note that frame configuration-based modulation signal 252 corresponds to i-th modulation signal 103_i. Specific examples of the frame configuration will be described later in detail.

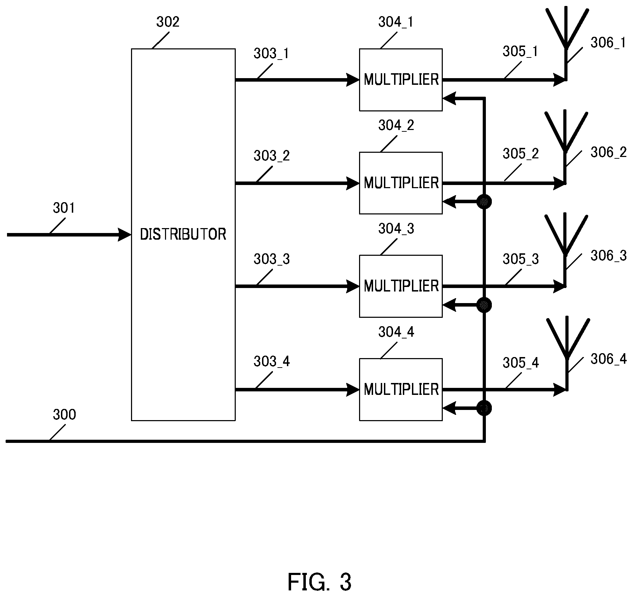

FIG. 3 illustrates an exemplary configuration of transmission panel antenna i labeled 106_i in FIGS. 1A, 1B, and 1C. Note that i is "an integer from 1 to M (both inclusive)." Distributor 302 takes transmission signal 301 as input, performs distribution, and outputs first transmission signal 303_1, second transmission signal 303_2, third transmission signal 303_3, and fourth transmission signal 303_4. Note that transmission signal 301 corresponds to "i-th transmission signal 105_j in FIGS. 1A and 1B"or "i-th modulation signal 103_i in FIG. 1C."

Multiplier 304_1 takes first transmission signal 303_1 and control signal 300 as input, multiplies first transmission signal 303_1 by a multiplication coefficient based on control signal 300, generates and outputs coefficient-multiplication-subjected first transmission signal (i.e., first transmission signal that has been subjected to the coefficient multiplication) 305_1. Then, coefficient-multiplication-subjected first transmission signal 305_1 is outputted from antenna 306_1 as a radio wave. Note that control signal 300 corresponds to control signal 100.

A specific description follows. First transmission signal 303_1 is represented by tx1(t). Note that t represents time. When the multiplication coefficient is w1, coefficient-multiplication-subjected first transmission signal 305_1 can be expressed as tx1(t) × w1. Note that tx1(t) can be represented by a complex number, and thus, it may be a real number. Likewise, w1 can be represented by a complex number, and thus, it may be a real number.

Multiplier 304_2 takes second transmission signal 303_2 and control signal 300 as input, multiplies second transmission signal 303_2 by a multiplication coefficient based on control signal 300, generates and outputs coefficient-multiplication-subjected second transmission signal 305_2. Then, coefficient-multiplication-subjected second transmission signal 305_2 is outputted from antenna 306_2 as a radio wave.

A specific description follows. Second transmission signal 303_2 is represented by tx2(t). Note that t represents time. When the multiplication coefficient is w2, coefficient-multiplication-subjected second transmission signal 305_2 can be expressed as tx2(t) × w2. Note that tx2(t) can be represented by a complex number, and thus, it may be a real number. Likewise, w2 can be represented by a complex number, and thus, it may be a real number.

Multiplier 304_3 takes third transmission signal 303_3 and control signal 300 as input, multiplies third transmission signal 303_3 by a multiplication coefficient based on control signal 300, generates and outputs coefficient-multiplication-subjected third transmission signal 305_3. Then, coefficient-multiplication-subjected third transmission signal 305_3 is outputted from antenna 306_3 as a radio wave.

A specific description follows. Third transmission signal 303_3 is represented by tx3(t). Note that t represents time. When the multiplication coefficient is w3, coefficient-multiplication-subjected third transmission signal 305_3 can be expressed as tx3(t) × w3. Note that tx3(t) can be represented by a complex number, and thus, it may be a real number. Likewise, w3 can be represented by a complex number, and thus, it may be a real number.

Multiplier 304_4 takes fourth transmission signal 303_4 and control signal 300 as input, multiplies fourth transmission signal 303_4 by a multiplication coefficient based on control signal 300, generates and outputs coefficient-multiplication-subjected fourth transmission signal 305_4. Then, coefficient-multiplication-subjected fourth transmission signal 305_4 is outputted from antenna 306_4 as a radio wave.

A specific description follows. Fourth transmission signal 303_4 is represented by tx4(t). Note that t represents time. When the multiplication coefficient is w4, coefficient-multiplication-subjected fourth transmission signal 305_4 can be expressed as tx4(t) × w4. Note that tx4(t) can be represented by a complex number, and thus, it may be a real number. Likewise, w4 can be represented by a complex number, and thus, it may be a real number.

Note that "an absolute value of w1, an absolute value of w2, an absolute value of w3, and an absolute value of w4 may be equal to each other." This corresponds to a case where a phase change has been performed. It is needless to say that the absolute value of w1, the absolute value of w2, the absolute value of w3, and the absolute value of w4 need not be equal to each other.

The respective values of w1, w2, w3, and w4 may be switched for each frame, each slot, each mini-slot, each multiple-symbols, or each symbol. The switch timings of the respective values of w1, w2, w3, and w4 are not limited to the above examples.

Further, FIG. 3 illustrates an example of the transmission panel antenna composed of four antennas (and four multipliers), but the number of antennas is not limited to four and the transmission panel antenna only needs to be composed of two or more antennas. Incidentally, when the beamforming is performed as in FIG. 3, the beamforming is sometimes referred to as "analog beamforming."

Note that transmission panel antenna i labeled 106_i in FIGS. 1A, 1B, and 1C may perform directivity control by changing the characteristics of the antenna itself, and in this case, transmission panel antenna i labeled 106_i may be composed of one or more antennas.

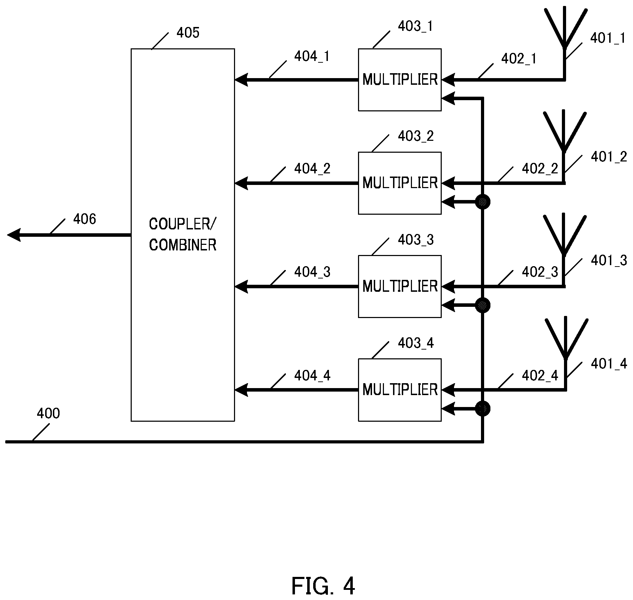

FIG. 4 illustrates an exemplary configuration of reception panel antenna i labeled 151_i in FIGS. 1A, 1B, and 1C. Note that i is "an integer from 1 to m (both inclusive)."

Multiplier 403_1 takes first received signal 402_1 received at antenna 401_1 and control signal 400 as input, multiplies first received signal 402_1 by a multiplication coefficient based on control signal 400, and outputs coefficient-multiplication-subjected first received signal 404_1.

A specific description follows. First received signal 402_1 is represented by rx1(t). Note that t represents time. When the multiplication coefficient is d1, coefficient-multiplication-subjected first received signal 404_1 can be expressed as rx1(t) × d1. Note that rx1(t) can be represented by a complex number, and thus, it may be a real number. Likewise, d1 can be represented by a complex number, and thus, it may be a real number.

Multiplier 403_2 takes second received signal 402_2 received at antenna 401_2 and control signal 400 as input, multiplies second received signal 402_2 by a multiplication coefficient based on control signal 400, and outputs coefficient-multiplication-subjected second received signal 404_2.

A specific description follows. Second received signal 402_2 is represented by rx2(t). Note that t represents time. When the multiplication coefficient is d2, coefficient-multiplication-subjected second received signal 404_2 can be expressed as rx2(t) × d2. Note that rx2(t) can be represented by a complex number, and thus, it may be a real number. Likewise, d2 can be represented by a complex number, and thus, it may be a real number.

Multiplier 403_3 takes third received signal 402_3 received at antenna 401_3 and control signal 400 as input, multiplies third received signal 402_3 by a multiplication coefficient based on control signal 400, and outputs coefficient-multiplication-subjected third received signal 404_3.

A specific description follows. Third received signal 402_3 is represented by rx3(t). Note that t represents time. When the multiplication coefficient is d3, coefficient-multiplication-subjected third received signal 404_3 can be expressed as rx3(t) × d3. Note that rx3(t) can be represented by a complex number, and thus, it may be a real number. Likewise, d3 can be represented by a complex number, and thus, it may be a real number.

Multiplier 403_4 takes fourth received signal 402_4 received at antenna 401_4 and control signal 400 as input, multiplies fourth received signal 402_4 by a multiplication coefficient based on control signal 400, and outputs coefficient-multiplication-subjected fourth received signal 404_4.

A specific description follows. Fourth received signal 402_4 is represented by rx4(t). Note that t represents time. When the multiplication coefficient is d4, coefficient-multiplication-subjected fourth received signal 404_4 can be expressed as rx4(t) × d4. Note that rx4(t) can be represented by a complex number, and thus, it may be a real number. Likewise, d4 can be represented by a complex number, and thus, it may be a real number.

Coupler/combiner 405 takes coefficient-multiplication-subjected first received signal 404_1, coefficient-multiplication-subjected second received signal 404_2, coefficient-multiplication-subjected third received signal 404_3, and coefficient-multiplication-subjected fourth received signal 404_4 as input, combines coefficient-multiplication-subjected first received signal 404_1, coefficient-multiplication-subjected second received signal 404_2, coefficient-multiplication-subjected third received signal 404_3, and coefficient-multiplication-subjected fourth received signal 404_4, and outputs modulation signal 406. Note that modulation signal 406 is expressed as rx1(t) × d1 + rx2(t) × d2 + rx3(t) × d3 + rx4(t) × d4.

Note that control signal 400 corresponds to control signal 100, and modulation signal 406 corresponds to i-th received signal 152_i.

In addition, "an absolute value of d1, an absolute value of d2, an absolute value of d3, and an absolute value of d4 may be equal to each other." This corresponds to a case where a phase change has been performed. It is needless to say that the absolute value of d1, the absolute value of d2, the absolute value of d3, and the absolute value of d4 need not be equal to each other.

The respective values of d1, d2, d3, and d4 may be switched for each frame, each slot, each mini-slot, each multiple-symbols, or each symbol. The switch timings of the respective values of d1, d2, d3, and d4 are not limited to the above examples.

Further, FIG. 4 illustrates an example of the reception panel antenna composed of four antennas (and four multipliers), but the number of antennas is not limited to four and the reception panel antenna only needs to be composed of two or more antennas. Incidentally, when the beamforming is performed as in FIG. 4, the beamforming is sometimes referred to as "analog beamforming."

Note that reception panel antenna i labeled 151_i in FIGS. 1A, 1B, and 1C may perform directivity control by changing the characteristics of the antenna itself, and in this case, reception panel antenna i labeled 151_i may be composed of one or more antennas.

In the present embodiment, in a case where the communication apparatus in FIGS. 1A, 1B, and 1C is a base station, gNodeB (gNB), a TRP, or a terminal, for example, it supports multi-carrier transmission such as orthogonal frequency division multiplexing (OFDM). The base station, gNB, TRP, or terminal in FIGS. 1A, 1B, and 1C may also support orthogonal frequency division multiple access (OFDMA).

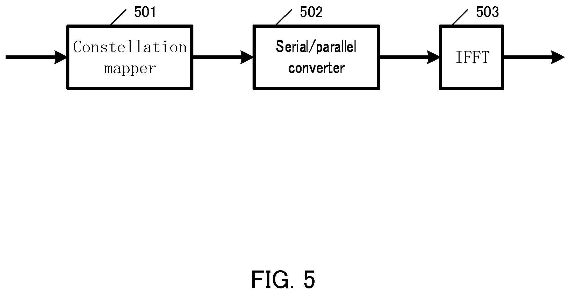

FIG. 5 illustrates an exemplary configuration of a transmission apparatus in a case of using an OFDM scheme. As illustrated in FIG. 5, the transmission apparatus is composed of, for example, constellation mapper 501, serial/parallel converter 502, and inverse fast Fourier transform (IFFT) 503.

Constellation mapper 501, for example, takes data as input, performs mapping based on the configured modulation scheme, and outputs the modulation signal.

Serial/parallel converter 502 converts serial signals into parallel signals. Note that serial/parallel converter 502 need not be present when parallel signals are already obtained.

IFFT 503 performs IFFT processing on an input signal, and outputs the modulation signal based on the OFDM scheme. Note that IFFT 503 may be an inverse Fourier transformer performing inverse Fourier transform.

The transmission apparatus in a case of using the OFDM scheme may include another processor (e.g., error correction encoder, interleaver, etc.), and the configuration is not limited to that in FIG. 5.

In the present embodiment, in a case where the communication apparatus in FIGS. 1A, 1B, and 1C is a base station, gNodeB (gNB), a TRP, or a terminal, for example, it may support multi-carrier reception such as in the OFDM scheme or may support single-carrier reception such as in a single-carrier scheme based on discrete Fourier transform (DFT), for example. The following description is about an exemplary configuration of a reception part in a single-carrier scheme.

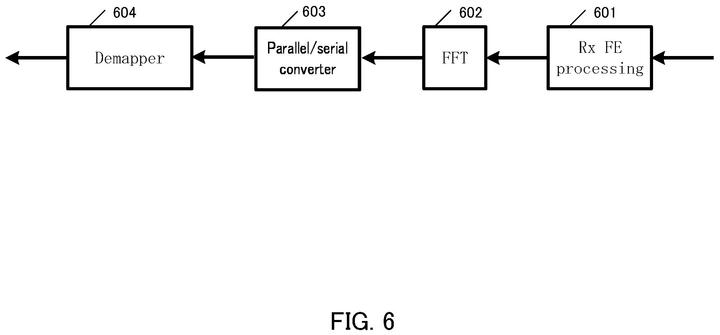

FIG. 6 illustrates an exemplary configuration of a reception apparatus in a case of using the OFDM scheme. As illustrated in FIG. 6, the reception apparatus in a case of using the OFDM scheme is composed of Rx FE processor (Rx (Receiver) FE (Front End) processing) 601, fast Fourier transform (FFT) 602, parallel/serial converter 603, and demapper 604.

Rx FE processing 601 performs processing of a reception front end.

FFT 602 performs FFT processing on the input signal.

Parallel/serial converter 603 converts parallel signals into serial signals. Note that parallel/serial converter 603 need not be present when serial signals are already obtained.

Demapper 604 performs demodulation processing based on the transmission method and modulation scheme.

Note that the reception apparatus may include another processor (e.g., deinterleaver, decoder for error correction coding, etc.), and the configuration is not limited to that in FIG. 6.

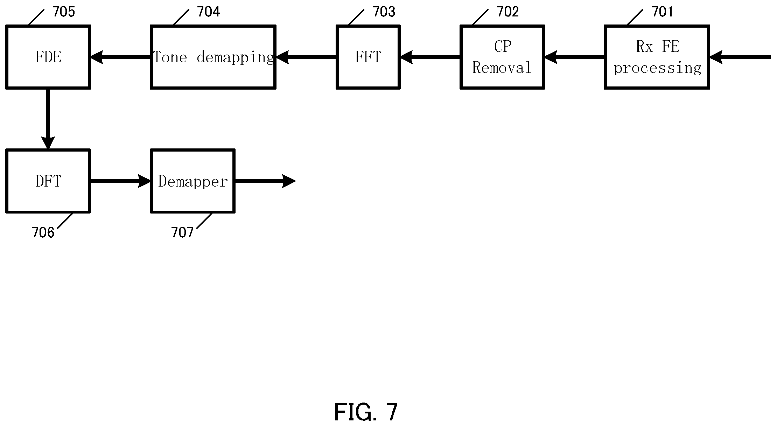

FIG. 7 illustrates an exemplary configuration of the reception apparatus in a case of using a single-carrier scheme based on DFT. As illustrated in FIG. 7, the reception apparatus is composed of receiver (Rx) FE processing 701, CP removal 702, fast Fourier transform (FFT) 703, tone demapping 704, frequency domain equalization (FDE) 705, DFT 706, and demapper 707. Note that the reception apparatus may include a processor other than the above.

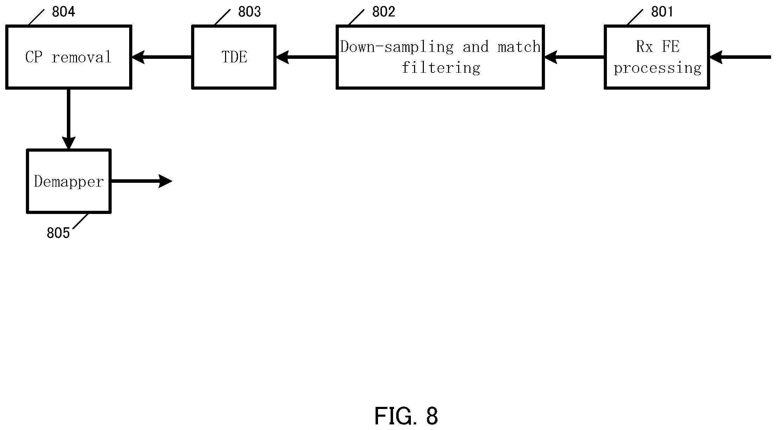

FIG. 8 illustrates an exemplary configuration of the reception apparatus in a case of using a single-carrier scheme based on time domain. As illustrated in FIG. 8, the reception apparatus is composed of receiver (Rx) FE processing 801, down-sampling and match filtering 802, time domain equalization (TDE) 803, CP removal 804, and demapper 805. Note that the reception apparatus may include a processor other than the above.

Although exemplary reception methods in single-carrier schemes and exemplary configurations of the reception apparatus have been described above, the reception method in a single-carrier scheme and the reception apparatus are not limited to these. For example, examples of the single-carrier scheme include "discrete Fourier transform (DFT)-spread orthogonal frequency division multiplexing (OFDM)" (DFT-S OFDM), "trajectory constrained DFT-spread OFDM," "constrained DFT-spread OFDM" (constrained DFT-S OFDM), "OFDM based single carrier (SC)," "single carrier (SC)-frequency division multiple access (FDMA)," "guard interval DFT-spread OFDM," a time-domain implementation single carrier scheme (e.g., single carrier (SC)-QAM), and the like.

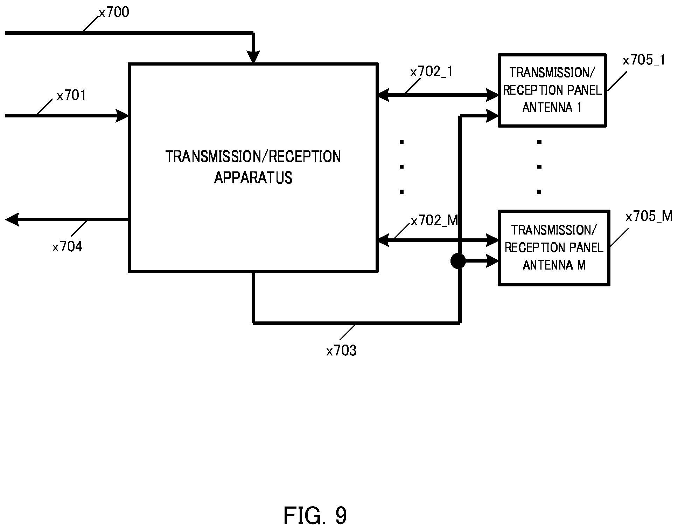

FIG. 9 illustrates an exemplary configuration of an NR apparatus (communication apparatus) such as a gNB and an NR-UE other than those in FIGS. 1A, 1B, and 1C, for example. Transmission/reception panel antenna i labeled x705_i in FIG. 9 is an antenna including components in FIGS. 3 and 4, for example. Here, i is an integer from 1 to M (both inclusive), and M is an integer equal to or greater than 1 or an integer equal to or greater than 2. Thus, transmission/reception panel antenna i labeled x705_i can perform transmit beamforming (transmission directivity control) and receive beamforming (reception directivity control).

Note that specific operations of transmit beamforming (transmission directivity control) and receive beamforming (reception directivity control) have already been described, and the apparatus performs transmit beamforming (transmission directivity control) to transmit a reference signal, feedback signal, frame, slot, modulation signal, data symbol, and the like.

Incidentally, FIG. 9 illustrates a configuration in which the transmission panel antenna and the reception panel antenna are shared, but the transmission panel antenna and the reception panel antenna may be units separate from each other. Further, it is possible to set the number of transmission panel antennas and the number of reception panel antennas, respectively.

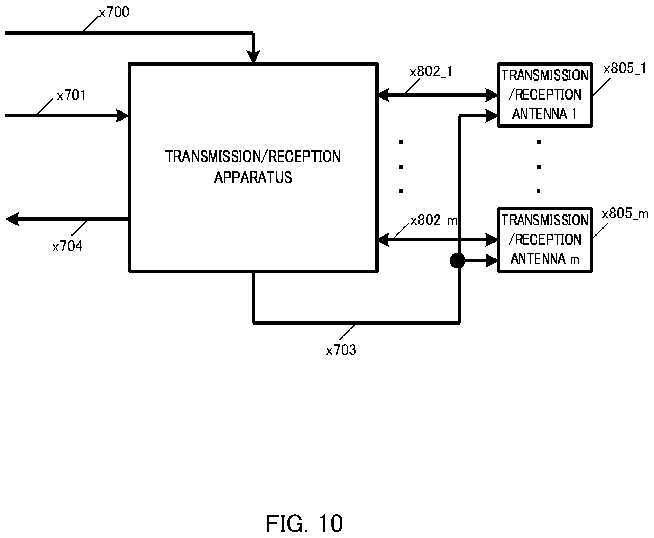

FIG. 10 illustrates another exemplary configuration of the NR apparatus (communication apparatus) such as a gNB, an NR-UE, a TRP, and a terminal. In FIG. 10, the components that operate in the same manner as the components in FIG. 9 are denoted by the same reference numerals, and descriptions thereof will be omitted.

In a case where the gNB has the configuration in FIG. 10, transmit beamforming (transmission directivity control) and receive beamforming (reception directivity control) are performed using one or more of "transmission/reception antenna 1 labeled x805_1 to transmission/reception antenna m labeled x805_m."

The gNB with the configuration in FIG. 10 performs the transmit beamforming (transmission directivity control) and transmits a reference signal, for example.

For example, the gNB with the configuration in FIG. 10 uses a first transmit beam to transmit a first reference signal, use a second transmit beam to transmit a second reference signal, and so forth.

The gNB then determines "transmit beamforming and receive beamforming" to be used for communication with each terminal, and transmits and receives a feedback signal, frame, slot, modulation signal, data symbol, and the like.

In a case where the NR-UE has the configuration in FIG. 10, transmit beamforming (transmission directivity control) and receive beamforming (reception directivity control) are performed using one or more of "transmission/reception antenna 1 labeled x805_1 to transmission/reception antenna m labeled x805_m."

Then, the NR-UE with the configuration in FIG. 10 performs transmit beamforming (transmission directivity control) and transmits sector sweep reference signals.

For example, the NR-UE with the configuration in FIG. 10 uses a first transmit beam to transmit a first reference signal, uses a second transmit beam to transmit a second reference signal, and so forth.

The NR-UE then determines "transmit beamforming and receive beamforming" to be used for communication with the gNB, and transmits and receives a feedback signal, frame, slot, modulation signal, data symbol, and the like.

Incidentally, FIG. 10 illustrates a configuration in which the transmission panel antenna and the reception panel antenna are shared, but the transmission panel antenna and the reception panel antenna may be units separate from each other. Further, it is possible to set the number of transmission panel antennas and the number of reception panel antennas, respectively.

Note that a configuration of "the communication apparatus such as gNB and NR-UE" is not limited to those in FIGS. 1A, 1B, 1C, 9 and 10, and they are merely examples.

The transmission/reception panel antenna (x705_1 to x705_M) in FIG. 9 may be composed of a single antenna or a plurality of antennas. In addition, the transmission/reception panel antenna (x705_1 to x705_M) may be composed of a single antenna element or a plurality of antenna elements. A configuration of the transmission/reception panel antenna (x705_1 to x705_M) is not limited to the configuration described in the present embodiment.

The transmission/reception antenna (x805_1 to x805_m) in FIG. 10 may be composed of a single antenna or a plurality of antennas. In addition, the transmission/reception antenna (x805_1 to x805_m) may be composed of a single antenna element or a plurality of antenna elements. A configuration of the transmission/reception antenna (x805_1 to x805_m) is not limited to the configuration described in the present embodiment.

Note that, for example, in a case where transmission/reception panel antenna i labeled x705_i in FIG. 9 uses the transmission panel antenna in the configuration of FIG. 3 and the reception panel antenna in the configuration of FIG. 4 together, transmission antenna 306_1 in FIG. 3 and reception antenna 401_1 in FIG. 4 are used together as a single antenna, and multiplier 304_1 and multiplier 403_1 are connected to this single antenna.

Likewise, transmission antenna 306_2 in FIG. 3 and reception antenna 401_2 in FIG. 4 are used together as a single antenna, and multiplier 304_2 and multiplier 403_2 are connected to this single antenna. In addition, transmission antenna 306_3 in FIG. 3 and reception antenna 401_3 in FIG. 4 are used together as a single antenna, and multiplier 304_3 and multiplier 403_3 are connected to this single antenna. Then, transmission antenna 306_4 in FIG. 3 and reception antenna 401_4 in FIG. 4 are used together as a single antenna, and multiplier 304_4 and multiplier 403_4 are connected to this single antenna.

Note that an NR apparatus such as a gNB, an NR-UE, a TRP having a configuration in FIG. 1A, FIG. 1B, FIG. 1C, FIG. 9, or FIG. 10 may be a radio (communication) apparatus using a low frequency (e.g., 24GHz or less) or may be a radio (communication) apparatus using a high frequency (e.g., 24GHz or more).

For example, the radio communication apparatus using high frequency is sometimes referred to as a transmission antenna, a reception antenna, and an omni-directional antenna.

Regarding Omni-Directional Antenna:

In a case where the gNB and NR-UE have the configuration in FIG. 9, signal reception is performed by using one or more of "transmission/reception panel antenna 1 labeled x705_1 to transmission/reception panel antenna M labeled x705_M."

In each of "transmission/reception panel antenna 1 labeled x705_1 to transmission/reception panel antenna M labeled x705_M," certain receive beamforming (reception directivity control) is configured for antennas composing the transmission/reception panel antenna.

Note that not all antennas composing the transmission/reception panel antenna need to be used for signal reception, and the configuration of receive beamforming (reception directivity control) may or may not be fixed in time.

The method of using the transmission/reception panel antenna in omni-directional reception is not limited to the above example.

In a case where the gNB and NR-UE have the configuration in FIG. 10, signal reception is performed by using one or more of "transmission/reception antenna 1 labeled x805_1 to transmission/reception antenna m labeled x805_m."

In each of "transmission/reception antenna 1 labeled x805_1 to transmission/reception antenna m labeled x805_m," certain receive beamforming (reception directivity control) is configured for antennas composing the transmission/reception antenna.

Note that not all antennas composing the transmission/reception antenna need to be used for signal reception.

The method of using the transmission/reception antenna in omni-directional reception is not limited to the above example.

Incidentally, for example, the radio communication apparatus using high frequency is sometimes referred to as a transmission antenna, a reception antenna, and a directional antenna.

Regarding Directional Antenna:

In a case where the gNB and NR-UE have the configuration in FIG. 9, signal reception is performed by using one of "transmission/reception panel antenna 1 labeled x705_1 to transmission/reception panel antenna M labeled x705_M."

In detecting a signal in the directional reception, each transmission panel antenna performs, for example, four types of receive beamforming (reception directivity control).

In detecting a signal in the directional reception, the gNB, NR-UE, and TRP perform, for example, receive beamforming (reception directivity control) according to the first parameter, receive beamforming (reception directivity control) according to the second parameter, receive beamforming (reception directivity control) according to the third parameter, and receive beamforming (reception directivity control) according to the fourth parameter in transmission/reception panel antenna 1 labeled x705_1.

Further, in detecting a signal in the directional reception, the gNB and NR-UE perform receive beamforming (reception directivity control) according to the fifth parameter, receive beamforming (reception directivity control) according to the sixth parameter, receive beamforming (reception directivity control) according to the seventh parameter, and receive beamforming (reception directivity control) according to the eighth parameter in transmission/reception panel antenna 2 labeled x705_2.

Thus, in detecting a signal in the directional reception, receive beamforming (reception directivity control) according to the $(4 \times i - 3)$-th parameter, receive beamforming (reception directivity control) according to the $(4 \times i - 2)$-th parameter, receive beamforming (reception directivity control) according to the $(4 \times i - 1)$-th parameter, and receive beamforming (reception directivity control) according to the $(4 \times i)$-th parameter are performed in transmission/reception panel antenna i labeled x705_i. Note that i is an integer from 1 to M (both inclusive).

Then, the gNB and NR-UE perform receive beamforming (reception directivity control) according to the first parameter, and confirm whether a signal is present. Accordingly, the gNB and NR-UE use transmission/reception panel antenna 1 labeled x705_1.

The gNB and NR-UE perform receive beamforming (reception directivity control) according to the second parameter, and confirm whether a signal is present. Accordingly, the gNB and NR-UE use transmission/reception panel antenna 1 labeled x705_1.

The gNB and NR-UE perform receive beamforming (reception directivity control) according to the third parameter, and confirm whether a signal is present. Accordingly, the gNB and NR-UE use transmission/reception panel antenna 1 labeled x705_1.

The gNB and NR-UE perform receive beamforming (reception directivity control) according to the fourth parameter, and confirm whether a signal is present. Accordingly, the gNB and NR-UE use transmission/reception panel antenna 1 labeled x705_1.

The gNB and NR-UE perform receive beamforming (reception directivity control) according to the fifth parameter, and confirm whether a signal is present. Accordingly, the gNB and NR-UE use transmission/reception panel antenna 2 labeled x705_2.

The gNB and NR-UE perform receive beamforming (reception directivity control) according to the sixth parameter, and confirm whether a signal is present. Accordingly, the gNB and NR-UE use transmission/reception panel antenna 2 labeled x705_2.

The gNB and NR-UE perform receive beamforming (reception directivity control) according to the seventh parameter, and confirm whether a signal is present. Accordingly, the gNB and NR-UE use transmission/reception panel antenna 2 labeled x705_2.

The gNB and NR-UE perform receive beamforming (reception directivity control) according to the eighth parameter, and confirm whether a signal is present. Accordingly, the gNB and NR-UE use transmission/reception panel antenna 2 labeled x705_2.

Thus, the gNB and NR-UE perform receive beamforming (reception directivity control) according to the $(4 \times i - 3)$-th parameter, and confirm whether a signal is present. Accordingly, the gNB and NR-UE use transmission/reception panel antenna i labeled x705_i.

The gNB and NR-UE perform receive beamforming (reception directivity control) according to the $(4 \times i - 2)$-th parameter, and confirm whether a signal is present. Accordingly, the gNB and NR-UE use transmission/reception panel antenna i labeled x705_i.

The gNB and NR-UE perform receive beamforming (reception directivity control) according to the $(4 \times i - 1)$-th parameter, and confirm whether a signal is present. Accordingly, the gNB and NR-UE use transmission/reception panel antenna i labeled x705_i.

The gNB and NR-UE perform receive beamforming (reception directivity control) according to the $(4 \times i)$-th parameter, and confirm whether a signal is present. Accordingly, the gNB and NR-UE use transmission/reception panel antenna i labeled x705_i.

Note that i is an integer from 1 to M (both inclusive).

Another example will be described. In a case where the gNB, NR-UE, and TRP have the configuration in FIG. 10, signal reception is performed by using one or more of "transmission/reception antenna 1 labeled x805_1 to transmission/reception antenna m labeled x805_m" and performing receive beamforming (reception directivity control).

In detecting a signal in the directional reception, g types of receive beamforming (reception directivity control) are performed by using one or more of "transmission/reception antenna 1 labeled x805_1 to transmission/reception antenna m labeled x805_m." Note that g is an integer equal to or greater than 2.

The gNB and NR-UE perform receive beamforming (reception directivity control) according to the first parameter by using one or more of "transmission/reception antenna 1 labeled x805_1 to transmission/reception antenna m labeled x805_m," and confirm whether a signal is present.

The gNB and NR-UE perform receive beamforming (reception directivity control) according to the second parameter by using one or more of "transmission/reception antenna 1 labeled x805_1 to transmission/reception antenna m labeled x805_m," and confirm whether a signal is present.

The gNB and NR-UE perform receive beamforming (reception directivity control) according to the third parameter by using one or more of "transmission/reception antenna 1 labeled x805_1 to transmission/reception antenna m labeled x805_m," and confirm whether a signal is present.

The gNB and NR-UE perform receive beamforming (reception directivity control) according to the fourth parameter by using one or more of "transmission/reception antenna 1 labeled x805_1 to transmission/reception antenna m labeled x805_m," and confirm whether a signal is present.

The gNB and NR-UE perform receive beamforming (reception directivity control) according to the fifth parameter by using one or more of "transmission/reception antenna 1 labeled x805_1 to transmission/reception antenna m labeled x805_m," and confirm whether a signal is present.

The gNB and NR-UE perform receive beamforming (reception directivity control) according to the sixth parameter by using one or more of "transmission/reception antenna 1 labeled x805_1 to transmission/reception antenna m labeled x805_m," and confirm whether a signal is present.

The gNB and NR-UE perform receive beamforming (reception directivity control) according to the seventh parameter by using one or more of "transmission/reception antenna 1 labeled x805_1 to transmission/reception antenna m labeled x805_m," and confirm whether a signal is present.

The gNB and NR-UE perform receive beamforming (reception directivity control) according to the eighth parameter by using one or more of "transmission/reception antenna 1 labeled x805_1 to transmission/reception antenna m labeled x805_m," and confirm whether a signal is present.

Thus, the gNB and NR-UE perform receive beamforming (reception directivity control) according to the i-th parameter by using one or more of "transmission/reception antenna 1 labeled x805_1 to transmission/reception antenna m labeled x805_m," and confirm whether a signal is present. Note that i is an integer from 1 to g (both inclusive).

The methods of transmit/receive beamforming are not limited to the above-mentioned examples. For example, in FIG. 10, transmit beamforming may be performed using one or more transmission/reception antennas of transmission/-reception antenna 1 labeled x805_1 to transmission/reception antenna m labeled x805_m. Further, in FIG.10, receive beamforming may be performed using one or more transmission/reception antennas of transmission/reception antenna 1 labeled x805_1 to transmission/reception antenna m labeled x805_m.

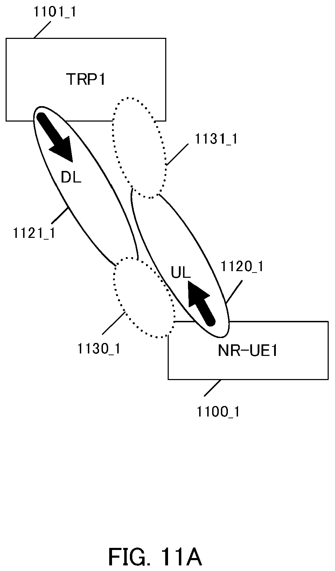

Next, an exemplary radio system related to the present invention will be illustrated in FIG. 11A.

As in FIG. 11A, for example, there are TRP (TRP: Tx (Transmission)/Rx (Reception) point) 1 labeled 1101_1 and NR-UE 1 labeled 1100_1.

At this time, TRP 1 labeled 1101_1 generates transmission beam 1121_1 and uses transmission beam 1121_1 to transmit a modulation signal addressed to NR-UE 1 labeled 1100_1 (Downlink (DL)).

NR-UE 1 labeled 1100_1 then generates received beam 1130_1 and uses received beam 1130_1 to receive the modulation signal addressed to NR-UE 1 that has been transmitted by TRP 1 labeled 1101_1.

Moreover, NR-UE 1 labeled 1100_1 generates transmission beam 1120_1 and uses transmission beam 1120_1 to transmit a modulation signal addressed to TRP 1 labeled 1101_1 (Uplink (UL)).

TRP 1 labeled 1101_1 then generates received beam 1131_1 and uses received beam 1131_1 to receive the modulation signal addressed to TRP 1 that has been transmitted by NR-UE 1 labeled 1100_1.

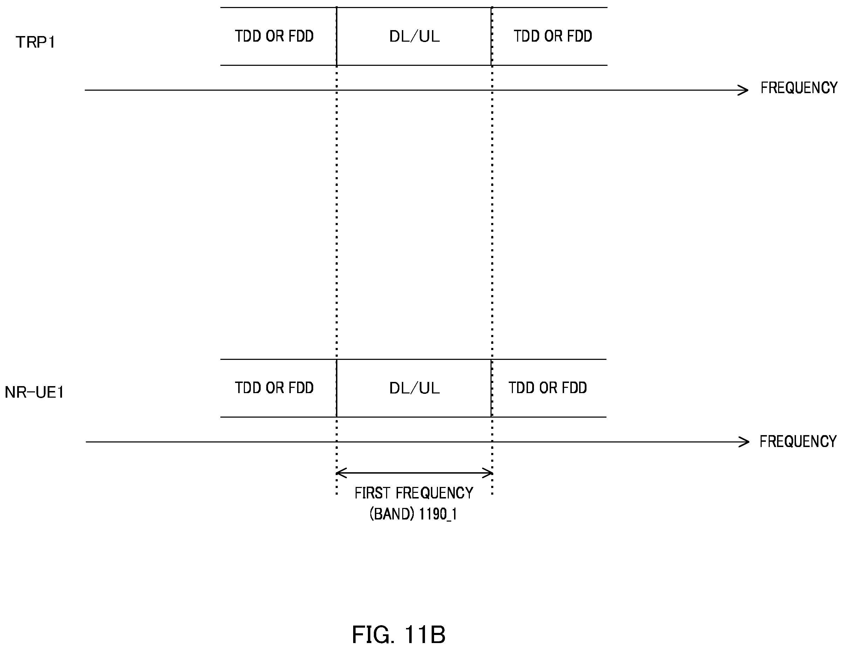

FIG. 11B illustrates exemplary communication states of "TRP 1 labeled 1101_1, TRP 2 labeled 1101_2, and NR-UE 1 labeled 1100_1" in a frequency axis in FIG. 11A. Note that, in FIG. 11B, a horizontal axis represents frequency.

TRP 1 labeled 1101_1 uses first frequency (band) 1190_1 to transmit a modulation signal for downlink and to receive a modulation signal for uplink. At this time, for example, NR-UE 1 labeled 1100_1 receives the modulation signal transmitted by TRP 1 labeled 1101_1. TRP 1 labeled 1101_1 then receives the modulation signal at first frequency (band) 1190_1 transmitted by NR-UE 1 labeled 1100_1. Note that, as in FIG. 11B, TRP 1 labeled 1101_1 may perform communication by Time Division Duplex (TDD) (also referred to as "TDD communication") and communication by Frequency Division Duplex (FDD) (also referred to as "FDD communication") at a frequency (band) other than first frequency (band) 1190_1. Unlike FIG. 11B, TRP 1 labeled 1101_1 need not perform communication at a frequency (band) other than first frequency (band) 1190_1.

NR-UE 1 labeled 1100_1 uses first frequency (band) 1190_1 to receive a modulation signal for downlink and to transmit a modulation signal for uplink. At this time, for example, TRP 1 labeled 1101_1 receives the modulation signal transmitted by NR-UE 1 labeled 1100_1. NR-UE 1 labeled 1100_1 then receives the modulation signal at first frequency (band) 1190_1 transmitted by TRP 1 labeled 1101_1. Note that, as in FIG. 11B, NR-UE 1 labeled 1100_1 may perform the TDD communication or FDD communication at a frequency (band) other than first frequency (band) 1190_1. Unlike FIG. 11B, NR-UE 1 labeled 1100_1 need not perform communication at a frequency (band) other than first frequency (band) 1190_1.

In FIG. 11B, a case has been described where the frequency for "downlink" and the frequency for "uplink" are the same frequency (band), but the frequency for "downlink" and the frequency for "uplink" may be partly the same frequency (band). Alternatively, the frequency for "downlink" and the frequency for "uplink" may be different from each other. TDD and FDD will be described later.

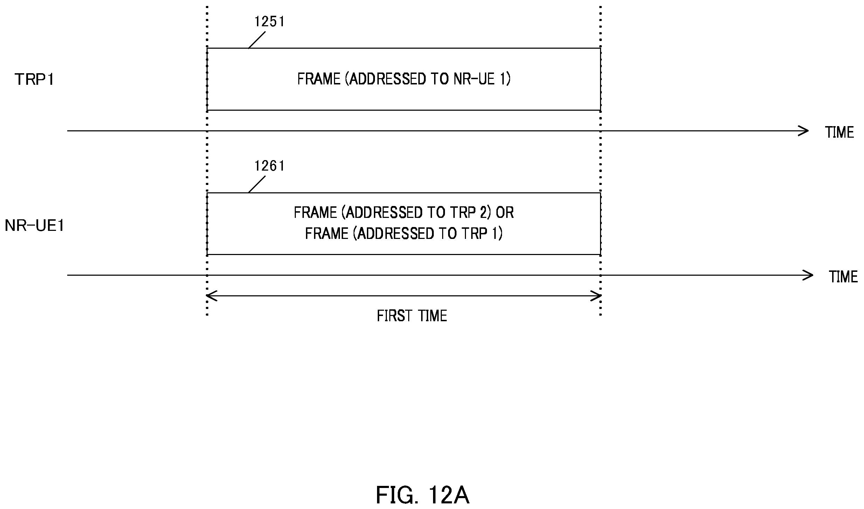

FIG. 12A illustrates transmission statuses of TRP 1 labeled 1101_1 and NR-UE 1 labeled 1100_1 in a time axis in situations of FIG. 11A and FIG. 11B. Note that, in FIG. 12A, a horizontal axis represents time.

As illustrated in FIG. 12A, TRP 1 labeled 1101_1 transmits frame 1251 addressed to NR-UE 1 labeled 1100_1 in the first time. Moreover, NR-UE 1 labeled 1100_1 transmits frame 1261 addressed to TRP 1 labeled 1101_1 in the first time.

Therefore, NR-UE 1 labeled 1100_1 and TRP 1 labeled 1101_1 perform transmission and reception at the same frequency (or partly same frequency) and in the same time.

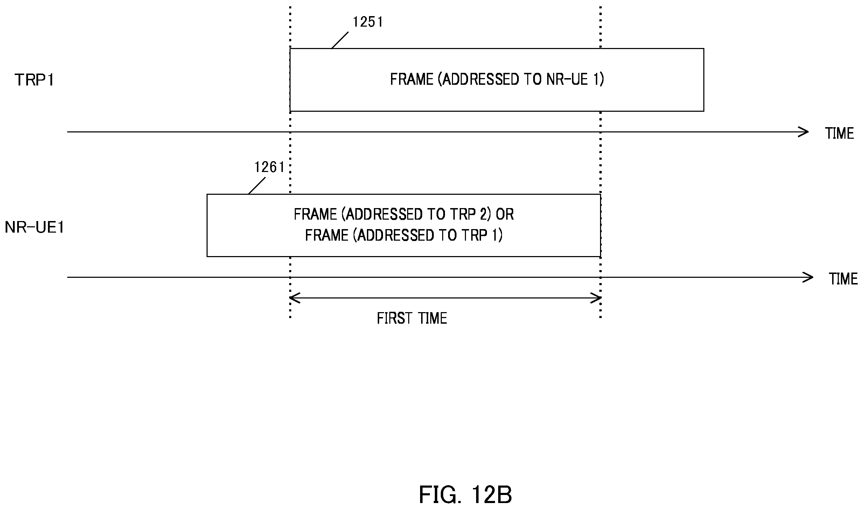

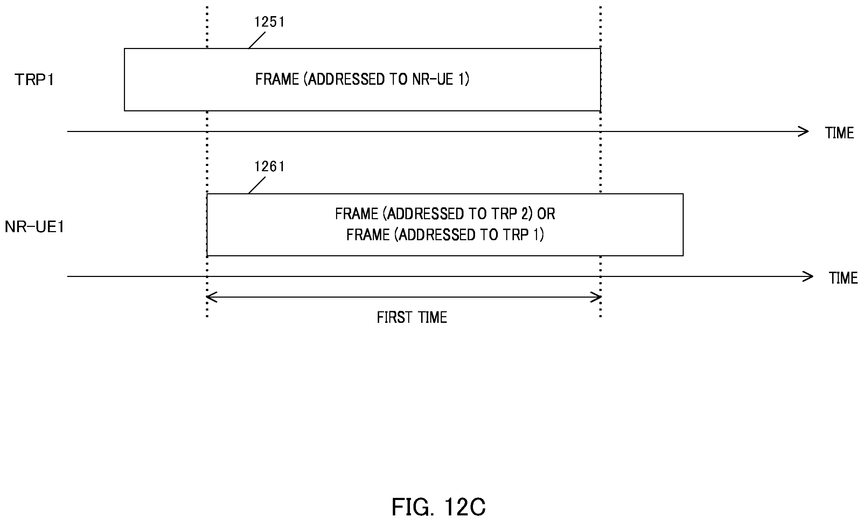

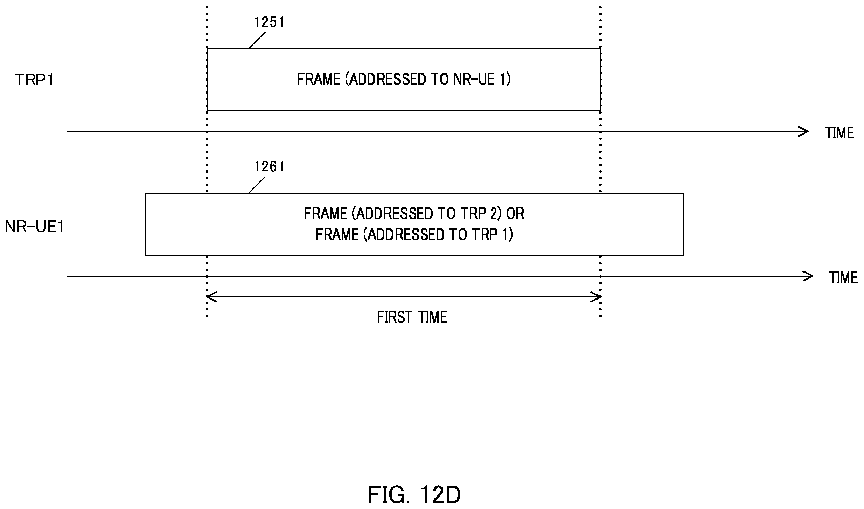

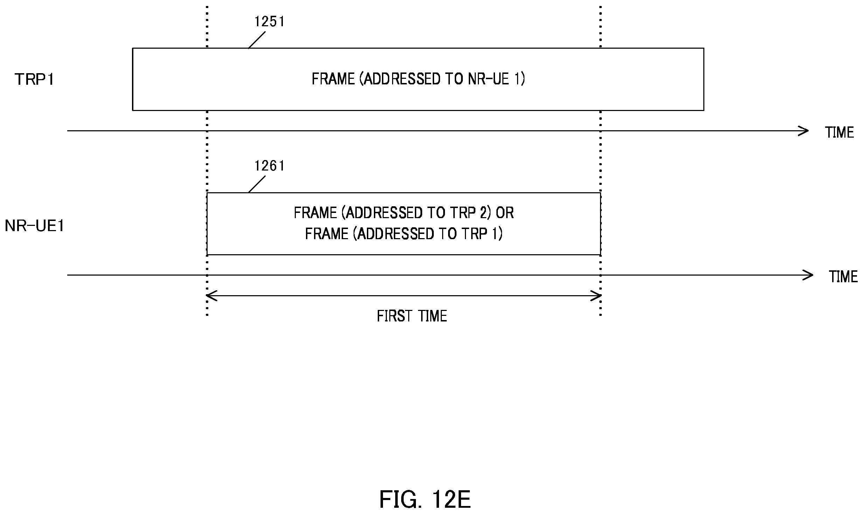

FIG. 12B, FIG. 12C, FIG. 12D, and FIG. 12E each illustrate transmission statuses of TRP 1 labeled 1101_1 and NR-UE 1 labeled 1100_1 in a time axis in situations of FIG. 11A and FIG. 11B, which are different from that in FIG. 12A. Note that, in FIG. 12B, FIG. 12C, FIG. 12D, and FIG. 12E, a horizontal axis represents time.

As illustrated in FIG. 12B, FIG. 12C, FIG. 12D, and FIG. 12E, TRP 1 labeled 1101_1 transmits frame 1251 addressed to NR-UE 1 labeled 1100_1 in any time section of the first time. Meanwhile, NR-UE 1 labeled 1100_1 transmits frame 1261 addressed to TRP 1 labeled 1101_1 in any time section of the first time.

Therefore, NR-UE 1 labeled 1100_1 and TRP 1 labeled 1101_1 perform transmission and reception at the same frequency (or partly same frequency) and in the same time.

Note that examples of temporal arrangement of the frame transmitted by TRP 1 labeled 1101_1 and the frame transmitted by NR-UE 1 labeled 1100_1 are not limited to those in FIG. 12A, FIG. 12B, FIG. 12C, FIG. 12D, and FIG. 12E, and any temporal arrangement is possible as long as both the frame transmitted by TRP 1 labeled 1101_1 and the frame transmitted by NR-UE 1 labeled 1100_1 are present at the same time.

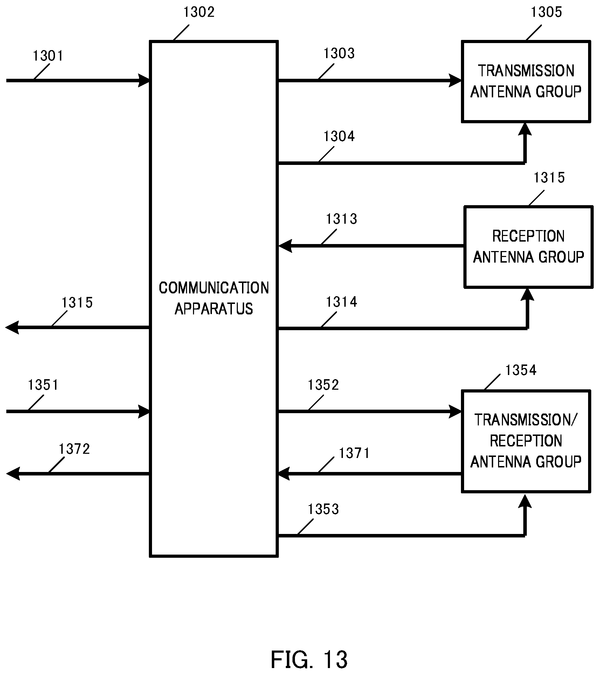

FIG. 13 illustrates an exemplary configuration an apparatus of TRP 1 labeled 1101_1. Communication apparatus 1302 inputs data 1301 and outputs modulation signal (group) 1303 including a signal addressed to NR-UE 1 labeled 1100_1, and control signal 1304. Transmission antenna (group) 1305 inputs modulation signal (group) 1303 and control signal 1304, generates a transmission signal based on control signal 1304, and outputs the transmission signal as a radio wave. At this time, the transmission signal is transmitted using transmission beam 1121_1 as illustrated in FIG. 11A, for example.

Reception antenna (group) 1315 receives a modulation signal (received signal 1313) transmitted by NR-UE 1 1100_1 illustrated in FIG. 11A. Moreover, reception antenna (group) 1315 inputs control signal 1314 and operates as a reception antenna based on control signal 1314. Communication apparatus 1302 then inputs received signal 1313, performs processing such as demodulation and decoding an error correction code, and outputs received data 1315.

Moreover, communication apparatus 1302 inputs data 1351 and outputs modulation signal (group) 1352 and control signal 1353 that are for communication by "TDD or FDD" in FIG. 11B. Transmission/reception antenna (group) 1354 inputs modulation signal (group) 1352 and control signal 1353 that are for the communication by "TDD or FDD," generates a transmission signal for the communication by "TDD or FDD" based on control signal 1353, and outputs the transmission signal as a radio wave.

Transmission/reception antenna (group) 1354 receives received signal 1371 associated with the communication by "TDD or FDD" in FIG. 11B. Communication apparatus 1302 then inputs received signal 1371, performs processing such as demodulation and decoding an error correction code, and outputs received data 1372.

Thus, for example, TRP 1 labeled 1101_1 may be configured to perform communication with NR-UE 1 labeled 1100_1 and to perform the communication by "TDD or FDD," as illustrated in FIG. 11A and FIG. 11B. Note that TRP 1 labeled 1101_1 may be configured to include no parts related to the communication by "TDD or FDD" in FIG. 13.

Incidentally, when TRP 1 labeled 1101_1 performs the communication by "TDD or FDD," a counterpart in the communication by "TDD or FDD" may be NR-UE 1 labeled 1100_1 or another NR-UE. Thus, it is possible to bring about an effect of improving the data transmission efficiency in TRP 1 labeled 1101_1. Further, when the counterpart in the communication by "TDD or FDD" is NR-UE 1 labeled 1100_1, an effect of improving the data transmission efficiency in NR-UE 1 labeled 1100_1 can be brought about.

In FIG. 13, the terms of "transmission antenna (group)," "reception antenna (group)," and "transmission/reception antenna (group)" are used, but each of them may be referred to as an antenna port or called something else. When they are referred to as antenna ports, the configuration is characterized in that TRP 1 labeled 1101_1 separately includes an "antenna port for transmitting modulation signals (group) including a signal addressed to NR-UE 1 labeled 1100_1" and an "antenna port for performing the communication by "TDD or FDD"" in FIG. 13. Alternatively, the configuration is characterized in that TRP 1 labeled 1101_1 separately includes an "antenna port for transmitting modulation signals (group) including a signal addressed to NR-UE 1 labeled 1100_1," "antenna port for receiving modulation signals (group) including a signal from NR-UE 1 labeled 1100_1," and an "antenna port for performing the communication by "TDD or FDD.""

The antenna port may be a logical antenna (antenna group) composed of one or more physical antennas. That is, the antenna port does not necessarily refer to one physical antenna, but may refer to an array antenna or the like composed of a plurality of antennas. For example, the number of physical antennas composing the antenna port is not specified, but the number of physical antennas may be specified as the minimum unit in which a terminal station is capable of transmitting a reference signal. Further, the antenna port may also be specified as a unit or a minimum unit for multiplication by a precoding vector or a weight of a precoding matrix.

Further, the "transmission antenna (group)," "reception antenna (group),"and the "transmission/reception antenna (group)" are illustrated one each in the drawings, but there may be a plurality of antennas (antenna groups). The "transmission antenna (group)," "reception antenna (group)," and the "transmission/reception antenna (group)" may be each composed of one antenna or a plurality of antennas.

Note that, in FIG. 13, a "transmission antenna group," a "reception antenna group," and a "transmission/reception antenna group" other than those illustrated in FIG. 13 may be included.

In FIG. 13, transmission antenna group 1305, reception antenna group 1315, transmission/reception antenna group 1354 are units separate from each other, but the present disclosure is not limited to this case. For example, "transmission antenna group 1305" and "transmission antenna function of transmission/reception antenna group 1354" may be shared (e.g., realized by one transmission antenna group). Alternatively, "reception antenna group 1315" and "reception antenna function of transmission/reception antenna group 1354" may be shared ((e.g., realized by one reception antenna group).

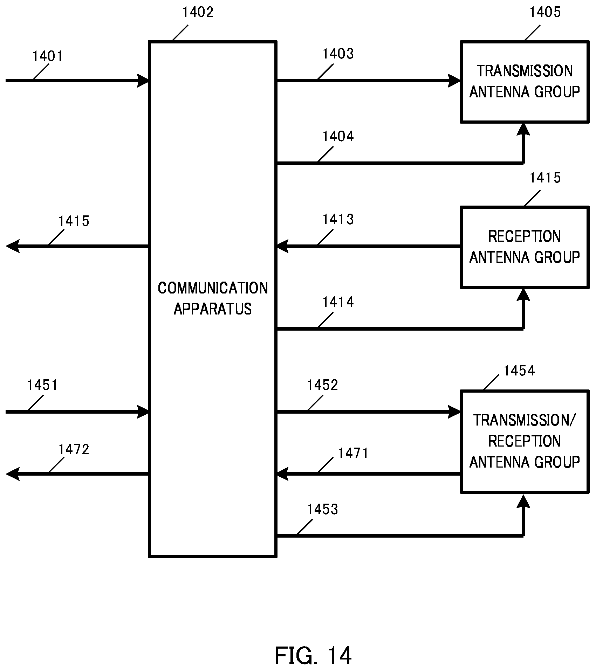

FIG. 14 illustrates an exemplary configuration an apparatus of NR-UE 1 labeled 1100_1. Communication apparatus 1402 inputs data 1401 and outputs modulation signal (group) 1403 including a signal addressed to TRP 1 labeled 1101_1, and control signal 1404. Transmission antenna (group) 1405 inputs modulation signal (group) 1403 and control signal 1404, generates a transmission signal based on control signal 1494, and outputs the transmission signal as a radio wave. At this time, the transmission signal is transmitted using transmission beam 1120_1 as illustrated in FIG. 11A, for example.

Reception antenna (group) 1415 receives the modulation signal (received signal 1413) transmitted by TRP 1 labeled 1101_1 illustrated in FIG. 11A. Further, reception antenna (group) 1415 inputs control signal 1414 and operates as a reception antenna based on control signal 1414. Communication apparatus 1302 then inputs received signal 1413, performs processing such as demodulation and decoding an error correction code, and outputs received data 1415.

Moreover, communication apparatus 1402 inputs data 1451 and outputs modulation signal (group) 1452 and control signal 1453 that are for communication by "TDD or FDD" in FIG. 11B. Transmission/reception antenna (group) 1454 inputs modulation signal (group) 1452 and control signal 1453 that are for the communication by "TDD or FDD," generates a transmission signal for the communication by "TDD or FDD" based on control signal 1453, and outputs the transmission signal as a radio wave.

Transmission/reception antenna (group) 1454 receives received signal 1471 associated with the communication by "TDD or FDD" in FIG. 11B. Communication apparatus 1402 then inputs received signal 1471, performs processing such as demodulation and decoding an error correction code, and outputs received data 1472.

Thus, for example, NR-UE 1 labeled 1100_1 may be configured to perform communication with TRP 1 labeled 1101_1 and to perform the communication by "TDD or FDD," as illustrated in FIG. 11A and FIG. 11B. Note that NR-UE 1 labeled 1100_1 may be configured to include no parts related to the communication by "TDD or FDD" in FIG. 14. At this time, NR-UE 1 labeled 1100_1 is composed of communication apparatus 1402 and transmission antenna (group) 1405, and reception antenna (group) 1415, for example.

In FIG. 14, transmission antenna group 1405, reception antenna group 1415, transmission/reception antenna group 1454 are units separate from each other, but the present disclosure is not limited to this case. For example, in FIG. 14, "transmission antenna group 1405" and "transmission antenna function of transmission/reception antenna group 1454" may be shared (e.g., realized by one transmission antenna group). Alternatively, "reception antenna group 1415" and "reception antenna function of transmission/reception antenna group 1454" may be shared ((e.g., realized by one reception antenna group).

Note that, when NR-UE 1 labeled 1100_1 performs the communication by "TDD or FDD," a counterpart in the communication by "TDD or FDD" may be TRP 1 labeled 1101_1 or another TRP. This makes it possible to bring about an effect of improving the data transmission efficiency in NR-UE 1 labeled 1100_1.

In FIG. 14, the terms of "transmission antenna (group)," "reception antenna (group)," and "transmission/reception antenna (group)" are used, but each of them may be referred to as an antenna port or called something else. When they are referred to as antenna ports, the configuration is characterized in that NR-UE 1 labeled 1100_1 separately includes an "antenna port for transmitting modulation signals (group) 1403 including a signal addressed to TRP 1 labeled 1101_1" and an "antenna port for performing the communication by "TDD or FDD"" in FIG. 14. Alternatively, the configuration is characterized in that NR-UE 1 labeled 1100_1 separately includes the "antenna port for transmitting modulation signals (group) 1403 including a signal addressed to TRP 1 labeled 1101_1," an "antenna port for receiving modulation signals (group) transmitted by TRP 1 labeled 1101_1," and the "antenna port for performing the communication by "TDD or FDD"" in FIG. 14.

Further, the "transmission antenna (group)," "reception antenna (group),"and the "transmission/reception antenna (group)" are illustrated one each in the drawings, but there may be a plurality of antennas (antenna groups). The "transmission antenna (group)," "reception antenna (group)," and the "transmission/reception antenna (group)" may be each composed of one antenna or a plurality of antennas.

In the present embodiment, a method in which TRP 1 labeled 1101_1 and NR-UE 1 labeled 1100_1 communicate with each other, as described with reference to FIG. 11A, FIG. 11B, "FIG. 12A, FIG. 12B, FIG. 12C, FIG. 12D, and FIG. 12E," and the like is referred to as Communication Method 1 (or Full Duplex)

Next, another communication method will be described.

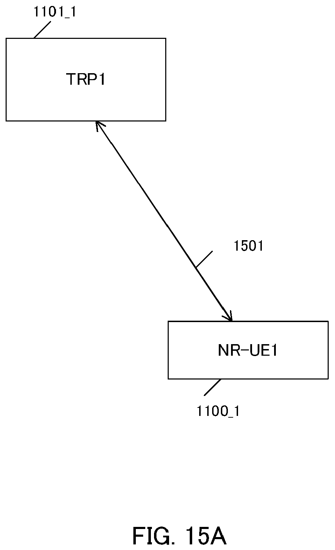

FIG. 15A illustrates an exemplary radio system different from that in FIG. 11A. As illustrated in FIG. 15A, there are TRP 1 labeled 1101_1 and NR-UE 1 labeled 1100_1, for example. Note that, in FIG. 15A, the components that operate in the same manner as the components in FIG. 11A are denoted by the same reference numerals, and some descriptions thereof will be omitted.

NR-UE 1 labeled 1100_1 and TRP 1 labeled 1101_1 perform communication by "TDD or FDD" (1501). Detailed descriptions of TDD and FDD will be given later.

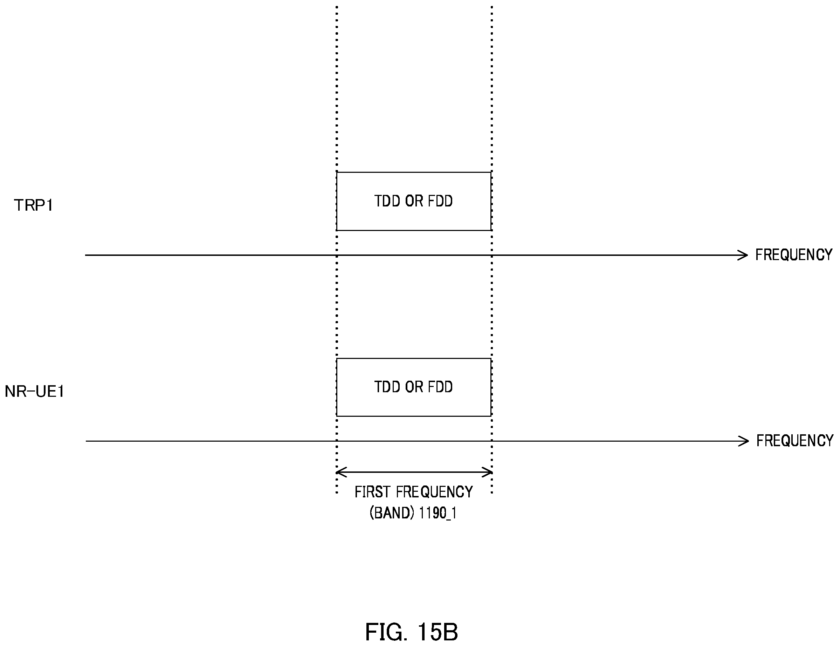

FIG. 15B illustrates exemplary states of "TRP 1 labeled 1101_1 and NR-UE 1 labeled 1100_1" in the frequency axis in FIG. 15A. Note that, in FIG. 15B, a horizontal axis represents frequency.

NR-UE 1 labeled 1100_1 and TRP 1 labeled 1101_1 use first frequency (band) 1190_1 to perform communication by "TDD or FDD." Note that NR-UE 1 labeled 1100_1 and TRP 1 labeled 1101_1 may use a frequency other than first frequency (band) 1190_1 for this communication, or as in FIG. 15B, NR-UE 1 labeled 1100_1 and TRP 1 labeled 1101_1 need not use a frequency other than first frequency (band) 1190_1.

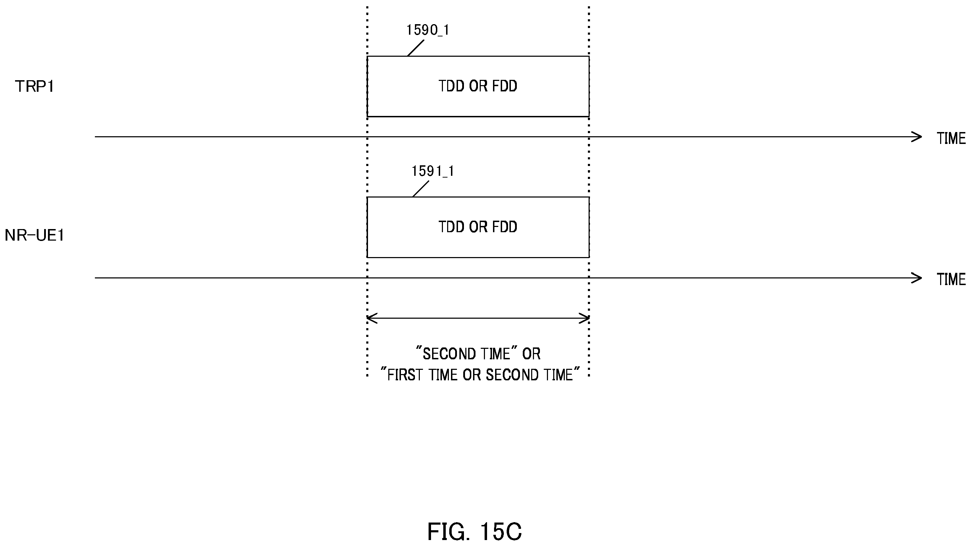

FIG. 15C illustrates exemplary communication statuses of NR-UE 1 labeled 1100_1 and TRP 1 labeled 1101_1 in time in FIG. 15A. In FIG. 15C, a horizontal axis represents time.

As illustrated in FIG. 15C, NR-UE 1 labeled 1100_1 and TRP 1 labeled 1101_1 perform communication in the second time as indicated in FIG. 15A (1590_1 and 1591_1).

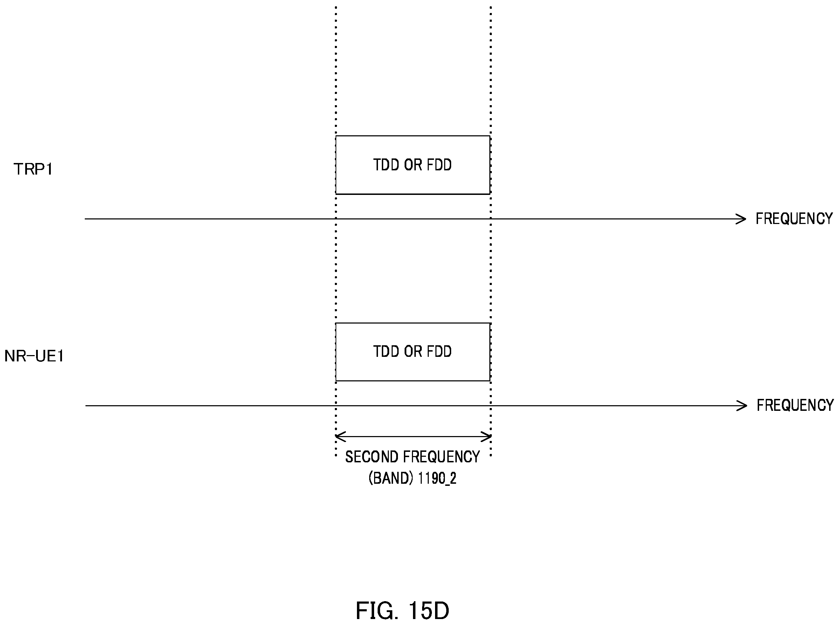

Note that NR-UE 1 labeled 1100_1 and TRP 1 labeled 1101_1 may perform communication in time other than the second time. Further, NR-UE 1 labeled 1100_1 and TRP 1 labeled 1101_1 may use the frequency as described in FIG. 15B or FIG. 15D. FIG. 15D will be described below.

FIG. 15D illustrates exemplary communication statuses of "TRP 1 labeled 1101_1 and NR-UE 1 labeled 1100_1" in the frequency axis in FIG. 15A. Note that, in FIG. 15D, a horizontal axis represents frequency.

NR-UE 1 labeled 1100_1 and TRP 1 labeled 1101_1 use second frequency (band) 1190_2 to perform communication by "TDD or FDD."

Note that NR-UE 1 labeled 1100_1 and TRP 1 labeled 1101_1 may use a frequency other than second frequency (band) 1190_2 for this communication, or as in FIG. 15D, NR-UE 1 labeled 1100_1 and TRP 1 labeled 1101_1 need not use a frequency other than second frequency (band) 1190_2.

The following two cases are discussed.

Case 1:

The "communication method described with reference to FIG. 11A, FIG. 11B, and FIG. 12A (or FIG. 12B, FIG. 12C, FIG. 12D, or FIG. 12E) (i.e., Communication Method 1)" is performed in the first time, whereas, the "communication method described with reference to FIG. 15A, FIG. 15B, and FIG. 15C" is performed in the second time.

Case 2:

The "communication method described with reference to FIG. 11A, FIG. 11B, and FIG. 12A (or FIG. 12B, FIG. 12C, FIG. 12D, or FIG. 12E) (i.e., Communication Method 1)" is performed in the first time, whereas, the "communication method described with reference to FIG. 15A, FIG. 15C, and FIG. 15D" is performed in the first time or the second time.

In Case 1 and Case 2, TRP 1 labeled 1101_1 and NR-UE 1 labeled 1100_1 communicate with each other. At this time, for example, the configuration in FIG. 13 is possible as an exemplary configuration of TRP 1 labeled 1101_1. However, the configuration of TRP 1 labeled 1101_1 is not limited to the configuration in FIG. 13 and may be, for example, a configuration that includes no transmission antenna group 1305 in FIG. 13.

Further, for example, the configuration in FIG. 14 is possible as an exemplary configuration of NR-UE 1 labeled 1100_1. However, the configuration of NR-UE 1 labeled 1100_1 is not limited to the configuration in FIG. 14 and may be, for example, a configuration that does not include one or more of transmission antenna group 1405, reception antenna group 1415, and transmission/reception antenna group 1454 in FIG. 14.

At this time, TRP 1 labeled 1101_1 having the configuration in FIG. 13 includes, in communication apparatus 1302, a "transmission power controller" that controls transmission (electric) power, and NR-UE 1 labeled 1100_1 having the configuration in FIG. 14 includes, in communication apparatus 1402, a "transmission power controller" for that controls transmission (electric) power.

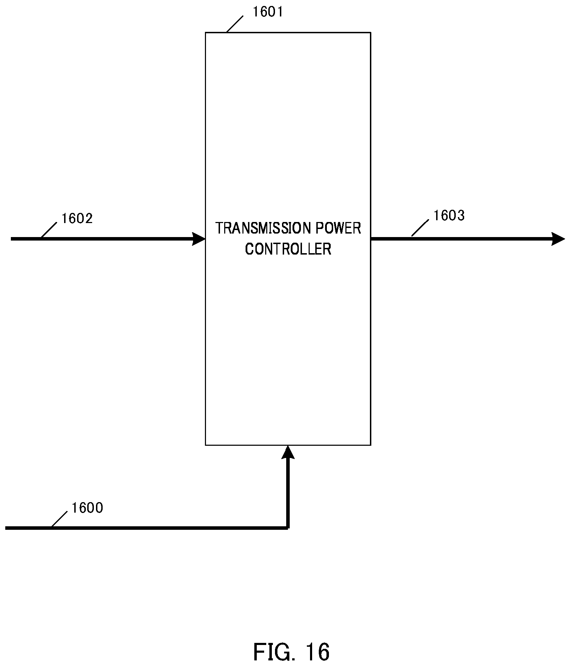

FIG. 16 illustrates an exemplary configuration of the "transmission power controller" included in TRP 1 labeled 1101_1 having the configuration in FIG. 13 and the "transmission power controller" included in NR-UE 1 labeled 1100_1 having the configuration in FIG. 14.

As illustrated in FIG. 16, transmission power controller 1601 inputs modulation signal 1602 and control signal 1600, controls transmission (electric) power of modulation signal 1602, based on control signal 1600, and then outputs transmission-power-control-subjected modulation signal 1603.

First Example of Case 1:

In the first example of Case 1, NR-UE 1 labeled 1100_1 and TRP 1 labeled 1101_1 can transmit modulation signals using, as a frequency (band), frequency (band) $\alpha1$ (in units Hz) and frequency (band) $\beta1$ (in units Hz). Note that $\alpha1$ is assumed to be larger than $\beta1$ ($\alpha1 > \beta1$).

When NR-UE 1 labeled 1100_1 uses frequency (band) $\alpha1$, let A1 be transmission (electric) power configured by the transmission (electric) power control.

In the first example of Case 1, when "Communication Method 1 described with reference to FIG. 11A, FIG. 11B, and FIG. 12A (or FIG. 12B, FIG. 12C, FIG. 12D, or FIG. 12E)" is performed in the first time in a situation where frequency (band) $\alpha1$ is used, let F1 be the maximum value of the transmission (electric) power of NR-UE 1 labeled 1100_1 (in units, for example, dBm). Accordingly, A1 is set to be less than or equal to F1 in the first time.

In the first example of Case 1, when the "communication method described with reference to FIG. 15A, FIG. 15B, and FIG. 15C" is performed in the second time in a situation where frequency (band) $\alpha1$ is used, let G1 be the maximum value of the transmission (electric) power of NR-UE 1 labeled 1100_1 (in units, for example, dBm). Accordingly, A1 is set to be less than or equal to G1 in the second time.

When NR-UE 1 labeled 1100_1 uses frequency (band) $\beta1$, let A2 be transmission (electric) power configured by the transmission (electric) power control.

In the first example of Case 1, when "Communication Method 1 described with reference to FIG. 11A, FIG. 11B, and FIG. 12A (or FIG. 12B, FIG. 12C, FIG. 12D, or FIG. 12E)" is performed in the first time in a situation where frequency (band) $\beta1$ is used, let F2 be the maximum value of the transmission (electric) power of NR-UE 1 labeled 1100_1 (in units, for example, dBm). Accordingly, A2 is set to be less than or equal to F2 in the first time.

In the first example of Case 1, when the "communication method described with reference to FIG. 15A, FIG. 15B, and FIG. 15C" is performed in the second time in a situation where frequency (band) $\beta1$ is used, let G2 be the maximum value of the transmission (electric) power of NR-UE 1 labeled 1100_1 (in units, for example, dBm). Accordingly, A2 is set to be less than or equal to G2 in the second time.

At this time, it is assumed that G1 and G2 are equal to each other (G1 = G2) and F1 and F2 are different from each other (F1 $\neq$ F2).

When the "communication method described with reference to FIG. 15A, FIG. 15B, and FIG. 15C" is performed in the second time of the first example of Case 1 in a situation where any of frequencies (bands) $\alpha1$ and $\beta1$ is used, transmission (electric) power A1 or A2 is controlled such that the reception quality of data in TRP 1 labeled 1101_1 is improved. When the frequency (band) is less dependent, it is made possible to maintain good reception quality even when the maximum values of the transmission (electric) power G1 and G2 are made equal.

On the other hand, when "Communication Method 1 described with reference to FIG. 11A, FIG. 11B, and FIG. 12A (or FIG. 12B, FIG. 12C, FIG. 12D, or FIG. 12E)" is performed in the first time of the first example of Case 1, transmission (electric) power A1 is controlled such that the reception quality of data in both TRP 1 labeled 1101_1 and NR-UE 1 labeled 1100_1 is improved in a situation where frequency (band) $\alpha1$ is used (because TRP 1 labeled 1101_1 and NR-UE 1 labeled 1100_1 perform reception operation in the first time). The maximum value of the transmission (electric) power is set to F1 based on this.

Similarly, when "Communication Method 1 described with reference to FIG. 11A, FIG. 11B, and FIG. 12A (or FIG. 12B, FIG. 12C, FIG. 12D, or FIG. 12E)" is performed in the first time of the first example of Case 1, transmission (electric) power A2 is controlled such that the reception quality of data in both TRP 1 labeled 1101_1 and NR-UE 1 labeled 1100_1 is improved in a situation where frequency (band) $\beta1$ is used (because TRP 1 labeled 1101_1 and NR-UE 1 labeled 1100_1 perform reception operation in the first time). The maximum value of the transmission (electric) power is set to F2 based on this.

At this time, since $\alpha1$ and $\beta1$ are different values, the characteristics of radio waves in frequency (band) $\alpha1$ (e.g., rectilinearity, diffraction, reflection, and the like) and the characteristics of radio waves in frequency (band) $\beta1$ are different

from each other. The transmission (electric) power is controlled such that the reception quality of data in both TRP 1 labeled 1101_1 and NR-UE 1 labeled 1100_1 is improved; however, at this time, both TRP 1 labeled 1101_1 and NR-UE 1 labeled 1100_1 receive the modulated signals transmitted by themselves as interference. The degree of interference depends on the characteristics of radio waves, that is, on a frequency (band). Therefore, making "the maximum value F1 of the transmission (electric) power in the first time in the case of frequency (band) $\alpha 1$" and "the maximum value F2 of the transmission (electric) power in the first time in the case of frequency (band) $\beta 1$" different from each other makes it possible to bring about an effect of improving the reception quality of data in each apparatus.

Note that, when $F1 \neq F2$ is satisfied, "G1 and F1 may be the same or different," and "G2 and F2 may be the same or different."

When TRP 1 labeled 1101_1 uses frequency (band) $\alpha 1$, let B1 be the maximum value of the transmission (electric) power set by the transmission (electric) power control.

In the first example of Case 1, when "Communication Method 1 described with reference to FIG. 11A, FIG. 11B, and FIG. 12A (or FIG. 12B, FIG. 12C, FIG. 12D, or FIG. 12E)" is performed in the first time in a situation where frequency (band) $\alpha 1$ is used, let H1 be the maximum value of the transmission (electric) power of TRP 1 labeled 1101_1 (in units, for example, dBm). Accordingly, B1 is set to be less than or equal to H1 in the first time.

In the first example of Case 1, when the "communication method described with reference to FIG. 15A, FIG. 15B, and FIG. 15C" is performed in the second time in a situation where frequency (band) $\alpha 1$ is used, let I1 be the maximum value of the transmission (electric) power of TRP 1 labeled 1101_1 (in units, for example, dBm). Accordingly, B1 is set to be less than or equal to I1 in the second time.

When TRP 1 labeled 1101_1 uses frequency (band) $\beta 1$, let B2 be transmission (electric) power configured by the transmission (electric) power control.

In the first example of Case 1, when "Communication Method 1 described with reference to FIG. 11A, FIG. 11B, and FIG. 12A (or FIG. 12B, FIG. 12C, FIG. 12D, or FIG. 12E)" is performed in the first time in a situation where frequency (band) $\beta 1$ is used, let H2 be the maximum value of the transmission (electric) power of TRP 1 labeled 1101_1 (in units, for example, dBm). Accordingly, B2 is set to be less than or equal to H2 in the first time.

In the first example of Case 1, when the "communication method described with reference to FIG. 15A, FIG. 15B, and FIG. 15C" is performed in the second time in a situation where frequency (band) $\beta 1$ is used, let I2 be the maximum value of the transmission (electric) power of TRP 1 labeled 1101_1 (in units, for example, dBm). Accordingly, B2 is set to be less than or equal to I2 in the second time.

At this time, it is assumed that I1 and I2 are equal to each other (I1 = I2) and H1 and H2 are different from each other (H1 $\neq$ H2).

When the "communication method described with reference to FIG. 15A, FIG. 15B, and FIG. 15C" is performed in the second time of the first example of Case 1 in a situation where any of frequencies (bands) $\alpha 1$ and $\beta 1$ is used, transmission (electric) power B1 or B2 is controlled such that the reception quality of data in TRP 1 labeled 1101_1 is improved. When the frequency (band) is less dependent, it is made possible to maintain good reception quality even when the maximum values of the transmission (electric) power I1 and I2 are made equal.

On the other hand, when "Communication Method 1 described with reference to FIG. 11A, FIG. 11B, and FIG. 12A (or FIG. 12B, FIG. 12C, FIG. 12D, or FIG. 12E)" is performed in the first time of the first example of Case 1, transmission (electric) power B1 is controlled such that the reception quality of data in both TRP 1 labeled 1101_1 and NR-UE 1 labeled 1100_1 is improved in a situation where frequency (band) $\alpha 1$ is used (because TRP 1 labeled 1101_1 and NR-UE 1 labeled 1100_1 perform reception operation in the first time). The maximum value of the transmission (electric) power is set to H1 based on this.

Similarly, when "Communication Method 1 described with reference to FIG. 11A, FIG. 11B, and FIG. 12A (or FIG. 12B, FIG. 12C, FIG. 12D, or FIG. 12E)" is performed in the first time of the first example of Case 1, transmission (electric) power B2 is controlled such that the reception quality of data in both TRP 1 labeled 1101_1 and NR-UE 1 labeled 1100_1 is improved in a situation where frequency (band) $\beta 1$ is used (because TRP 1 labeled 1101_1 and NR-UE 1 labeled 1100_1 perform reception operation in the first time). The maximum value of the transmission (electric) power is set to H2 based on this.

At this time, since $\alpha 1$ and $\beta 1$ are different values, the characteristics of radio waves in frequency (band) $\alpha 1$ (e.g., rectilinearity, diffraction, reflection, and the like) and the characteristics of radio waves in frequency (band) $\beta 1$ are different from each other. The transmission (electric) power is controlled such that the reception quality of data in both TRP 1 labeled 1101_1 and NR-UE 1 labeled 1100_1 is improved; however, at this time, both TRP 1 labeled 1101_1 and NR-UE 1 labeled 1100_1 receive the modulated signals transmitted by themselves as interference. The degree of interference depends on the characteristics of radio waves, that is, on a frequency (band). Therefore, making "the maximum value H1 of the transmission (electric) power in the first time in the case of frequency (band) $\alpha 1$" and "the maximum value H2 of the transmission (electric) power in the first time in the case of frequency (band) $\beta 1$" different from each other makes it possible to bring about an effect of improving the reception quality of data in each apparatus.

Note that, when $H1 \neq H2$ is satisfied, "I1 and H1 may be the same or different," and "I2 and H2 may be the same or different."

First Example of Case 2:

In the first example of Case 2, NR-UE 1 labeled 1100_1 and TRP 1 labeled 1101_1 can transmit modulation signals using frequency (band) $\alpha1$ (in units Hz) when "Communication Method 1 described with reference to FIG. 11A, FIG. 11B, and FIG. 12A (or FIG. 12B, FIG. 12C, FIG. 12D, or FIG. 12E)" is performed or using frequency (band) $\beta1$ (in units Hz) or frequency (band) $\beta2$ (in units Hz) when the "communication method described with reference to FIG. 15A, FIG. 15C, and FIG. 15D" is performed. Note that $\beta1$ is assumed to be larger than $\beta2$ ($\beta1 > \beta2$).

When NR-UE 1 labeled 1100_1 uses frequency (band) $\alpha1$, let C1 be transmission (electric) power configured by the transmission (electric) power control.

In the first example of Case 2, when "Communication Method 1 described with reference to FIG. 11A, FIG. 11B, and FIG. 12A (or FIG. 12B, FIG. 12C, FIG. 12D, or FIG. 12E)" is performed in the first time in a situation where frequency (band) $\alpha1$ is used, let J1 be the maximum value of the transmission (electric) power of NR-UE 1 labeled 1100_1 (in units, for example, dBm). Accordingly, C1 for "Communication Method 1 described with reference to FIG. 11A, FIG. 11B, and FIG. 12A (or FIG. 12B, FIG. 12C, FIG. 12D, or FIG. 12E)" is set to be less than or equal to J1.

When NR-UE 1 labeled 1100_1 uses frequency (band) $\beta1$, let C51 be transmission (electric) power configured by the transmission (electric) power control.

When the "communication method described with reference to FIG. 15A, FIG. 15C, and FIG. 15D" is performed using frequency (band) $\beta1$ in the first time or the second time of the first example of Case 2, let K51 be the maximum value of the transmission (electric) power of NR-UE 1 labeled 1100_1 (in units, for example, dBm). Accordingly, C51 for the "communication method described with reference to FIG. 15A, FIG. 15C, and FIG. 15D" is set to be less than or equal to K51.

When NR-UE 1 labeled 1100_1 uses frequency (band) $\beta2$, let C52 be transmission (electric) power configured by the transmission (electric) power control.

When the "communication method described with reference to FIG. 15A, FIG. 15C, and FIG. 15D" is performed using frequency (band) $\beta2$ in the first time or the second time of the first example of Case 2, let K52 be the maximum value of the transmission (electric) power of NR-UE 1 labeled 1100_1 (in units, for example, dBm). Accordingly, C52 for the "communication method described with reference to FIG. 15A, FIG. 15C, and FIG. 15D" is set to be less than or equal to K52.

At this time, it is assumed that K51 and K52 are different from each other ($K51 \neq K52$).

When "Communication Method 1 described with reference to FIG. 11A, FIG. 11B, and FIG. 12A (or FIG. 12B, FIG. 12C, FIG. 12D, or FIG. 12E)" is performed in the first time of the first example of Case 2, transmission (electric) power C51 is controlled such that the reception quality of data in both TRP 1 labeled 1101_1 and NR-UE 1 labeled 1100_1 is improved in a situation where frequency (band) $\beta1$ is used (because TRP 1 labeled 1101_1 and NR-UE 1 labeled 1100_1 perform reception operation in the first time). The maximum value of the transmission (electric) power is set to K51 based on this.

Similarly, when "Communication Method 1 described with reference to FIG. 11A, FIG. 11B, and FIG. 12A (or FIG. 12B, FIG. 12C, FIG. 12D, or FIG. 12E)" is performed in the first time of the first example of Case 2, transmission (electric) power C52 is controlled such that the reception quality of data in both TRP 1 labeled 1101_1 and NR-UE 1 labeled 1100_1 is improved in a situation where frequency (band) $\beta2$ is used (because TRP 1 labeled 1101_1 and NR-UE 1 labeled 1100_1 perform reception operation in the first time). The maximum value of the transmission (electric) power is set to K52 based on this.

At this time, since $\beta1$ and $\beta2$ are different values, the characteristics of radio waves in frequency (band) $\beta1$ (e.g., rectilinearity, diffraction, reflection, and the like) and the characteristics of radio waves in frequency (band) $\beta2$ are different from each other. The transmission (electric) power is controlled such that the reception quality of data in both TRP 1 labeled 1101_1 and NR-UE 1 labeled 1100_1 is improved; however, at this time, both TRP 1 labeled 1101_1 and NR-UE 1 labeled 1100_1 receive the modulated signals transmitted by themselves as interference. The degree of interference depends on the characteristics of radio waves, that is, on a frequency (band). Therefore, making "the maximum value K51 of the transmission (electric) power in the first time in the case of frequency (band) $\beta1$" and "the maximum value K52 of the transmission (electric) power in the first time in the case of frequency (band) $\beta2$" different from each other makes it possible to bring about an effect of improving the reception quality of data in each apparatus.

Incidentally, in a situation where $\alpha1 = \beta1$ is satisfied, the reception quality may be improved when $J1 \neq K51$ is satisfied. Moreover, in a situation where $\alpha1 = \beta2$ is satisfied, the reception quality may be improved when $J1 \neq K52$ is satisfied. This is because "Communication Method 1 described with reference to FIG. 11A, FIG. 11B, and FIG. 12A (or FIG. 12B, FIG. 12C, FIG. 12D, or FIG. 12E)" and the "communication method described with reference to FIG. 15A, FIG. 15C, and FIG. 15D" are different from each other.

When TRP 1 labeled 1101_1 uses frequency (band) $\alpha1$, let D1 be the maximum value of the transmission (electric) power set by the transmission (electric) power control.

In the first example of Case 2, when "Communication Method 1 described with reference to FIG. 11A, FIG. 11B, and FIG. 12A (or FIG. 12B, FIG. 12C, FIG. 12D, or FIG. 12E)" is performed in the first time in a situation where frequency (band) $\alpha1$ is used, let L1 be the maximum value of the transmission (electric) power of TRP 1 labeled 1101_1 (in units, for example, dBm). Accordingly, D1 for "Communication Method 1 described with reference to FIG. 11A, FIG. 11B, and FIG. 12A (or FIG. 12B, FIG. 12C, FIG. 12D, or FIG. 12E)" is set to be less than or equal to L1.

When TRP 1 labeled 1101_1 uses frequency (band) $\beta1$, let D51 be transmission (electric) power configured by the transmission (electric) power control.

When the "communication method described with reference to FIG. 15A, FIG. 15C, and FIG. 15D" is performed using frequency (band) $\beta1$ in the first time or the second time of the first example of Case 2, let M51 be the maximum value of the transmission (electric) power of TRP 1 labeled 1101_1 (in units, for example, dBm). Accordingly, D51 for the "communication method described with reference to FIG. 15A, FIG. 15C, and FIG. 15D" is set to be less than or equal to M51.

When TRP 1 labeled 1101_1 uses frequency (band) $\beta2$, let D52 be transmission (electric) power configured by the transmission (electric) power control.

When the "communication method described with reference to FIG. 15A, FIG. 15C, and FIG. 15D" is performed using frequency (band) $\beta1$ in the first time or the second time of the first example of Case 2, let M52 be the maximum value of the transmission (electric) power of TRP 1 labeled 1101_1 (in units, for example, dBm). Accordingly, D52 for the "communication method described with reference to FIG. 15A, FIG. 15C, and FIG. 15D" is set to be less than or equal to M52

At this time, it is assumed that M51 and M52 are different from each other (M51 $\neq$ M52).

When "Communication Method 1 described with reference to FIG. 11A, FIG. 11B, and FIG. 12A (or FIG. 12B, FIG. 12C, FIG. 12D, or FIG. 12E)" is performed in the first time of the first example of Case 2, transmission (electric) power D51 is controlled such that the reception quality of data in both TRP 1 labeled 1101_1 and NR-UE 1 labeled 1100_1 is improved in a situation where frequency (band) $\beta1$ is used (because TRP 1 labeled 1101_1 and NR-UE 1 labeled 1100_1 perform reception operation in the first time). The maximum value of the transmission (electric) power is set to M51 based on this.

Similarly, when "Communication Method 1 described with reference to FIG. 11A, FIG. 11B, and FIG. 12A (or FIG. 12B, FIG. 12C, FIG. 12D, or FIG. 12E)" is performed in the first time of the first example of Case 2, transmission (electric) power D52 is controlled such that the reception quality of data in both TRP 1 labeled 1101_1 and NR-UE 1 labeled 1100_1 is improved in a situation where frequency (band) $\beta2$ is used (because TRP 1 labeled 1101_1 and NR-UE 1 labeled 1100_1 perform reception operation in the first time). The maximum value of the transmission (electric) power is set to M52 based on this.

At this time, since $\beta1$ and $\beta2$ are different values, the characteristics of radio waves in frequency (band) $\beta1$ (e.g., rectilinearity, diffraction, reflection, and the like) and the characteristics of radio waves in frequency (band) $\beta2$ are different from each other. The transmission (electric) power is controlled such that the reception quality of data in both TRP 1 labeled 1101_1 and NR-UE 1 labeled 1100_1 is improved; however, at this time, both TRP 1 labeled 1101_1 and NR-UE 1 labeled 1100_1 receive the modulated signals transmitted by themselves as interference. The degree of interference depends on the characteristics of radio waves, that is, on a frequency (band). Therefore, making "the maximum value M51 of the transmission (electric) power in the first time in the case of frequency (band) $\beta1$" and "the maximum value M52 of the transmission (electric) power in the first time in the case of frequency (band) $\beta2$" different from each other makes it possible to bring about an effect of improving the reception quality of data in each apparatus.

Incidentally, in a situation where $\alpha1 = \beta1$ is satisfied, the reception quality may be improved when L1 $\neq$ M51 is satisfied. Moreover, in a situation where $\alpha1 = \beta2$ is satisfied, the reception quality may be improved when L1 $\neq$ M52 is satisfied. This is because "Communication Method 1 described with reference to FIG. 11A, FIG. 11B, and FIG. 12A (or FIG. 12B, FIG. 12C, FIG. 12D, or FIG. 12E)" and the "communication method described with reference to FIG. 15A, FIG. 15C, and FIG. 15D" are different from each other.

Second Example of Case 2:

In the second example of Case 2, NR-UE 1 labeled 1100_1 and TRP 1 labeled 1101_1 can transmit modulation signals using frequency (band) $\alpha1$ (in units Hz) or frequency (band) $\alpha2$ (in units Hz) when "Communication Method 1 described with reference to FIG. 11A, FIG. 11B, and FIG. 12A (or FIG. 12B, FIG. 12C, FIG. 12D, or FIG. 12E)" is performed or using frequency (band) $\beta1$ (in units Hz) or frequency (band) $\beta2$ (in units Hz) when the "communication method described with reference to FIG. 15A, FIG. 15C, and FIG. 15D" is performed. Note that it is assumed that $\alpha1$ is larger than $\alpha2$ ($\alpha1 > \alpha2$) and $\beta1$ is larger than $\beta2$ ($\beta1 > \beta2$).

When NR-UE 1 labeled 1100_1 uses frequency (band) $\alpha1$, let C11 be transmission (electric) power configured by the transmission (electric) power control.

In the second example of Case 2, when "Communication Method 1 described with reference to FIG. 11A, FIG. 11B, and FIG. 12A (or FIG. 12B, FIG. 12C, FIG. 12D, or FIG. 12E)" is performed in the first time in a situation where

frequency (band) $\alpha 1$ is used, let J11 be the maximum value of the transmission (electric) power of NR-UE 1 labeled 1100_1 (in units, for example, dBm). Accordingly, C11 for "Communication Method 1 described with reference to FIG. 11A, FIG. 11B, and FIG. 12A (or FIG. 12B, FIG. 12C, FIG. 12D, or FIG. 12E)" is set to be less than or equal to J11.

When NR-UE 1 labeled 1100_1 uses frequency (band) $\alpha 2$, let C12 be transmission (electric) power configured by the transmission (electric) power control.

In the second example of Case 2, when "Communication Method 1 described with reference to FIG. 11A, FIG. 11B, and FIG. 12A (or FIG. 12B, FIG. 12C, FIG. 12D, or FIG. 12E)" is performed in the first time in a situation where frequency (band) $\alpha 2$ is used, let J12 be the maximum value of the transmission (electric) power of NR-UE 1 labeled 1100_1 (in units, for example, dBm). Accordingly, C12 for "Communication Method 1 described with reference to FIG. 11A, FIG. 11B, and FIG. 12A (or FIG. 12B, FIG. 12C, FIG. 12D, or FIG. 12E)" is set to be less than or equal to J12.

When NR-UE 1 labeled 1100_1 uses frequency (band) $\beta 1$, let C61 be transmission (electric) power configured by the transmission (electric) power control.

When the "communication method described with reference to FIG. 15A, FIG. 15C, and FIG. 15D" is performed using frequency (band) $\beta 1$ in the first time or the second time of the second example of Case 2, let K61 be the maximum value of the transmission (electric) power of NR-UE 1 labeled 1100_1 (in units, for example, dBm). Accordingly, C61 for the "communication method described with reference to FIG. 15A, FIG. 15C, and FIG. 15D" is set to be less than or equal to K61.

When NR-UE 1 labeled 1100_1 uses frequency (band) $\beta 2$, let C62 be transmission (electric) power configured by the transmission (electric) power control.

When the "communication method described with reference to FIG. 15A, FIG. 15C, and FIG. 15D" is performed using frequency (band) $\beta 2$ in the first time or the second time of the second example of Case 2, let K62 be the maximum value of the transmission (electric) power of NR-UE 1 labeled 1100_1 (in units, for example, dBm). Accordingly, C62 for the "communication method described with reference to FIG. 15A, FIG. 15C, and FIG. 15D" is set to be less than or equal to K62.

At this time, any of the following <1>, <2>, <3>, <4>, and <5> may be established:

<1> J11 = J12 = K61 and K61 $\neq$ K62;
<2> J11 = J12 = K62 and K61 $\neq$ K62;
<3> J11 = J12 = $\omega$, K61 $\neq$ $\omega$, K62 $\neq$ $\omega$, and K61 $\neq$ K62;
<4> J11 $\neq$ J12 and K61 $\neq$ K62; and
<5> J11 $\neq$ J12, K61 $\neq$ K62, K61 $\neq$ J11, K61 $\neq$ J12, K62 $\neq$ J11, and K62 $\neq$ J12.

As mentioned above, taking into account changes in the characteristics of radio waves in the frequency (e.g., rectilinearity, diffraction, reflection, and the like), and the difference between "Communication Method 1 described with reference to FIG. 11A, FIG. 11B, and FIG. 12A (or FIG. 12B, FIG. 12C, FIG. 12D, or FIG. 12E)" and the "communication method described with reference to FIG. 15A, FIG. 15C, and FIG. 15D," when any of <1>, <2>, <3>, <4>, and <5> is established, it is possible to perform the preferred transmission power control in each case, which brings about an effect of improving the reception quality of data.

When TRP 1 labeled 1101_1 uses frequency (band) $\alpha 1$, let D11 be the maximum value of the transmission (electric) power set by the transmission (electric) power control.

In the second example of Case 2, when "Communication Method 1 described with reference to FIG. 11A, FIG. 11B, and FIG. 12A (or FIG. 12B, FIG. 12C, FIG. 12D, or FIG. 12E)" is performed in the first time in a situation where frequency (band) $\alpha 1$ is used, let L11 be the maximum value of the transmission (electric) power of TRP 1 labeled 1101_1 (in units, for example, dBm). Accordingly, D11 for "Communication Method 1 described with reference to FIG. 11A, FIG. 11B, and FIG. 12A (or FIG. 12B, FIG. 12C, FIG. 12D, or FIG. 12E)" is set to be less than or equal to L11.

When TRP 1 labeled 1101_1 uses frequency (band) $\alpha 2$, let D12 be transmission (electric) power configured by the transmission (electric) power control.

In the second example of Case 2, when "Communication Method 1 described with reference to FIG. 11A, FIG. 11B, and FIG. 12A (or FIG. 12B, FIG. 12C, FIG. 12D, or FIG. 12E)" is performed in the first time in a situation where frequency (band) $\alpha 2$ is used, let L12 be the maximum value of the transmission (electric) power of TRP 1 labeled 1101_1 (in units, for example, dBm). Accordingly, D12 for "Communication Method 1 described with reference to FIG. 11A, FIG. 11B, and FIG. 12A (or FIG. 12B, FIG. 12C, FIG. 12D, or FIG. 12E)" is set to be less than or equal to L12.

When TRP 1 labeled 1101_1 uses frequency (band) $\beta 1$, let D61 be transmission (electric) power configured by the transmission (electric) power control.

When the "communication method described with reference to FIG. 15A, FIG. 15C, and FIG. 15D" is performed using frequency (band) $\beta 1$ in the first time or the second time of the second example of Case 2, let M61 be the maximum value of the transmission (electric) power of TRP 1 labeled 1101_1 (in units, for example, dBm). Accordingly, D61 for the "communication method described with reference to FIG. 15A, FIG. 15C, and FIG. 15D" is set to be less than or equal to M61.

When TRP 1 labeled 1101_1 uses frequency (band) β2, let D62 be transmission (electric) power configured by the transmission (electric) power control.

When the "communication method described with reference to FIG. 15A, FIG. 15C, and FIG. 15D" is performed using frequency (band) β2 in the first time or the second time of the second example of Case 2, let M62 be the maximum value of the transmission (electric) power of TRP 1 labeled 1101_1 (in units, for example, dBm). Accordingly, D62 for the "communication method described with reference to FIG. 15A, FIG. 15C, and FIG. 15D" is set to be less than or equal to M62.

At this time, any of the following <6>, <7>, <8>, <9>, and <10> may be established:

<6> L11 = L12 = M61 and M61 ≠ M62;
<7> L11 = L12 = M62 and M61 ≠ M62;
<8> L11 = L12 = λ, M61 ≠ λ, M62 ≠ λ, and M61 ≠ M62;
<9> L11 ≠ L12 and M61 ≠ M62; and
<10> L11 ≠ L12, M61 ≠ M62, M61 ≠ L11, M61 ≠ L12, M62 ≠ L11, and M62 ≠L12.

As mentioned above, taking into account changes in the characteristics of radio waves in the frequency (e.g., rectilinearity, diffraction, reflection, and the like), and the difference between "Communication Method 1 described with reference to FIG. 11A, FIG. 11B, and FIG. 12A (or FIG. 12B, FIG. 12C, FIG. 12D, or FIG. 12E)" and the "communication method described with reference to FIG. 15A, FIG. 15C, and FIG. 15D," when any of <6>, <7>, <8>, <9>, and <10> is established, it is possible to perform the preferred transmission power control in each case, which brings about an effect of improving the reception quality of data.

Next, the "communication by TDD (TDD communication)" and the "communication by FDD (FDD communication)" will be described.

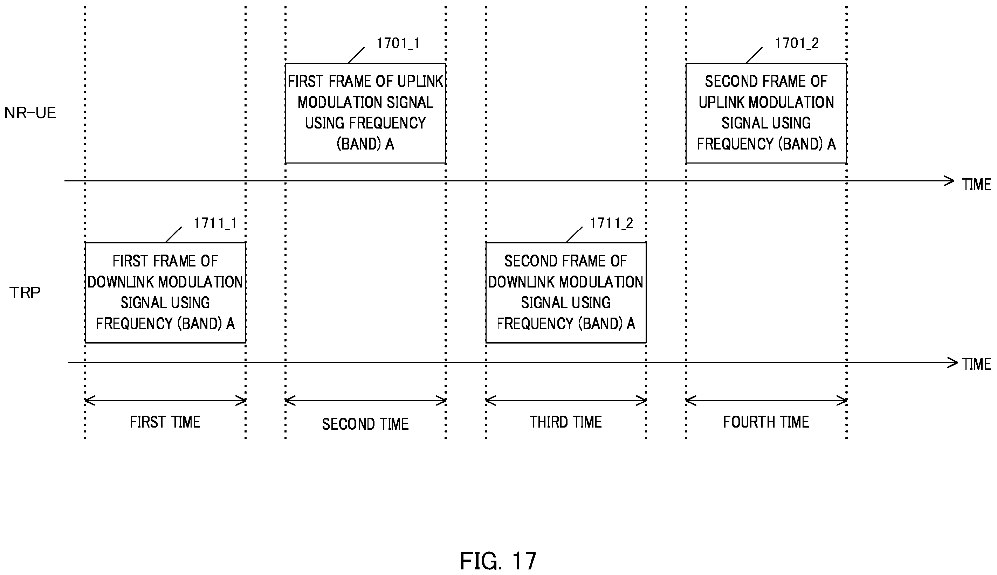

FIG. 17 illustrates an example when an NR-UE and a TRP perform TDD communication, and a horizontal axis represents time.

As illustrated in FIG. 17, the TRP transmits "first frame 1711_1 of downlink modulation signal using frequency (band) A" in the first time. At this time, the NR-UE transmits no modulation signal in the first time.

The NR-UE transmits "first frame 1701_1 of uplink modulation signal using frequency (band) A" in the second time. At this time, the TRP transmits no modulation signal in the second time.

The TRP transmits "second frame 1711_2 of downlink modulation signal using frequency (band) A" in the third time. At this time, the NR-UE transmits no modulation signal in the third time.

The NR-UE transmits "second frame 1701_2 of uplink modulation signal using frequency (band) A" in the fourth time. At this time, the TRP transmits no modulation signal in the fourth time.

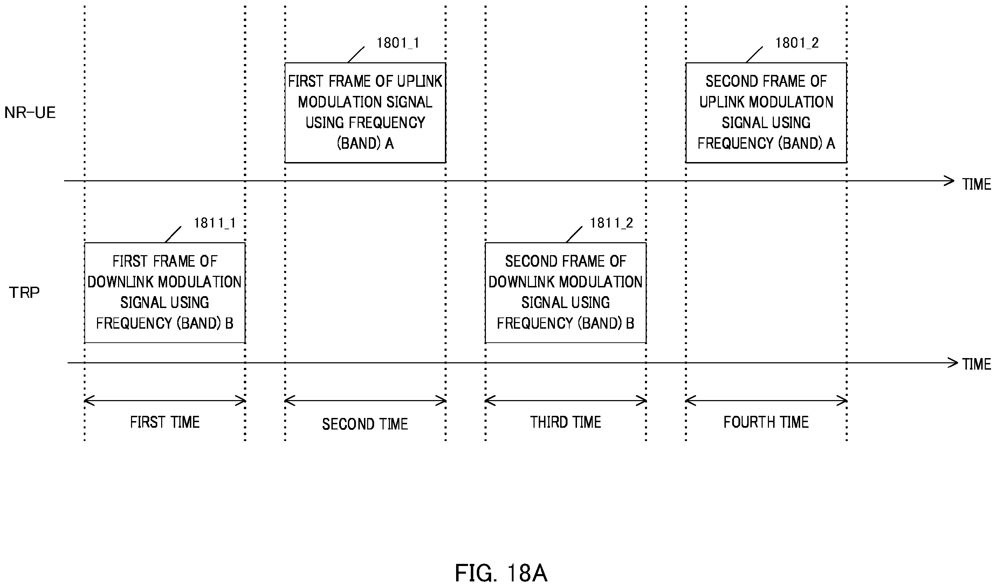

FIG. 18A illustrates a first example when an NR-UE and a TRP perform FDD communication, and a horizontal axis represents time.

As illustrated in FIG. 18A, the TRP transmits "first frame 1811_1 of downlink modulation signal using frequency (band) B" in the first time. At this time, the NR-UE transmits no modulation signal in the first time.

The NR-UE transmits "first frame 1801_1 of uplink modulation signal using frequency (band) A" in the second time. At this time, the TRP transmits no modulation signal in the second time. Note that frequency (band) A and frequency (band) B are different from each other.

The TRP transmits "second frame 1811_2 of downlink modulation signal using frequency (band) B" in the third time. At this time, the NR-UE transmits no modulation signal in the third time.

The NR-UE transmits "second frame 1801_2 of uplink modulation signal using frequency (band) A" in the fourth time. At this time, the TRP transmits no modulation signal in the fourth time.

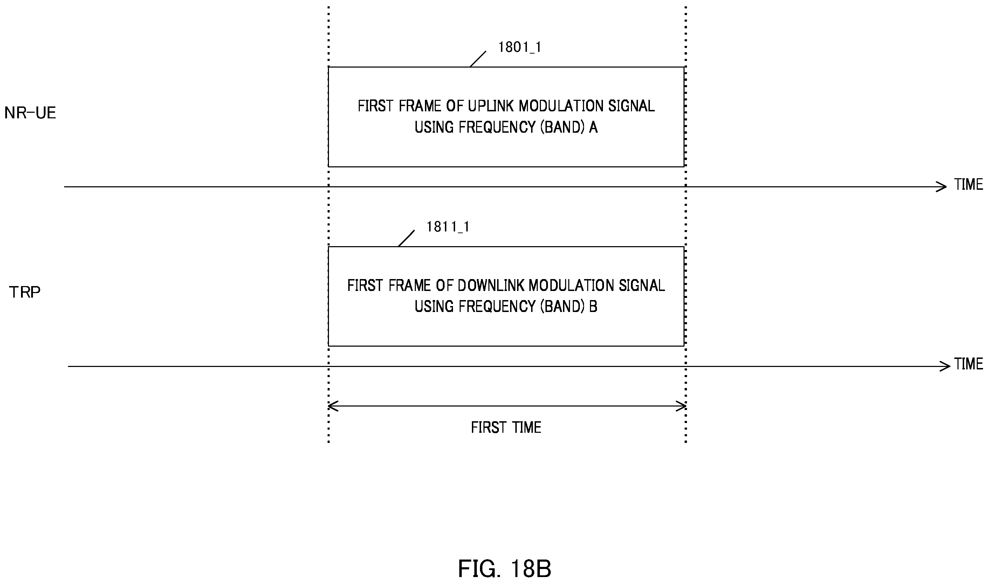

FIG. 18B illustrates a second example when an NR-UE and a TRP perform the FDD communication, which is different from that in FIG. 18A, and a horizontal axis represents time.

As illustrated in FIG. 18B, the TRP transmits "first frame 1811_1 of downlink modulation signal using frequency (band) B" in the first time. Meanwhile, the NR-UE transmits "first frame 1801_1 of uplink modulation signal using frequency (band) A" in the first time. Note that frequency (band) A and frequency (band) B are different from each other.

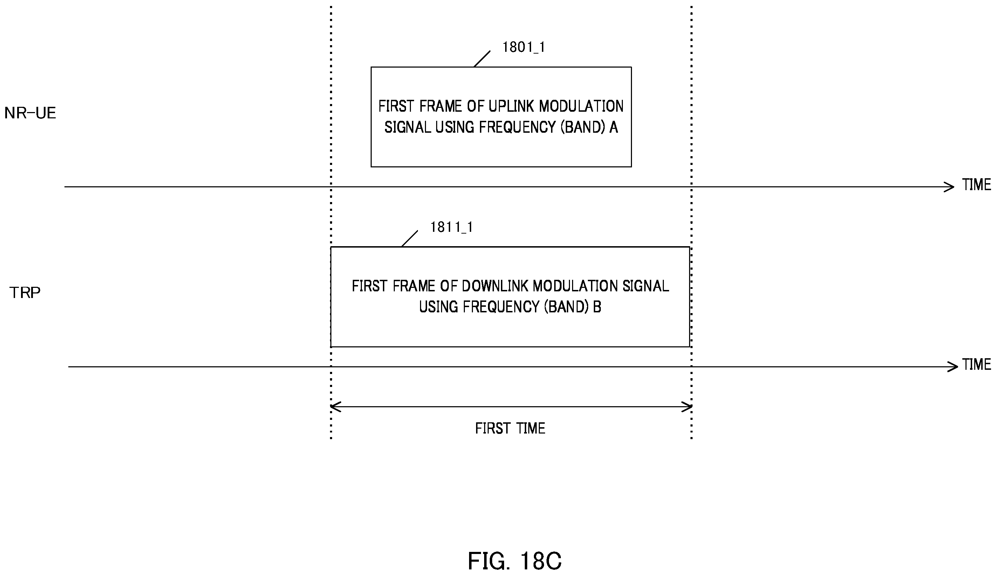

FIG. 18C illustrates a third example when an NR-UE and a TRP perform the FDD communication, which is different from those in FIG. 18A and FIG. 18B, and a horizontal axis represents time.

As illustrated in FIG. 18C, the TRP transmits "first frame 1811_1 of downlink modulation signal using frequency (band) B" in the first time. Meanwhile, the NR-UE transmits "first frame 1801_1 of uplink modulation signal using frequency (band) A" in part of the first time. Note that frequency (band) A and frequency (band) B are different from each other.

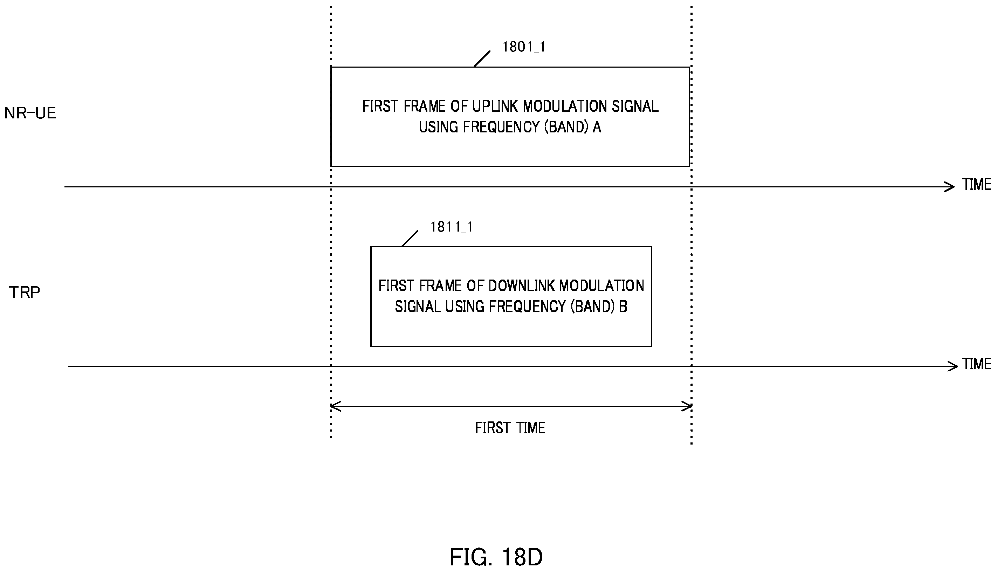

FIG. 18D illustrates a fourth example when an NR-UE and a TRP perform the FDD communication, which is different from those in FIG. 18A, FIG. 18B, and FIG. 18C, and a horizontal axis represents time.

As illustrated in FIG. 18D, the TRP transmits "first frame 1811_1 of downlink modulation signal using frequency (band) B" in part of the first time. Meanwhile, the NR-UE transmits "first frame 1801_1 of uplink modulation signal using frequency (band) A" in the first time. Note that frequency (band) A and frequency (band) B are different from each other.

Incidentally, when an NR-UE and a TRP perform the FDD communication, a "frame of uplink modulation signal using frequency (band) A" transmitted by the NR-UE and a "frame of downlink modulation signal using frequency (band) B" transmitted by the TRP may or may not overlap in a time axis.

FIG. 18A, FIG. 18B, FIG. 18C, and FIG. 18D are described as examples in which the "frame of uplink modulation signal using frequency (band) A" transmitted by the NR-UE and the "frame of downlink modulation signal using frequency (band) B" transmitted by the TRP overlap in the time axis, but how they overlap is not limited to these examples. Any overlapping manner is possible as long as there is a time when all or part of the "frame of uplink modulation signal using frequency (band) A" transmitted by the NR-UE and all or part of the "frame of downlink modulation signal using frequency (band) B" transmitted by the TRP overlap.

In the above, the maximum value of the transmission power when a TRP performs transmission power control and the maximum value of the transmission power when an NR-UE performs transmission power control have been described. In the following, a description will be given of an exemplary procedure of the transmission power control performed by the TRP and NR-UE.

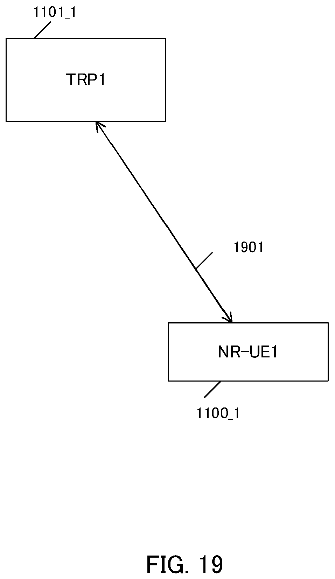

First, as illustrated in FIG. 19, a description will be given of a transmission power control method when NR-UE 1 labeled 1100_1 and TRP 1 labeled 1101_1 perform communication by TDD or FDD (1901).

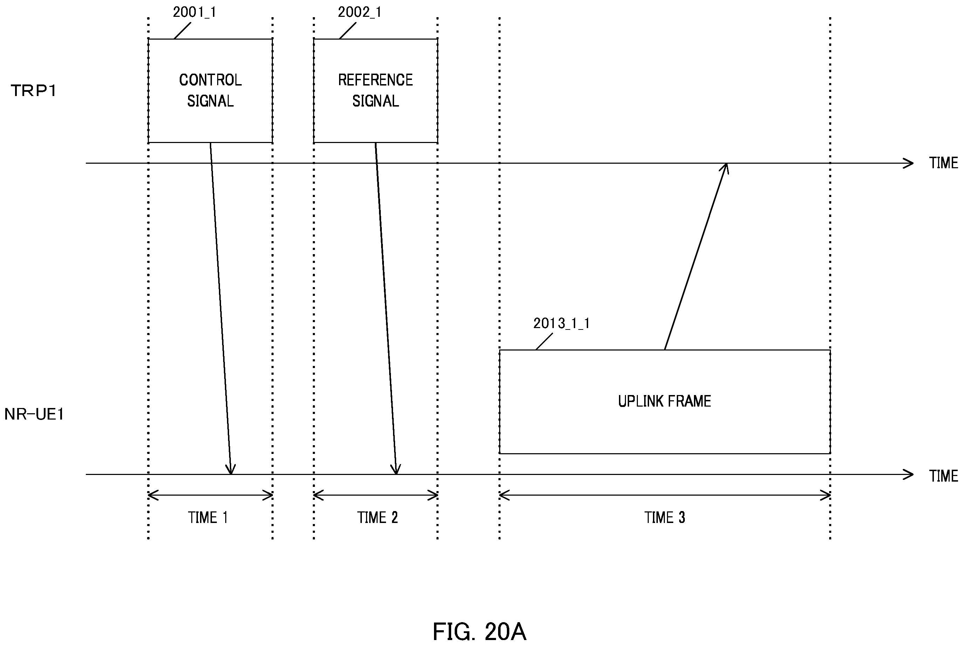

FIG. 20A illustrates an example of the exchange between NR-UE 1 labeled 1100_1 and TRP 1 labeled 1101_1 for performing open loop transmission power control in NR-UE 1 labeled 1100_1 when NR-UE 1 labeled 1100_1 and TRP 1 labeled 1101_1 perform communication by TDD or FDD. Note that, in FIG. 20A, a horizontal axis represents time.

As illustrated in FIG. 20A, TRP 1 labeled 1101_1 transmits control signal 2001_1 in time 1. In addition, TRP 1 labeled 1101_1 transmits reference signal 2002_1 in time 2.

At this time, control signal 2001_1 includes for example, a parameter for transmission power to be indicated to a terminal (NR-UE 1 labeled 1100_1) with a relatively long cycle, and NR-UE 1 labeled 1100_1 receives reference signal 2002_1 transmitted by TRP 1 labeled 1101_1 and thus measures a communication status (e.g., estimates path loss, reception field strength, and Signal to Interference plus Noise power Ratio (SINR), and the like). NR-UE 1 labeled 1100_1 then determines the transmission (electric) power for transmitting a modulation signal, based on, for example, the parameter for the transmission power included in control signal 2001_1 and the measured communication status. In time 3, NR-UE 1 labeled 1100_1 transmits uplink frame 2013_1_1 to TRP 1 labeled 1101_1 with the determined transmission (electric) power.

Performing the transmission power control as described above brings about an effect of improving the reception quality of data.

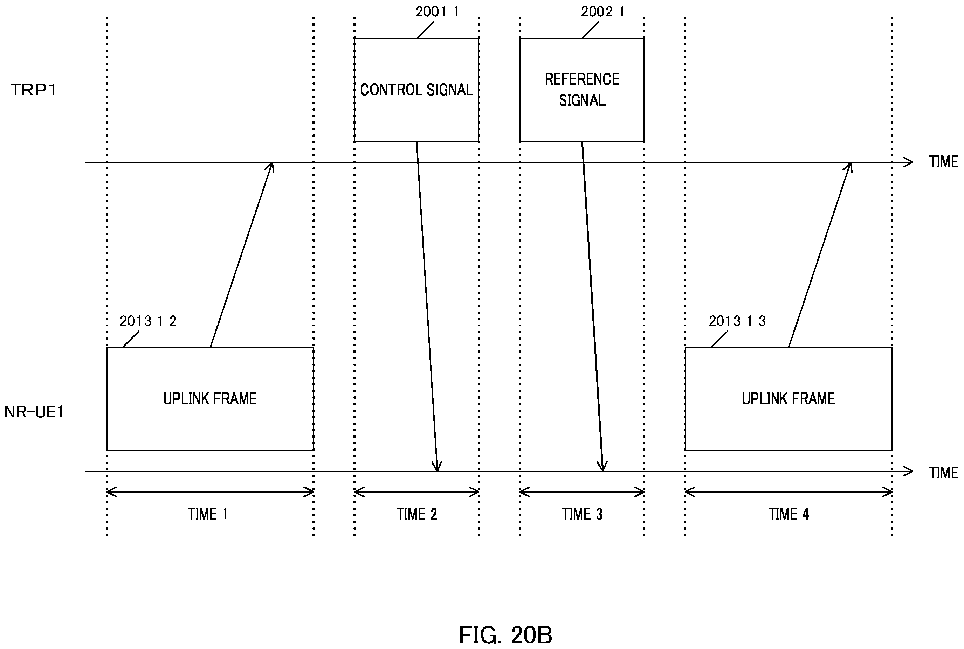

FIG. 20B illustrates an example of the exchange between NR-UE 1 labeled 1100_1 and TRP 1 labeled 1101_1 for performing closed loop transmission power control in NR-UE 1 labeled 1100_1 when NR-UE 1 labeled 1100_1 and TRP 1 labeled 1101_1 perform communication by TDD or FDD. Note that, in FIG. 20B, a horizontal axis represents time.

As illustrated in FIG. 20B, in time 1, NR-UE 1 labeled 1100_1 transmits uplink frame 2013_1_2 to TRP 1 labeled 1101_1. Then, TRP 1 labeled 1101_1 estimates a communication status such as SINR using uplink frame 2013_1_2 that has been received. Note that, when estimating the communication status such as SINR, TRP 1 labeled 1101_1 may use a reference signal included in uplink frame 2013_1_2 or another signal included in uplink frame 2013_1_2.

TRP 1 labeled 1101_1 generates, based on an estimation result of the communication status such as SINR, information (e.g., Transmit Power Control (TPC) command) on a value to set transmission (electric) power of a signal to be transmitted by NR-UE 1 labeled 1100_1. TRP 1 labeled 1101_1 then transmits, to NR-UE 1 labeled 1100_1, control signal 2001_1 that includes the information on the value to set the transmission (electric) power, in time 2. Further, in time 3, TRP 1 labeled 1101_1 transmits reference signal 2002_1 to NR-UE 1 labeled 1100_1.

NR-UE 1 labeled 1100_1 determines the transmission (electric) power for transmitting a modulation signal, based on the information on the value to set the transmission (electric) power included in control signal 2001_1. In time 4, NR-UE 1 labeled 1100_1 transmits uplink frame 2013_1_3 to TRP 1 labeled 1101_1 with the determined transmission (electric) power.

Performing the transmission power control as described above brings about an effect of improving the reception quality of data.

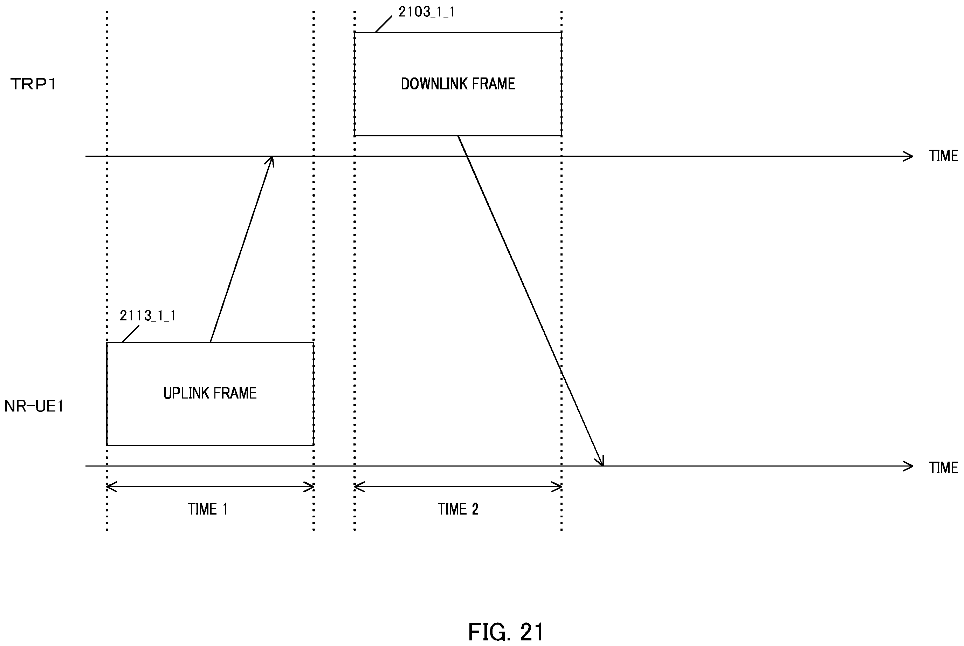

FIG. 21 illustrates an example of exchange between NR-UE 1 labeled 1100_1 and TRP 1 labeled 1101_1 for performing open loop transmission power control in TRP 1 of a case where TRP 1 and NR-UE 1 perform the TDD communication or FDD communication. Note that, in FIG. 21, a horizontal axis represents time.

As illustrated in FIG. 21, in time 1, NR-UE 1 labeled 1100_1 transmits uplink frame 2113_1_1 to TRP 1 labeled 1101_1. Then, TRP 1 labeled 1101_1 estimates a communication status such as SINR using uplink frame 2113_1_1 that has been received. Note that, when estimating the communication status such as SINR, TRP 1 labeled 1101_1 may use a reference signal included in uplink frame 2113_1_1 or another signal included in uplink frame 2113_1_1.

TRP 1 labeled 1101_1 determines the transmission (electric) power for itself, based on an estimation result of the communication status such as SINR. TRP 1 labeled 1101_1 then transmits downlink frame 2103_1 having the determined transmission (electric) power.

Performing the transmission power control as described above brings about an effect of improving the reception quality of data.

Next, as illustrated with reference to FIG. 11A and the like, a description will be given of a transmission power control method when NR-UE 1 labeled 1100_1 and TRP 1 labeled 1101_1 perform communication.

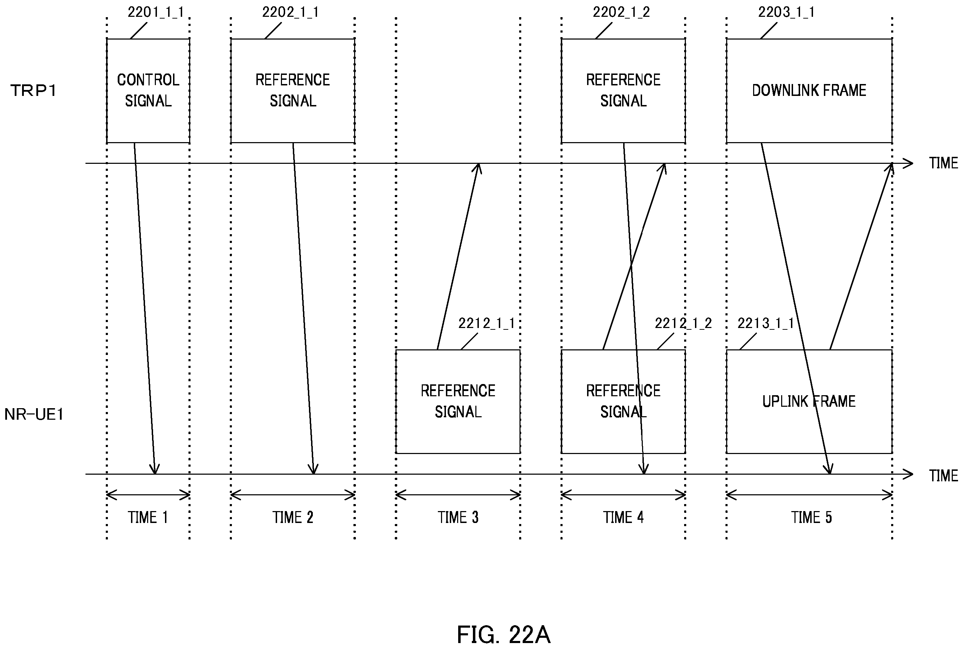

FIG. 22A illustrates an example of exchange between NR-UE 1 labeled 1100_1 and TRP 1 labeled 1101_1 for performing open loop transmission power control in NR-UE 1 labeled 1100_1 when NR-UE 1 labeled 1100_1 and TRP 1 labeled 1101_1 perform communication based on FIG. 11A and the like. Note that, in FIG. 22A, a horizontal axis represents time.

As illustrated in FIG. 22A, TRP 1 labeled 1101_1 transmits control signal 2201_1_1 in time 1. In addition, TRP 1 labeled 1101_1 transmits reference signal 2202_1_1 in time 2.

At this time, control signal 2201_1_1 includes for example, a parameter for transmission power to be indicated to a terminal (NR-UE 1 labeled 1100_1) with a relatively long cycle, and NR-UE 1 labeled 1100_1 receives reference signal 2202_1_1 transmitted by TRP 1 labeled 1101_1 and thus measures a communication status (e.g., estimates path loss, reception field strength, SINR, signal state, signal strength, and the like).

NR-UE 1 labeled 1100_1 then transmits reference signal 2212_1_1 in time 3, receives a signal transmitted by itself, and estimates, for example, self-interference as a communication status.

In time 4, TRP 1 labeled 1101_1 transmits reference signal 2202_1_2, and NR-UE 1 labeled 1100_1 transmits reference signal 2212_1_2. NR-UE 1 labeled 1100_1 then receives reference signal 2202_1_2 and reference signal 2212_1_2 and thus measures a communication status (e.g., SINR).

NR-UE 1 labeled 1100_1 then determines transmission (electric) power for transmitting a modulation signal, based on, for example, the parameter for the transmission power included in control signal 2201_1_1 and the communication statuses measured in time 2, time 3, and time 4. In time 5, NR-UE 1 labeled 1100_1 transmits uplink frame 2213_1_1 to TRP 1 labeled 1101_1 with the determined transmission (electric) power.

Note that, as illustrated in FIG. 22A, TRP 1 labeled 1101_1 transmits downlink frame 2203_1_1 to NR-UE 1 labeled 1100_1 in time 5. Incidentally, the downlink frame may be present other than in time 5, and the uplink frame may be present other than in time 5 as well.

In FIG. 22A, there are a "section in which NR-UE 1 labeled 1100_1 transmits reference signals (time 3)," a "section in which TRP 1 labeled 1101_1 transmits reference signals (time 2)," and a "section in which both NR-UE 1 labeled 1100_1 and TRP 1 labeled 1101_1 transmit reference signals (time 4)."

A "reference signal transmitted by TRP 1 labeled 1101_1" in time 2 enables NR-UE 1 labeled 1100_1 to estimate (received) signal power. At this time, it is advantageous in that NR-UE 1 labeled 1100_1 can estimate the (received) signal power while ensuring a dynamic range of an Analog-to-Digital Converter (ADC) of a receiver. When NR-UE 1 labeled 1100_1 estimates the (received) signal power in time 4, it may be difficult to ensure the estimation accuracy of the (received) signal power due to the large power of the received signal transmitted by itself.

Further, a "reference signal transmitted by NR-UE 1 labeled 1100_1" in time 3 enables NR-UE 1 labeled 1100_1 to estimate self-interference. At this time, it is advantageous in that NR-UE 1 labeled 1100_1 can estimate the self-interference while ensuring the dynamic range of the ADC of the receiver. Meanwhile, the "reference signal transmitted by NR-UE 1 labeled 1100_1" enables TRP 1 labeled 1101_1 to estimate (received) signal power with good accuracy.

A "reference signal transmitted by TRP 1 labeled 1101_1 and a reference signal transmitted by NR-UE 1 labeled 1100_1" in time 4 have an advantage in that a communication status (e.g., SINR) close to a status when "both a downlink frame and an uplink frame are present (e.g., time 5)" can be estimated. In addition, presence of the "reference signal transmitted by TRP 1 labeled 1101_1 and reference signal transmitted by NR-UE 1 labeled 1100_1 (time 4)" before the "both the downlink frame and the uplink frame are present (e.g., time 5)" enables TRP 1 labeled 1101_1 and NR-UE 1 labeled 1100_1 to perform, with good accuracy, Auto Gain Control (AGC) for a "status in which both the downlink frame and the uplink frame are present," which brings about an effect of improving the reception quality of data.

Note that, in order that the "reference signal transmitted by TRP 1 labeled 1101_1 and reference signal transmitted by NR-UE 1 labeled 1100_1 (time 4)" are present before the "both the downlink frame and the uplink frame are present (e.g., time 5)," there is a high possibility that the "section in which both NR-UE 1 labeled 1100_1 and TRP 1 labeled 1101_1 transmit reference signals (time 4)" is present later in time than the "section in which NR-UE 1 labeled 1100_1 transmits reference signals (time 3)" and the "section in which TRP 1 labeled 1101_1 transmits reference signals (time 2)."

The presence order of the "section in which NR-UE 1 labeled 1100_1 transmits reference signals (time 3)," the "section in which TRP 1 labeled 1101_1 transmits reference signals (time 2)," the "section in which both NR-UE 1 labeled 1100_1 and TRP 1 labeled 1101_1 transmit reference signals (time 4)," and a "section in which TRP 1 labeled 1101_1 transmits reference signals (time 2)," the "section in which both a downlink frame transmitted by TRP 1 labeled 1101_1 and an uplink frame transmitted by NR-UE 1 labeled 1100_1 are present (time 5)" is not limited to the example of FIG. 22A, and the same implementation is possible with any order.

As described above, NR-UE 1 labeled 1100_1 is enabled to perform the preferred transmission power control, by the following: "presence of the "section in which NR-UE 1 labeled 1100_1 transmits reference signals (time 3)," the "section in which TRP 1 labeled 1101_1 transmits reference signals (time 2)," and the "section in which both NR-UE 1 labeled 1100_1 and TRP 1 labeled 1101_1 transmit reference signals (time 4)""; or "presence of the "section in which NR-UE 1 labeled 1100_1 transmits reference signals (time 3)" and the "section in which both NR-UE 1 labeled 1100_1 and TRP 1 labeled 1101_1 transmit reference signals (time 4)""; or "presence of the "section in which TRP 1 labeled 1101_1 transmits reference signals (time 2)" and the "section in which both NR-UE 1 labeled 1100_1 and TRP 1 labeled 1101_1 transmit reference signals (time 4)."" This brings about an effect of improving the reception quality of data.

In FIG. 22A, the term "reference signal" is used to name a signal, but the naming is not limited to this, and any name may be used as long as the signal has a role of estimating a communication status. For example, the signal may be referred to as a path loss reference signal.

Further, in FIG. 22A, reference signals 2202_1_1 and 2202_1_2 are reference signals for the self-interference estimation (self-interference reference signals) for TRP 1 labeled 1101_1, and reference signals 2212_1_1 and 2212_1_2 are reference signals for the self-interference estimation (self-interference reference signals) for NR-UE 1 labeled 1100_1.

FIG. 22A illustrates an example of exchange between NR-UE 1 labeled 1100_1 and TRP 1 labeled 1101_1 for performing open loop transmission power control in TRP 1 labeled 1101_1 when NR-UE 1 labeled 1100_1 and TRP 1 labeled 1101_1 perform communication based on FIG. 11A and the like. Note that, in FIG. 22A, a horizontal axis represents time, and descriptions of the parts that have already been described will be omitted.

As illustrated in FIG. 22A, TRP 1 labeled 1101_1 transmits reference signal 2202_1_1 in time 2, receives a signal transmitted by itself, and estimates, for example, self-interference as a communication status.

TRP 1 labeled 1101_1 then receives reference signal 2212_1_1 transmitted by NR-UE 1 labeled 1100_1 and thus measures a communication status (e.g., estimates path loss, reception field strength, SINR, signal state, signal strength, and the like).

In time 4, TRP 1 labeled 1101_1 transmits reference signal 2202_1_2, and NR-UE 1 labeled 1100_1 transmits reference signal 2212_1_2. TRP 1 labeled 1101_1 then receives reference signal 2202_1_2 and reference signal 2212_1_2 and thus measures a communication status (e.g., SINR).

TRP 1 labeled 1101_1 determines transmission (electric) power for transmitting a modulation signal, based on the communication statuses measured in time 2, time 3, and time 4. Then, in time 5, TRP 1 labeled 1101_1 transmits downlink frame 2203_1_1 to NR-UE 1 labeled 1100_1 with the determined transmission (electric) power.

Note that, as illustrated in FIG. 22A, NR-UE 1 labeled 1100_1 transmits downlink frame 2213_1_1 to TRP 1 labeled 1101_1 in time 5. Incidentally, the downlink frame may be present other than in time 5, and the uplink frame may be present other than in time 5 as well.

In FIG. 22A, there are a "section in which NR-UE 1 labeled 1100_1 transmits reference signals (time 3)," a "section in which TRP 1 labeled 1101_1 transmits reference signals (time 2)," and a "section in which both NR-UE 1 labeled 1100_1 and TRP 1 labeled 1101_1 transmit reference signals (time 4)."

A "reference signal transmitted by NR-UE 1 labeled 1100_1" in time 3 enables TRP 1 labeled 1101_1 to estimate (received) signal power. At this time, it is advantageous in that TRP 1 labeled 1101_1 can estimate the (received) signal power while ensuring a dynamic range of an ADC of a receiver. When TRP 1 labeled 1101_1 estimates the (received) signal power in time 4, it may be difficult to ensure the estimation accuracy of the (received) signal power due to the large power of the received signal transmitted by itself.

Further, a "reference signal transmitted by TRP 1 labeled 1101_1" in time 2 enables TRP 1 labeled 1101_1 to estimate self-interference. At this time, it is advantageous in that TRP 1 labeled 1101_1 can estimate the self-interference while ensuring the dynamic range of the ADC of the receiver. Meanwhile, the "reference signal transmitted by TRP 1 labeled 1101_1" enables NR-UE 1 labeled 1100_1 to estimate (received) signal power with good accuracy.

A "reference signal transmitted by TRP 1 labeled 1101_1 and a reference signal transmitted by NR-UE 1 labeled 1100_1" in time 4 have an advantage in that a communication status (e.g., SINR) close to a status when "both a downlink frame and an uplink frame are present (e.g., time 5)" can be estimated. In addition, presence of the "reference signal transmitted by TRP 1 labeled 1101_1 and reference signal transmitted by NR-UE 1 labeled 1100_1 (time 4)" before the "both the downlink frame and the uplink frame are present (e.g., time 5)" enables TRP 1 labeled 1101_1 and NR-UE 1 labeled 1100_1 to perform, with good accuracy, Auto Gain Control (AGC) for a "status in which both the downlink frame and the uplink frame are present," which brings about an effect of improving the reception quality of data.

Note that, in order that the "reference signal transmitted by TRP 1 labeled 1101_1 and reference signal transmitted by NR-UE 1 labeled 1100_1 (time 4)" are present before the "both the downlink frame and the uplink frame are present (e.g., time 5)," there is a high possibility that the "section in which both NR-UE 1 labeled 1100_1 and TRP 1 labeled 1101_1 transmit reference signals (time 4)" is present later in time than the "section in which NR-UE 1 labeled 1100_1 transmits reference signals (time 3)" and the "section in which TRP 1 labeled 1101_1 transmits reference signals (time 2)."

The presence order of the "section in which NR-UE 1 labeled 1100_1 transmits reference signals (time 3)," the "section in which TRP 1 labeled 1101_1 transmits reference signals (time 2)," the "section in which both NR-UE 1 labeled 1100_1 and TRP 1 labeled 1101_1 transmit reference signals (time 4)," and a "section in which TRP 1 labeled 1101_1 transmits reference signals (time 2)," the "section in which both a downlink frame transmitted by TRP 1 labeled 1101_1 and an uplink frame transmitted by NR-UE 1 labeled 1100_1 are present (time 5)" is not limited to the example of FIG. 22A, and the same implementation is possible with any order.

As described above, TRP 1 labeled 1101_1 is enabled to perform the preferred transmission power control, by the following: "presence of the "section in which NR-UE 1 labeled 1100_1 transmits reference signals (time 3)," the "section in which TRP 1 labeled 1101_1 transmits reference signals (time 2)," and the "section in which both NR-UE 1 labeled 1100_1 and TRP 1 labeled 1101_1 transmit reference signals (time 4)""; or "presence of the "section in which NR-UE 1 labeled 1100_1 transmits reference signals (time 3)" and the "section in which both NR-UE 1 labeled 1100_1 and TRP 1 labeled 1101_1 transmit reference signals (time 4)""; or "presence of the "section in which TRP 1 labeled 1101_1 transmits reference signals (time 2)" and the "section in which both NR-UE 1 labeled 1100_1 and TRP 1 labeled 1101_1 transmit reference signals (time 4).""" This brings about an effect of improving the reception quality of data.

In FIG. 22A, the term "reference signal" is used to name a signal, but the naming is not limited to this, and any name may be used as long as the signal has a role of estimating a communication status. For example, the signal may be referred to as a path loss reference signal.

Further, in FIG. 22A, reference signals 2202_1_1 and 2202_1_2 are reference signals for the self-interference estimation (self-interference reference signals) for TRP 1 labeled 1101_1, and reference signals 2212_1_1 and 2212_1_2 are reference signals for the self-interference estimation (self-interference reference signals) for NR-UE 1 labeled 1100_1.

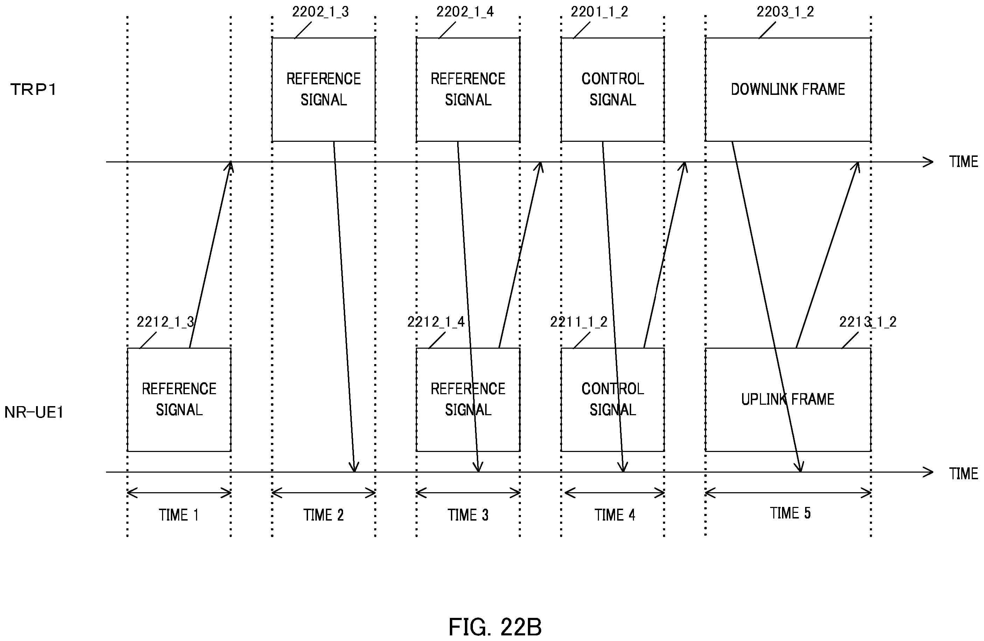

FIG. 22B illustrates an example of exchange between NR-UE 1 labeled 1100_1 and TRP 1 labeled 1101_1 for performing closed loop transmission power control in NR-UE 1 labeled 1100_1 when NR-UE 1 labeled 1100_1 and TRP 1 labeled 1101_1 perform communication based on FIG. 11A and the like. Note that, in FIG. 22B, a horizontal axis represents time.

As illustrated in FIG. 22B, NR-UE 1 labeled 1100_1 transmits reference signal 2212_1_3 in time 1, and TRP 1 labeled 1101_1 receives reference signal 2212_1_3 and thus measures a communication status (e.g., estimates path loss, reception field strength, SINR, signal state, signal strength, and the like).

TRP 1 labeled 1101_1 then transmits reference signal 2202_1_3 in time 2. TRP 1 labeled 1101_1 receives a signal transmitted by itself, and estimates, for example, self-interference as a communication status.

In time 3, TRP 1 labeled 1101_1 transmits reference signal 2202_1_4, and NR-UE 1 labeled 1100_1 transmits reference signal 2212_1_4. TRP 1 labeled 1101_1 then receives reference signal 2202_1_4 and reference signal 2212_1_4 and thus measures a communication status (e.g., SINR).

TRP 1 labeled 1101_1 generates, based on an estimation result of the communication status such as SINR, self-interference, and signal strength, information (e.g., TPC command) on a value to set transmission (electric) power of a signal to be transmitted by NR-UE 1 labeled 1100_1. TRP 1 labeled 1101_1 then transmits, to NR-UE 1 labeled 1100_1, control signal 2201_1_2 that includes the information on the value to set the transmission (electric) power, in time 4.

Note that, as illustrated in FIG. 22B, NR-UE 1 labeled 1100_1 may transmit control signal 2211_1_2 to TRP 1 labeled 1101_1, in time 4. Further, in FIG. 22B, control signal 2201_1_2 and control signal 2211_1_2 are present in time 4, but control signal 2201_1_2 and control signal 2211_1_2 may be present in different times.

NR-UE 1 labeled 1100_1 determines the transmission (electric) power for transmitting a modulation signal, based on the information on the value to set the transmission (electric) power included in control signal 2201_1_2. In time 5, NR-UE 1 labeled 1100_1 transmits uplink frame 2213_1_2 to TRP 1 labeled 1101_1 with the determined transmission (electric) power.

Note that, as illustrated in FIG. 22B, TRP 1 labeled 1101_1 transmits downlink frame 2203_1_2 to NR-UE 1 labeled 1100_1 in time 5. Incidentally, the downlink frame may be present other than in time 5, and the uplink frame may be present other than in time 5 as well.

In FIG. 22B, there are a "section in which NR-UE 1 labeled 1100_1 transmits reference signals (time 1)," a "section in which TRP 1 labeled 1101_1 transmits reference signals (time 2)," and a "section in which both NR-UE 1 labeled 1100_1 and TRP 1 labeled 1101_1 transmit reference signals (time 3)."

A "reference signal transmitted by TRP 1 labeled 1101_1" in time 2 enables NR-UE 1 labeled 1100_1 to estimate (received) signal power. At this time, it is advantageous in that NR-UE 1 labeled 1100_1 can estimate the (received) signal power while ensuring a dynamic range of an ADC of a receiver. When NR-UE 1 labeled 1100_1 estimates the (received) signal power in time 3, it may be difficult to ensure the estimation accuracy of the (received) signal power due to the large power of the received signal transmitted by itself.

Further, a "reference signal transmitted by NR-UE 1 labeled 1100_1" in time 1 enables NR-UE 1 labeled 1100_1 to estimate self-interference. At this time, it is advantageous in that NR-UE 1 labeled 1100_1 can estimate the self-interference while ensuring a dynamic range of an ADC of a receiver. Meanwhile, the "reference signal transmitted by NR-UE 1 labeled 1100_1" enables NR-UE 1 labeled 1100_1 to estimate the (received) signal power with good accuracy.

A "reference signal transmitted by TRP 1 labeled 1101_1 and a reference signal transmitted by NR-UE 1 labeled 1100_1" in time 3 have an advantage in that a communication status (e.g., SINR) close to a status when "both a downlink frame and an uplink frame are present (e.g., time 5)" can be estimated. In addition, presence of the "reference signal transmitted by TRP 1 labeled 1101_1 and reference signal transmitted by NR-UE 1 labeled 1100_1 (time 3)" before the "both the downlink frame and the uplink frame are present (e.g., time 5)" enables TRP 1 labeled 1101_1 and NR-UE 1 labeled 1100_1 to perform, with good accuracy, the AGC for a "status in which both the downlink frame and the uplink frame are present," which brings about an effect of improving the reception quality of data.

Note that, in order that the "reference signal transmitted by TRP 1 labeled 1101_1 and reference signal transmitted by NR-UE 1 labeled 1100_1 (time 3)" are present before the "both the downlink frame and the uplink frame are present (e.g., time 5)," there is a high possibility that the "section in which both NR-UE 1 labeled 1100_1 and TRP 1 labeled 1101_1 transmit reference signals (time 3)" is present later in time than the "section in which NR-UE 1 labeled 1100_1 transmits reference signals (time 1)" and the "section in which TRP 1 labeled 1101_1 transmits reference signals (time 2)."

The presence order of the "section in which NR-UE 1 labeled 1100_1 transmits reference signals (time 1)," the "section in which TRP 1 labeled 1101_1 transmits reference signals (time 2)," the "section in which both NR-UE 1 labeled 1100_1 and TRP 1 labeled 1101_1 transmit reference signals (time 3)," and a "section in which TRP 1 labeled 1101_1 transmits reference signals (time 2)," the "section in which both a downlink frame transmitted by TRP 1 labeled 1101_1 and an uplink frame transmitted by NR-UE 1 labeled 1100_1 are present (time 5)" is not limited to the example of FIG. 22B, and the same implementation is possible with any order.

As described above, NR-UE 1 labeled 1100_1 is enabled to perform the preferred transmission power control, by the following: "presence of the "section in which NR-UE 1 labeled 1100_1 transmits reference signals (time 1)," the "section in which TRP 1 labeled 1101_1 transmits reference signals (time 2)," and the "section in which both NR-UE 1 labeled 1100_1 and TRP 1 labeled 1101_1 transmit reference signals (time 3)""; or "presence of the "section in which NR-UE 1 labeled 1100_1 transmits reference signals (time 1)" and the "section in which both NR-UE 1 labeled 1100_1 and TRP 1 labeled 1101_1 transmit reference signals (time 3)""; or "presence of the "section in which TRP 1 labeled 1101_1 transmits reference signals (time 2)" and the "section in which both NR-UE 1 labeled 1100_1 and TRP 1 labeled 1101_1 transmit reference signals (time 3)."" This brings about an effect of improving the reception quality of data.

In FIG. 22B, the term "reference signal" is used to name a signal, but the naming is not limited to this, and any name may be used as long as the signal has a role of estimating a communication status. For example, the signal may be referred to as a path loss reference signal.

Further, in FIG. 22B, reference signals 2202_1_3 and 2202_1_4 are reference signals for the self-interference estimation (self-interference reference signals) for TRP 1 labeled 1101_1, and reference signals 2212_1_3 and 2212_1_4 are reference signals for the self-interference estimation (self-interference reference signals) for NR-UE 1 labeled 1100_1.

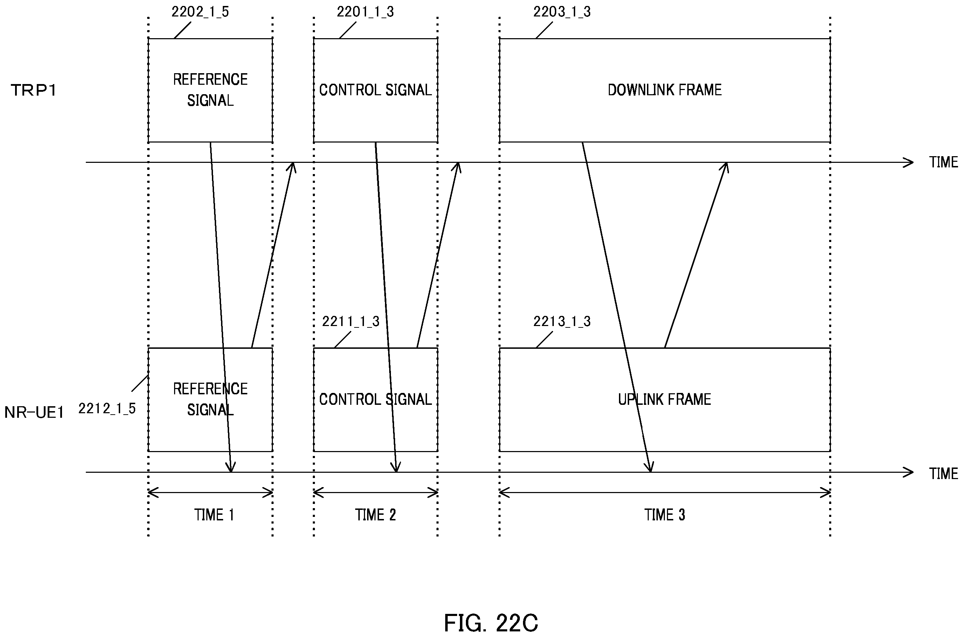

FIG. 22C illustrates another example of exchange between NR-UE 1 labeled 1100_1 and TRP 1 labeled 1101_1 for performing closed loop transmission power control in NR-UE 1 labeled 1100_1 when NR-UE 1 labeled 1100_1 and TRP 1 labeled 1101_1 perform communication based on FIG. 11A and the like. Note that, in FIG. 22C, a horizontal axis represents time.

As illustrated in FIG. 22C, TRP 1 labeled 1101_1 transmits reference signal 2202_1_5 to NR-UE 1 labeled 1100_1 in time 1. NR-UE 1 labeled 1100_1 transmits reference signal 2212_1_5 to TRP 1 labeled 1101_1 in time 1.

TRP 1 labeled 1101_1 then estimates a communication status such as SINR using the received "reference signal 2202_1_5 and reference signal 2212_1_5 in time 1." This allows TRP 1 labeled 1101_1 to obtain an effect of being capable of SINR estimation taking into account the signal transmitted by the TRP itself.

TRP 1 labeled 1101_1 generates, based on an estimation result of the communication status such as SINR, information for controlling transmission (electric) power of a signal to be transmitted by NR-UE 1 labeled 1100_1 (e.g., estimation information on communication status such as SINR). TRP 1 labeled 1101_1 then transmits, to NR-UE 1 labeled 1100_1, control signal 2201_1_3 that includes the information for controlling the transmission (electric) power, in time 2. Note that, as illustrated in FIG. 22C, NR-UE 1 labeled 1100_1 may transmit control signal 2211_1_3 to TRP 1 labeled 1101_1, in time 2.

NR-UE 1 labeled 1100_1 determines the transmission (electric) power for transmitting a modulation signal, based on the information for controlling the transmission (electric) power included in control signal 2201_1_3. In time 3, NR-UE 1 labeled 1100_1 transmits uplink frame 2213_1_3 to TRP 1 labeled 1101_1 with the determined transmission (electric) power.

Note that, as illustrated in FIG. 22C, TRP 1 labeled 1101_1 transmits downlink frame 2203_1_3 to NR-UE 1 labeled 1100_1 in time 3. Incidentally, the downlink frame may be present other than in time 3, and the uplink frame may be present other than in time 3 as well.

Performing the transmission power control as described above brings about an effect of improving the reception quality of data.

In the present embodiment, the examples of FIG. 22B and FIG. 22C have been described as exemplary exchange between "NR-UE 1 labeled 1100_1 and TRP 1 labeled 1101_1" for performing the closed loop transmission power control in NR-UE 1 labeled 1100_1, but the exchange between "NR-UE 1 labeled 1100_1 and TRP 1 labeled 1101_1" may be performed in a manner other than these examples. At this time, TRP 1 labeled 1101_1 generates, based on the communication status of the modulation signal transmitted by NR-UE 1 labeled 1100_1, information for controlling transmission (electric) power of a signal to be transmitted by NR-UE 1 labeled 1100_1 (e.g., estimation information on communication status such as SINR). TRP 1 labeled 1101_1 then transmits, to NR-UE 1 labeled 1100_1, control signal 2201_1_3 that includes the information for controlling the transmission (electric) power, and NR-UE 1 labeled 1100_1 obtains this information, determines the transmission (electric) power for transmitting a modulation signal, and thus transmits the modulation signal with the determined transmission (electric) power.

FIG. 22B illustrates an example of exchange between NR-UE 1 labeled 1100_1 and TRP 1 labeled 1101_1 for performing closed loop transmission power control in TRP 1 labeled 1101_1 when NR-UE 1 labeled 1100_1 and TRP 1 labeled 1101_1 perform communication based on FIG. 11A and the like. Note that, in FIG. 22B, a horizontal axis represents time, and descriptions of the parts that have already been described will be omitted.

As illustrated in FIG. 22B, NR-UE 1 labeled 1100_1 transmits reference signal 2212_1_3 in time 1. NR-UE 1 labeled 1100_1 receives the signal transmitted by itself and estimates, for example, self-interference as a communication status.

TRP 1 labeled 1101_1 then transmits reference signal 2202_1_3 in time 2. NR-UE 1 labeled 1100_1 receives reference signal 2202_1_3 and thus measures a communication status (e.g., estimates path loss, reception field strength, SINR, signal state, signal strength, and the like).

In time 3, TRP 1 labeled 1101_1 transmits reference signal 2202_1_4, and NR-UE 1 labeled 1100_1 transmits reference signal 2212_1_4. NR-UE 1 labeled 1100_1 then receives reference signal 2202_1_4 and reference signal 2212_1_4 and thus measures a communication status (e.g., SINR).

NR-UE 1 labeled 1100_1 generates, based on an estimation result of the communication status such as SINR, information for controlling transmission (electric) power of a signal to be transmitted by TRP 1 labeled 1101_1 (e.g., estimation information on communication status such as SINR). NR-UE 1 labeled 1100_1 then transmits, to TRP 1 labeled 1101_1, control signal 2211_1_2 that includes the information for controlling the transmission (electric) power, in time 4. Note that, as illustrated in FIG. 22B, TRP 1 labeled 1101_1 may transmit control signal 2201_1_2 to NR-UE 1 labeled 1100_1, in time 4. Further, in FIG. 22B, control signal 2201_1_2 and control signal 2211_1_2 are present in time 4, but control signal 2201_1_2 and control signal 2211_1_2 may be present in different times.

TRP 1 labeled 1101_1 determines the transmission (electric) power for transmitting a modulation signal, based on the information on the value to set the transmission (electric) power included in control signal 2211_1_2. In time 5, TRP 1 labeled 1101_1 transmits downlink frame 2203_1_2 to NR-UE 1 labeled 1100_1 with the determined transmission (electric) power.

Note that, as illustrated in FIG. 22B, NR-UE 1 labeled 1100_1 transmits uplink frame 2213_1_2 to TRP 1 labeled 1101_1 in time 5. Incidentally, the downlink frame may be present other than in time 5, and the uplink frame may be present other than in time 5 as well.

In FIG. 22B, there are a "section in which NR-UE 1 labeled 1100_1 transmits reference signals (time 1)," a "section in which TRP 1 labeled 1101_1 transmits reference signals (time 2)," and a "section in which both NR-UE 1 labeled 1100_1 and TRP 1 labeled 1101_1 transmit reference signals (time 3)."

A "reference signal transmitted by TRP 1 labeled 1101_1" in time 2 enables NR-UE 1 labeled 1100_1 to estimate (received) signal power. At this time, it is advantageous in that NR-UE 1 labeled 1100_1 can estimate the (received) signal power while ensuring a dynamic range of an ADC of a receiver. When NR-UE 1 labeled 1100_1 estimates the (received) signal power in time 3, it may be difficult to ensure the estimation accuracy of the (received) signal power due to the large power of the received signal transmitted by itself.

Further, a "reference signal transmitted by NR-UE 1 labeled 1100_1" in time 1 enables NR-UE 1 labeled 1100_1 to estimate self-interference. At this time, it is advantageous in that NR-UE 1 labeled 1100_1 can estimate the self-interference while ensuring a dynamic range of an ADC of a receiver. Meanwhile, the "reference signal transmitted by NR-UE 1 labeled 1100_1" enables NR-UE 1 labeled 1100_1 to estimate the (received) signal power with good accuracy.

A "reference signal transmitted by TRP 1 labeled 1101_1 and a reference signal transmitted by NR-UE 1 labeled 1100_1" in time 3 have an advantage in that a communication status (e.g., SINR) close to a status when "both a downlink frame and an uplink frame are present (e.g., time 5)" can be estimated. In addition, presence of the "reference signal transmitted by TRP 1 labeled 1101_1 and reference signal transmitted by NR-UE 1 labeled 1100_1 (time 3)" before the "both the downlink frame and the uplink frame are present (e.g., time 5)" enables TRP 1 labeled 1101_1 and NR-UE 1 labeled 1100_1 to perform, with good accuracy, the AGC for a "status in which both the downlink frame and the uplink frame are present," which brings about an effect of improving the reception quality of data.

Note that, in order that the "reference signal transmitted by TRP 1 labeled 1101_1 and reference signal transmitted by NR-UE 1 labeled 1100_1 (time 3)" are present before the "both the downlink frame and the uplink frame are present (e.g., time 5)," there is a high possibility that the "section in which both NR-UE 1 labeled 1100_1 and TRP 1 labeled 1101_1 transmit reference signals (time 3)" is present later in time than the "section in which NR-UE 1 labeled 1100_1 transmits reference signals (time 1)" and the "section in which TRP 1 labeled 1101_1 transmits reference signals (time 2)."

The presence order of the "section in which NR-UE 1 labeled 1100_1 transmits reference signals (time 1)," the "section in which TRP 1 labeled 1101_1 transmits reference signals (time 2)," the "section in which both NR-UE 1 labeled 1100_1 and TRP 1 labeled 1101_1 transmit reference signals (time 3)," "control signal 2201_1_2," "control signal 2211_1_2," and a "section in which TRP 1 labeled 1101_1 transmits reference signals (time 2)," the "section in which both a downlink frame transmitted by TRP 1 labeled 1101_1 and an uplink frame transmitted by NR-UE 1 labeled 1100_1 are present (time 5)" is not limited to the example of FIG. 22B, and the same implementation is possible with any order.

As described above, NR-UE 1 labeled 1100_1 is enabled to perform the preferred transmission power control, by the following: "presence of the "section in which NR-UE 1 labeled 1100_1 transmits reference signals (time 1)," the "section in which TRP 1 labeled 1101_1 transmits reference signals (time 2)," and the "section in which both NR-UE 1 labeled 1100_1 and TRP 1 labeled 1101_1 transmit reference signals (time 3)""; or "presence of the "section in which NR-UE 1 labeled 1100_1 transmits reference signals (time 1)" and the "section in which both NR-UE 1 labeled 1100_1 and TRP 1 labeled 1101_1 transmit reference signals (time 3)""; or "presence of the "section in which TRP 1 labeled 1101_1 transmits reference signals (time 2)" and the "section in which both NR-UE 1 labeled 1100_1 and TRP 1 labeled 1101_1 transmit reference signals (time 3).""" This brings about an effect of improving the reception quality of data.

In FIG. 22B, the term "reference signal" is used to name a signal, but the naming is not limited to this, and any name may be used as long as the signal has a role of estimating a communication status. For example, the signal may be referred to as a path loss reference signal.

Further, in FIG. 22B, reference signals 2202_1_3 and 2202_1_4 are reference signals for the self-interference estimation (self-interference reference signals) for TRP 1 labeled 1101_1, and reference signals 2212_1_3 and 2212_1_4 are reference signals for the self-interference estimation (self-interference reference signals) for NR-UE 1 labeled 1100_1.

Then, data may be transmitted together with the reference signal.

In the above, the closed loop transmission power control of an NR-UE in a cellular system in the case of TDD or FDD has been described with reference to FIG. 20B. In the following, a supplementary description of this case will be given.

Transmission power such as a signal transmitted by an NR-UE in uplink (e.g., Physical Uplink Shared Channel (PUSCH), Physical Uplink Control Channel (PUCCH), Sounding Reference Signal (SRS), and the like) is controlled by a combination of the open loop transmission power by a parameter (such as P0 and $\alpha$) indicated by a TRP with a relatively long cycle and a path loss (PL) measured by the NR-UE, and the closed loop transmission power by a Transmit Power Control (TPC) command indicated by the TRP with a relatively short cycle based on a communication status (e.g., received SINR of TRP) between the TRP and the NR-UE. For example, the transmission power of PUSCH in the case of TDD or FDD is given by the following Equation:

$$P_{PUSCH}(i) = min\{P_{CMAX}, 10log_{10}(M_{PUSCH}(i)) + P_{0\_PUSCH}(j) + \alpha(j) \cdot PL + \Delta_{TF}(i) + f(i)\} \qquad \text{(Equation 1).}$$

At this time, $P_{PUSCH}(i)$ indicates the transmission power of PUSCH, $P_{CMAX}$ indicates the maximum transmission power, $M_{PUSCH}(i)$ indicates a transmission bandwidth, $P_{0\_PUSCH}(j)$ indicates a parameter related to a target reception power, $\alpha(j)$ indicates weight coefficient of a fractional TPC, $PL$ indicates a path loss measurement value, $\Delta_{TF}(i)$ indicates an offset dependent on a Modulation and Coding Scheme (MCS), and $f(i)$ indicates a correction value by the TPC command.

On the other hand, the closed loop transmission power control of the NR-UE has been described as above, using FIG. 22B and FIG. 22C as examples. At this time, the transmission power of PUSCH may be given by the following Equation:

$$P_{PUSCH}(i) = min\{P_{CMAX\_A}, 10log_{10}(M_{PUSCH}(i)) + P_{0\_PUSCH\_A}(j) + \alpha_{\_A}(j) \cdot PL + \Delta_{TF\_A}(i) + f_{\_A}(i)\} \qquad \text{(Equation 2).}$$

At this time, $P_{CMAX\_A}$ indicates the maximum transmission power when taking FIG. 22B and FIG. 22C as examples, $P_{0\_PUSCH\_A}(j)$ indicates a parameter related to a target reception power when taking FIG. 22B and FIG. 22C as examples, $\alpha_{\_A}(j)$ indicates weight coefficient of a fractional TPC when taking FIG. 22B and FIG. 22C as examples, $\Delta_{TF\_A}(i)$ indicates an offset dependent on MCS when taking FIG. 22B and FIG. 22C as examples, and $f_{\_A}(i)$ indicates a correction value by the TPC command when taking FIG. 22B and FIG. 22C as examples. Additionally, the preferred transmission power control when taking FIG. 22B and FIG. 22C as examples can be performed when one or more of the following <11>, <12>, <13>, <14>, and <15>:

<11> $P_{CMAX}$ and $P_{CMAX\_A}$ are different values;

<12> $P_{0\_PUSCH}(j)$ and $P_{0\_PUSCH\_A}(j)$ are different (defined) functions (represented by different equations);

<13> $\alpha(j)$ and $\alpha_{\_A}(j)$ are different (defined) functions (represented by different equations);

<14> $\Delta_{TF}(i)$ and $\Delta_{TF\_A}(i)$ are different (defined) functions (represented by different equations); and

<15> $f(i)$ and $f_{\_A}(i)$ are different (defined) functions (represented by different equations).

Incidentally, when the closed loop transmission power control of the NR-UE is performed using FIG. 22B and FIG. 22C as examples, transmission power may be given by an equation other than Equation 2.

Reference signals 2202_1_1 and 2202_1_2 of FIG. 22A, reference signals 2202_1_3 and 2202_1_4 of FIG. 22B, and reference signal 2202_1_5 of FIG. 22C are signals for estimating the self-interference for the TRP, but, for the NR-UE, which is a communication counterpart, they are signals for estimating the communication status such as a path loss, a reception field strength, and a signal power.

Reference signals 2212_1_1 and 2212_1_2 of FIG. 22A, reference signals 2212_1_3 and 2212_1_4 of FIG. 22B, and reference signal 2212_1_5 of FIG. 22C are signals for estimating the self-interference for the NR-UE, but, for the TRP, which is a communication counterpart, they are signals for estimating the communication status such as a path loss, a reception field strength, and a signal power.

Incidentally, as described with reference to FIG. 11A and the like, FIG. 22A, FIG. 22B, and FIG. 22C have been each described as the exchange between "NR-UE 1 labeled 1100_1 and TRP 1 labeled 1101_1" in a time axis at the time of the transmission power control when NR-UE 1 labeled 1100_1 and TRP 1 labeled 1101_1 perform communication, but the transmission power control may be performed with at least one of the methods in FIG. 22A, FIG. 22B, and FIG. 22C, as the exchange between "NR-UE 1 labeled 1100_1 and TRP 1 labeled 1101_1" in a time axis at the time of the transmission power control. Alternatively, any of the methods in FIG. 22A, FIG. 22B, and FIG. 22C may be selected depending on time in order to perform the transmission power control, as the exchange between "NR-UE 1 labeled 1100_1 and TRP 1 labeled 1101_1" in a time axis at the time of the transmission power control. This brings about the effects as already mentioned in the same way.

In FIG. 20A, FIG. 20B, FIG. 21, FIG. 22A, FIG. 22B, and FIG. 22C, "a signal transmitted by an NR-UE, e.g., an uplink frame, a reference signal, and a control signal" may be included any of an uplink shared channel (UL-SCH), a physical uplink control channel (PUCCH), a physical uplink shared channel (PUSCH), a physical random access channel (PRACH), and the like.

In FIG. 20A, FIG. 20B, FIG. 21, FIG. 22A, FIG. 22B, and FIG. 22C, "a signal transmitted by a TRP, e.g., a downlink frame, a reference signal, and a control signal" may be included any of a paging channel (PCH), a broadcast channel (BCH), a downlink shared channel (DL-SCH), a broadcast control channel (BCCH), a Paging control channel (PCCH), a common control channel (CCCH), a common search space, a physical broadcast channel (PBCH), Synchronization Signals (SS), a physical downlink control channel (PDCCH), a physical downlink shared channel (PDSCH), and the like, without limitation to this.

Complementary descriptions will be given of the present embodiments and FDD in the present specification. For example, with reference to a plurality of drawings, when a communication apparatus performs the FDD communication using first frequency (or, e.g., second frequency) (band), the following some cases are possible.

First Case:

A communication apparatus uses the first frequency (or, e.g., second frequency (band)) when transmitting a modulation signal.

Second Case:

A communication counterpart of the communication apparatus uses the first frequency (or, e.g., second frequency) (band) to transmit a modulation signal, and the communication apparatus receives this modulation signal.

Third Case:

First frequency (or, e.g., second frequency) (band) is divided into frequency A and frequency B. A communication apparatus uses frequency A when transmitting a modulation signal. Meanwhile, a communication counterpart of the communication apparatus uses frequency B when transmitting a modulation signal.

The three cases have been each described above, but an example in which "a communication apparatus performs the FDD communication using the first frequency (or, e.g., second frequency) (band)" is not limited to these cases as long as the communication apparatus performs transmission or reception using the first frequency (or, e.g., second frequency) (band) or part of the first frequency (or, e.g., second frequency) (band). The aforementioned points are the same in the present specification.

In the present embodiment, a description has been given with reference to a TRP, but the same implementation is possible even when the TRP is replaced with any of "a base station, a repeater, an access point, a broadcast station, a gNodeB (gNB), an eNodeB (eNB), a node, a server, a satellite, a movable apparatus (e.g., electricity-based movable apparatus such as "electric vehicle, motor bike (e-bike), electric-powered vehicle, movable robot, electric-powered scooter, electric-assisted bicycle, and electric-assisted scooter," automobile, motorcycle, bicycle, vessel, aircraft, airplane), a terminal, a mobile phone, a smart phone, a tablet, a laptop, a personal computer, a home appliance (household electric appliance), an apparatus in a factory, communication equipment or broadcast equipment such as "Internet of Things (IoT) equipment, and the like." Accordingly, the TRP in the present embodiment may be referred to as "a base station, a repeater, an access point, a broadcast station, a gNB, an eNB, a node, a server, a satellite, a movable apparatus described above, a terminal, a mobile phone, a smart phone, a tablet, a laptop, a personal computer, a home appliance, an apparatus in a factory, communication equipment or broadcast equipment such as IoT equipment, and the like." The aforementioned points are the same in the present specification.

Further, in the present embodiment, a description has been given with reference to an NR-UE, but the same implementation is possible even when the NR-UE is replaced with any of "a TRP, a base station, a repeater, an access point, a broadcast station, a gNB, an eNB, a node, a server, a satellite, a movable apparatus described above, a terminal, a mobile phone, a smart phone, a tablet, a laptop, a personal computer, a home appliance, an apparatus in a factory, communication equipment or broadcast equipment such as IoT equipment, and the like." Accordingly, the NR-UE in the present embodiment may be referred to as "a TRP, a base station, a repeater, an access point, a broadcast station, a gNB, an eNB, a node, a server, a satellite, a movable apparatus described above, a terminal, a mobile phone, a smart phone, a tablet, a laptop, a personal computer, a home appliance, an apparatus in a factory, communication equipment or broadcast equipment such as IoT equipment, and the like." The aforementioned points are the same in the present specification.

FIG. 1A, FIG. 1B, FIG. 1C, FIG. 9, and FIG. 10 have been each described as, for example, an exemplary configuration of an apparatus such as a TRP or an NR-UE in the present embodiment, but configuration of the apparatus is not limited to these examples. An apparatus having a configuration to perform transmit beamforming and receive beamforming has been described, but the present embodiment can be implemented even by an apparatus configured not to have the configuration to perform the transmit beamforming and the receive beamforming. The aforementioned points are the same in the present specification.

In some cases, it is possible for an apparatus to obtain an effect of self-interference cancellation by performing the transmit beamforming and the receive beamforming. Additionally, without performing the beamforming, the self-interference cancellation may be achieved using a method of being provided with a function of performing the self-interference cancellation.

Further, for example, when an apparatus such as a TRP or an NR-UE transmits a modulation signal, one or more, or two or more modulation signals may be transmitted using one or more, or two or more transmission antennas. The aforementioned points are the same in the present specification.

(Embodiment 2)

In Embodiment 2, a variation of Embodiment 1 will be described.

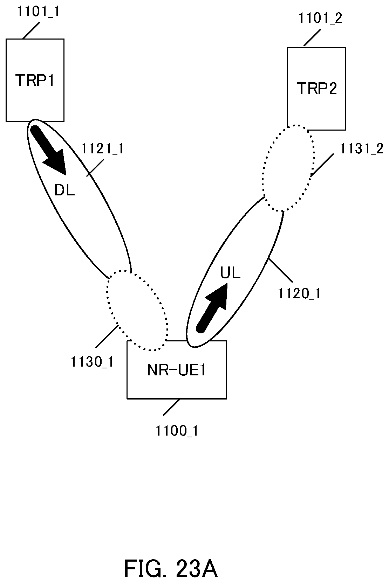

FIG. 23A illustrates an exemplary radio system in the present embodiment. As illustrated in FIG. 23A, there are TRP 1 labeled 1101_1, TRP 2 labeled 1101_2, NR-UE 1 labeled 1100_1, for example. Note that, in FIG. 23A, the components that operate in the same manner as the components in FIG. 11A are denoted by the same reference numerals, and some descriptions thereof will be omitted.

In FIG. 23A, TRP 1 labeled 1101_1 generates transmission beam 1121_1 and uses transmission beam 1121_1 to transmit a modulation signal addressed to NR-UE 1 labeled 1100_1 (Downlink (DL)).

NR-UE 1 labeled 1100_1 then generates received beam 1130_1 and uses received beam 1130_1 to receive the modulation signal addressed to NR-UE 1 that has been transmitted by TRP 1 labeled 1101_1.

Moreover, NR-UE 1 labeled 1100_1 generates transmission beam 1120_1 and uses transmission beam 1120_1 to transmit a modulation signal addressed to TRP 2 labeled 1101_2 (Uplink (UL)).

TRP 2 labeled 1101_2 then generates received beam 1131_2 and uses received beam 1131_2 to receive the modulation signal addressed to TRP 2 that has been transmitted by NR-UE 1 labeled 1100_1.

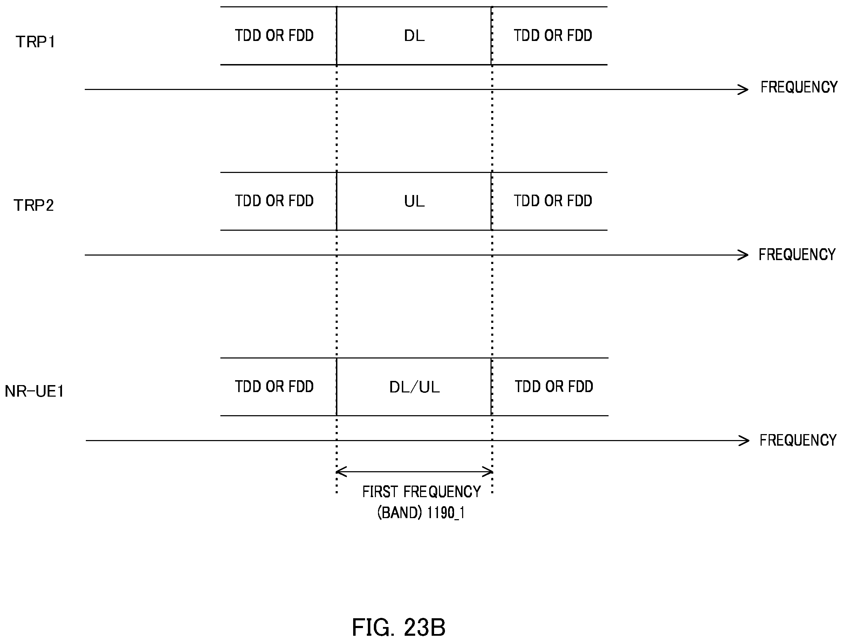

FIG. 23B illustrates exemplary communication statuses of "TRP 1 labeled 1101_1, TRP 2 labeled 1101_2, and NR-UE 1 labeled 1100_1" in a frequency axis in FIG. 23A. Note that, in FIG. 23B, a horizontal axis represents frequency.

TRP 1 labeled 1101_1 uses first frequency (band) 1190_1 to transmit a modulation signal for downlink. At this time, for example, NR-UE 1 labeled 1100_1 receives the modulation signal transmitted by TRP 1 labeled 1101_1. Note that, as in FIG. 23B, TRP 1 labeled 1101_1 may perform TDD communication or FDD communication at a frequency (band) other than first frequency (band) 1190_1. Unlike FIG. 23B, TRP 1 labeled 1101_1 need not perform communication at a frequency (band) other than first frequency (band) 1190_1.

TRP 2 labeled 1101_2 uses first frequency (band) 1190_1 to receive a modulation signal for uplink. At this time, TRP 2 labeled 1101_2 receives the modulation signal at first frequency (band) 1190_1 transmitted by NR-UE 1 labeled 1100_1. Note that, as in FIG. 23B, TRP 2 labeled 1101_2 may perform TDD communication or FDD communication at a frequency (band) other than first frequency (band) 1190_1. Unlike FIG. 23B, TRP 2 labeled 1101_2 need not perform communication at a frequency (band) other than first frequency (band) 1190_1.

NR-UE 1 labeled 1100_1 uses first frequency (band) 1190_1 to receive a modulation signal for downlink and to transmit a modulation signal for uplink. At this time, for example, TRP 2 labeled 1101_2 receives the modulation signal transmitted by NR-UE 1 labeled 1100_1. NR-UE 1 labeled 1100_1 then receives the modulation signal at first frequency (band) 1190_1 transmitted by TRP 1 labeled 1101_1. Note that, as in FIG. 23B, NR-UE 1 labeled 1100_1 may perform the TDD communication or FDD communication at a frequency (band) other than first frequency (band) 1190_1. Unlike FIG. 23B, NR-UE 1 labeled 1100_1 need not perform communication at a frequency (band) other than first frequency (band) 1190_1.

In FIG. 23B, a case has been described where the frequency for "downlink" and the frequency for "uplink" are the same frequency (band), but the frequency for "downlink" and the frequency for "uplink" may be partly the same frequency (band). Alternatively, the frequency for "downlink" and the frequency for "uplink" may be different from each other. Descriptions of TDD and FDD will be omitted because they have already been each described.

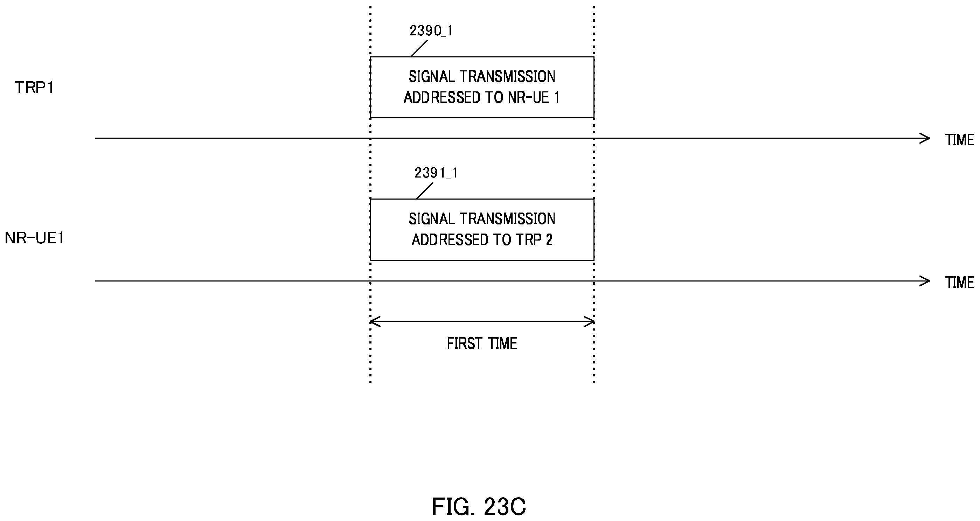

FIG. 23C illustrates exemplary communication statuses of NR-UE 1 labeled 1100_1 and TRP 1 labeled 1101_1 in time in FIG. 23A. In FIG. 23C, a horizontal axis represents time. Note that, FIG. 23C indicates communication statuses at first frequency (band) 1190_1 in FIG. 23B.

As illustrated in FIG. 23C, NR-UE 1 labeled 1100_1 transmits a signal addressed to TRP 2 labeled 1101_2 for "communication at first frequency (band) 1190_1 of FIG. 23B" in the first time (2391_1).

Further, as illustrated in FIG. 23C, TRP 1 labeled 1101_1 transmits a signal addressed to NR-UE 1 labeled 1100_1 for "communication at first frequency (band) 1190_1 of FIG. 23B" in the first time (2390_1).

Therefore, NR-UE 1 labeled 1100_1 performs transmission/reception of a modulation signal simultaneously.

Note that the signal addressed to TRP 2 labeled 1101_2 transmitted by NR-UE 1 labeled 1100_1 may be present in time other than the first time. Moreover, the signal addressed to NR-UE 1 labeled 1100_1 transmitted by TRP 1 labeled 1101_1 may be present in time other than the first time. At this time, the "signal addressed to TRP 2 labeled 1101_2 transmitted by NR-UE 1 labeled 1100_1" and the "signal addressed to NR-UE 1 labeled 1100_1 transmitted by TRP 1 labeled 1101_1" may or may not overlap in a time axis.

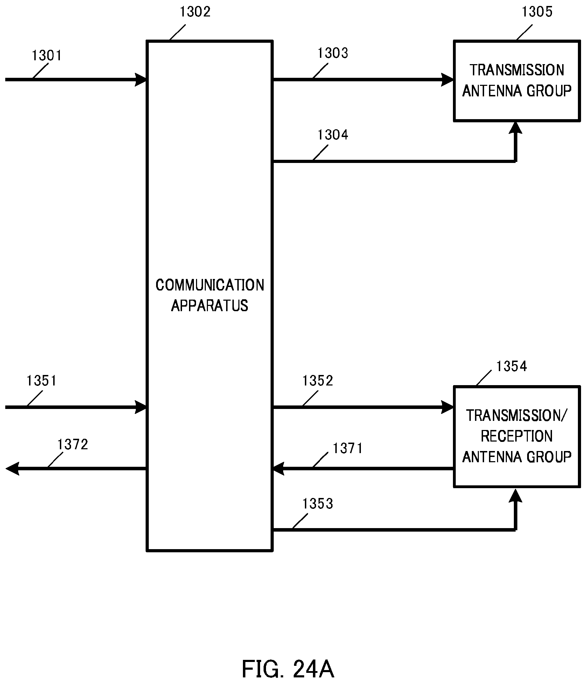

FIG. 24A illustrates an exemplary configuration an apparatus of TRP 1 labeled 1101_1. In FIG. 24A, the components that operate in the same manner as the components in FIG. 13 are denoted by the same reference numerals, and descriptions of contents that have already been described will be omitted.

Communication apparatus 1302 inputs data 1301 and outputs modulation signal (group) 1303 including a signal addressed to NR-UE 1 labeled 1100_1, and control signal 1304. Transmission antenna (group) 1305 inputs modulation signal (group) 1303 and control signal 1304, generates a transmission signal based on control signal 1304, and outputs the transmission signal as a radio wave. At this time, the transmission signal is transmitted using transmission beam 1121_1 as illustrated in FIG. 23A, for example.

Moreover, communication apparatus 1302 inputs data 1351 and outputs modulation signal (group) 1352 and control signal 1353 that are for communication by "TDD or FDD" in FIG. 23B. Transmission/reception antenna (group) 1354 inputs modulation signal (group) 1352 and control signal 1353 that are for the communication by "TDD or FDD," generates a transmission signal for the communication by "TDD or FDD" based on control signal 1353, and outputs the transmission signal as a radio wave.

Transmission/reception antenna (group) 1354 receives received signal 1371 associated with the communication by "TDD or FDD" in FIG. 23B. Communication apparatus 1302 then inputs received signal 1371, performs processing such as demodulation and decoding an error correction code, and outputs received data 1372.

Thus, for example, TRP 1 labeled 1101_1 may have a configuration to transmit a modulation signal to NR-UE 1 labeled 1100_1 and performing the communication by "TDD or FDD," as illustrated in FIG. 23A and FIG. 23B. Note that TRP 1 labeled 1101_1 may be configured to include no parts related to the communication by "TDD or FDD" in FIG. 24A. At this time, TRP 1 labeled 1101_1 is composed of communication apparatus 1302 and transmission antenna (group) 1305, for example.

Incidentally, when TRP 1 labeled 1101_1 performs the communication by "TDD or FDD," a counterpart in the communication by "TDD or FDD" may be NR-UE 1 labeled 1100_1 or another NR-UE. Thus, it is possible to bring about an effect of improving the data transmission efficiency in TRP 1 labeled 1101_1. Further, when the counterpart in the communication by "TDD or FDD" is NR-UE 1 labeled 1100_1, an effect of improving the data transmission efficiency in NR-UE 1 labeled 1100_1 can be brought about.

In FIG. 24A, the terms of "transmission antenna (group)" and "transmission/reception antenna (group)" are used, but each of them may be referred to as an antenna port or called something else. When they are referred to as antenna ports, the configuration is characterized in that TRP 1 labeled 1101_1 separately includes an "antenna port for transmitting modulation signal (group) 1303 including a signal addressed to NR-UE 1 labeled 1100_1" and an "antenna port for performing the communication by "TDD or FDD"" in FIG. 24A.

Note that the antenna port may be a logical antenna (antenna group) composed of one or more physical antennas. That is, the antenna port does not necessarily refer to one physical antenna, but may refer to an array antenna or the like composed of a plurality of antennas. For example, the number of physical antennas composing the antenna port is not specified, but the number of physical antennas may be specified as the minimum unit in which a terminal station is capable of transmitting a reference signal. Further, the antenna port may also be specified as a unit or a minimum unit for multiplication by a precoding vector or a weight of a precoding matrix.

Further, the "transmission antenna (group)" and the "transmission/reception antenna (group)" are illustrated one each in the drawings, there may be a plurality of antennas (antenna groups). The "transmission antenna (group)" and the "transmission/reception antenna (group)" may be each composed of one antenna or a plurality of antennas.

Note that, in FIG. 24A, a "transmission antenna group," a "reception antenna group," and a "transmission/reception antenna group" other than those illustrated in FIG. 24A may be included. For example, TRP 1 labeled 1101_1 may be configured as illustrated in FIG. 13.

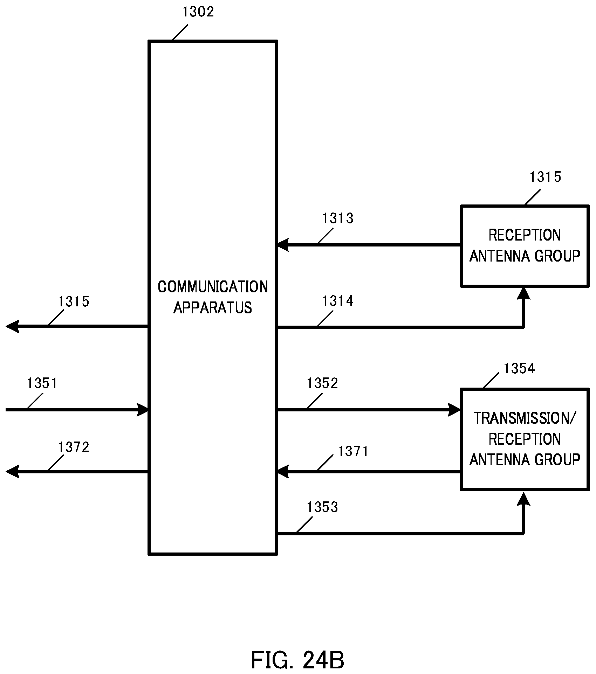

FIG. 24B illustrates an exemplary configuration an apparatus of TRP 2 labeled 1101_2. Note that the components that operate in the same manner as the components in FIG. 13 are denoted by the same reference numerals, and some descriptions thereof will be omitted. Reception antenna (group) 1315 receives a modulation signal (received signal 1313) transmitted by NR-UE 1 1100_1 illustrated in FIG. 23A. Moreover, reception antenna (group) 1315 inputs control signal 1314 and operates as a reception antenna based on control signal 1314. Communication apparatus 1302 then inputs received signal 1313, performs processing such as demodulation and decoding an error correction code, and outputs received data 1315.

Moreover, communication apparatus 1302 inputs data 1351 and outputs modulation signal (group) 1352 and control signal 1353 that are for communication by "TDD or FDD" in FIG. 23B. Transmission/reception antenna (group) 1354 inputs modulation signal (group) 1352 and control signal 1353 that are for the communication by "TDD or FDD," generates a transmission signal for the communication by "TDD or FDD" based on control signal 1353, and outputs the transmission signal as a radio wave.

Transmission/reception antenna (group) 1354 receives received signal 1371 associated with the communication by "TDD or FDD" in FIG. 23B. Communication apparatus 1302 then inputs received signal 1371, performs processing such as demodulation and decoding an error correction code, and outputs received data 1372.

Thus, for example, TRP 2 labeled 1101_2 may have a configuration to receive a modulation signal transmitted by NR-UE 1 labeled 1100_1 and performing the communication by "TDD or FDD," as illustrated in FIG. 23A and FIG. 23B. Note that TRP 2 labeled 1101_2 may be configured to include no parts related to the communication by "TDD or FDD" in FIG. 24B. At this time, TRP 2 labeled 1101_2 is composed of communication apparatus 1302 and reception antenna (group) 1315, for example.

Incidentally, when TRP 2 labeled 1101_2 performs the communication by "TDD or FDD," a counterpart in the communication by "TDD or FDD" may be NR-UE 1 labeled 1100_1 or another NR-UE. Thus, it is possible to bring about an effect of improving the data transmission efficiency in TRP 2 labeled 1101_2. Further, when the counterpart in the communication by "TDD or FDD" is NR-UE 1 labeled 1100_1, an effect of improving the data transmission efficiency in NR-UE 1 labeled 1100_1 can be brought about.

In FIG. 24B, the terms of "reception antenna (group)" and "transmission/reception antenna (group)" are used, but each of them may be referred to as an antenna port or called something else. When they are referred to as antenna ports, the configuration is characterized in that TRP 2 labeled 1101_2 separately includes an "antenna port for receiving a modulation signal transmitted by NR-UE 1 labeled 1100_1" and an "antenna port for performing the communication by "TDD or FDD"" in FIG. 24B.

Further, the "reception antenna (group)" and the "transmission/reception antenna (group)" are illustrated one each in the drawings, there may be a plurality of antennas (antenna groups). The "reception antenna (group)" and the "transmission/reception antenna (group)" may be each composed of one antenna or a plurality of antennas.

Note that, in FIG. 24B, a "transmission antenna group," a "reception antenna group," and a "transmission/reception antenna group" other than those illustrated in FIG. 24 B may be included. For example, TRP 2 labeled 1101_2 may be configured as illustrated in FIG. 24B.

FIG. 14 illustrates an exemplary configuration an apparatus of NR-UE 1 labeled 1100_1. Communication apparatus 1402 inputs data 1401 and outputs modulation signal (group) 1403 including a signal addressed to TRP 2 labeled 1101_2, and control signal 1404. Transmission antenna (group) 1405 inputs modulation signal (group) 1403 and control signal 1404, generates a transmission signal based on control signal 1494, and outputs the transmission signal as a radio wave. At this time, the transmission signal is transmitted using transmission beam 1120_1 as illustrated in FIG. 23A, for example.

Reception antenna (group) 1415 receives the modulation signal (received signal 1413) transmitted by TRP 1 labeled 1101_1 illustrated in FIG. 23A. Further, reception antenna (group) 1415 inputs control signal 1414 and operates as a reception antenna based on control signal 1414. Communication apparatus 1402 then inputs received signal 1413, performs processing such as demodulation and decoding an error correction code, and outputs received data 1415.

Moreover, communication apparatus 1402 inputs data 1451 and outputs modulation signal (group) 1452 and control signal 1453 that are for communication by "TDD or FDD" in FIG. 23B. Transmission/reception antenna (group) 1454 inputs modulation signal (group) 1452 and control signal 1453 that are for the communication by "TDD or FDD," generates a transmission signal for the communication by "TDD or FDD" based on control signal 1453, and outputs the transmission signal as a radio wave.

Transmission/reception antenna (group) 1454 receives received signal 1471 associated with the communication by "TDD or FDD" in FIG. 23B. Communication apparatus 1402 then inputs received signal 1471, performs processing such as demodulation and decoding an error correction code, and outputs received data 1472.

Thus, for example, NR-UE 1 labeled 1100_1 may have a configuration to transmit a modulation signal transmitted by TRP 1 labeled 1101_1 and performing the communication by "TDD or FDD," as illustrated in FIG. 23A and FIG. 23B. Note that NR-UE 1 labeled 1100_1 may be configured to include no parts related to the communication by "TDD or FDD" in FIG. 14. At this time, NR-UE 1 labeled 1100_1 is composed of communication apparatus 1402 and transmission antenna (group) 1405, and reception antenna (group) 1415, for example.

Note that, in the example of FIG. 23A, TRP 1 labeled 1101_1 transmits a modulation signal for downlink, but TRP 2 labeled 1101_2 may transmit a modulation signal for downlink and NR-UE 1 labeled 1100_1 may have the function of receiving the "modulation signal for downlink transmitted by TRP 2 labeled 1101_2" and transmitting a modulation signal for uplink addressed to TRP 2 labeled 1101_2. At this time, a frequency (band) in which NR-UE 1 labeled 1100_1 transmits a signal and a frequency (band) in which NR-UE 1 labeled 1100_1 receives a signal are the same or partly the same. Further, the signal transmitted by NR-UE 1 labeled 1100_1 and the signal received by NR-UE 1 labeled 1100_1 are present in the same time or partly the same time.

In FIG. 14, transmission antenna group 1405, reception antenna group 1415, transmission/reception antenna group 1454 are units separate from each other, but the present disclosure is not limited to this case. For example, in FIG. 14, "transmission antenna group 1405" and "transmission antenna function of transmission/reception antenna group 1454" may be shared (e.g., realized by one transmission antenna group). Alternatively, "reception antenna group 1415" and "reception antenna function of transmission/reception antenna group 1454" may be shared ((e.g., realized by one reception antenna group).

Note that, when NR-UE 1 labeled 1100_1 performs the communication by "TDD or FDD," a counterpart in the communication by "TDD or FDD" may be TRP 1 labeled 1101_1 and/or a TRP 2 labeled 1101_2, or another TRP. Thus, it is possible to bring about an effect of improving the data transmission efficiency in NR-UE 1 labeled 1100_1.

In FIG. 14, the terms of "transmission antenna (group)," "reception antenna (group)," and "transmission/reception antenna (group)" are used, but each of them may be referred to as an antenna port or called something else. When they are referred to as antenna ports, the configuration is characterized in that NR-UE 1 labeled 1100_1 separately includes an "antenna port for transmitting modulation signal (group) 1403 including a signal addressed to TRP 2 labeled 1101_2" and an "antenna port for performing the communication by "TDD or FDD"" in FIG. 14. Alternatively, the configuration is characterized in that NR-UE 1 labeled 1100_1 separately includes the "antenna port for transmitting modulation signal (group) 1403 including a signal addressed to TRP 2 labeled 1101_2," an "antenna port for receiving the modulation signal (group) transmitted by TRP 1 labeled 1101_1," and the "antenna port for performing the communication by "TDD or FDD"" in FIG. 14.

Further, the "transmission antenna (group)," "reception antenna (group),"and the "transmission/reception antenna (group)" are illustrated one each in the drawings, but there may be a plurality of antennas (antenna groups). The "transmission antenna (group)," "reception antenna (group)," and the "transmission/reception antenna (group)" may be each composed of one antenna or a plurality of antennas.

Next, still another communication method will be described.

FIG. 15A illustrates an exemplary radio system, which is different from that in FIG. 23A, in the present embodiment. As illustrated in FIG. 15A, there are TRP 1 labeled 1101_1 and NR-UE 1 labeled 1100_1. Note that, descriptions of FIG. 15A will be omitted because it has already been described.

NR-UE 1 labeled 1100_1 and TRP 1 labeled 1101_1 perform communication by "TDD or FDD" (1501).

FIG. 15B illustrates exemplary states of "TRP 1 labeled 1101_1 and NR-UE 1 labeled 1100_1" in the frequency axis in FIG. 15A. Note that, in FIG. 15B, a horizontal axis represents frequency.

NR-UE 1 labeled 1100_1 and TRP 1 labeled 1101_1 use first frequency (band) 1190_1 to perform communication by "TDD or FDD." Note that NR-UE 1 labeled 1100_1 and TRP 1 labeled 1101_1 may use a frequency other than first frequency (band) 1190_1 for this communication, or as in FIG. 15B, NR-UE 1 labeled 1100_1 and TRP 1 labeled 1101_1 need not use a frequency other than first frequency (band) 1190_1.

FIG. 15C illustrates exemplary communication statuses of NR-UE 1 labeled 1100_1 and TRP 1 labeled 1101_1 in time in FIG. 15A. In FIG. 15C, a horizontal axis represents time.

As illustrated in FIG. 15C, NR-UE 1 labeled 1100_1 and TRP 1 labeled 1101_1 perform communication in the second time as indicated in FIG. 15A (1590_1 and 1591_1).

Note that NR-UE 1 labeled 1100_1 and TRP 1 labeled 1101_1 may perform communication in time other than the second time. Further, NR-UE 1 labeled 1100_1 and TRP 1 labeled 1101_1 may use the frequency as described in FIG. 15B or FIG. 15D. FIG. 15D will be described below.

FIG. 15D illustrates exemplary communication statuses of "TRP 1 labeled 1101_1 and NR-UE 1 labeled 1100_1" in the frequency axis in FIG. 15A. Note that, in FIG. 15D, a horizontal axis represents frequency.

NR-UE 1 labeled 1100_1 and TRP 1 labeled 1101_1 use second frequency (band) 1190_2 to perform communication by "TDD or FDD."

Note that NR-UE 1 labeled 1100_1 and TRP 1 labeled 1101_1 may use a frequency other than second frequency (band) 1190_2 for this communication, or as in FIG. 15D, NR-UE 1 labeled 1100_1 and TRP 1 labeled 1101_1 need not use a frequency other than second frequency (band) 1190_2.

The following two cases are discussed.

Case 1X:

The "communication method described with reference to FIG. 23A, FIG. 23B, and FIG. 23C" is performed in the first time, whereas, the "communication method described with reference to FIG. 15A, FIG. 15B, and FIG. 15C" is performed in the second time.

Case 2X:

The "communication method described with reference to FIG. 23A, FIG. 23B, and FIG. 23C" is performed in the first time, whereas, the "communication method described with reference to FIG. 15A, FIG. 15C, and FIG. 15D" is performed in the first time or the second time.

In Case 1X and Case 2X, "TRP 1 labeled 1101_1 and NR-UE 1 labeled 1100_1" and/or "TRP 2 labeled 1101_2 and NR-UE 1 labeled 1100_1" perform communication. At this time, for example, the configuration in FIG. 13 or FIG. 24A is possible as an exemplary configuration of TRP 1 labeled 1101_1. However, the configuration of TRP 1 labeled 1101_1 is not limited to the configuration in FIG. 13 or FIG. 24A.

Further, for example, the configuration in FIG. 14 is possible as an exemplary configuration of NR-UE 1 labeled 1100_1. However, the configuration of NR-UE 1 labeled 1100_1 is not limited to the configuration in FIG. 14 and may be, for example, a configuration that does not include one or more of transmission antenna group 1405, reception antenna group 1415, and transmission/reception antenna group 1454 in FIG. 14.

At this time, TRP 1 labeled 1101_1 having the configuration in FIG. 13 or FIG. 24A includes, in communication apparatus 1302, a "transmission power controller" that controls transmission (electric) power, and NR-UE 1 labeled 1100_1 having the configuration in FIG. 14 includes, in communication apparatus 1402, a "transmission power controller" for that controls transmission (electric) power.

FIG. 16 illustrates an exemplary configuration of the "transmission power controller" included in TRP 1 labeled 1101_1 having the configuration in FIG. 13 or FIG. 24A and the "transmission power controller" included in NR-UE 1 labeled 1100_1 having the configuration in FIG. 14.

As illustrated in FIG. 16, transmission power controller 1601 inputs modulation signal 1602 and control signal 1600, controls transmission (electric) power of modulation signal 1602, based on control signal 1600, and then outputs transmission-power-control-subjected modulation signal 1603.

First Example of Case 1X:

In the first example of Case 1X, NR-UE 1 labeled 1100_1 and TRP 1 labeled 1101_1 can transmit modulation signals using, as a frequency (band), frequency (band) $\alpha1$ (in units Hz) and frequency (band) $\beta1$ (in units Hz). Note that $\alpha1$ is assumed to be larger than $\beta1$ ($\alpha1 > \beta1$).

When NR-UE 1 labeled 1100_1 uses frequency (band) $\alpha1$, let AX1 be transmission (electric) power configured by the transmission (electric) power control.

In the first example of Case 1X, when the "communication method described with reference to FIG. 23A, FIG. 23B, and FIG. 23C" is performed in the first time in a situation where frequency (band) $\alpha1$ is used, let FX1 be the maximum value of the transmission (electric) power of NR-UE 1 labeled 1100_1 (in units, for example, dBm). Accordingly, AX1 is set to be less than or equal to FX1 in the first time.

In the first example of Case 1X, when the "communication method described with reference to FIG. 15A, FIG. 15B, and FIG. 15C" is performed in the second time in a situation where frequency (band) $\alpha1$ is used, let GX1 be the maximum value of the transmission (electric) power of NR-UE 1 labeled 1100_1 (in units, for example, dBm). Accordingly, AX1 is set to be less than or equal to GX1 in the second time.

When NR-UE 1 labeled 1100_1 uses frequency (band) $\beta1$, let AX2 be transmission (electric) power configured by the transmission (electric) power control.

In the first example of Case 1X, when the "communication method described with reference to FIG. 23A, FIG. 23B, and FIG. 23C" is performed in the first time in a situation where frequency (band) $\beta 1$ is used, let FX2 be the maximum value of the transmission (electric) power of NR-UE 1 labeled 1100_1 (in units, for example, dBm). Accordingly, AX2 is set to be less than or equal to FX2 in the first time.

In the first example of Case 1X, when the "communication method described with reference to FIG. 15A, FIG. 15B, and FIG. 15C" is performed in the second time in a situation where frequency (band) $\beta 1$ is used, let GX2 be the maximum value of the transmission (electric) power of NR-UE 1 labeled 1100_1 (in units, for example, dBm). Accordingly, AX2 is set to be less than or equal to GX2 in the second time.

At this time, it is assumed that GX1 and GX2 are equal to each other (GX1 = GX2) and FX1 and FX2 are different from each other (FX1 $\neq$ FX2).

When the "communication method described with reference to FIG. 15A, FIG. 15B, and FIG. 15C" is performed in the second time of the first example of Case 1X in a situation where any of frequencies (bands) $\alpha 1$ and $\beta 1$ is used, transmission (electric) power AX1 or AX2 is controlled such that the reception quality of data in TRP 1 labeled 1101_1 is improved. When the frequency (band) is less dependent, it is made possible to maintain good reception quality even when the maximum values of the transmission (electric) power GX1 and GX2 are made equal.

On the other hand, when the "communication method described with reference to FIG. 23A, FIG. 23B, and FIG. 23C" is performed in the first time of the first example of Case 1X, transmission (electric) power AX1 is controlled such that the reception quality of data in both TRP 2 labeled 1101_2 and NR-UE 1 labeled 1100_1 is improved in a situation where frequency (band) $\alpha 1$ is used (because TRP 2 labeled 1101_2 and NR-UE 1 labeled 1100_1 perform reception operation in the first time). The maximum value of the transmission (electric) power is set to FX1 based on this.

Similarly, when the "communication method described with reference to FIG. 23A, FIG. 23B, and FIG. 23C" is performed in the first time of the first example of Case 1X, transmission (electric) power AX2 is controlled such that the reception quality of data in both TRP 2 labeled 1101_2 and NR-UE 1 labeled 1100_1 is improved in a situation where frequency (band) $\beta 1$ is used (because TRP 2 labeled 1101_2 and NR-UE 1 labeled 1100_1 perform reception operation in the first time). The maximum value of the transmission (electric) power is set to FX2 based on this.

At this time, since $\alpha 1$ and $\beta 1$ are different values, the characteristics of radio waves in frequency (band) $\alpha 1$ (e.g., rectilinearity, diffraction, reflection, and the like) and the characteristics of radio waves in frequency (band) $\beta 1$ are different from each other. The transmission (electric) power is controlled such that the reception quality of data in both TRP 2 labeled 1101_2 and NR-UE 1 labeled 1100_1 is improved; however, at this time, TRP 2 labeled 1101_2 receives the modulated signal transmitted by TRP 1 labeled 1101_1 as interference and NR-UE 1 labeled 1100_1 receives the modulated signal transmitted by itself as interference. The degree of interference depends on the characteristics of radio waves, that is, on a frequency (band). Therefore, making "the maximum value FX1 of the transmission (electric) power in the first time in the case of frequency (band) $\alpha 1$" and "the maximum value FX2 of the transmission (electric) power in the first time in the case of frequency (band) $\beta 1$" different from each other makes it possible to bring about an effect of improving the reception quality of data in each apparatus.

Note that, when FX1 $\neq$ FX2 is satisfied, "GX1 and FX1 may be the same or different," and "GX2 and FX2 may be the same or different."

When TRP 1 labeled 1101_1 uses frequency (band) $\alpha 1$, let BX1 be the maximum value of the transmission (electric) power set by the transmission (electric) power control.

In the first example of Case 1X, when the "communication method described with reference to FIG. 23A, FIG. 23B, and FIG. 23C" is performed in the first time in a situation where frequency (band) $\alpha 1$ is used, let HX1 be the maximum value of the transmission (electric) power of TRP 1 labeled 1101_1 (in units, for example, dBm). Accordingly, BX1 is set to be less than or equal to HX1 in the first time.

In the first example of Case 1X, when the "communication method described with reference to FIG. 15A, FIG. 15B, and FIG. 15C" is performed in the second time in a situation where frequency (band) $\alpha 1$ is used, let IX1 be the maximum value of the transmission (electric) power of TRP 1 labeled 1101_1 (in units, for example, dBm). Accordingly, BX1 is set to be less than or equal to IX1 in the second time.

When TRP 1 labeled 1101_1 uses frequency (band) $\beta 1$, let BX2 be transmission (electric) power configured by the transmission (electric) power control.

In the first example of Case 1X, when the "communication method described with reference to FIG. 23A, FIG. 23B, and FIG. 23C" is performed in the first time in a situation where frequency (band) $\beta 1$ is used, let HX2 be the maximum value of the transmission (electric) power of TRP 1 labeled 1101_1 (in units, for example, dBm). Accordingly, BX2 is set to be less than or equal to HX2 in the first time.

In the first example of Case 1X, when the "communication method described with reference to FIG. 15A, FIG. 15B, and FIG. 15C" is performed in the second time in a situation where frequency (band) $\beta 1$ is used, let IX2 be the maximum value of the transmission (electric) power of TRP 1 labeled 1101_1 (in units, for example, dBm). Accordingly, BX2 is set to be less than or equal to IX2 in the second time.

At this time, it is assumed that IX1 and IX2 are equal to each other (IX1 = IX2) and HX1 and HX2 are different from each other (HX1 ≠ HX2).

When the "communication method described with reference to FIG. 15A, FIG. 15B, and FIG. 15C" is performed in the second time of the first example of Case 1X in a situation where any of frequencies (bands) α1 and β1 is used, transmission (electric) power BX1 or BX2 is controlled such that the reception quality of data in TRP 1 labeled 1101_1 is improved. When the frequency (band) is less dependent, it is made possible to maintain good reception quality even when the maximum values of the transmission (electric) power IX1 and IX2 are made equal.

On the other hand, when the "communication method described with reference to FIG. 23A, FIG. 23B, and FIG. 23C" is performed in the first time of the first example of Case 1X, transmission (electric) power BX1 is controlled such that the reception quality of data in both TRP 2 labeled 1101_2 and NR-UE 1 labeled 1100_1 is improved in a situation where frequency (band) α1 is used (because TRP 2 labeled 1101_2 and NR-UE 1 labeled 1100_1 perform reception operation in the first time). The maximum value of the transmission (electric) power is set to HX1 based on this.

Similarly, when the "communication method described with reference to FIG. 23A, FIG. 23B, and FIG. 23C" is performed in the first time of the first example of Case 1X, transmission (electric) power BX2 is controlled such that the reception quality of data in both TRP 2 labeled 1101_2 and NR-UE 1 labeled 1100_1 is improved in a situation where frequency (band) β1 is used (because TRP 2 labeled 1101_2 and NR-UE 1 labeled 1100_1 perform reception operation in the first time). The maximum value of the transmission (electric) power is set to HX2 based on this.

At this time, since α1 and β1 are different values, the characteristics of radio waves in frequency (band) α1 (e.g., rectilinearity, diffraction, reflection, and the like) and the characteristics of radio waves in frequency (band) β1 are different from each other. The transmission (electric) power is controlled such that the reception quality of data in both TRP 2 labeled 1101_2 and NR-UE 1 labeled 1100_1 is improved; however, at this time, TRP 2 labeled 1101_2 receives the modulated signal transmitted by TRP 1 labeled 1101_1 as interference and NR-UE 1 labeled 1100_1 receives the modulated signal transmitted by itself as interference. The degree of interference depends on the characteristics of radio waves, that is, on a frequency (band). Therefore, making "the maximum value HX1 of the transmission (electric) power in the first time in the case of frequency (band) α1" and "the maximum value HX2 of the transmission (electric) power in the first time in the case of frequency (band) β1" different from each other makes it possible to bring about an effect of improving the reception quality of data in each apparatus.

Note that, when HX1 ≠ HX2 is satisfied, "IX1 and HX1 may be the same or different," and "IX2 and HX2 may be the same or different."

First Example of Case 2X:

In the first example of Case 2X, NR-UE 1 labeled 1100_1, TRP 1 labeled 1101_1, and TRP 2 labeled 1101_2 can transmit modulation signals using frequency (band) α1 (in units Hz) when the "communication method described with reference to FIG. 23A, FIG. 23B, and FIG. 23C" is performed or using frequency (band) β1 (in units Hz) or frequency (band) β2 (in units Hz) when the "communication method described with reference to FIG. 15A, FIG. 15C, and FIG. 15D" is performed. Note that β1 is assumed to be larger than β2 (β1 > β2).

When NR-UE 1 labeled 1100_1 uses frequency (band) α1, let CX1 be transmission (electric) power configured by the transmission (electric) power control.

In the first example of Case 2X, when the "communication method described with reference to FIG. 23A, FIG. 23B, and FIG. 23C" is performed in the first time in a situation where frequency (band) α1 is used, let JX1 be the maximum value of the transmission (electric) power of NR-UE 1 labeled 1100_1 (in units, for example, dBm). Accordingly, CX1 for the "communication method described with reference to FIG. 23A, FIG. 23B, and FIG. 23C" is set to be less than or equal to JX1.

When NR-UE 1 labeled 1100_1 uses frequency (band) β1, let CX51 be transmission (electric) power configured by the transmission (electric) power control.

When the "communication method described with reference to FIG. 15A, FIG. 15C, and FIG. 15D" is performed using frequency (band) β1 in the first time or the second time of the first example of Case 2X, let KX51 be the maximum value of the transmission (electric) power of NR-UE 1 labeled 1100_1 (in units, for example, dBm). Accordingly, CX51 for the "communication method described with reference to FIG. 15A, FIG. 15C, and FIG. 15D" is set to be less than or equal to KX51.

When NR-UE 1 labeled 1100_1 uses frequency (band) β2, let CX52 be transmission (electric) power configured by the transmission (electric) power control.

When the "communication method described with reference to FIG. 15A, FIG. 15C, and FIG. 15D" is performed using frequency (band) β2 in the first time or the second time of the first example of Case 2X, let KX52 be the maximum value of the transmission (electric) power of NR-UE 1 labeled 1100_1 (in units, for example, dBm). Accordingly, CX52 for the "communication method described with reference to FIG. 15A, FIG. 15C, and FIG. 15D" is set to be less than or equal to KX52.

At this time, it is assumed that KX51 and KX52 are different from each other (KX51 ≠ KX52).

When the "communication method described with reference to FIG. 23A, FIG. 23B, and FIG. 23C" is performed in the first time of the first example of Case 2X, transmission (electric) power CX51 is controlled such that the reception quality of data in both TRP 2 labeled 1101_2 and NR-UE 1 labeled 1100_1 is improved in a situation where frequency (band) β1 is used (because TRP 2 labeled 1101_2 and NR-UE 1 labeled 1100_1 perform reception operation in the first time). The maximum value of the transmission (electric) power is set to KX51 based on this.

Similarly, when the "communication method described with reference to FIG. 23A, FIG. 23B, and FIG. 23C" is performed in the first time of the first example of Case 2X, transmission (electric) power CX52 is controlled such that the reception quality of data in both TRP 2 labeled 1101_2 and NR-UE 1 labeled 1100_1 is improved in a situation where frequency (band) β2 is used (because TRP 2 labeled 1101_2 and NR-UE 1 labeled 1100_1 perform reception operation in the first time). The maximum value of the transmission (electric) power is set to KX52 based on this.

At this time, since β1 and β2 are different values, the characteristics of radio waves in frequency (band) β1 (e.g., rectilinearity, diffraction, reflection, and the like) and the characteristics of radio waves in frequency (band) β2 are different from each other. The transmission (electric) power is controlled such that the reception quality of data in both TRP 2 labeled 1101_2 and NR-UE 1 labeled 1100_1 is improved; however, at this time, TRP 2 labeled 1101_2 receives the modulated signal transmitted by TRP 1 labeled 1101_1 as interference and NR-UE 1 labeled 1100_1 receives the modulated signal transmitted by itself as interference. The degree of interference depends on the characteristics of radio waves, that is, on a frequency (band). Therefore, making "the maximum value KX51 of the transmission (electric) power in the first time in the case of frequency (band) β1" and "the maximum value KX52 of the transmission (electric) power in the first time in the case of frequency (band) β2" different from each other makes it possible to bring about an effect of improving the reception quality of data in each apparatus.

Incidentally, in a situation where α1 = β1 is satisfied, the reception quality may be improved when JX1 ≠ KX51 is satisfied. Moreover, in a situation where α1 = β2 is satisfied, the reception quality may be improved when JX1 ≠ KX52 is satisfied. This is because the "communication method described with reference to FIG. 23A, FIG. 23B, and FIG. 23C" and the "communication method described with reference to FIG. 15A, FIG. 15C, and FIG. 15D" are different from each other.

When TRP 1 labeled 1101_1 uses frequency (band) α1, let DX1 be the maximum value of the transmission (electric) power set by the transmission (electric) power control.

In the first example of Case 2X, when the "communication method described with reference to FIG. 23A, FIG. 23B, and FIG. 23C" is performed in the first time in a situation where frequency (band) α1 is used, let LX1 be the maximum value of the transmission (electric) power of TRP 1 labeled 1101_1 (in units, for example, dBm). Accordingly, DX1 for the "communication method described with reference to FIG. 23A, FIG. 23B, and FIG. 23C" is set to be less than or equal to LX1.

When TRP 1 labeled 1101_1 uses frequency (band) β1, let DX51 be transmission (electric) power configured by the transmission (electric) power control.

When the "communication method described with reference to FIG. 15A, FIG. 15C, and FIG. 15D" is performed using frequency (band) β1 in the first time or the second time of the first example of Case 2X, let MX51 be the maximum value of the transmission (electric) power of TRP 1 labeled 1101_1 (in units, for example, dBm). Accordingly, DX51 for the "communication method described with reference to FIG. 15A, FIG. 15C, and FIG. 15D" is set to be less than or equal to MX51.

When TRP 1 labeled 1101_1 uses frequency (band) β2, let DX52 be transmission (electric) power configured by the transmission (electric) power control.

When the "communication method described with reference to FIG. 15A, FIG. 15C, and FIG. 15D" is performed using frequency (band) β2 in the first time or the second time of the first example of Case 2X, let MX52 be the maximum value of the transmission (electric) power of TRP 1 labeled 1101_1 (in units, for example, dBm). Accordingly, DX52 for the "communication method described with reference to FIG. 15A, FIG. 15C, and FIG. 15D" is set to be less than or equal to MX52.

At this time, it is assumed that MX51 and MX52 are different from each other (MX51 ≠ MX52).

When the "communication method described with reference to FIG. 23A, FIG. 23B, and FIG. 23C" is performed in the first time of the first example of Case 2X, transmission (electric) power DX51 is controlled such that the reception quality of data in both TRP 2 labeled 1101_2 and NR-UE 1 labeled 1100_1 is improved in a situation where frequency (band) β1 is used (because TRP 2 labeled 1101_2 and NR-UE 1 labeled 1100_1 perform reception operation in the first time). The maximum value of the transmission (electric) power is set to MX51 based on this.

Similarly, when the "communication method described with reference to FIG. 23A, FIG. 23B, and FIG. 23C" is performed in the first time of the first example of Case 2X, transmission (electric) power DX52 is controlled such that the reception quality of data in both TRP 2 labeled 1101_2 and NR-UE 1 labeled 1100_1 is improved in a situation where frequency (band) β2 is used (because TRP 2 labeled 1101_2 and NR-UE 1 labeled 1100_1 perform reception operation in the first time). The maximum value of the transmission (electric) power is set to MX52 based on this.

At this time, since β1 and β2 are different values, the characteristics of radio waves in frequency (band) β1 (e.g.,

rectilinearity, diffraction, reflection, and the like) and the characteristics of radio waves in frequency (band) $\beta2$ are different from each other. The transmission (electric) power is controlled such that the reception quality of data in both TRP 2 labeled 1101_2 and NR-UE 1 labeled 1100_1 is improved; however, at this time, TRP 2 labeled 1101_2 receives the modulated signal transmitted by TRP 1 labeled 1101_1 as interference and NR-UE 1 labeled 1100_1 receives the modulated signal transmitted by itself as interference. The degree of interference depends on the characteristics of radio waves, that is, on a frequency (band). Therefore, making "the maximum value MX51 of the transmission (electric) power in the first time in the case of frequency (band) $\beta1$" and "the maximum value MX52 of the transmission (electric) power in the first time in the case of frequency (band) $\beta2$" different from each other makes it possible to bring about an effect of improving the reception quality of data in each apparatus.

Incidentally, in a situation where $\alpha1 = \beta1$ is satisfied, the reception quality may be improved when LX1 $\neq$ MX51 is satisfied. Moreover, in a situation where $\alpha1 = \beta2$ is satisfied, the reception quality may be improved when LX1 $\neq$ MX52 is satisfied. This is because the "communication method described with reference to FIG. 23A, FIG. 23B, and FIG. 23C" and the "communication method described with reference to FIG. 15A, FIG. 15C, and FIG. 15D" are different from each other.

Second Example of Case 2X:

In the second example of Case 2X, NR-UE 1 labeled 1100_1, TRP 1 labeled 1101_1, and TRP 2 labeled 1101_2 can transmit modulation signals using frequency (band) $\alpha1$ (in units Hz) or frequency (band) $\alpha2$ (in units Hz) when the "communication method described with reference to FIG. 23A, FIG. 23B, and FIG. 23C" is performed or using frequency (band) $\beta1$ (in units Hz) or frequency (band) $\beta2$ (in units Hz) when the "communication method described with reference to FIG. 15A, FIG. 15C, and FIG. 15D" is performed. Note that it is assumed that $\alpha1$ is larger than $\alpha2$ ($\alpha1 > \alpha2$) and $\beta1$ is larger than $\beta2$ ($\beta1 > \beta2$).

When NR-UE 1 labeled 1100_1 uses frequency (band) $\alpha1$, let CX11 be transmission (electric) power configured by the transmission (electric) power control.

In the second example of Case 2X, when the "communication method described with reference to FIG. 23A, FIG. 23B, and FIG. 23C" is performed in the first time in a situation where frequency (band) $\alpha1$ is used, let JX11 be the maximum value of the transmission (electric) power of NR-UE 1 labeled 1100_1 (in units, for example, dBm). Accordingly, CX11 for the "communication method described with reference to FIG. 23A, FIG. 23B, and FIG. 23C" is set to be less than or equal to JX11.

When NR-UE 1 labeled 1100_1 uses frequency (band) $\alpha2$, let CX12 be transmission (electric) power configured by the transmission (electric) power control.

In the second example of Case 2X, when the "communication method described with reference to FIG. 23A, FIG. 23B, and FIG. 23C" is performed in the first time in a situation where frequency (band) $\alpha2$ is used, let JX12 be the maximum value of the transmission (electric) power of NR-UE 1 labeled 1100_1 (in units, for example, dBm). Accordingly, CX12 for the "communication method described with reference to FIG. 23A, FIG. 23B, and FIG. 23C" is set to be less than or equal to JX12.

When NR-UE 1 labeled 1100_1 uses frequency (band) $\beta1$, let CX61 be transmission (electric) power configured by the transmission (electric) power control.

When the "communication method described with reference to FIG. 15A, FIG. 15C, and FIG. 15D" is performed using frequency (band) $\beta1$ in the first time or the second time of the second example of Case 2X, let KX61 be the maximum value of the transmission (electric) power of NR-UE 1 labeled 1100_1 (in units, for example, dBm). Accordingly, CX61 for the "communication method described with reference to FIG. 15A, FIG. 15C, and FIG. 15D" is set to be less than or equal to KX61.

When NR-UE 1 labeled 1100_1 uses frequency (band) $\beta2$, let CX62 be transmission (electric) power configured by the transmission (electric) power control.

When the "communication method described with reference to FIG. 15A, FIG. 15C, and FIG. 15D" is performed using frequency (band) $\beta2$ in the first time or the second time of the second example of Case 2X, let KX62 be the maximum value of the transmission (electric) power of NR-UE 1 labeled 1100_1 (in units, for example, dBm). Accordingly, CX62 for the "communication method described with reference to FIG. 15A, FIG. 15C, and FIG. 15D" is set to be less than or equal to KX62.

At this time, any of the following <X1>, <X2>, <X3>, <X4>, and <X5> may be established:

<X1> JX11 = JX12 = KX61 and KX61 $\neq$ KX62;
<X2> JX11 = JX12 = KX62 and KX 61 $\neq$ KX62;
<X3> JX11 = JX12 = $\omega$, KX 61 $\neq$ $\omega$, KX62 $\neq$ $\omega$, and KX61 $\neq$ KX62;
<X4> JX11 $\neq$ JX12 and KX61 $\neq$ KX62; and
<X5> JX11 $\neq$ JX12, KX61 $\neq$ KX62, KX61 $\neq$ JX11, KX61 $\neq$ JX12, KX62 $\neq$ JX11, and KX62 $\neq$ JX12.

As mentioned above, taking into account changes in the characteristics of radio waves in the frequency (e.g., rectilinearity, diffraction, reflection, and the like), and the difference between "Communication Method 1 described with reference to FIG. 23A, FIG. 23B, and FIG. 23C" and the "communication method described with reference to FIG. 15A, FIG. 15C, and FIG. 15D, when any of <X1>, <X2>, <X3>, <X4>, and <X5> is established, it is possible to perform the preferred transmission power control in each case, which brings about an effect of improving the reception quality of data.

When TRP 1 labeled 1101_1 uses frequency (band) $\alpha 1$, let DX11 be the maximum value of the transmission (electric) power set by the transmission (electric) power control.

In the second example of Case 2X, when the "communication method described with reference to FIG. 23A, FIG. 23B, and FIG. 23C" is performed in the first time in a situation where frequency (band) $\alpha 1$ is used, let LX11 be the maximum value of the transmission (electric) power of TRP 1 labeled 1101_1 (in units, for example, dBm). Accordingly, DX11 for the "communication method described with reference to FIG. 23A, FIG. 23B, and FIG. 23C" is set to be less than or equal to LX11.

When TRP 1 labeled 1101_1 uses frequency (band) $\alpha 2$, let DX12 be transmission (electric) power configured by the transmission (electric) power control.

In the second example of Case 2X, when the "communication method described with reference to FIG. 23A, FIG. 23B, and FIG. 23C" is performed in the first time in a situation where frequency (band) $\alpha 2$ is used, let LX12 be the maximum value of the transmission (electric) power of TRP 1 labeled 1101_1 (in units, for example, dBm). Accordingly, DX12 for the "communication method described with reference to FIG. 23A, FIG. 23B, and FIG. 23C" is set to be less than or equal to LX12.

When TRP 1 labeled 1101_1 uses frequency (band) $\beta 1$, let DX61 be transmission (electric) power configured by the transmission (electric) power control.

When the "communication method described with reference to FIG. 15A, FIG. 15C, and FIG. 15D" is performed using frequency (band) $\beta 1$ in the first time or the second time of the second example of Case 2X, let MX61 be the maximum value of the transmission (electric) power of TRP 1 labeled 1101_1 (in units, for example, dBm). Accordingly, DX61 for the "communication method described with reference to FIG. 15A, FIG. 15C, and FIG. 15D" is set to be less than or equal to MX61.

When TRP 1 labeled 1101_1 uses frequency (band) $\beta 2$, let DX62 be transmission (electric) power configured by the transmission (electric) power control.

When the "communication method described with reference to FIG. 15A, FIG. 15C, and FIG. 15D" is performed using frequency (band) $\beta 2$ in the first time or the second time of the second example of Case 2X, let MX62 be the maximum value of the transmission (electric) power of TRP 1 labeled 1101_1 (in units, for example, dBm). Accordingly, DX62 for the "communication method described with reference to FIG. 15A, FIG. 15C, and FIG. 15D" is set to be less than or equal to MX62.

At this time, any of the following <X6>, <X7>, <X8>, <X9>, and <X10> may be established:

<X6> LX11 = LX12 = MX61 and MX61 $\neq$ MX62;
<X7> LX11 = LX12 = MX62 and MX61 $\neq$ MX62;
<X8> LX11 = LX12 = $\lambda$, MX61 $\neq \lambda$, MX62 $\neq \lambda$, and MX61 $\neq$ MX62;
<X9> LX11 $\neq$ LX12 and MX61 $\neq$ MX62; and
<X10> LX11 $\neq$ LX12, MX61 $\neq$ MX62, MX61 $\neq$ LX11, MX61 $\neq$ LX12, MX62 $\neq$ LX11, and MX62 $\neq$ LX12.

As mentioned above, taking into account changes in the characteristics of radio waves in the frequency (e.g., rectilinearity, diffraction, reflection, and the like), and the difference between "Communication Method 1 described with reference to FIG. 23A, FIG. 23B, and FIG. 23C" and the "communication method described with reference to FIG. 15A, FIG. 15C, and FIG. 15D, when any of <X6>, <X7>, <X8>, <X9>, and <X10> is established, it is possible to perform the preferred transmission power control in each case, which brings about an effect of improving the reception quality of data.

Next, the "communication by TDD (TDD communication)" and the "communication by FDD (FDD communication)" will be described.

FIG. 17 illustrates an example when an NR-UE and a TRP perform TDD communication, and a horizontal axis represents time.

As illustrated in FIG. 17, the TRP transmits "first frame 1711_1 of downlink modulation signal using frequency (band) A" in the first time. At this time, the NR-UE transmits no modulation signal in the first time.

The NR-UE transmits "first frame 1701_1 of uplink modulation signal using frequency (band) A" in the second time. At this time, the TRP transmits no modulation signal in the second time.

The TRP transmits "second frame 1711_2 of downlink modulation signal using frequency (band) A" in the third time. At this time, the NR-UE transmits no modulation signal in the third time.

The NR-UE transmits "second frame 1701_2 of uplink modulation signal using frequency (band) A" in the fourth time. At this time, the TRP transmits no modulation signal in the fourth time.

FIG. 18A illustrates a first example when an NR-UE and a TRP perform FDD communication, and a horizontal axis represents time.

As illustrated in FIG. 18A, the TRP transmits "first frame 1811_1 of downlink modulation signal using frequency (band) B" in the first time. At this time, the NR-UE transmits no modulation signal in the first time.

The NR-UE transmits "first frame 1801_1 of uplink modulation signal using frequency (band) A" in the second time. At this time, the TRP transmits no modulation signal in the second time. Note that frequency (band) A and frequency (band) B are different from each other.

The TRP transmits "second frame 1811_2 of downlink modulation signal using frequency (band) B" in the third time. At this time, the NR-UE transmits no modulation signal in the third time.

The NR-UE transmits "second frame 1801_2 of uplink modulation signal using frequency (band) A" in the fourth time. At this time, the TRP transmits no modulation signal in the fourth time.

FIG. 18B illustrates a second example when an NR-UE and a TRP perform the FDD communication, which is different from that in FIG. 18A, and a horizontal axis represents time.

As illustrated in FIG. 18B, the TRP transmits "first frame 1811_1 of downlink modulation signal using frequency (band) B" in the first time. Meanwhile, the NR-UE transmits "first frame 1801_1 of uplink modulation signal using frequency (band) A" in the first time. Note that frequency (band) A and frequency (band) B are different from each other.

FIG. 18C illustrates a third example when an NR-UE and a TRP perform the FDD communication, which is different from those in FIG. 18A and FIG. 18B, and a horizontal axis represents time.

As illustrated in FIG. 18C, the TRP transmits "first frame 1811_1 of downlink modulation signal using frequency (band) B" in the first time. Meanwhile, the NR-UE transmits "first frame 1801_1 of uplink modulation signal using frequency (band) A" in part of the first time. Note that frequency (band) A and frequency (band) B are different from each other.

FIG. 18D illustrates a fourth example when an NR-UE and a TRP perform the FDD communication, which is different from those in FIG. 18A, FIG. 18B, and FIG. 18C, and a horizontal axis represents time.

As illustrated in FIG. 18D, the TRP transmits "first frame 1811_1 of downlink modulation signal using frequency (band) B" in part of the first time. Meanwhile, the NR-UE transmits "first frame 1801_1 of uplink modulation signal using frequency (band) A" in the first time. Note that frequency (band) A and frequency (band) B are different from each other.

Incidentally, when an NR-UE and a TRP perform the FDD communication, a "frame of uplink modulation signal using frequency (band) A" transmitted by the NR-UE and a "frame of downlink modulation signal using frequency (band) B" transmitted by the TRP may or may not overlap in a time axis.

FIG. 18A, FIG. 18B, FIG. 18C, and FIG. 18D are described as examples in which the "frame of uplink modulation signal using frequency (band) A" transmitted by the NR-UE and the "frame of downlink modulation signal using frequency (band) B" transmitted by the TRP overlap in the time axis, but how they overlap is not limited to these examples. Any overlapping manner is possible as long as there is a time when all or part of the "frame of uplink modulation signal using frequency (band) A" transmitted by the NR-UE and all or part of the "frame of downlink modulation signal using frequency (band) B" transmitted by the TRP overlap.

In the above, the maximum value of the transmission power when a TRP performs transmission power control and the maximum value of the transmission power when an NR-UE performs transmission power control have been described. In the following, a description will be given of an exemplary procedure of the transmission power control performed by the TRP and NR-UE.

As illustrated with reference to FIG. 23A and the like, a description will be given of a transmission power control method when NR-UE 1 labeled 1100_1, TRP 1 labeled 1101_1, and TRP 2 labeled 1101_2 perform communication by TDD or FDD.

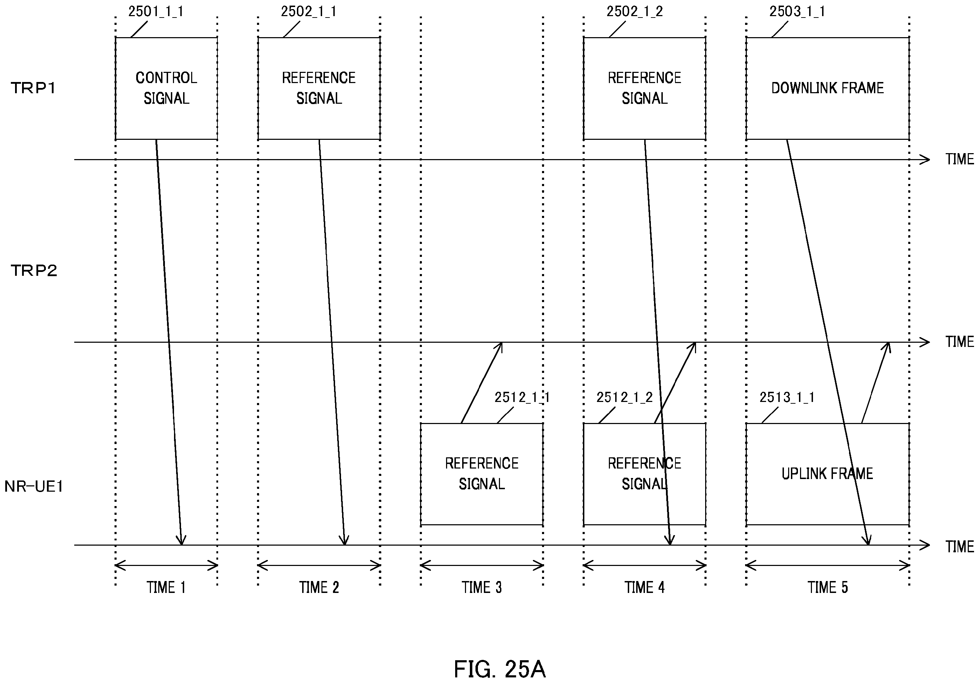

FIG. 25A illustrates an example of exchange between "NR-UE 1 labeled 1100_1, TRP 1 labeled 1101_1, and TRP 2 labeled 1101_2" for performing open loop transmission power control in NR-UE 1 labeled 1100_1 when NR-UE 1 labeled 1100_1, TRP 1 labeled 1101_1, and TRP 2 labeled 1101_2 perform communication based on FIG. 23A and the like. Note that, in FIG. 25A, a horizontal axis represents time.

As illustrated in FIG. 25A, TRP 1 labeled 1101_1 transmits control signal 2501_1_1 in time 1. In addition, TRP 1 labeled 1101_1 transmits reference signal 2502_1_1 in time 2.

At this time, control signal 2501_1 includes for example, a parameter for transmission power to be indicated to a terminal (NR-UE 1 labeled 1100_1) with a relatively long cycle, and NR-UE 1 labeled 1100_1 control signal 2501_1 and thus obtains this parameter for the transmission power.

Further, NR-UE 1 labeled 1100_1 receives reference signal 2502_1_1 transmitted by TRP 1 labeled 1101_1 and thus measures a communication status (e.g., estimates path loss, reception field strength, and SINR, and the like).

NR-UE 1 labeled 1100_1 then transmits reference signal 2512_1_1 in time 3, receives a signal transmitted by itself, and estimates, for example, self-interference as a communication status.

In time 4, TRP 1 labeled 1101_1 transmits reference signal 2502_1_2, and NR-UE 1 labeled 1100_1 transmits reference signal 2512_1_2. NR-UE 1 labeled 1100_1 then receives reference signal 2502_1_2 and reference signal 2512_1_2 and thus measures a communication status (e.g., SINR).

NR-UE 1 labeled 1100_1 then determines transmission (electric) power for transmitting a modulation signal, based on, for example, the parameter for the transmission power included in control signal 2501_1_1 and the communication statuses measured in time 2, time 3, and time 4. In time 5, NR-UE 1 labeled 1100_1 transmits uplink frame 2513_1_1 to TRP 2 labeled 1101_2 with the determined transmission (electric) power.

Note that, as illustrated in FIG. 25A, TRP 1 labeled 1101_1 transmits downlink frame 2503_1_1 to NR-UE 1 labeled 1100_1 in time 5. Incidentally, the downlink frame may be present other than in time 5, and the uplink frame may be present other than in time 5 as well.

In FIG. 25A, there are a "section in which NR-UE 1 labeled 1100_1 transmits reference signals (time 3)," a "section in which TRP 1 labeled 1101_1 transmits reference signals (time 2)," and a "section in which both NR-UE 1 labeled 1100_1 and TRP 1 labeled 1101_1 transmit reference signals (time 4)."

A "reference signal transmitted by TRP 1 labeled 1101_1" in time 2 enables NR-UE 1 labeled 1100_1 to estimate (received) signal power. At this time, it is advantageous in that NR-UE 1 labeled 1100_1 can estimate the (received) signal power while ensuring a dynamic range of an ADC of a receiver. When NR-UE 1 labeled 1100_1 estimates the (received) signal power in time 4, it may be difficult to ensure the estimation accuracy of the (received) signal power due to the large power of the received signal transmitted by itself.

Further, a "reference signal transmitted by NR-UE 1 labeled 1100_1" in time 3 enables NR-UE 1 labeled 1100_1 to estimate self-interference. At this time, it is advantageous in that NR-UE 1 labeled 1100_1 can estimate the self-interference while ensuring the dynamic range of the ADC of the receiver. Meanwhile, the "reference signal transmitted by NR-UE 1 labeled 1100_1" enables TRP 1 labeled 1101_1 to estimate (received) signal power with good accuracy.

A "reference signal transmitted by TRP 1 labeled 1101_1 and a reference signal transmitted by NR-UE 1 labeled 1100_1" in time 4 have an advantage in that a communication status (e.g., SINR) close to a status when "both a downlink frame and an uplink frame are present (e.g., time 5)" can be estimated. In addition, presence of the "reference signal transmitted by TRP 1 labeled 1101_1 and reference signal transmitted by NR-UE 1 labeled 1100_1 (time 4)" before the "both the downlink frame and the uplink frame are present (e.g., time 5)" enables TRP 1 labeled 1101_1 and NR-UE 1 labeled 1100_1 to perform, with good accuracy, the AGC for a "status in which both the downlink frame and the uplink frame are present," which brings about an effect of improving the reception quality of data.

Note that, in order that the "reference signal transmitted by TRP 1 labeled 1101_1 and reference signal transmitted by NR-UE 1 labeled 1100_1 (time 4)" are present before the "both the downlink frame and the uplink frame are present (e.g., time 5)," there is a high possibility that the "section in which both NR-UE 1 labeled 1100_1 and TRP 1 labeled 1101_1 transmit reference signals (time 4)" is present later in time than the "section in which NR-UE 1 labeled 1100_1 transmits reference signals (time 3)" and the "section in which TRP 1 labeled 1101_1 transmits reference signals (time 2)."

The presence order of the "section in which NR-UE 1 labeled 1100_1 transmits reference signals (time 3)," the "section in which TRP 1 labeled 1101_1 transmits reference signals (time 2)," the "section in which both NR-UE 1 labeled 1100_1 and TRP 1 labeled 1101_1 transmit reference signals (time 4)," and a "section in which TRP 1 labeled 1101_1 transmits reference signals (time 2)," the "section in which both a downlink frame transmitted by TRP 1 labeled 1101_1 and an uplink frame transmitted by NR-UE 1 labeled 1100_1 are present (time 5)" is not limited to the example of FIG. 25A, and the same implementation is possible with any order.

As described above, NR-UE 1 labeled 1100_1 is enabled to perform the preferred transmission power control, by the following: "presence of the "section in which NR-UE 1 labeled 1100_1 transmits reference signals (time 3)," the "section in which TRP 1 labeled 1101_1 transmits reference signals (time 2)," and the "section in which both NR-UE 1 labeled 1100_1 and TRP 1 labeled 1101_1 transmit reference signals (time 4)""; or "presence of the "section in which NR-UE 1 labeled 1100_1 transmits reference signals (time 3)" and the "section in which both NR-UE 1 labeled 1100_1 and TRP 1 labeled 1101_1 transmit reference signals (time 4)""; or "presence of the "section in which TRP 1 labeled 1101_1 transmits reference signals (time 2)" and the "section in which both NR-UE 1 labeled 1100_1 and TRP 1 labeled 1101_1 transmit reference signals (time 4)."" This brings about an effect of improving the reception quality of data.

In FIG. 25A, the term "reference signal" is used to name a signal, but the naming is not limited to this, and any name may be used as long as the signal has a role of estimating a communication status. For example, the signal may be referred to as a path loss reference signal.

Further, in FIG. 25A, reference signals 2502_1_1 and 2502_1_2 are reference signals for the self-interference estimation (self-interference reference signals) for TRP 1 labeled 1101_1, and reference signals 2512_1_1 and 2512_1_2 are reference signals for the self-interference estimation (self-interference reference signals) for NR-UE 1 labeled 1100_1.

Then, data may be transmitted together with the reference signal.

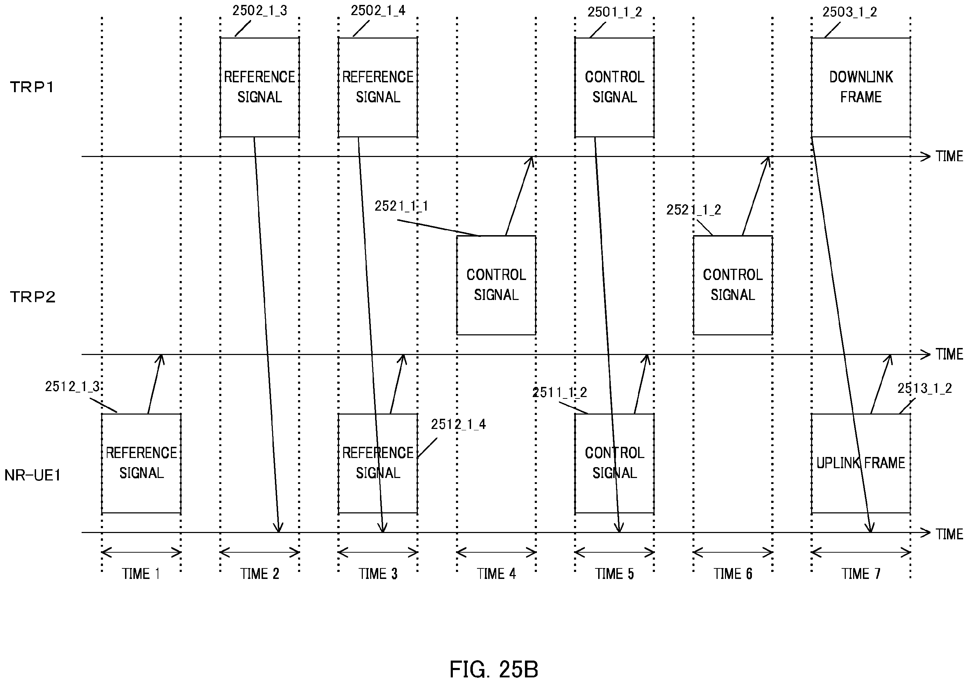

FIG. 25B illustrates an example of exchange between "NR-UE 1 labeled 1100_1, TRP 1 labeled 1101_1, and TRP 2 labeled 1101_2" for performing open loop transmission power control in TRP 1 labeled 1101_1 when NR-UE 1 labeled 1100_1, TRP 1 labeled 1101_1, and TRP 2 labeled 1101_2 perform communication based on FIG. 23A and the like. Note that, in FIG. 25B, a horizontal axis represents time.

As illustrated in FIG. 25B, NR-UE 1 labeled 1100_1 transmits reference signal 2512_1_3 to TRP 2 labeled 1101_2 in time 1. TRP 2 labeled 1101_2 measures a communication status (e.g., estimates path loss, reception field strength, SINR, signal state, signal strength, and the like) using the received "reference signal 2512_1_3."

Meanwhile, TRP 1 labeled 1101_1 transmits reference signal 2502_1_3 to NR-UE 1 labeled 1100_1 in time 2. TRP 2 labeled 1101_2 measures a communication status (e.g., estimates path loss, reception field strength, SINR, signal state, signal strength, and the like) using the received "reference signal 2502_1_3."

NR-UE 1 labeled 1100_1 transmits reference signal 2512_1_4 to TRP 2 labeled 1101_2 in time 3. Meanwhile, TRP 1 labeled 1101_1 transmits reference signal 2502_1_4 to NR-UE 1 labeled 1100_1 in time 3.

TRP 2 labeled 1101_2 then estimates a communication status such as SINR using the received "reference signal 2512_1_4 and reference signal 2502_1_4." This allows TRP 2 labeled 1101_2 to obtain an effect of being capable of SINR estimation taking into account the signal transmitted by NR-UE 1 labeled 1100_1 and the signal transmitted by TRP 1 labeled 1101_1.

TRP 2 labeled 1101_2 generates, based on an estimation result of the communication status such as path loss, reception field strength, SINR, signal state, signal strength, and the like, information on a value to set transmission (electric) power of a signal to be transmitted by TRP 1 labeled 1101_1. TRP 2 labeled 1101_2 then transmits, to TRP 1 labeled 1101_1, control signal 2521_1_1 that includes the information on the value to set the transmission (electric) power of a signal to be transmitted by TRP 1 labeled 1101_1, in time 4. Note that the communication between TRP 1 labeled 1101_1 and TRP 2 labeled 1101_2 may be radio communication or wired communication. Further, TRP 1 labeled 1101_1 and TRP 2 labeled 1101_2 may be one system.

TRP 1 labeled 1101_1 determines the transmission (electric) power of a modulation signal to be transmitted, based on the information, which is obtained from TRP 2 labeled 1101_2, on the value to set the transmission (electric) power of a signal to be transmitted by TRP 1 labeled 1101_1. TRP 1 labeled 1101_1 then transmits, to NR-UE 1 labeled 1100_1, downlink frame 2503_1_2 having the determined transmission (electric) power, in time 7.

Note that, as illustrated in FIG. 25B, NR-UE 1 labeled 1100_1 transmits uplink frame 2513_1_2 to TRP 2 labeled 1101_2 in time 7. Incidentally, the downlink frame may be present other than in time 7, and the uplink frame may be present other than in time 7 as well.

In FIG. 25B, there are a "section in which NR-UE 1 labeled 1100_1 transmits reference signals (time 1)," a "section in which TRP 1 labeled 1101_1 transmits reference signals (time 2)," and a "section in which both NR-UE 1 labeled 1100_1 and TRP 1 labeled 1101_1 transmit reference signals (time 3)."

A "reference signal transmitted by NR-UE 1 labeled 1100_1" in time 1 enables TRP 2 labeled 1101_2 to estimate (received) signal power. At this time, it is advantageous in that TRP 2 labeled 1101_2 can estimate the (received) signal power while ensuring a dynamic range of an ADC of a receiver. When TRP 2 labeled 1101_2 estimates the (received) signal power in time 4, it may be difficult to ensure the estimation accuracy of the (received) signal power due to the large power of the received signal transmitted by TRP 1 labeled 1101_1.

Further, a "reference signal transmitted by TRP 1 labeled 1101_1" in time 2 enables TRP 2 labeled 1101_2 to estimate interference from TRP 1 labeled 1101_1. At this time, it is advantageous in that TRP 2 labeled 1101_2 can estimate the interference from TRP 1 labeled 1101_1while ensuring the dynamic range of the ADC of the receiver. Meanwhile, the "reference signal transmitted by TRP 1 labeled 1101_1" enables NR-UE 1 labeled 1100_1 to estimate (received) signal power with good accuracy.

A "reference signal transmitted by TRP 1 labeled 1101_1 and a reference signal transmitted by NR-UE 1 labeled 1100_1" in time 3 have an advantage in that a communication status (e.g., SINR) close to a status when "both a downlink frame and an uplink frame are present (e.g., time 7)" can be estimated.

In addition, presence of the "reference signal transmitted by TRP 1 labeled 1101_1 and reference signal transmitted by NR-UE 1 labeled 1100_1 (time 3)" before the "both the downlink frame and the uplink frame are present (e.g., time 7)" enables TRP 1 labeled 1101_1 and NR-UE 1 labeled 1100_1 to perform, with good accuracy, the AGC for a "status in which both the downlink frame and the uplink frame are present," which brings about an effect of improving the reception quality of data.

Note that, in order that the "reference signal transmitted by TRP 1 labeled 1101_1 and reference signal transmitted by NR-UE 1 labeled 1100_1 (time 3)" are present before the "both the downlink frame and the uplink frame are present (e.g., time 7)," there is a high possibility that the "section in which both NR-UE 1 labeled 1100_1 and TRP 1 labeled 1101_1 transmit reference signals (time 3)" is present later in time than the "section in which NR-UE 1 labeled 1100_1 transmits reference signals (time 1)" and the "section in which TRP 1 labeled 1101_1 transmits reference signals (time 2)."

The presence order of the "section in which NR-UE 1 labeled 1100_1 transmits reference signals (time 1)," the "section in which TRP 1 labeled 1101_1 transmits reference signals (time 2)," the "section in which both NR-UE 1 labeled 1100_1 and TRP 1 labeled 1101_1 transmit reference signals (time 3)," and a "section in which TRP 1 labeled 1101_1 transmits reference signals (time 2)," the "section in which both a downlink frame transmitted by TRP 1 labeled 1101_1 and an uplink frame transmitted by NR-UE 1 labeled 1100_1 are present (time 7)" is not limited to the example of FIG. 25B, and the same implementation is possible with any order.

As described above, TRP 1 labeled 1101_1 is enabled to perform the preferred transmission power control, by the following: "presence of the "section in which NR-UE 1 labeled 1100_1 transmits reference signals (time 1)," the "section in which TRP 1 labeled 1101_1 transmits reference signals (time 2)," and the "section in which both NR-UE 1 labeled 1100_1 and TRP 1 labeled 1101_1 transmit reference signals (time 3)""; or "presence of the "section in which NR-UE 1 labeled 1100_1 transmits reference signals (time 1)" and the "section in which both NR-UE 1 labeled 1100_1 and TRP 1 labeled 1101_1 transmit reference signals (time 3)""; or "presence of the "section in which TRP 1 labeled 1101_1 transmits reference signals (time 2)" and the "section in which both NR-UE 1 labeled 1100_1 and TRP 1 labeled 1101_1 transmit reference signals (time 3).""" This brings about an effect of improving the reception quality of data.

In FIG. 25B, the term "reference signal" is used to name a signal, but the naming is not limited to this, and any name may be used as long as the signal has a role of estimating a communication status. For example, the signal may be referred to as a path loss reference signal.

Further, in FIG. 25B, reference signals 2502_1_3 and 2502_1_4 are reference signals for estimating interference between TRPs (or base stations, gNBs, and the like) for TRP 2 labeled 1101_2, and reference signals 2512_1_3 and 2512_1_4 are reference signals for the self-interference estimation (self-interference reference signals) for NR-UE 1 labeled 1100_1.

Then, data may be transmitted together with the reference signal.

FIG. 25B illustrates an example of exchange between "NR-UE 1 labeled 1100_1, TRP 1 labeled 1101_1, and TRP 2 labeled 1101_2" for performing closed loop transmission power control in NR-UE 1 labeled 1100_1 when NR-UE 1 labeled 1100_1, TRP 1 labeled 1101_1, and TRP 2 labeled 1101_2 perform communication based on FIG. 23A. Note that, in FIG. 25B, a horizontal axis represents time.

As illustrated in FIG. 25B, NR-UE 1 labeled 1100_1 transmits reference signal 2512_1_3 to TRP 2 labeled 1101_2 in time 1. TRP 2 labeled 1101_2 measures a communication status (e.g., estimates path loss, reception field strength, SINR, signal state, signal strength, and the like) using the received "reference signal 2512_1_3."

Meanwhile, TRP 1 labeled 1101_1 transmits reference signal 2502_1_3 to NR-UE 1 labeled 1100_1 in time 2. TRP 2 labeled 1101_2 measures a communication status (e.g., estimates path loss, reception field strength, SINR, signal state, signal strength, and the like) using the received "reference signal 2502_1_3."

NR-UE 1 labeled 1100_1 transmits reference signal 2512_1_4 to TRP 2 labeled 1101_2 in time 3. Meanwhile, TRP 1 labeled 1101_1 transmits reference signal 2502_1_4 to NR-UE 1 labeled 1100_1 in time 3.

TRP 2 labeled 1101_2 then estimates a communication status such as SINR using the received "reference signals 2512_1_4 and 2502_1_4." This allows TRP 2 labeled 1101_2 to obtain an effect of being capable of SINR estimation taking into account the signal transmitted by NR-UE 1 labeled 1100_1 and the signal transmitted by TRP 1 labeled 1101_1.

TRP 2 labeled 1101_2 generates, based on an estimation result of the communication status such as SINR, information (e.g., TPC command) on a value to set transmission (electric) power of a signal to be transmitted by NR-UE 1 labeled 1100_1. TRP 2 labeled 1101_2 then transmits, to TRP 1 labeled 1101_1, control signal 2521_1_1 that includes the information on the value to set the transmission (electric) power of a signal to be transmitted by NR-UE 1 labeled 1100_1, in time 4. Note that, the communication between TRP 1 labeled 1101_1 and TRP 2 labeled 1101_2 may be radio communication or wired communication. Further, TRP 1 labeled 1101_1 and TRP 2 labeled 1101_2 may be one system.

TRP 1 labeled 1101_1 receives control signal 2521_1_1 transmitted by TRP 2 labeled 1101_2 and thus obtains the information on the value to set the transmission (electric) power of a signal to be transmitted by NR-UE 1 labeled 1100_1. TRP 1 labeled 1101_1 then transmits, to NR-UE 1 labeled 1100_1, control signal 2501_1_2 having the determined transmission (electric) power, in time 5.

Incidentally, as illustrated in FIG. 25B, NR-UE 1 labeled 1100_1 may transmit control signal 2511_1_2 to TRP 2 labeled 1101_2, or need not transmit a control signal, in time 5. Further, in FIG. 25B, control signal 2501_1_2 and control signal 2511_1_2 overlap in time, but control signal 2501_1_2 and control signal 2511_1_2 may be transmitted in different times.

NR-UE 1 labeled 1100_1 determines the transmission (electric) power for transmitting a modulation signal, based on the information on the value to set the transmission (electric) power included in control signal 2501_1_2. In time 7, NR-UE 1 labeled 1100_1 transmits uplink frame 2513_1_2 to TRP 2 labeled 1101_2 with the determined transmission (electric) power.

Note that, as illustrated in FIG. 25B, TRP 1 labeled 1101_1 transmits downlink frame 2503_1_2 to NR-UE 1 labeled 1100_1 in time 7. Incidentally, the downlink frame may be present other than in time 7, and the uplink frame may be present other than in time 7 as well.

In FIG. 25B, there are a "section in which NR-UE 1 labeled 1100_1 transmits reference signals (time 1)," a "section in which TRP 1 labeled 1101_1 transmits reference signals (time 2)," and a "section in which both NR-UE 1 labeled 1100_1 and TRP 1 labeled 1101_1 transmit reference signals (time 3)."

A "reference signal transmitted by NR-UE 1 labeled 1100_1" in time 1 enables TRP 2 labeled 1101_2 to estimate (received) signal power. At this time, it is advantageous in that TRP 2 labeled 1101_2 can estimate the (received) signal power while ensuring a dynamic range of an ADC of a receiver. When TRP 2 labeled 1101_2 estimates the (received) signal power in time 4, it may be difficult to ensure the estimation accuracy of the (received) signal power due to the large power of the received signal transmitted by TRP 1 labeled 1101_1.

Further, a "reference signal transmitted by TRP 1 labeled 1101_1" in time 2 enables TRP 2 labeled 1101_2 to estimate interference from TRP 1 labeled 1101_1. At this time, it is advantageous in that TRP 2 labeled 1101_2 can estimate the interference from TRP 1 labeled 1101_1while ensuring the dynamic range of the ADC of the receiver. Meanwhile, the "reference signal transmitted by TRP 1 labeled 1101_1" enables NR-UE 1 labeled 1100_1 to estimate (received) signal power with good accuracy.

A "reference signal transmitted by TRP 1 labeled 1101_1 and a reference signal transmitted by NR-UE 1 labeled 1100_1" in time 3 have an advantage in that a communication status (e.g., SINR) close to a status when "both a downlink frame and an uplink frame are present (e.g., time 7)" can be estimated.

In addition, presence of the "reference signal transmitted by TRP 1 labeled 1101_1 and reference signal transmitted by NR-UE 1 labeled 1100_1 (time 3)" before the "both the downlink frame and the uplink frame are present (e.g., time 7)" enables TRP 1 labeled 1101_1 and NR-UE 1 labeled 1100_1 to perform, with good accuracy, the AGC for a "status in which both the downlink frame and the uplink frame are present," which brings about an effect of improving the reception quality of data.

Note that, in order that the "reference signal transmitted by TRP 1 labeled 1101_1 and reference signal transmitted by NR-UE 1 labeled 1100_1 (time 3)" are present before the "both the downlink frame and the uplink frame are present (e.g., time 5)," there is a high possibility that the "section in which both NR-UE 1 labeled 1100_1 and TRP 1 labeled 1101_1 transmit reference signals (time 3)" is present later in time than the "section in which NR-UE 1 labeled 1100_1 transmits reference signals (time 1)" and the "section in which TRP 1 labeled 1101_1 transmits reference signals (time 2)."

The presence order of the "section in which NR-UE 1 labeled 1100_1 transmits reference signals (time 1)," the "section in which TRP 1 labeled 1101_1 transmits reference signals (time 2)," the "section in which both NR-UE 1 labeled 1100_1 and TRP 1 labeled 1101_1 transmit reference signals (time 3)," and a "section in which TRP 1 labeled 1101_1 transmits reference signals (time 2)," the "section in which both a downlink frame transmitted by TRP 1 labeled 1101_1 and an uplink frame transmitted by NR-UE 1 labeled 1100_1 are present (time 7)" is not limited to the example of FIG. 25B, and the same implementation is possible with any order.

As described above, NR-UE 1 labeled 1100_1 is enabled to perform the preferred transmission power control, by the following: "presence of the "section in which NR-UE 1 labeled 1100_1 transmits reference signals (time 1)," the "section in which TRP 1 labeled 1101_1 transmits reference signals (time 2)," and the "section in which both NR-UE 1 labeled 1100_1 and TRP 1 labeled 1101_1 transmit reference signals (time 3)""; or "presence of the "section in which NR-UE 1 labeled 1100_1 transmits reference signals (time 1)" and the "section in which both NR-UE 1 labeled 1100_1 and TRP 1 labeled 1101_1 transmit reference signals (time 3)""; or "presence of the "section in which TRP 1 labeled 1101_1 transmits reference signals (time 2)" and the "section in which both NR-UE 1 labeled 1100_1 and TRP 1 labeled 1101_1 transmit reference signals (time 3)."" This brings about an effect of improving the reception quality of data.

In FIG. 25B, the term "reference signal" is used to name a signal, but the naming is not limited to this, and any name may be used as long as the signal has a role of estimating a communication status. For example, the signal may be referred to as a path loss reference signal.

Further, in FIG. 25B, reference signals 2502_1_3 and 2502_1_4 are reference signals for estimating interference between TRPs (or base stations, gNBs, and the like) for TRP 2 labeled 1101_2, and reference signals 2512_1_3 and 2512_1_4 are reference signals for the self-interference estimation (self-interference reference signals) for NR-UE 1 labeled 1100_1.

Then, data may be transmitted together with the reference signal.

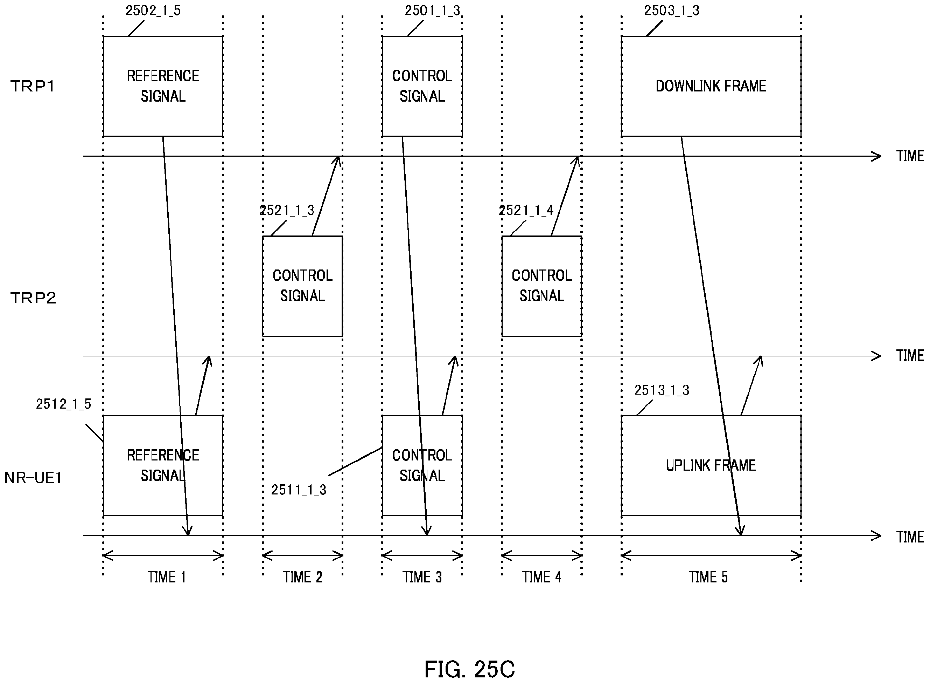

FIG. 25C illustrates an example of exchange between "NR-UE 1 labeled 1100_1, TRP 1 labeled 1101_1, and TRP 2 labeled 1101_2" for performing closed loop transmission power control in NR-UE 1 labeled 1100_1 when NR-UE 1 labeled 1100_1, TRP 1 labeled 1101_1, and TRP 2 labeled 1101_2 perform communication based on FIG. 23A and the like. Note that, in FIG. 25C, a horizontal axis represents time.

As illustrated in FIG. 25C, NR-UE 1 labeled 1100_1 transmits reference signal 2512_1_5 to TRP 2 labeled 1101_2 in time 1. Meanwhile, TRP 1 labeled 1101_1 transmits reference signal 2502_1_5 to NR-UE 1 labeled 1100_1 in time 1

TRP 2 labeled 1101_2 then estimates a communication status such as SINR using the received "reference signal 2512_1_5 and reference signal 2502_1_5." This allows TRP 2 labeled 1101_2 to obtain an effect of being capable of estimating SINR, path loss, reception field strength, and the like taking into account the signal transmitted by NR-UE 1 labeled 1100_1 and the signal transmitted by TRP 1 labeled 1101_1.

TRP 2 labeled 1101_2 generates, based on an estimation result of the communication status such as SINR, path loss, and signal strength, information (e.g., TPC command) on a value to set transmission (electric) power of a signal to be transmitted by NR-UE 1 labeled 1100_1. TRP 2 labeled 1101_2 then transmits, to TRP 1 labeled 1101_1, control signal 2521_1_3 that includes the information on the value to set the transmission (electric) power of a signal to be transmitted by NR-UE 1 labeled 1100_1, in time 2. Note that, the communication between TRP 1 labeled 1101_1 and TRP 2 labeled 1101_2 may be radio communication or wired communication. Further, TRP 1 labeled 1101_1 and TRP 2 labeled 1101_2 may be one system.

TRP 1 labeled 1101_1 receives control signal 2521_1_3 transmitted by TRP 2 labeled 1101_2 and thus obtains the information on the value to set the transmission (electric) power of a signal to be transmitted by NR-UE 1 labeled 1100_1. TRP 1 labeled 1101_1 then transmits, to NR-UE 1 labeled 1100_1, control signal 2501_1_3 having the determined transmission (electric) power, in time 3. At this time, as illustrated in FIG. 25C, NR-UE 1 labeled 1100_1 may transmit control signal 2511_1_3 to TRP 2 labeled 1101_2 in time 3. Note that "control signal 2501_1_3 transmitted by TRP 1 labeled 1101_1" and "control signal 2511_1_3 transmitted by NR-UE 1 labeled 1100_1" may be present in different times.

NR-UE 1 labeled 1100_1 determines the transmission (electric) power for transmitting a modulation signal, based on the information on the value to set the transmission (electric) power included in control signal 2501_1_3. In time 5, NR-UE 1 labeled 1100_1 transmits uplink frame 2513_1_3 to TRP 2 labeled 1101_2 with the determined transmission (electric) power.

Note that, as illustrated in FIG. 25C, TRP 1 labeled 1101_1 transmits downlink frame 2503_1_3 to NR-UE 1 labeled 1100_1 in time 5. Incidentally, the downlink frame may be present other than in time 5, and the uplink frame may be present other than in time 5 as well.

Performing the transmission power control as described above brings about an effect of improving the reception quality of data.

In the present embodiment, the examples of FIG. 25B and FIG. 25C have been described as exemplary exchange between "NR-UE 1 labeled 1100_1, TRP 1 labeled 1101_1, TRP 2 labeled 1101_2" for performing the closed loop transmission power control in NR-UE 1 labeled 1100_1, but the exchange between "NR-UE 1 labeled 1100_1, TRP 1 labeled 1101_1, TRP 2 labeled 1101_2" may be performed in a manner other than these examples.

At this time, TRP 1 labeled 1101_1 generates, based on the communication status of the modulation signal transmitted by NR-UE 1 labeled 1100_1, information for controlling transmission (electric) power of a signal to be transmitted by NR-UE 1 labeled 1100_1. TRP 1 labeled 1101_1 then transmits, to NR-UE 1 labeled 1100_1, control signal 2501_1_3 that includes the information for controlling the transmission (electric) power, and NR-UE 1 labeled 1100_1 obtains this information, determines the transmission (electric) power for transmitting a modulation signal, and thus transmits the modulation signal with the determined transmission (electric) power.

FIG. 25B illustrates an example of exchange between "NR-UE 1 labeled 1100_1, TRP 1 labeled 1101_1, and TRP 2 labeled 1101_2" for performing closed loop transmission power control in TRP 1 labeled 1101_1 when NR-UE 1 labeled 1100_1, TRP 1 labeled 1101_1, and TRP 2 labeled 1101_2 perform communication based on FIG. 23A. Note that, in FIG. 25B, a horizontal axis represents time.

As illustrated in FIG. 25B, NR-UE 1 labeled 1100_1 transmits reference signal 2512_1_3 to TRP 2 labeled 1101_2 in time 1. NR-UE 1 labeled 1100_1 receives the signal transmitted by itself and estimates, for example, self-interference as a communication status.

TRP 1 labeled 1101_1 then transmits reference signal 2502_1_3 to NR-UE 1 labeled 1100_1 in time 2. NR-UE 1 labeled 1100_1 receives reference signal 2502_1_3 and thus measures a communication status (e.g., estimates path loss, reception field strength, SINR, signal state, signal strength, and the like).

In time 3, NR-UE 1 labeled 1100_1 transmits reference signal 2512_1_4 to TRP 2 labeled 1101_2. Meanwhile, in time 3, TRP 1 labeled 1101_1 transmits reference signal 2502_1_4 to NR-UE 1 labeled 1100_1. NR-UE 1 labeled 1100_1 then receives reference signal 2502_1_4 and reference signal 2512_1_4 and thus measures a communication status (e.g., SINR).

NR-UE 1 labeled 1100_1 generates, based on an estimation result of the communication status such as SINR, information for controlling transmission (electric) power of a signal to be transmitted by TRP 1 labeled 1101_1 (e.g., estimation information on communication status such as SINR). NR-UE 1 labeled 1100_1 then transmits, to TRP 2 labeled 1101_2, control signal 2511_1_2 that includes the information for controlling the transmission (electric) power, in time 5. Note that, as illustrated in FIG. 25B, TRP 1 labeled 1101_1 may transmit control signal 2501_1_2 to NR-UE 1 labeled 1100_1, in time 5. Further, in FIG. 25B, control signal 2501_1_2 and control signal 2511_1_2 are present in time 5, but control signal 2501_1_2 and control signal 2511_1_2 may be present in different times.

TRP 2 labeled 1101_2 determines the transmission (electric) power for transmitting a modulation signal to be transmitted by TRP 1 labeled 1101_1, based on the information on the value to set the transmission (electric) power included in control signal 2511_1_2. TRP 2 labeled 1101_2 then transmits, to TRP 1 labeled 1101_1, control signal 2521_1_2 that includes the information for controlling the transmission (electric) power.

Incidentally, as another method, TRP 2 labeled 1101_2 may transmit, to TRP 1 labeled 1101_1, the information on the transmission (electric) power control with control signal 2511_1_2, and TRP 1 labeled 1101_1 may determine, based on the information on the transmission (electric) power, the transmission (electric) power for a modulation signal to be transmitted.

Note that the communication between TRP 1 labeled 1101_1 and TRP 2 labeled 1101_2 may be radio communication or wired communication. Further, TRP 1 labeled 1101_1 and TRP 2 labeled 1101_2 may be one system.

In time 7, TRP 1 labeled 1101_1 transmits downlink frame 2503_1_2 to NR-UE 1 labeled 1100_1 with the determined transmission (electric) power.

Note that, as illustrated in FIG. 25B, NR-UE 1 labeled 1100_1 transmits uplink frame 2513_1_2 to TRP 2 labeled 1101_2 in time 7. Incidentally, the downlink frame may be present other than in time 7, and the uplink frame may be present other than in time 7 as well.

In FIG. 25B, there are a "section in which NR-UE 1 labeled 1100_1 transmits reference signals (time 1)," a "section in which TRP 1 labeled 1101_1 transmits reference signals (time 2)," and a "section in which both NR-UE 1 labeled 1100_1 and TRP 1 labeled 1101_1 transmit reference signals (time 3)."

Further, a "reference signal transmitted by NR-UE 1 labeled 1100_1" in time 1 enables NR-UE 1 labeled 1100_1 to estimate self-interference. At this time, it is advantageous in that NR-UE 1 labeled 1100_1 can estimate the self-interference while ensuring a dynamic range of an ADC of a receiver. Meanwhile, the "reference signal transmitted by NR-UE 1 labeled 1100_1" enables TRP 2 labeled 1101_2 to estimate the (received) signal power with good accuracy.

A "reference signal transmitted by TRP 1 labeled 1101_1" in time 2 enables NR-UE 1 labeled 1100_1 to estimate (received) signal power. At this time, it is advantageous in that NR-UE 1 labeled 1100_1 can estimate the (received) signal power while ensuring a dynamic range of an ADC of a receiver. When NR-UE 1 labeled 1100_1 estimates the (received) signal power in time 3, it may be difficult to ensure the estimation accuracy of the (received) signal power due to the large power of the received signal transmitted by itself.

A "reference signal transmitted by TRP 1 labeled 1101_1 and a reference signal transmitted by NR-UE 1 labeled 1100_1" in time 3 have an advantage in that a communication status (e.g., SINR) close to a status when "both a downlink frame and an uplink frame are present (e.g., time 7)" can be estimated. In addition, presence of the "reference signal transmitted by TRP 1 labeled 1101_1 and reference signal transmitted by NR-UE 1 labeled 1100_1 (time 3)" before the "both the downlink frame and the uplink frame are present (e.g., time 7)" enables TRP 1 labeled 1101_1 and NR-UE 1 labeled 1100_1 to perform, with good accuracy, the AGC for a "status in which both the downlink frame and the uplink frame are present," which brings about an effect of improving the reception quality of data.

Note that, in order that the "reference signal transmitted by TRP 1 labeled 1101_1 and reference signal transmitted by NR-UE 1 labeled 1100_1 (time 3)" are present before the "both the downlink frame and the uplink frame are present (e.g., time 7)," there is a high possibility that the "section in which both NR-UE 1 labeled 1100_1 and TRP 1 labeled 1101_1 transmit reference signals (time 3)" is present later in time than the "section in which NR-UE 1 labeled 1100_1 transmits reference signals (time 1)" and the "section in which TRP 1 labeled 1101_1 transmits reference signals (time 2)."

The presence order of the "section in which NR-UE 1 labeled 1100_1 transmits reference signals (time 1)," the "section in which TRP 1 labeled 1101_1 transmits reference signals (time 2)," the "section in which both NR-UE 1 labeled 1100_1 and TRP 1 labeled 1101_1 transmit reference signals (time 3)," and a "section in which TRP 1 labeled 1101_1 transmits reference signals (time 2)," the "section in which both a downlink frame transmitted by TRP 1 labeled 1101_1 and an uplink frame transmitted by NR-UE 1 labeled 1100_1 are present (time 7)" is not limited to the example of FIG. 25B, and the same implementation is possible with any order.

As described above, TRP 1 labeled 1101_1 is enabled to perform the preferred transmission power control, by the following: "presence of the "section in which NR-UE 1 labeled 1100_1 transmits reference signals (time 1)," the "section in which TRP 1 labeled 1101_1 transmits reference signals (time 2)," and the "section in which both NR-UE 1 labeled 1100_1 and TRP 1 labeled 1101_1 transmit reference signals (time 3)""; or "presence of the "section in which NR-UE 1 labeled 1100_1 transmits reference signals (time 1)" and the "section in which both NR-UE 1 labeled 1100_1 and TRP 1 labeled 1101_1 transmit reference signals (time 3)""; or "presence of the "section in which TRP 1 labeled 1101_1 transmits reference signals (time 2)" and the "section in which both NR-UE 1 labeled 1100_1 and TRP 1 labeled 1101_1 transmit reference signals (time 3)."" This brings about an effect of improving the reception quality of data.

In FIG. 25B, the term "reference signal" is used to name a signal, but the naming is not limited to this, and any name may be used as long as the signal has a role of estimating a communication status. For example, the signal may be referred to as a path loss reference signal.

Further, in FIG. 25B, reference signals 2502_1_3 and 2502_1_4 are reference signals for estimating interference between TRPs (or base stations, gNBs, and the like) for TRP 2 labeled 1101_2, and reference signals 2512_1_3 and 2512_1_4 are reference signals for the self-interference estimation (self-interference reference signals) for NR-UE 1 labeled 1100_1.

Then, data may be transmitted together with the reference signal.

In the above, the closed loop transmission power control of an NR-UE in a cellular system in the case of TDD or FDD has been described with reference to FIG. 20B. In the following, a complementary description of this case will be given.

Transmission power such as a signal transmitted by an NR-UE in uplink (e.g., PUSCH, PUCCH, SRS, and the like) is controlled by a combination of the open loop transmission power by a parameter (such as P0 and $\alpha$) indicated by a TRP with a relatively long cycle and a path loss (PL) measured by the NR-UE, and the closed loop transmission power by a TPC command indicated by the TRP with a relatively short cycle based on a communication status (e.g., received SINR of TRP) between the TRP and the NR-UE.

For example, the transmission power of PUSCH in the case of TDD or FDD is given by Equation 1 that has already been described.

At this time, $P_{PUSCH}(i)$ indicates the transmission power of PUSCH, $P_{CMAX}$ indicates the maximum transmission power, $M_{PUSCH}(i)$ indicates a transmission bandwidth, $P_{0\_PUSCH}(j)$ indicates a parameter related to a target reception power, $\alpha(j)$ indicates weight coefficient of a fractional TPC, PL indicates a path loss measurement value, $\Delta_{TF}(i)$ indicates an offset dependent on MCS, and f(i) indicates a correction value by the TPC command.

On the other hand, the closed loop transmission power control of the NR-UE has been described as above, using FIG. 25B and FIG. 25C as examples. At this time, the transmission power of PUSCH may be given by the following Equation:

$$P_{PUSCH}(i) = min\{P_{CMAX\_B}, 10log_{10}(M_{PUSCH}(i)) + P_{0\_PUSCH\_B}(j) + \alpha_{\_B}(j) \cdot PL + \Delta_{TF\_B}(i) + f_{\_B}(i)\} \qquad \text{(Equation 3)}.$$

At this time, $P_{CMAX\_B}$ indicates the maximum transmission power when taking FIG. 25B and FIG. 25C as examples, $P_{0\_PUSCH\_B}(j)$ indicates a parameter related to a target reception power when taking FIG. 25B and FIG. 25C as examples, $\alpha_{\_B}(j)$ indicates weight coefficient of a fractional TPC when taking FIG. 25B and FIG. 25C as examples, $\Delta_{TF\_B}(i)$ indicates an offset dependent on MCS when taking FIG. 25B and FIG. 25C as examples, and $f_{\_B}(i)$ indicates a correction value by the TPC command when taking FIG. 25B and FIG. 25C as examples. Additionally, the preferred transmission power control when taking FIG. 25B and FIG. 25C as examples can be performed when one or more of the following <X11>, <X12>, <X13>, <X14>, and <X15>:

    <X11> $P_{CMAX}$ and $P_{CMAX\_B}$ are different values;
    <X12> $P_{0\_PUSCH}(j)$ and $P_{0\_PUSCH\_B}(j)$ are different (defined) functions (represented by different equations);
    <X13> $\alpha(j)$ and $\alpha_{\_B}(j)$ are different (defined) functions (represented by different equations);
    <X14> $\Delta_{TF}(i)$ and $\Delta_{TF\_B}(i)$ are different (defined) functions (represented by different equations); and
    <X15> f(i) and $f_{\_B}(i)$ are different (defined) functions (represented by different equations).

Incidentally, when the closed loop transmission power control of the NR-UE is performed using FIG. 25B and FIG. 25C as examples, transmission power may be given by an equation other than Equation 3.

For the TRP, reference signals 2502_1_1 and 2502_1_2 of FIG. 25A, reference signals 2502_1_3 and 2502_1_4 of FIG. 25B, and reference signal 2502_1_5 of FIG. 25C are signals for estimating interference given by the signal transmitted by the TRP, but, for the NR-UE, which is a communication counterpart, they are signals for estimating the communication status such as a path loss, a reception field strength, and a signal power.

For the NR-UE, reference signals 2512_1_1 and 2512_1_2 of FIG. 25A, reference signals 2512_1_3 and 2512_1_4 of FIG. 25B, and reference signal 2512_1_5 of FIG. 25C are signals for estimating the self-interference, but, for the TRP, which is a communication counterpart, they are signals for estimating the communication status such as a path loss, a reception field strength, and a signal power.

Incidentally, as described with reference to FIG. 23A and the like, FIG. 25A, FIG. 25B, and FIG. 25C have been each described as the exchange between "NR-UE 1 labeled 1100_1, TRP 1 labeled 1101_1, and TRP 2 labeled 1101_2" in a time axis at the time of the transmission power control when NR-UE 1 labeled 1100_1, TRP 1 labeled 1101_1, and TRP 2 labeled 1101_2 perform communication, but the transmission power control may be performed with at least one of the methods in FIG. 25A, FIG. 25B, and FIG. 25C, as the exchange between "NR-UE 1 labeled 1100_1, TRP 1 labeled 1101_1, and TRP 2 labeled 1101_2" in a time axis at the time of the transmission power control. Alternatively, any of the methods in FIG. 25A, FIG. 25B, and FIG. 25C may be selected depending on time in order to perform the transmission power control, as the exchange between "NR-UE 1 labeled 1100_1, TRP 1 labeled 1101_1, and TRP 2 labeled 1101_2" in a time axis at the time of the transmission power control. This brings about the effects as already mentioned in the same way.

In FIG. 20A, FIG. 20B, FIG. 21, FIG. 25A, FIG. 25B, and FIG. 25C, "a signal transmitted by an NR-UE, e.g., an uplink frame, a reference signal, and a control signal" may be included in any of UL-SCH, PUCCH, PUSCH, PRACH, and the like. In FIG. 20A, FIG. 20B, FIG. 21, FIG. 25A, FIG. 25B, and FIG. 25C, "a signal transmitted by a TRP, e.g., a downlink frame, a reference signal, and a control signal" may be included in PCH, BCH, DL-SCH, BCCH, PCCH, CCCH, a common search space, PBCH, SS, PDCCH, PDSCH, and the like, without limitation to this.

Complementary descriptions will be given of the present embodiments and FDD in the present specification. For example, with reference to a plurality of drawings, when a communication apparatus performs the FDD communication using first frequency (or, e.g., second frequency) (band), the following some cases are possible.

First Case:

A communication apparatus uses the first frequency (or, e.g., second frequency (band)) when transmitting a modulation signal.

Second Case:

A communication counterpart of the communication apparatus uses the first frequency (or, e.g., second frequency) (band) to transmit a modulation signal, and the communication apparatus receives this modulation signal.

Third Case:

First frequency (or, e.g., second frequency) (band) is divided into frequency A and frequency B. A communication apparatus uses frequency A when transmitting a modulation signal. Meanwhile, a communication counterpart of the communication apparatus uses frequency B when transmitting a modulation signal.

The three cases have been each described above, but an example in which "a communication apparatus performs the FDD communication using the first frequency (or, e.g., second frequency) (band)" is not limited to these cases as long as the communication apparatus performs transmission or reception using the first frequency (or, e.g., second frequency) (band) or part of the first frequency (or, e.g., second frequency) (band). The aforementioned points are the same in the present specification.

In the present embodiment, a description has been given with reference to a TRP, but the same implementation is possible even when the TRP is replaced with any of "a base station, a repeater, an access point, a broadcast station, a gNodeB (gNB), an eNodeB (eNB), a node, a server, a satellite, a movable apparatus (e.g., electricity-based movable apparatus such as "electric vehicle, motor bike (e-bike), electric-powered vehicle, movable robot, electric-powered scooter, electric-assisted bicycle, and electric-assisted scooter," automobile, motorcycle, bicycle, vessel, aircraft, airplane), a terminal, a mobile phone, a smart phone, a tablet, a laptop, a personal computer, a home appliance (household electric appliance), an apparatus in a factory, communication equipment or broadcast equipment such as "Internet of Things (IoT) equipment, and the like." Accordingly, the TRP in the present embodiment may be referred to as "a base station, a repeater, an access point, a broadcast station, a gNB, an eNB, a node, a server, a satellite, a movable apparatus described above, a terminal, a mobile phone, a smart phone, a tablet, a laptop, a personal computer, a home appliance, an apparatus in a factory, communication equipment or broadcast equipment such as IoT equipment, and the like." The aforementioned points are the same in the present specification.

Further, in the present embodiment, a description has been given with reference to an NR-UE, but the same implementation is possible even when the NR-UE is replaced with any of "a TRP, a base station, a repeater, an access point, a broadcast station, a gNB, an eNB, a node, a server, a satellite, a movable apparatus described above, a terminal, a mobile phone, a smart phone, a tablet, a laptop, a personal computer, a home appliance, an apparatus in a factory, communication equipment or broadcast equipment such as IoT equipment, and the like." Accordingly, the NR-UE in the present embodiment may be referred to as "a TRP, a base station, a repeater, an access point, a broadcast station, a gNB, an eNB, a node, a server, a satellite, a movable apparatus described above, a terminal, a mobile phone, a smart phone, a tablet, a laptop, a personal computer, a home appliance, an apparatus in a factory, communication equipment or broadcast equipment such as IoT equipment, and the like." The aforementioned points are the same in the present specification.

FIG. 1A, FIG. 1B, FIG. 1C, FIG. 9, and FIG. 10 have been each described as, for example, an exemplary configuration of an apparatus such as a TRP or an NR-UE in the present embodiment, but configuration of the apparatus is not limited to these examples. An apparatus having a configuration to perform transmit beamforming and receive beamforming has been described, but the present embodiment can be implemented even by an apparatus configured not to have the configuration to perform the transmit beamforming and the receive beamforming. The aforementioned points are the same in the present specification.

In some cases, it is possible for an apparatus to obtain an effect of self-interference cancellation by performing the transmit beamforming and the receive beamforming. Additionally, without performing the beamforming, the self-interference cancellation may be achieved using a method of being provided with a function of performing the self-interference cancellation.

Further, for example, when an apparatus such as a TRP or an NR-UE transmits a modulation signal, one or more, or two or more modulation signals may be transmitted using one or more, or two or more transmission antennas. The aforementioned points are the same in the present specification.

In FIG. 23A, the number of TRPs present in a radio system is two, but the implementation is possible with at least one TRP, or two or more TRPs.

Further, in FIG. 23A, the number of NR-UEs present in a radio system is one, but the implementation is possible with at least one NR-UE, or two or more NR-UEs.

In the present embodiment, a case has been described where a plurality of TRPs is present in a radio system. At this time, the plurality of TRPs may communicate with each other to share information or to control each other. Further, an apparatus that controls the plurality of TRPs may be present in the system. The aforementioned points are the same in the present specification.

(Embodiment 3)

In Embodiment 1 and Embodiment 2, examples have been described in which a TRP and an NR-UE perform communication and the TRP and the NR-UE transmit modulation signals simultaneously using the same frequency or partly the same frequency. In relation to the above, the present embodiment will describe a method of improving the reception quality of data.

For example, in FIG. 11A, using FIG. 11B, FIG. 12A, and the like, it has been described that there is time in which TRP 1 labeled 1101_1 and NR-UE 1 labeled 1100_1 simultaneously transmit modulation signals using the same frequency or partly the same frequency.

In this case, NR-UE 1 labeled 1100_1 simultaneously receives the modulation signal transmitted by TRP 1 labeled 1101_1 and the modulation signal transmitted by itself. For NR-UE 1 labeled 1100_1, the modulation signal transmitted by itself particularly becomes an interference component, but at this time, when adjacent-channel leakage power of the modulation signal transmitted by NR-UE 1 labeled 1100_1 is large, NR-UE 1 labeled 1100_1 will have a problem of the deteriorated reception quality of data.

Similarly, TRP 1 labeled 1101_1 simultaneously receives the modulation signal transmitted by NR-UE 1 labeled 1100_1 and the modulation signal transmitted by itself. For TRP 1 labeled 1101_1, the modulation signal transmitted by itself particularly becomes an interference component, but at this time, when adjacent-channel leakage power of the modulation signal transmitted by TRP 1 labeled 1101_1 is large, TRP 1 labeled 1101_1 will have a problem of the deteriorated reception quality of data.

Further, in FIG. 23A, using FIG. 23B, FIG. 23C, and the like, it has been described that there is time in which TRP 1 labeled 1101_1 and NR-UE 1 labeled 1100_1 simultaneously transmit modulation signals using the same frequency or partly the same frequency.

In this case, NR-UE 1 labeled 1100_1 simultaneously receives the modulation signal transmitted by TRP 1 labeled 1101_1 and the modulation signal transmitted by itself. For NR-UE 1 labeled 1100_1, the modulation signal transmitted by itself particularly becomes an interference component, but at this time, when adjacent-channel leakage power of the modulation signal transmitted by NR-UE 1 labeled 1100_1 is large, NR-UE 1 labeled 1100_1 will have a problem of the deteriorated reception quality of data.

TRP 2 labeled 1101_2 simultaneously receives the modulation signal transmitted by NR-UE 1 labeled 1100_1 and the modulation signal transmitted by TRP 1 labeled 1101_1. For TRP 2 labeled 1101_2, the modulation signal transmitted by TRP 1 labeled 1101_1 particularly becomes an interference component, but at this time, when adjacent-channel leakage power of the modulation signal transmitted by TRP 1 labeled 1101_1 is large, TRP 2 labeled 1101_2 will have a problem of the deteriorated reception quality of data.

As described with reference to FIG. 15A and the like, also in a situation where TRP 1 labeled 1101_1 and NR-UE 1 labeled 1100_1 perform communication by FDD or TDD, when adjacent-channel leakage power of the modulation signal transmitted by each of apparatuses of TRP 1 labeled 1101_1 and NR-UE 1 labeled 1100_1 is large, a problem of the deteriorated reception quality of data arises.

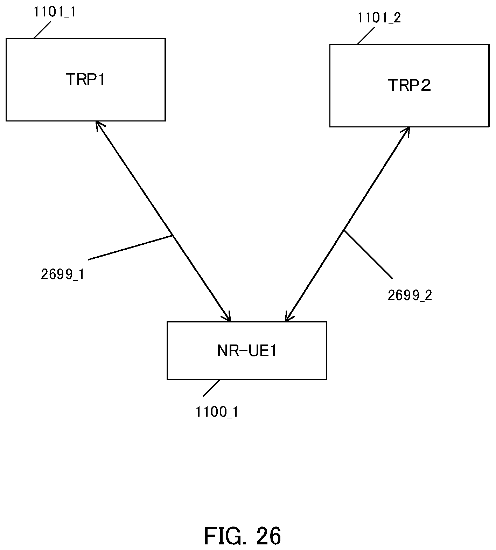

Further, let us discuss a case where communication is performed as in FIG. 26. In FIG. 26, NR-UE 1 labeled 1100_1 communicates with TRP 1 labeled 1101_1 and also with TRP 2 labeled 1101_2.

NR-UE 1 labeled 1100_1 may use the same frequency to transmit a modulation signal addressed to TRP 1 labeled 1101_1 and a modulation signal addressed to TRP 2 labeled 1101_2 simultaneously (Spatial Division Multiplexing (SDM)).

NR-UE 1 labeled 1100_1 may use the same frequency to transmit a modulation signal addressed to TRP 1 labeled 1101_1 and a modulation signal addressed to TRP 2 labeled 1101_2.

NR-UE 1 labeled 1100_1 may use a plurality of frequencies to transmit a modulation signal addressed to TRP 1 labeled 1101_1 and a modulation signal addressed to TRP 2 labeled 1101_2.

Meanwhile, TRP 1 labeled 1101_1 and TRP 2 labeled 1101_2 may use the same frequency and each may transmit a modulation signal addressed to NR-UE 1 labeled 1100_1 simultaneously (Spatial Division Multiplexing (SDM)).

TRP 1 labeled 1101_1 and TRP 2 labeled 1101_2 may use the same frequency and each may transmit a modulation signal addressed to NR-UE 1 labeled 1100_1.

TRP 1 labeled 1101_1 and TRP 2 labeled 1101_2 may use different frequencies and each may transmit a modulation signal addressed to NR-UE 1 labeled 1100_1.

Here, the number of TRP is set to two, but the same implementation is possible as long as the number is two or more.

In either case, when adjacent-channel leakage power of the modulation signal transmitted by each of the apparatuses of TRP 1 labeled 1101_1, TRP 2 labeled 1101_2, and NR-UE 1 labeled 1100_1 is large, a problem of the deteriorated reception quality of data arises.

In relation to the above, the present embodiment will describe a method of transmitting a modulation signal with the reduced adjacent-channel leakage power.

FIG. 27A1 illustrates exemplary frequencies used by modulation signals transmitted by apparatuses of "TRP 1 labeled 1101_1, TRP 2 labeled 1101_2, and NR-UE 1 labeled 1100_1" in the present embodiment. In FIG. 27A1, a horizontal axis represents frequency. Since the configurations of the apparatuses of "TRP 1 labeled 1101_1, TRP 2 labeled 1101_2, and NR-UE 1 labeled 1100_1" have been described in Embodiment 1, the descriptions thereof will be omitted.

As illustrated in FIG. 27A1, the modulation signals transmitted by the apparatuses of "TRP 1 labeled 1101_1, TRP 2 labeled 1101_2, and NR-UE 1 labeled 1100_1" use first frequency block 2701_1 and second frequency block 2701_2. Note that first frequency block 2701_1 and second frequency block 2701_2 are contiguous in the frequency axis.

FIG. 27A2 illustrates other exemplary frequencies used by modulation signals transmitted by apparatuses of "TRP 1 labeled 1101_1, TRP 2 labeled 1101_2, and NR-UE 1 labeled 1100_1" in the present embodiment, which are different from those in FIG. 27A1. In FIG. 27A2, a horizontal axis represents frequency. In FIG. 27A2, the components that operate in the same manner as in FIG. 27A1 are denoted by the same reference numerals, and some descriptions thereof will be omitted. Further, since the configurations of the apparatuses of "TRP 1 labeled 1101_1, TRP 2 labeled 1101_2, and NR-UE 1 labeled 1100_1" have been described in Embodiment 1, the descriptions thereof will be omitted.

As illustrated in FIG. 27A2, the modulation signals transmitted by the apparatuses of "TRP 1 labeled 1101_1, TRP 2 labeled 1101_2, and NR-UE 1 labeled 1100_1" use first frequency block 2701_1 and second frequency block 2701_2. Incidentally, first frequency block 2701_1 and second frequency block 2701_2 are spaced apart with a certain gap in the frequency axis.

FIG. 28A1 illustrates exemplary spectra of a case where the modulation signals transmitted by the apparatuses of "TRP 1 labeled 1101_1, TRP 2 labeled 1101_2, and NR-UE 1 labeled 1100_1" use the frequencies as illustrated in FIG. 27A1. Therefore, as illustrated in (a) of FIG. 28A1, the modulation signals transmitted by the apparatuses of "TRP 1 labeled 1101_1, TRP 2 labeled 1101_2, and NR-UE 1 labeled 1100_1" are composed of first frequency block 2701_1 and second frequency block 2701_2. In (a) of FIG. 28A1, a horizontal axis represents frequency.

FIG. 28A1 illustrates in (b) a spectrum of first frequency block 2701_1 in (a) of FIG. 28A1, where a horizontal axis represents frequency and a vertical axis represents power. As illustrated in (b) of FIG. 28A1, first-frequency-block spectrum 2810 is present on the frequency where first frequency block 2701_1 is present. To the left of first-frequency-block spectrum 2810, spectrum 2811_1 of adjacent-channel leakage power for the first frequency block (referred to as first-frequency-block adjacent-channel leakage power spectrum 2811_1; the same applies hereinafter) is present, and to the left of first-frequency-block adjacent-channel leakage power spectrum 2811_1, spectrum 2812_1 of next-adjacent-channel leakage power for first-frequency-block (referred to as first-frequency-block next-adjacent-channel leakage power spectrum 2812_1; the same applies hereinafter) is present. Furthermore, to the right of first-frequency-block spectrum 2810, first-frequency-block adjacent-channel leakage power spectrum 2811_2 is present, and to the right of first-frequency-block adjacent-channel leakage power spectrum 2811_2, first-frequency-block next-adjacent-channel leakage power spectrum 2812_2 is present.

FIG. 28A1 illustrates in (c) a spectrum of second frequency block 2701_2 in (a) of FIG. 28A1, where a horizontal axis represents frequency and a vertical axis represents power. As illustrated in (c) of FIG. 28A1, second-frequency-block spectrum 2820 is present on the frequency where second frequency block 2701_2 is present. To the left of second-frequency-block spectrum 2820, second-frequency-block adjacent-channel leakage power spectrum 2821_1 is present, and to the left of second-frequency-block adjacent-channel leakage power spectrum 2821_1, second-frequency-block next-adjacent-channel leakage power spectrum 2822_1 is present. Furthermore, to the right of second-frequency-block spectrum 2820, second-frequency-block adjacent-channel leakage power spectrum 2821_2 is present, and to the right of second-frequency-block adjacent-channel leakage power spectrum 2821_2, second-frequency-block next-adjacent-channel leakage power spectrum 2822_2 is present.

Incidentally, the leakage power in (b) of FIG. 28A1 and (c) of FIG. 28A1 is generated by distortion characteristic of a transmission power amplifier included in the apparatus (e.g., characteristics such as third-order distortion and fifth-order distortion).

At this time, the leakage power in frequency domain 2801 in FIG. 28A1 relates to first-frequency-block adjacent-channel leakage power spectrum 2811_1 and second-frequency-block next-adjacent-channel leakage power spectrum 2822_1. Moreover, the leakage power in frequency domain 2802 in FIG. 28A1 relates to first-frequency-block next-adjacent-channel leakage power spectrum 2812_2 and second frequency block adjacent-channel leakage power spectrum 2821_2.

FIG. 28A2 illustrates exemplary spectra of a case where the modulation signals transmitted by the apparatuses of "TRP 1 labeled 1101_1, TRP 2 labeled 1101_2, and NR-UE 1 labeled 1100_1" use the frequencies as illustrated in FIG. 27A2. Note that, in FIG. 28A2, the components that operate in the same manner as the components in FIG. 28A1 are denoted by the same reference numerals, and some descriptions thereof will be omitted.

As illustrated in (a) of FIG. 28A2, the modulation signals transmitted by the apparatuses of "TRP 1 labeled 1101_1, TRP 2 labeled 1101_2, and NR-UE 1 labeled 1100_1" are each composed of first frequency block 2701_1 and second frequency block 2701_2. In (a) of FIG. 28A2, a horizontal axis represents frequency.

FIG. 28A2 illustrates in (b) a spectrum of first frequency block 2701_1 in (a) of FIG. 28A2, where a horizontal axis represents frequency and a vertical axis represents power. As illustrated in (b) of FIG. 28A2, first-frequency-block spectrum 2810 is present on the frequency where first frequency block 2701_1 is present. To the left of first-frequency-block spectrum 2810, first-frequency-block adjacent-channel leakage power spectrum 2811_1 is present, and to the left of first-frequency-block adjacent-channel leakage power spectrum 2811_1, first-frequency-block next-adjacent-channel leakage power spectrum 2812_1 is present. Furthermore, to the right of first-frequency-block spectrum 2810, first-frequency-block adjacent-channel leakage power spectrum 2811_2 is present, and to the right of first-frequency-block adjacent-channel leakage power spectrum 2811_2, first-frequency-block next-adjacent-channel leakage power spectrum 2812_2 is present.

FIG. 28A2 illustrates in (c) a spectrum of second frequency block 2701_2 in (a) of FIG. 28A2, where a horizontal axis represents frequency and a vertical axis represents power. As illustrated in (c) of FIG. 28A2, second-frequency-block spectrum 2820 is present on the frequency where second frequency block 2701_2 is present. To the left of second-frequency-block spectrum 2820, second-frequency-block adjacent-channel leakage power spectrum 2821_1 is present, and to the left of second-frequency-block adjacent-channel leakage power spectrum 2821_1, second-frequency-block next-adjacent-channel leakage power spectrum 2822_1 is present. Furthermore, to the right of second-frequency-block spectrum 2820, second-frequency-block adjacent-channel leakage power spectrum 2821_2 is present, and to the right of second-frequency-block adjacent-channel leakage power spectrum 2821_2, second-frequency-block next-adjacent-channel leakage power spectrum 2822_2 is present.

Incidentally, the leakage power in (b) of FIG. 28A2 and (c) of FIG. 28A2 is generated by distortion characteristic of a transmission power amplifier included in the apparatus (e.g., characteristics such as third-order distortion and fifth-order distortion).

At this time, the leakage power in frequency domain 2801 in FIG. 28A2 relates to first-frequency-block adjacent-channel leakage power spectrum 2811_1 and second-frequency-block next-adjacent-channel leakage power spectrum 2822_1. Moreover, the leakage power in frequency domain 2802 in FIG. 28A2 relates to first-frequency-block next-adjacent-channel leakage power spectrum 2812_2 and second frequency block adjacent-channel leakage power spectrum 2821_2.

FIG. 29A1 illustrates an example of signal-point arrangement in In-phase Quadrature (Phase) (I-Q) (or Real part-Imaginary Part) of Binary Phase Shift Keying (BPSK). In FIG. 29A1, a horizontal axis represents I (or Real part), a vertical axis represents Q (or Imaginary part).

A first example of the signal point arrangement of the BPSK includes a method of arranging signal points as in 82951_1 of FIG. 29A1. At this time, suppose the coordinates of signal points are (I, Q), (I, Q) become (A, 0) and (-A, 0). Note that A is a real number greater than zero.

A second example of the signal point arrangement of the BPSK includes a method of arranging signal points as in O2951_2 of FIG. 29A1. At this time, suppose the coordinates of signal points are (I, Q), (I, Q) become (0, A) and (0, -A). Note that A is a real number greater than zero.

FIG. 29A2 illustrates another example of signal-point arrangement in In-phase Quadrature (Phase) (I-Q) (or Real part-Imaginary Part) of the BPSK. In FIG. 29A2, a horizontal axis represents I (or Real part), a vertical axis represents Q (or Imaginary part).

A third example of the signal point arrangement of the BPSK includes a method of arranging signal points as in •2951_3 of FIG. 29A2. At this time, suppose the coordinates of signal points are (I, Q), (I, Q) become (B, B) and (-B, -B). Note that B is a real number greater than zero.

A fourth example of the signal point arrangement of the BPSK includes a method of arranging signal points as in O2951_4 of FIG. 29A2. At this time, suppose the coordinates of signal points are (I, Q), (I, Q) become (B, -B) and (-B, B). Note that B is a real number greater than zero.

FIG. 29B illustrates an example of signal-point arrangement in In-phase Quadrature (Phase) (I-Q) (or Real part-Imaginary Part) of Quadrature Phase Shift Keying (QPSK). In FIG. 29B, a horizontal axis represents I (or Real part), a vertical axis represents Q (or Imaginary part).

A first example of the signal point arrangement of the QPSK includes a method of arranging signal points as in •2961_1 of FIG. 29B. At this time, suppose the coordinates of signal points are (I, Q), (I, Q) become (C, C), (C, -C), (-C, C), and (-C, -C). Note that C is a real number greater than zero.

A second example of the signal point arrangement of the QPSK includes a method of arranging signal points as in O2961_2 of FIG. 29B. At this time, suppose the coordinates of signal points are (I, Q), (I, Q) become (0, D), (0, -D), (D, 0), and (-D, 0). Note that D is a real number greater than zero.

FIG. 29C1 illustrates an example of signal-point arrangement in In-phase Quadrature (Phase) (I-Q) (or Real part-Imaginary Part) of 16 Quadrature Amplitude Modulation (16QAM). In FIG. 29C1, a horizontal axis represents I (or Real part), a vertical axis represents Q (or Imaginary part).

As first example of the signal point arrangement of the 16QAM includes a method of arranging signal points as in • (there are 16 signal points) of FIG. 29C1. At this time, suppose the coordinates of signal points are (I, Q), (I, Q) become (3×E, E), (3×E, 3×E), (3×E, -E), (3×E, -3×E), (E, E), (E, 3×E), (E, -E), (E, -3×E), (-E, E), (-E, 3×E), (-E, -E), (-E, -3×E), (-3×E, E), (-3×E, 3×E), (-3×E, -E), and (-3×E, -3×E). Note that E is a real number greater than zero.

FIG. 29C2 illustrates another example of signal-point arrangement in In-phase Quadrature (Phase) (I-Q) (or Real part-Imaginary Part) of the 16QAM. In FIG. 29C2, a horizontal axis represents I (or Real part), a vertical axis represents Q (or Imaginary part).

A second example of the signal point arrangement of the 16QAM includes a method of arranging signal points as in O (there are 16 signal points) of FIG. 29C2. At this time, suppose the coordinates of signal points are (I, Q), (I, Q) are expressed by the following Equation:

$$(I, Q)^T = \begin{pmatrix} \cos\frac{\pi}{4} & -\sin\frac{\pi}{4} \\ \sin\frac{\pi}{4} & \cos\frac{\pi}{4} \end{pmatrix} (x, y)^T \qquad \text{... (Equation 4).}$$

Where $(I, Q)^T$ indicate transposed vectors of (I, Q), $(x, y)^T$ indicate transposed vectors of (x, y). Further, (x, y) become (3×F, F), (3×F, 3×F), (3×F, -F), (3×F, -3×F), (F, F), (F, 3×F), (F, -F), (F, -3×F), (-F, F), (-F, 3×F), (-F, -F) (-F, -3×F), (-3×F, F), (-3×F, 3×F), (-3×F, -F), and (-3×F, -3×F). Note that F is a real number greater than zero.

Next, a description will be given of an example when using the BPSK as a transmission method with the reduced leakage power for modulation signals transmitted by a TRP and an NR-UE.

A case will be described where the TRP and the NR-UE use frequencies as in (a) of FIG. 28A1.

As described with reference to (a), (b), and (c) of FIG. 28A1, the leakage power in frequency domain 2801 relates to first-frequency-block adjacent-channel leakage power spectrum 2811_1 and second-frequency-block next-adjacent-channel leakage power spectrum 2822_1. At this time, for example, in first frequency block 2701_1 in (a) of FIG. 28A1, signals for the BPSK are arranged as in signal points 2951_1 in FIG. 29A1, and in second frequency block 2701_2 in (a) of FIG. 28A1, signals for the BPSK are arranged as in signal points 2951_1 in FIG. 29A1.

At this time, with respect to the leakage power in frequency domain 2801, first-frequency-block adjacent-channel leakage power spectrum 2811_1 and second-frequency-block next-adjacent-channel leakage power spectrum 2822_1 are in-phase added on a complex plane, so that a power spectrum is likely to increase.

On the other hand, for example, in first frequency block 2701_1 in (a) of FIG. 28A1, signals for the BPSK are arranged as in signal points 2951_1 in FIG. 29A1, and in second frequency block 2701_2 in (a) of FIG. 28A1, signals for the BPSK are arranged as in signal points 2951_2 in FIG. 29A1.

At this time, with respect to the leakage power in frequency domain 2801, first-frequency-block adjacent-channel leakage power spectrum 2811_1 and second-frequency-block next-adjacent-channel leakage power spectrum 2822_1 are less likely to be in-phase added on a complex plane, which brings about an effect that a power spectrum is highly likely to be smaller.

As another example, in first frequency block 2701_1 in (a) of FIG. 28A1, signals for the BPSK are arranged as in signal points 2951_2 in FIG. 29A1, and in second frequency block 2701_2 in (a) of FIG. 28A1, signals for the BPSK are arranged as in signal points 2951_1 in FIG. 29A1, for example.

At this time, with respect to the leakage power in frequency domain 2801, first-frequency-block adjacent-channel leakage power spectrum 2811_1 and second-frequency-block next-adjacent-channel leakage power spectrum 2822_1 are less likely to be in-phase added on a complex plane, which brings about an effect that a power spectrum is highly likely to be smaller.

As still another example, in first frequency block 2701_1 in (a) of FIG. 28A1, arranged signals of FIG. 29A2 as signal point 2951_3 of FIG BPSK, and in second frequency block 2701_2 in (a) of FIG. 28A1, arranged signals of BPSK as in signal point 2951_4 in FIG. 29A2, for example.

At this time, with respect to the leakage power in frequency domain 2801, first-frequency-block adjacent-channel leakage power spectrum 2811_1 and second-frequency-block next-adjacent-channel leakage power spectrum 2822_1 are less likely to be in-phase added on a complex plane, which brings about an effect that a power spectrum is highly likely to be smaller.

As yet another example, in first frequency block 2701_1 in (a) of FIG. 28A1, arranged signals of FIG. 29A2 as signal point 2951_4 of FIG BPSK, and in second frequency block 2701_2 in (a) of FIG. 28A1, arranged signals of BPSK as in signal point 2951_3 in FIG. 29A2, for example.

At this time, with respect to the leakage power in frequency domain 2801, first-frequency-block adjacent-channel leakage power spectrum 2811_1 and second-frequency-block next-adjacent-channel leakage power spectrum 2822_1 are less likely to be in-phase added on a complex plane, which brings about an effect that a power spectrum is highly likely to be smaller.

Although the above is exemplary, it can be considered as follows.

In first frequency block 2701_1 in (a) of FIG. 28A1, signals for the BPSK are arranged as in signal points 2951_X in FIG. 29A1 or FIG. 29A2, and in second frequency block 2701_2 in (a) of FIG. 28A1, signals for the BPSK are arranged as in signal points 2951_Y in FIG. 29A1 or FIG. 29A2. Where X is any of 1, 2, 3, and 4, and Y is any of 1, 2, 3, and 4, satisfying X ≠ Y.

At this time, with respect to the leakage power in frequency domain 2801, first-frequency-block adjacent-channel leakage power spectrum 2811_1 and second-frequency-block next-adjacent-channel leakage power spectrum 2822_1 are less likely to be in-phase added on a complex plane, which brings about an effect that a power spectrum is highly likely to be smaller.

Further, in first frequency block 2701_1 in (a) of FIG. 28A1, signals for the BPSK are arranged as in signal points 2951_L in FIG. 29A1 or FIG. 29A2, and in second frequency block 2701_2 in (a) of FIG. 28A1, signals for the BPSK are arranged as in signal points 2951_M in FIG. 29A1 or FIG. 29A2.

Then, the TRP and the NR-UE may "set the value of L and the value of M" such that "L is any of 1, 2, 3, and 4, and M is any of 1, 2, 3, and 4, satisfying L ≠ M."

Alternatively, TRP, NR-UE set L and M such that "L is any of 1, 2, 3, and 4, and M is any of 1, 2, 3, and 4, satisfying L ≠ M," and "change the value of L and the value of M by a communication status (e.g., time, frequency, communication method, and the like)." Note that the TRP and the NR-UE may perform this change based on information from the communication counterpart and another apparatus, or may perform this change at their own discretion.

At this time, with respect to the leakage power in frequency domain 2801, first-frequency-block adjacent-channel leakage power spectrum 2811_1 and second-frequency-block next-adjacent-channel leakage power spectrum 2822_1 are less likely to be in-phase added on a complex plane, which brings about an effect that a power spectrum is highly likely to be smaller.

A case will be described where the TRP and the NR-UE use frequencies as in (a) of FIG. 28A2.

As described with reference to (a), (b), and (c) of FIG. 28A2, the leakage power in frequency domain 2801 relates to first-frequency-block adjacent-channel leakage power spectrum 2811_1 and second-frequency-block next-adjacent-channel leakage power spectrum 2822_1. At this time, for example, in first frequency block 2701_1 in (a) of FIG. 28A2, signals for the BPSK are arranged as in signal points 2951_1 in FIG. 29A1, and in second frequency block 2701_2 in (a) of FIG. 28A2, signals for the BPSK are arranged as in signal points 2951_1 in FIG. 29A1.

At this time, with respect to the leakage power in frequency domain 2801, first-frequency-block adjacent-channel leakage power spectrum 2811_1 and second-frequency-block next-adjacent-channel leakage power spectrum 2822_1 are in-phase added on a complex plane, so that a power spectrum is likely to increase.

On the other hand, for example, in first frequency block 2701_1 in (a) of FIG. 28A2, signals for the BPSK are arranged as in signal points 2951_1 in FIG. 29A1, and in second frequency block 2701_2 in (a) of FIG. 28A2, signals for the BPSK are arranged as in signal points 2951_2 in FIG. 29A1.

At this time, with respect to the leakage power in frequency domain 2801, first-frequency-block adjacent-channel leakage power spectrum 2811_1 and second-frequency-block next-adjacent-channel leakage power spectrum 2822_1 are less likely to be in-phase added on a complex plane, which brings about an effect that a power spectrum is highly likely to be smaller.

As another example, in first frequency block 2701_1 in (a) of FIG. 28A2, signals for the BPSK are arranged as in signal points 2951_2 in FIG. 29A1, and in second frequency block 2701_2 in (a) of FIG. 28A2, signals for the BPSK are arranged as in signal points 2951_1 in FIG. 29A1, for example.

At this time, with respect to the leakage power in frequency domain 2801, first-frequency-block adjacent-channel leakage power spectrum 2811_1 and second-frequency-block next-adjacent-channel leakage power spectrum 2822_1 are less likely to be in-phase added on a complex plane, which brings about an effect that a power spectrum is highly likely to be smaller.

As still another example, in first frequency block 2701_1 in (a) of FIG. 28A2, arranged signals of FIG. 29A2 as signal point 2951_3 of FIG BPSK, and in second frequency block 2701_2 in (a) of FIG. 28A2, arranged signals of BPSK as in signal point 2951_4 in FIG. 29A2, for example.

At this time, with respect to the leakage power in frequency domain 2801, first-frequency-block adjacent-channel leakage power spectrum 2811_1 and second-frequency-block next-adjacent-channel leakage power spectrum 2822_1 are less likely to be in-phase added on a complex plane, which brings about an effect that a power spectrum is highly likely to be smaller.

As yet another example, in first frequency block 2701_1 in (a) of FIG. 28A2, arranged signals of FIG. 29A2 as signal point 2951_4 of FIG BPSK, and in second frequency block 2701_2 in (a) of FIG. 28A2, arranged signals of BPSK as in signal point 2951_3 in FIG. 29A2, for example.

At this time, with respect to the leakage power in frequency domain 2801, first-frequency-block adjacent-channel leakage power spectrum 2811_1 and second-frequency-block next-adjacent-channel leakage power spectrum 2822_1 are less likely to be in-phase added on a complex plane, which brings about an effect that a power spectrum is highly likely to be smaller.

Although the above is exemplary, it can be considered as follows.

In first frequency block 2701_1 in (a) of FIG. 28A2, signals for the BPSK are arranged as in signal points 2951_X in FIG. 29A1 or FIG. 29A2, and in second frequency block 2701_2 in (a) of FIG. 28A2, signals for the BPSK are arranged as in signal points 2951_Y in FIG. 29A1 or FIG. 29A2. Where X is any of 1, 2, 3, and 4, and Y is any of 1, 2, 3, and 4, satisfying $X \neq Y$.

At this time, with respect to the leakage power in frequency domain 2801, first-frequency-block adjacent-channel leakage power spectrum 2811_1 and second-frequency-block next-adjacent-channel leakage power spectrum 2822_1 are less likely to be in-phase added on a complex plane, which brings about an effect that a power spectrum is highly likely to be smaller.

Further, in first frequency block 2701_1 in (a) of FIG. 28A2, signals for the BPSK are arranged as in signal points 2951_L in FIG. 29A1 or FIG. 29A2, and in second frequency block 2701_2 in (a) of FIG. 28A2, signals for the BPSK are arranged as in signal points 2951_M in FIG. 29A1 or FIG. 29A2.

Then, the TRP and the NR-UE may "set the value of L and the value of M" such that "L is any of 1, 2, 3, and 4, and M is any of 1, 2, 3, and 4, satisfying $L \neq M$."

Alternatively, TRP, NR-UE set L and M such that "L is any of 1, 2, 3, and 4, and M is any of 1, 2, 3, and 4, satisfying $L \neq M$," and "change the value of L and the value of M by a communication status (e.g., time, frequency, communication method, and the like)." Note that the TRP and the NR-UE may perform this change based on information from the communication counterpart and another apparatus, or may perform this change at their own discretion.

At this time, with respect to the leakage power in frequency domain 2801, first-frequency-block adjacent-channel leakage power spectrum 2811_1 and second-frequency-block next-adjacent-channel leakage power spectrum 2822_1 are less likely to be in-phase added on a complex plane, which brings about an effect that a power spectrum is highly likely to be smaller.

A description will be given of an example when using the QPSK as a transmission method with the reduced leakage power for modulation signals transmitted by a TRP and an NR-UE.

A case will be described where the TRP and the NR-UE use frequencies as in (a) of FIG. 28A1.

As described with reference to (a), (b), and (c) of FIG. 28A1, the leakage power in frequency domain 2801 relates to first-frequency-block adjacent-channel leakage power spectrum 2811_1 and second-frequency-block next-adjacent-channel leakage power spectrum 2822_1. At this time, for example, in first frequency block 2701_1 in (a) of FIG. 28A1, signals for the QPSK are arranged as in signal points 2961_1 in FIG. 29B, and in second frequency block 2701_2 in (a) of FIG. 28A1, signals for the QPSK are arranged as in signal points 2961_1 in FIG. 29B.

At this time, with respect to the leakage power in frequency domain 2801, first-frequency-block adjacent-channel leakage power spectrum 2811_1 and second-frequency-block next-adjacent-channel leakage power spectrum 2822_1 are in-phase added on a complex plane, so that a power spectrum is likely to increase.

On the other hand, for example, in first frequency block 2701_1 in (a) of FIG. 28A1, signals for the QPSK are arranged as in signal points 2961_1 in FIG. 29B, and in second frequency block 2701_2 in (a) of FIG. 28A1, signals for the QPSK are arranged as in signal points 2961_2 in FIG. 29B.

At this time, with respect to the leakage power in frequency domain 2801, first-frequency-block adjacent-channel leakage power spectrum 2811_1 and second-frequency-block next-adjacent-channel leakage power spectrum 2822_1 are less likely to be in-phase added on a complex plane, which brings about an effect that a power spectrum is highly likely to be smaller.

As another example, in first frequency block 2701_1 in (a) of FIG. 28A1, signals for the QPSK are arranged as in signal points 2961_2 in FIG. 29B, and in second frequency block 2701_2 in (a) of FIG. 28A1, signals for the QPSK are arranged as in signal points 2961_1 in FIG. 29B, for example.

At this time, with respect to the leakage power in frequency domain 2801, first-frequency-block adjacent-channel leakage power spectrum 2811_1 and second-frequency-block next-adjacent-channel leakage power spectrum 2822_1 are less likely to be in-phase added on a complex plane, which brings about an effect that a power spectrum is highly likely to be smaller.

Therefore, in first frequency block 2701_1 in (a) of FIG. 28A1, signals for the QPSK are arranged as in signal points 2961_L in FIG. 29B, and in second frequency block 2701_2 in (a) of FIG. 28A1, signals for the QPSK are arranged as in signal points 2961_M in FIG. 29B.

Then, the TRP and the NR-UE may "set the value of L and the value of M" such that "L is 1 or 2, and M is 1 or 2, satisfying L ≠ M."

Alternatively, TRP, NR-UE set L and M such that "L is 1 or 2, and M is 1 or 2, satisfying L ≠ M," and "change the value of L and the value of M by a communication status (e.g., time, frequency, communication method, and the like)." Note that the TRP and the NR-UE may perform this change based on information from the communication counterpart and another apparatus, or may perform this change at their own discretion.

At this time, with respect to the leakage power in frequency domain 2801, first-frequency-block adjacent-channel leakage power spectrum 2811_1 and second-frequency-block next-adjacent-channel leakage power spectrum 2822_1 are less likely to be in-phase added on a complex plane, which brings about an effect that a power spectrum is highly likely to be smaller.

A case will be described where the TRP and the NR-UE use frequencies as in (a) of FIG. 28A2.

As described with reference to (a), (b), and (c) of FIG. 28A2, the leakage power in frequency domain 2801 relates to first-frequency-block adjacent-channel leakage power spectrum 2811_1 and second-frequency-block next-adjacent-channel leakage power spectrum 2822_1. At this time, for example, in first frequency block 2701_1 in (a) of FIG. 28A2, signals for the QPSK are arranged as in signal points 2961_1 in FIG. 29B, and in second frequency block 2701_2 in (a) of FIG. 28A2, signals for the QPSK are arranged as in signal points 2961_1 in FIG. 29B.

At this time, with respect to the leakage power in frequency domain 2801, first-frequency-block adjacent-channel leakage power spectrum 2811_1 and second-frequency-block next-adjacent-channel leakage power spectrum 2822_1 are in-phase added on a complex plane, so that a power spectrum is likely to increase.

On the other hand, for example, in first frequency block 2701_1 in (a) of FIG. 28A2, signals for the QPSK are arranged as in signal points 2961_1 in FIG. 29B, and in second frequency block 2701_2 in (a) of FIG. 28A2, signals for the QPSK are arranged as in signal points 2961_2 in FIG. 29B.

At this time, with respect to the leakage power in frequency domain 2801, first-frequency-block adjacent-channel leakage power spectrum 2811_1 and second-frequency-block next-adjacent-channel leakage power spectrum 2822_1 are less likely to be in-phase added on a complex plane, which brings about an effect that a power spectrum is highly likely to be smaller.

On the other hand, for example, in first frequency block 2701_1 in (a) of FIG. 28A2, signals for the QPSK are arranged as in signal points 2961_1 in FIG. 29B, and in second frequency block 2701_2 in (a) of FIG. 28A2, signals for the QPSK are arranged as in signal points 2961_2 in FIG. 29B.

At this time, with respect to the leakage power in frequency domain 2801, first-frequency-block adjacent-channel leakage power spectrum 2811_1 and second-frequency-block next-adjacent-channel leakage power spectrum 2822_1 are less likely to be in-phase added on a complex plane, which brings about an effect that a power spectrum is highly likely to be smaller.

Therefore, in first frequency block 2701_1 in (a) of FIG. 28A2, signals for the QPSK are arranged as in signal points 2961_L in FIG. 29B, and in second frequency block 2701_2 in (a) of FIG. 28A2, signals for the QPSK are arranged as in signal points 2961_M in FIG. 29B.

Then, the TRP and the NR-UE may "set the value of L and the value of M" such that "L is 1 or 2, and M is 1 or 2, satisfying L ≠ M."

Alternatively, TRP, NR-UE set L and M such that "L is 1 or 2, and M is 1 or 2, satisfying L ≠ M," and "change the value of L and the value of M by a communication status (e.g., time, frequency, communication method, and the like)." Note that the TRP and the NR-UE may perform this change based on information from the communication counterpart and another apparatus, or may perform this change at their own discretion.

At this time, with respect to the leakage power in frequency domain 2801, first-frequency-block adjacent-channel leakage power spectrum 2811_1 and second-frequency-block next-adjacent-channel leakage power spectrum 2822_1 are less likely to be in-phase added on a complex plane, which brings about an effect that a power spectrum is highly likely to be smaller.

A description will be given of an example when using the 16QAM as a transmission method with the reduced leakage power for modulation signals transmitted by a TRP and an NR-UE.

A case will be described where the TRP and the NR-UE use frequencies as in (a) of FIG. 28A1.

As described with reference to (a), (b), and (c) of FIG. 28A1, the leakage power in frequency domain 2801 relates to first-frequency-block adjacent-channel leakage power spectrum 2811_1 and second-frequency-block next-adjacent-channel leakage power spectrum 2822_1. At this time, for example, in first frequency block 2701_1 in (a) of FIG. 28A1, signals for the 16QAM are arranged as in the signal points in FIG. 29C1, and in second frequency block 2701_2 in (a) of FIG. 28A1, signals for the 16QAM are arranged as in the signal points in FIG. 29C1.

At this time, with respect to the leakage power in frequency domain 2801, first-frequency-block adjacent-channel leakage power spectrum 2811_1 and second-frequency-block next-adjacent-channel leakage power spectrum 2822_1 are in-phase added on a complex plane, so that a power spectrum is likely to increase.

On the other hand, for example, in first frequency block 2701_1 in (a) of FIG. 28A1, signals for the 16QAM are arranged as in the signal points in FIG. 29C1, and in second frequency block 2701_2 in (a) of FIG. 28A1, signals for the 16QAM are arranged as in the signal points in FIG. 29C2.

At this time, with respect to the leakage power in frequency domain 2801, first-frequency-block adjacent-channel leakage power spectrum 2811_1 and second-frequency-block next-adjacent-channel leakage power spectrum 2822_1 are less likely to be in-phase added on a complex plane, which brings about an effect that a power spectrum is highly likely to be smaller.

As another example, in first frequency block 2701_1 in (a) of FIG. 28A1, signals for the 16QAM are arranged as in the signal points in FIG. 29C2, and in second frequency block 2701_2 in (a) of FIG. 28A1, signals for the 16QAM are arranged as in the signal points in FIG. 29C1, for example.

At this time, with respect to the leakage power in frequency domain 2801, first-frequency-block adjacent-channel leakage power spectrum 2811_1 and second-frequency-block next-adjacent-channel leakage power spectrum 2822_1 are less likely to be in-phase added on a complex plane, which brings about an effect that a power spectrum is highly likely to be smaller.

Therefore, in first frequency block 2701_1 in (a) of FIG. 28A1, signals for the 16QAM are arranged as in the signal points in FIG. 29CL, and in second frequency block 2701_2 in (a) of FIG. 28A1, signals for the 16QAM are arranged as in the signal points in FIG. 29CM.

Then, the TRP and the NR-UE may "set the value of L and the value of M" such that "L is 1 or 2, and M is 1 or 2, satisfying L ≠ M."

Alternatively, TRP, NR-UE set L and M such that "L is 1 or 2, and M is 1 or 2, satisfying L ≠ M," and "change the value of L and the value of M by a communication status (e.g., time, frequency, communication method, and the like)." Note that the TRP and the NR-UE may perform this change based on information from the communication counterpart and another apparatus, or may perform this change at their own discretion.

At this time, with respect to the leakage power in frequency domain 2801, first-frequency-block adjacent-channel leakage power spectrum 2811_1 and second-frequency-block next-adjacent-channel leakage power spectrum 2822_1 are less likely to be in-phase added on a complex plane, which brings about an effect that a power spectrum is highly likely to be smaller.

A case will be described where the TRP and the NR-UE use frequencies as in (a) of FIG. 28A2.

As described with reference to (a), (b), and (c) of FIG. 28A2, the leakage power in frequency domain 2801 relates to first-frequency-block adjacent-channel leakage power spectrum 2811_1 and second-frequency-block next-adjacent-channel leakage power spectrum 2822_1. At this time, for example, in first frequency block 2701_1 in (a) of FIG. 28A2, signals for the 16QAM are arranged as in the signal points in FIG. 29C1, and in second frequency block 2701_2 in (a) of FIG. 28A2, signals for the 16QAM are arranged as in the signal points in FIG. 29C1.

At this time, with respect to the leakage power in frequency domain 2801, first-frequency-block adjacent-channel leakage power spectrum 2811_1 and second-frequency-block next-adjacent-channel leakage power spectrum 2822_1 are in-phase added on a complex plane, so that a power spectrum is likely to increase.

On the other hand, for example, in first frequency block 2701_1 in (a) of FIG. 28A2, signals for the 16QAM are arranged as in the signal points in FIG. 29C1, and in second frequency block 2701_2 in (a) of FIG. 28A2, signals for the 16QAM are arranged as in the signal points in FIG. 29C2.

At this time, with respect to the leakage power in frequency domain 2801, first-frequency-block adjacent-channel leakage power spectrum 2811_1 and second-frequency-block next-adjacent-channel leakage power spectrum 2822_1 are less likely to be in-phase added on a complex plane, which brings about an effect that a power spectrum is highly likely to be smaller.

As another example, in first frequency block 2701_1 in (a) of FIG. 28A2, signals for the 16QAM are arranged as in the signal points in FIG. 29C2, and in second frequency block 2701_2 in (a) of FIG. 28A2, signals for the 16QAM are arranged as in the signal points in FIG. 29C1, for example.

At this time, with respect to the leakage power in frequency domain 2801, first-frequency-block adjacent-channel leakage power spectrum 2811_1 and second-frequency-block next-adjacent-channel leakage power spectrum 2822_1 are less likely to be in-phase added on a complex plane, which brings about an effect that a power spectrum is highly likely to be smaller.

Therefore, in first frequency block 2701_1 in (a) of FIG. 28A2, signals for the 16QAM are arranged as in the signal points in FIG. 29CL, and in second frequency block 2701_2 in (a) of FIG. 28A2, signals for the 16QAM are arranged as in the signal points in FIG. 29CM.

Then, the TRP and the NR-UE may "set the value of L and the value of M" such that "L is 1 or 2, and M is 1 or 2, satisfying L ≠ M."

Alternatively, TRP, NR-UE set L and M such that "L is 1 or 2, and M is 1 or 2, satisfying L ≠ M," and "change the value of L and the value of M by a communication status (e.g., time, frequency, communication method, and the like)." Note that the TRP and the NR-UE may perform this change based on information from the communication counterpart and another apparatus, or may perform this change at their own discretion.

At this time, with respect to the leakage power in frequency domain 2801, first-frequency-block adjacent-channel leakage power spectrum 2811_1 and second-frequency-block next-adjacent-channel leakage power spectrum 2822_1 are less likely to be in-phase added on a complex plane, which brings about an effect that a power spectrum is highly likely to be smaller.

In order to reduce the leakage power, for example, the following relationships are established between "first frequency block 2701_1" and "second frequency block 2701_2" in FIG. 28A1 and FIG. 28A2.

- A bandwidth of "first frequency block 2701_1" and a bandwidth of "second frequency block 2701_2" are equal to each other.
- When OFDM with subcarrier spacing of ZHz is used, the number of subcarriers in "first frequency block 2701_1" and the number of subcarriers in "second frequency block 2701_2" are equal to each other, or the number of subcarriers in "first frequency block 2701_1" and the number of subcarriers in "second frequency block 2701_2" differ by one.
- The frequency bandwidth of "first frequency block 2701_1" is not more than twice the frequency bandwidth of "second frequency block 2701_2," or the frequency bandwidth of "second frequency block 2701_2" is not more than twice the frequency bandwidth of "first frequency block 2701_1".
- When OFDM with subcarrier spacing of ZHz is used, the number of subcarriers in "first frequency block 2701_1" is not more than twice the number of subcarriers in "second frequency block 2701_2," or the number of subcarriers in "second frequency block 2701_2" is not more than twice the number of subcarriers in "first frequency block 2701_1."

The above description is exemplary and is not limited to these examples. For example, the relationship between the frequency bandwidth of "first frequency block 2701_1" and the frequency bandwidth of "second frequency block 2701_2" is not limited to the above relationship, and the relationship between the number of subcarriers in "first frequency block 2701_1" and the number of subcarriers in "second frequency block 2701_2" is not limited to the above relationship.

Further, "first frequency block 2701_1" and "second frequency block 2701_2" may have an unused frequency domain or may have no unused frequency domain. The number of subcarriers in "first frequency block 2701_1" and the number of subcarriers in "second frequency block 2701_2" may be two or more (plural), or one or more.

In "first frequency block 2701_1" and "second frequency block 2701 2," data may be transmitted or a reference signal may be transmitted.

It is advantageous that the leakage power can be effectively reduced when a first data group is transmitted using "first frequency block 2701_1" in the first time and the first data group is transmitted using "second frequency block 2701_2" in the first time while a leakage power reduction method in the above description is used. However, data other than the first data group may be present in "first frequency block 2701_1", and data other than the first data group may be present in "second frequency block 2701_2".

Alternatively, it is advantageous that the leakage power can be effectively reduced when a first symbol group is transmitted using "first frequency block 2701_1" in the first time and the first symbol group is transmitted using "second frequency block 2701_2" in the first time while a leakage power reduction method in the above description is used. However, in "first frequency block 2701_1," data other than the first symbol group may be present, and in "second frequency block 2701_2," data other than the first symbol group may be present.

In this manner, Ultra-reliable and low-latency communication (URLLC) may be achieved.

Furthermore, a description will be given of another exemplary method of transmitting a modulation signal with the reduced adjacent-channel leakage power.

FIG. 30 illustrates in (a) exemplary frequencies used by modulation signals transmitted by apparatuses of "TRP 1 labeled 1101_1, TRP 2 labeled 1101_2, and NR-UE 1 labeled 1100_1" in the present embodiment. In (a) of FIG. 30, a horizontal axis represents frequency. Since the configurations of the apparatuses of "TRP 1 labeled 1101_1, TRP 2 labeled 1101_2, and NR-UE 1 labeled 1100_1" have been described in Embodiment 1, the descriptions thereof will be omitted.

As illustrated in (a) of FIG. 30, the modulation signals transmitted by the apparatuses of "TRP 1 labeled 1101_1, TRP 2 labeled 1101_2, and NR-UE 1 labeled 1100_1" use first frequency block 3001_1, second frequency block 3001_2, third frequency block 3001_3, and fourth frequency block 3001_4. Note that first frequency block 3001_1, second frequency block 3001_2, third frequency block 3001_3, and fourth frequency block 3001_4 are contiguous in the frequency axis.

FIG. 30 illustrates in (b) a spectrum of first frequency block 3001_1 in (a) of FIG. 30, where a horizontal axis represents frequency and a vertical axis represents power. As illustrated in (b) of FIG. 30, first-frequency-block spectrum 3010 is present on the frequency where first frequency block 3001_1 is present. To the left of first-frequency-block spectrum 3010, first-frequency-block adjacent-channel leakage power spectrum 3011_1 is present, and to the left of first-frequency-block adjacent-channel leakage power spectrum 3011_1, first-frequency-block next-adjacent-channel leakage power spectrum 3012_1 is present. Furthermore, to the right of first-frequency-block spectrum 3010, first-frequency-block adjacent-channel leakage power spectrum 3011_2 is present, and to the right of first-frequency-block adjacent-channel leakage power spectrum 3011_2, first-frequency-block next-adjacent-channel leakage power spectrum 3012_2 is present.

FIG. 30 illustrates in (c) a spectrum of second frequency block 3001_2 in (a) of FIG. 30, where a horizontal axis represents frequency and a vertical axis represents power. As illustrated in (c) of FIG. 30, second-frequency-block spectrum 3020 is present on the frequency where second frequency block 3001_2 is present. To the left of second-frequency-block spectrum 3020, second-frequency-block adjacent-channel leakage power spectrum 3021_1 is present, and to the left of second-frequency-block adjacent-channel leakage power spectrum 3021_1, second-frequency-block next-adjacent-channel leakage power spectrum 3022_1 is present. Furthermore, to the right of second-frequency-block spectrum 3020, second-frequency-block adjacent-channel leakage power spectrum 3021_2 is present, and to the right of second-frequency-block adjacent-channel leakage power spectrum 3021_2, second-frequency-block next-adjacent-channel leakage power spectrum 3022_2 is present.

FIG. 30 illustrates in (d) a spectrum of third frequency block 3001_3 in (a) of FIG. 30, where a horizontal axis represents frequency and a vertical axis represents power. As illustrated in (d) of FIG. 30, third-frequency-block spectrum 3030 is present on the frequency where third frequency block 3001_3 is present. To the left of third-frequency-block spectrum 3030, third-frequency-block adjacent-channel leakage power spectrum 3031_1 is present, and to the left of third-frequency-block adjacent-channel leakage power spectrum 3031_1, third-frequency-block next-adjacent-channel leakage power spectrum 3032_1 is present. Furthermore, to the right of third-frequency-block spectrum 3030, third-frequency-block adjacent-channel leakage power spectrum 3031_2 is present, and to the right of third-frequency-block adjacent-channel leakage power spectrum 3031_2, third-frequency-block next-adjacent-channel leakage power spectrum 3032_2 is present.

FIG. 30 illustrates in (e) a spectrum of fourth frequency block 3001_4 in (a) of FIG. 30, where a horizontal axis represents frequency and a vertical axis represents power. As illustrated in (e) of FIG. 30, fourth-frequency-block spectrum 3040 is present on the frequency where fourth frequency block 3001_4 is present. To the left of fourth-frequency-block spectrum 3040, fourth-frequency-block adjacent-channel leakage power spectrum 3041_1 is present, and to the left of fourth-frequency-block adjacent-channel leakage power spectrum 3041_1, fourth-frequency-block next-adjacent-channel leakage power spectrum 3042_1 is present. Furthermore, to the right of fourth-frequency-block spectrum 3040, fourth-frequency-block adjacent-channel leakage power spectrum 3041_2 is present, and to the right of fourth-frequency-block adjacent-channel leakage power spectrum 3041_2, fourth-frequency-block next-adjacent-channel leakage power spectrum 3042_2 is present.

Incidentally, the leakage power in (b), (c), (d), and (e) of FIG. 30 is generated by distortion characteristic of a transmission power amplifier included in the apparatus (e.g., characteristics such as third-order distortion and fifth-order distortion).

At this time, let us consider the leakage power in frequency domain 3091 in FIG. 30, in a frequency domain where first frequency block 3001_1 is present, in a frequency domain where second frequency block 3001_2 is present, in a frequency domain where third frequency block 3001_3 is present, in a frequency domain where fourth frequency block 3001_4 is present, and in frequency domain 3092.

First, a description will be given of an example when using the BPSK as a transmission method with the reduced leakage power for modulation signals transmitted by a TRP and an NR-UE.

Suppose the TRP and the NR-UE use frequencies as in (a) of FIG. 30.

In any of first frequency block 3001_1, second frequency block 3001_2, third frequency block 3001_3, and fourth frequency block 3001_4 in (a) of FIG. 30, signals for the BPSK are arranged as in signal points 2951_1 in FIG. 29A1.

At this time, as in the above descriptions, with respect to the leakage power in frequency domain 3091, a power spectrum is likely to increase. Moreover, with respect to the leakage power in fourth frequency block 3001_4, a power spectrum is likely to increase.

In the frequency domain where first frequency block 3001_1 is present, it is more likely to receive an interference from second-frequency-block adjacent-channel leakage power spectrum 3021_1 and third-frequency-block next-adjacent-channel leakage power spectrum 3032_1.

Similarly, in the frequency domain where second frequency block 3001_2 is present, it is more likely to receive an interference from first-frequency-block adjacent-channel leakage power spectrum 3011_2, third-frequency-block adjacent-channel leakage power spectrum 3031_1, and fourth-frequency-block next-adjacent-channel leakage power spectrum 3042_1.

In the frequency domain where third frequency block 3001_3 is present, it is more likely to receive an interference from second-frequency-block adjacent-channel leakage power spectrum 3021_2, fourth-frequency-block adjacent-channel leakage power spectrum 3041_1, and first-frequency-block next-adjacent-channel leakage power spectrum 3012_2.

In the frequency domain where fourth frequency block 3001_4 is present, it is more likely to receive an interference from third-frequency-block adjacent-channel leakage power spectrum 3031_2 and second-frequency-block next-adjacent-channel leakage power spectrum 3022_2.

Therefore, a description will be given of signal point arrangement in the case of the BPSK to reduce the leakage power in frequency domain 3091 and frequency domain 3092 and to reduce the interference in first frequency block 3001_1, second frequency block 3001_2, third frequency block 3001_3, and fourth frequency block 3001_4.

First Example:

In first frequency block 3001_1 in (a) of FIG. 30, BPSK has signal points 2951_p of FIG. 29A1 or FIG. 29A2;
In second frequency block 3001_2 in (a) of FIG. 30, BPSK has signal points 2951_q of FIG. 29A1 or FIG. 29A2;
In third frequency block 3001_3 in (a) of FIG. 30, BPSK has signal points 2951_r of FIG. 29A1 or FIG. 29A2; and
In fourth frequency block 3001_4 in (a) of FIG. 30, BPSK has signal points 2951_s of FIG. 29A1 or FIG. 29A2.

At this time, it is highly likely to reduce the leakage power and also the interference when the following conditions are satisfied.

<Conditions>

Where $p \neq q$, $p \neq r$, $p \neq s$, $q \neq r$, $q \neq s$, and $r \neq s$. Note that p, q, r, and s are all "any value of 1, 2, 3, and 4."
In first frequency block 3001_1, second frequency block 3001_2, third frequency block 3001_3, and fourth frequency block 3001_4, the assignment of signal points may be switched by time.

Second Example:

In first frequency block 3001_1 and fourth frequency block 3001_4 in (a) of FIG. 30, BPSK has signal points 2951_p of FIG. 29A1 or FIG. 29A2; and
In second frequency block 3001_2 and third frequency block 3001_3 in (a) of FIG. 30, BPSK has signal points 2951_q of FIG. 29A1 or FIG. 29A2

At this time, it is highly likely to reduce the leakage power and also the interference when the following conditions are satisfied.

<Conditions>

Where $p \neq q$. Note that p and q are both "any value of 1, 2, 3, and 4."
In first frequency block 3001_1, second frequency block 3001_2, third frequency block 3001_3, and fourth frequency block 3001_4, the assignment of signal points may be switched by time.
A description will be given of an example when using the QPSK as a transmission method with the reduced leakage power for modulation signals transmitted by a TRP and an NR-UE.
Suppose the TRP and the NR-UE use frequencies as in (a) of FIG. 30.
In any of first frequency block 3001_1, second frequency block 3001_2, third frequency block 3001_3, and fourth frequency block 3001_4 in (a) of FIG. 30, signals for the QPSK are arranged as in signal points 2961_1 in FIG. 29B.
At this time, as in the above descriptions, with respect to the leakage power in frequency domain 3091, a power spectrum is likely to increase. Moreover, with respect to the leakage power in fourth frequency block 3001_4, a power spectrum is likely to increase.
In the frequency domain where first frequency block 3001_1 is present, it is more likely to receive an interference from second-frequency-block adjacent-channel leakage power spectrum 3021_1 and third-frequency-block next-adjacent-channel leakage power spectrum 3032_1.
Similarly, in the frequency domain where second frequency block 3001_2 is present, it is more likely to receive an interference from first-frequency-block adjacent-channel leakage power spectrum 3011_2, third-frequency-block adjacent-channel leakage power spectrum 3031_1, and fourth-frequency-block next-adjacent-channel leakage power spectrum 3042_1.
In the frequency domain where third frequency block 3001_3 is present, it is more likely to receive an interference from second-frequency-block adjacent-channel leakage power spectrum 3021_2, fourth-frequency-block adjacent-channel leakage power spectrum 3041_1, and first-frequency-block next-adjacent-channel leakage power spectrum 3012_2.
In the frequency domain where fourth frequency block 3001_4 is present, it is more likely to receive an interference from third-frequency-block adjacent-channel leakage power spectrum 3031_2 and second-frequency-block next-adjacent-channel leakage power spectrum 3022_2.

Therefore, a description will be given of signal point arrangement in the case of the QPSK to reduce the leakage power in frequency domain 3091 and frequency domain 3092 and to reduce the interference in first frequency block 3001_1, second frequency block 3001_2, third frequency block 3001_3, and fourth frequency block 3001_4.

Let signal points 2961_1 in FIG. 29B be a first mapping method in In-phase Quadrature (Phase) (I-Q) (or Real part-Imaginary Part) of the QPSK. The detailed description thereof will be omitted because it has already been given.

Suppose the coordinates of signal points are (I, Q) when a second mapping method in In-phase Quadrature (Phase) (I-Q) (or Real part-Imaginary Part) of the QPSK is used, (I, Q) are expressed by the following Equation:

$$(I, Q)^T = \begin{pmatrix} \cos\frac{\pi}{8} & -\sin\frac{\pi}{8} \\ \sin\frac{\pi}{8} & \cos\frac{\pi}{8} \end{pmatrix} (x, y)^T \qquad \text{... (Equation 5).}$$

Where $(I, Q)^T$ indicate transposed vectors of (I, Q), $(x, y)^T$ indicate transposed vectors of (x, y). Further, (x, y) become (G, G), (G, -G), (-G, G), and (-G, -G). Note that G is a real number greater than zero.

Suppose the coordinates of signal points are (I, Q) when a third mapping method in In-phase Quadrature (Phase) (I-Q) (or Real part-Imaginary Part) of the QPSK is used, (I, Q) are expressed by the following Equation:

$$(I, Q)^T = \begin{pmatrix} \cos\frac{\pi}{4} & -\sin\frac{\pi}{4} \\ \sin\frac{\pi}{4} & \cos\frac{\pi}{4} \end{pmatrix} (x, y)^T \qquad \text{... (Equation 6).}$$

Where $(I, Q)^T$ indicate transposed vectors of (I, Q), $(x, y)^T$ indicate transposed vectors of (x, y). Further, (x, y) become (H, H), (H, -H), (-H, H), and (-H, -H). Note that H is a real number greater than zero.

Suppose the coordinates of signal points are (I, Q) when a fourth mapping method in In-phase Quadrature (Phase) (I-Q) (or Real part-Imaginary Part) of the QPSK is used, (I, Q) are expressed by the following Equation:

$$(I, Q)^T = \begin{pmatrix} \cos\frac{3\pi}{8} & -\sin\frac{3\pi}{8} \\ \sin\frac{3\pi}{8} & \cos\frac{3\pi}{8} \end{pmatrix} (x, y)^T \qquad \text{... (Equation 7).}$$

Where $(I, Q)^T$ indicate transposed vectors of (I, Q), $(x, y)^T$ indicate transposed vectors of (x, y). Further, (x, y) become (K, K), (K, -K), (-K, K), and (-K, -K). Note that K is a real number greater than zero.

First Example:

In first frequency block 3001_1 in (a) of FIG. 30, a modulation scheme using the p-th mapping method of the QPSK is used;

In second frequency block 3001_2 in (a) of FIG. 30, a modulation scheme using the q-th mapping method of the QPSK is used;

In third frequency block 3001_3 in (a) of FIG. 30, a modulation scheme using the r-th mapping method of the QPSK is used; and

In fourth frequency block 3001_4 in (a) of FIG. 30, a modulation scheme using the s-th mapping method of the QPSK is used.

At this time, it is highly likely to reduce the leakage power and also the interference when the following conditions are satisfied.

<Conditions>

Where p ≠ q, p ≠ r, p ≠ s, q ≠ r, q ≠ s, and r ≠ s. Note that p, q, r, and s are all "any value of 1, 2, 3, and 4."

In first frequency block 3001_1, second frequency block 3001_2, third frequency block 3001_3, and fourth frequency block 3001_4, the assignment of signal points may be switched by time.

Second Example:

In first frequency block 3001_1 and fourth frequency block 3001_4 in (a) of FIG. 30, a modulation scheme using the p-th mapping method of the QPSK is used; and

In second frequency block 3001_2 and third frequency block 3001_3 in (a) of FIG. 30, a modulation scheme using the q-th mapping method of the QPSK is used.

At this time, it is highly likely to reduce the leakage power and also the interference when the following conditions are satisfied.

<Conditions>

Where p ≠ q. Note that p and q are both "any value of 1, 2, 3, and 4."

In first frequency block 3001_1, second frequency block 3001_2, third frequency block 3001_3, and fourth frequency block 3001_4, the assignment of signal points may be switched by time.

A description will be given of an example when using the 16QAM as a transmission method with the reduced leakage power for modulation signals transmitted by a TRP and an NR-UE.

Suppose the TRP and the NR-UE use frequencies as in (a) of FIG. 30.

In any of first frequency block 3001_1, second frequency block 3001_2, third frequency block 3001_3, and fourth frequency block 3001_4 in (a) of FIG. 30, signals for the 16QAM are arranged as in the signal points in FIG. 29C1.

At this time, as in the above descriptions, with respect to the leakage power in frequency domain 3091, a power spectrum is likely to increase. Moreover, with respect to the leakage power in fourth frequency block 3001_4, a power spectrum is likely to increase.

In the frequency domain where first frequency block 3001_1 is present, it is more likely to receive an interference from second-frequency-block adjacent-channel leakage power spectrum 3021_1 and third-frequency-block next-adjacent-channel leakage power spectrum 3032_1.

Similarly, in the frequency domain where second frequency block 3001_2 is present, it is more likely to receive an interference from first-frequency-block adjacent-channel leakage power spectrum 3011_2, third-frequency-block adjacent-channel leakage power spectrum 3031_1, and fourth-frequency-block next-adjacent-channel leakage power spectrum 3042_1.

In the frequency domain where third frequency block 3001_3 is present, it is more likely to receive an interference from second-frequency-block adjacent-channel leakage power spectrum 3021_2, fourth-frequency-block adjacent-channel leakage power spectrum 3041_1, and first-frequency-block next-adjacent-channel leakage power spectrum 3012_2.

In the frequency domain where fourth frequency block 3001_4 is present, it is more likely to receive an interference from third-frequency-block adjacent-channel leakage power spectrum 3031_2 and second-frequency-block next-adjacent-channel leakage power spectrum 3022_2.

Therefore, a description will be given of signal point arrangement in the case of the 16QAM to reduce the leakage power in frequency domain 3091 and frequency domain 3092 and to reduce the interference in first frequency block 3001_1, second frequency block 3001_2, third frequency block 3001_3, and fourth frequency block 3001_4.

Let the signal points in FIG. 29C1 be a first mapping method in In-phase Quadrature (Phase) (I-Q) (or Real part-Imaginary Part) of the 16QAM. The detailed description thereof will be omitted because it has already been given.

Suppose the coordinates of signal points are (I, Q) when a second mapping method in In-phase Quadrature (Phase) (I-Q) (or Real part-Imaginary Part) of the 16QAM is used, (I, Q) are expressed by the following Equation:

$$(I, Q)^T = \begin{pmatrix} \cos\frac{\pi}{8} & -\sin\frac{\pi}{8} \\ \sin\frac{\pi}{8} & \cos\frac{\pi}{8} \end{pmatrix} (x, y)^T \qquad \dots \text{(Equation 8)}.$$

Where $(I, Q)^T$ indicate transposed vectors of $(I, Q)$, $(x, y)^T$ indicate transposed vectors of $(x, y)$. Further, $(x, y)$ become $(3\times L, L)$, $(3\times L, 3\times L)$, $(3\times L, -L)$, $(3\times L, -3\times L)$, $(L, L)$, $(L, 3\times L)$, $(L, -L)$, $(L, -3\times L)$, $(-L, L)$, $(-L, 3\times L)$, $(-L, -L)$, $(-L, -3\times L)$, $(-3xL, L)$, $(-3\times L, 3\times L)$, $(-3\times L, -L)$, and $(-3\times L, -3\times L)$. Note that L is a real number greater than zero.

Suppose the coordinates of signal points are $(I, Q)$ when a third mapping method in In-phase Quadrature (Phase) (I-Q) (or Real part-Imaginary Part) of the 16QAM is used, $(I, Q)$ are expressed by the following Equation:

$$(I, Q)^T = \begin{pmatrix} \cos\frac{\pi}{4} & -\sin\frac{\pi}{4} \\ \sin\frac{\pi}{4} & \cos\frac{\pi}{4} \end{pmatrix} (x, y)^T \qquad \text{... (Equation 9).}$$

Where $(I, Q)^T$ indicate transposed vectors of $(I, Q)$, $(x, y)^T$ indicate transposed vectors of $(x, y)$. Further, $(x, y)$ become $(3\times M, M)$, $(3\times M, 3\times M)$, $(3\times M, -M)$, $(3\times M, -3\times M)$, $(M, M)$, $(M, 3\times M)$, $(M, -M)$, $(M, -3\times M)$, $(-M, M)$, $(-M, 3\times M)$, $(-M, -M)$, $(-M, -3\times M)$, $(-3\times M, M)$, $(-3\times M, 3\times M)$, $(-3\times M, -M)$, and $(-3\times M, -3\times M)$. Note that M is a real number greater than zero.

Suppose the coordinates of signal points are $(I, Q)$ when a fourth mapping method in In-phase Quadrature (Phase) (I-Q) (or Real part-Imaginary Part) of the 16QAM is used, $(I, Q)$ are expressed by the following Equation:

$$(I, Q)^T = \begin{pmatrix} \cos\frac{3\pi}{8} & -\sin\frac{3\pi}{8} \\ \sin\frac{3\pi}{8} & \cos\frac{3\pi}{8} \end{pmatrix} (x, y)^T \qquad \text{... (Equation 10).}$$

Where $(I, Q)^T$ indicate transposed vectors of $(I, Q)$, $(x, y)^T$ indicate transposed vectors of $(x, y)$. Further, $(x, y)$ become $(3\times N, N)$, $(3\times N, 3\times N)$, $(3\times N, -N)$, $(3\times N, -3\times N)$, $(N, N)$, $(N, 3\times N)$, $(N, -N)$, $(N, -3\times N)$, $(-N, N)$, $(-N, 3\times N)$, $(-N, -N)$, $(-N, -3\times N)$, $(-3\times N, N)$, $(-3\times N, 3\times N)$, $(-3\times N, -N)$, and $(-3\times N, -3\times N)$. Note that N is a real number greater than zero.

First Example:

> In first frequency block 3001_1 in (a) of FIG. 30, a modulation scheme using the p-th mapping method of the 16QAM is used;
> In second frequency block 3001_2 in (a) of FIG. 30, a modulation scheme using the q-th mapping method of the 16QAM is used;
> In third frequency block 3001_3 in (a) of FIG. 30, a modulation scheme using the r-th mapping method of the 16QAM is used; and
> In fourth frequency block 3001_4 in (a) of FIG. 30, a modulation scheme using the s-th mapping method of the 16QAM is used.

At this time, it is highly likely to reduce the leakage power and also the interference when the following conditions are satisfied.

<Conditions>

Where $p \neq q$, $p \neq r$, $p \neq s$, $q \neq r$, $q \neq s$, and $r \neq s$. Note that p, q, r, and s are all "any value of 1, 2, 3, and 4."

In first frequency block 3001_1, second frequency block 3001_2, third frequency block 3001_3, and fourth frequency block 3001_4, the assignment of signal points may be switched by time.

Second Example:

> In first frequency block 3001_1 and fourth frequency block 3001_4 in (a) of FIG. 30, a modulation scheme using the p-th mapping method of the 16QAM is used; and
> In second frequency block 3001_2 and third frequency block 3001_3 in (a) of FIG. 30, a modulation scheme using the q-th mapping method of the 16QAM is used.

At this time, it is highly likely to reduce the leakage power and also the interference when the following conditions are satisfied.

<Conditions>

Where p ≠ q. Note that p and q are both "any value of 1, 2, 3, and 4."

In first frequency block 3001_1, second frequency block 3001_2, third frequency block 3001_3, and fourth frequency block 3001_4, the assignment of signal points may be switched by time.

In order to reduce the leakage power, for example, the following relationships are established between "first frequency block 3001_1," "second frequency block 3001_2," "third frequency block 3001_3," and "fourth frequency block 3001_4" in FIG. 30.

- A bandwidth of "first frequency block 3001_1," a bandwidth of "second frequency block 3001_2," a bandwidth of "third frequency block 3001_3," and a bandwidth of "fourth frequency block 3001_4" are equal to one another.
- When OFDM with subcarrier spacing of ZHz is used, the number of subcarriers in "first frequency block 3001_1," the number of subcarriers in "second frequency block 3001_2," the number of subcarriers in "third frequency block 3001_3," and the number of subcarriers in "fourth frequency block 3001_4" are equal to each other
- Alternatively, for all p and all q, the difference between the number of subcarriers in "p-th frequency block 3001_p" and the number of subcarriers in "the q-th frequency block 3001_q" is 1.

Note that p and q are each integers from one to four, satisfying p ≠ q.

The above description is exemplary and is not limited to these examples. For example, the relationship between the frequency bandwidth of "first frequency block 3001_1," the frequency bandwidth of "second frequency block 3001_2," the frequency bandwidth of "third frequency block 3001_3," and "fourth frequency block 3001_4" is not limited to the above relationship, and the relationship between the number of subcarriers in "first frequency block 3001_1," the number of subcarriers in "second frequency block 3001_2," the number of subcarriers in "third frequency block 3001_3," and the number of subcarriers in "fourth frequency block 3001_4" is not limited to the above relationship.

Further, first frequency block 3001_1, second frequency block 3001_2, third frequency block 3001_3, and fourth frequency block 3001_4 may have an unused frequency domain or may have no unused frequency domain.

The number of subcarriers in "first frequency block 3001_1," the number of subcarriers in "second frequency block 3001_2," the number of subcarriers in "third frequency block 3001_3," and the number of subcarriers in "fourth frequency block 3001_4" may be two or more (plural), or one or more.

In "first frequency block 3001_1," "second frequency block 3001_2," "third frequency block 3001_3," and "fourth frequency block 3001_4," data may be transmitted or a reference signal may be transmitted.

It is advantageous that the leakage power can be effectively reduced when a first data group is transmitted using "first frequency block 3001_1" in the first time, the first data group is transmitted using "second frequency block 3001_2" in the first time, the first data group is transmitted using "third frequency block 3001_3" in the first time, and the first data group is transmitted using "fourth frequency block 3001_4" in the first time while a leakage power reduction method in the above description is used.

However, data other than the first data group may be present in "first frequency block 3001_1," data other than the first data group may be present in "second frequency block 3001_2," data other than the first data group may be present in "third frequency block 3001_3," and data other than the first data group may be present in "fourth frequency block 3001_4."

Alternatively, it is advantageous that the leakage power can be effectively reduced when a first symbol group is transmitted using "first frequency block 3001_1" in the first time, the first symbol group is transmitted using "second frequency block 3001_2" in the first time, the first symbol group is transmitted using "third frequency block 3001_3" in the first time, and the first symbol group is transmitted using "fourth frequency block 3001_4" in the first time while a leakage power reduction method in the above description is used.

However, data other than the first symbol group may be present in "first frequency block 3001_1," data other than the first symbol group may be present in "second frequency block 3001_2," data other than the first symbol group may be present in "third frequency block 3001_3," and data other than the first symbol group may be present in "fourth frequency block 3001_4."

In this manner, URLLC may be achieved.

A modulation signal, a data group, a symbol group, and the like which have been transmitted using a frequency block described in the present embodiment may be included in any of UL-SCH, PUCCH, PUSCH, PRACH, and the like. In addition, a modulation signal, a data group, a symbol group, and the like which have been transmitted using a frequency block described in the present embodiment may be included in PCH, BCH, DL-SCH, BCCH, PCCH, CCCH, a common search space, PBCH, SS, PDCCH, PDSCH, and the like, without limitation to this.

An apparatus that transmits a modulation signal using a frequency block described in the present embodiment may be any of "an NR-UE, a TRP, a base station, a repeater, an access point, a broadcast station, a gNB, an eNB, a node, a server, a satellite, a movable apparatus (e.g., electricity-based movable apparatus such as "electric vehicle, motor bike (e-bike), electric-powered vehicle, movable robot, electric-powered scooter, electric-assisted bicycle, and electric-assisted scooter," automobile, motorcycle, bicycle, vessel, aircraft, airplane), a terminal, a mobile phone, a smart phone, a tablet, a laptop, a personal computer, a home appliance (household electric appliance), an apparatus in a factory, communication equipment or broadcast equipment such as "Internet of Things (IoT) equipment, and the like."

FIG. 1A, FIG. 1B, FIG. 1C, FIG. 9, and FIG. 10 have been each described as, for example, an exemplary configuration of an apparatus such as a TRP or an NR-UE in the present embodiment, but configuration of the apparatus is not limited to these examples. An apparatus having a configuration to perform transmit beamforming and receive beamforming has been described, but the present embodiment can be implemented even by an apparatus configured not to have the configuration to perform the transmit beamforming and the receive beamforming. The aforementioned points are the same in the present specification.

In some cases, it is possible for an apparatus to obtain an effect of self-interference cancellation by performing the transmit beamforming and the receive beamforming. Additionally, without performing the beamforming, the self-interference cancellation may be achieved using a method of being provided with a function of performing the self-interference cancellation.

Further, for example, when an apparatus such as a TRP or an NR-UE transmits a modulation signal, one or more, or two or more modulation signals may be transmitted using one or more, or two or more transmission antennas. The aforementioned points are the same in the present specification.

In FIG. 23A, which is an example of the radio communication system in the present embodiment, the number of TRPs present in a radio system is two, but the implementation is possible with at least one TRP, or two or more TRPs.

Further, in FIG. 23A, the number of NR-UEs present in a radio system is one, but the implementation is possible with at least one NR-UE, or two or more NR-UEs.

In the present embodiment, a case has been described where a plurality of TRPs is present in a radio system. At this time, the plurality of TRPs may communicate with each other to share information or to control each other. Further, an apparatus that controls the plurality of TRPs may be present in the system. The aforementioned points are the same in the present specification.

(Embodiment 4)

In Embodiment 3, a description has been given of a transmission method with the aim of reducing adjacent-channel leakage power and an interference when a TRP and an NR-UE transmits modulation signals. As an example of a communication method when the TRP and the NR-UE transmit modulation signals using the above transmission method, URLLC has been taken up and described.

In the present embodiment, a description will be given of an exemplary communication method including application examples of URLLC described in Embodiment 3. Therefore, it is possible to combine a communication method to be described in the present embodiment and Embodiment 3, resulting in reduce the adjacent-channel leakage power and interference.

FIG. 31A illustrates an example of communication between a TRP and an NR-UE in the present embodiment. Note that the components that operate in the same manner as the components in FIG. 11A are denoted by the same reference numerals, and some descriptions thereof will be omitted.

TRP 1 labeled 1101_1 transmits modulation signal 3101_1_1 and modulation signal 3101_1_2 to NR-UE 1 labeled 1100_1 (it can be considered as downlink, accordingly.).

NR-UE 1 labeled 1100_1 transmits modulation signal 3102_1 to TRP 1 labeled 1101_1 (it can be considered as uplink, accordingly.).

FIG. 31B1 illustrates exemplary usage statuses of frequencies when TRP 1 labeled 1101_1 and NR-UE 1 labeled 1100_1 perform the communication as illustrated in FIG. 31A. Note that, in FIG. 31B1, a horizontal axis represents frequency.

As illustrated inFIG. 31B1, TRP 1 labeled 1101_1 uses first frequency (band) 3190_1 for "transmission of a downlink modulation signal and reception of an uplink modulation signal," and NR-UE 1 labeled 1100_1 uses first frequency (band) 3190_1 for "reception of the downlink modulation signal and transmission of the uplink modulation signal."

Incidentally, a case has been described where the frequency used by TRP 1 labeled 1101_1 in communication and the frequency used by NR-UE 1 labeled 1100_1 in communication are the same frequency (band), but the frequency used by TRP 1 labeled 1101_1 in communication and the frequency used by NR-UE 1 labeled 1100_1 in communication may be partly the same frequency (band).

FIG. 31B2 illustrates exemplary communication statuses in time when TRP 1 labeled 1101_1 and NR-UE 1 labeled 1100_1 perform communication as illustrated in FIG. 31A and FIG. 31B1. Note that, in FIG. 31B2, a horizontal axis represents time.

As illustrated in the FIG. 31B2, TRP 1 labeled 1101_1 transmits frame 1 labeled 3151_1 (addressed to NR-UE 1 labeled 1100_1) in the first time using first frequency (band) 3190_1. Thus, NR-UE 1 labeled 1100_1 receives frame 1 labeled 3151_1 and obtains data. Further, TRP 1 labeled 1101_1 transmits frame 2 labeled 3151_2 (addressed to NR-UE 1 labeled 1100_1) in the first time using first frequency (band) 3190_1. Thus, NR-UE 1 labeled 1100_1 receives frame 2 labeled 3151_2 and obtains data.

NR-UE 1 labeled 1100_1 then transmits frame 1 labeled 3152_1 (addressed to TRP 1 labeled 1101_1) in the first time using first frequency (band) 3190_1. Thus, TRP 1 labeled 1101_1 receives frame 1 labeled 3152_1 and obtains data.

As described above, an uplink modulation signal and a downlink modulation signal are present at the same frequency and in the same time. TRP 1 labeled 1101_1 thus has time to perform transmission and reception simultaneously at the same frequency. Moreover, NR-UE 1 labeled 1100_1 has time to perform transmission and reception simultaneously at the same frequency.

Incidentally, "frame 1 labeled 3151_1," "frame 2 labeled 3151_2," and "frame 1 labeled 3152_1" may be overlapped in any manner as long as there is an entirely overlapping time or a partly overlapping time.

In a situation where URLLC described in Embodiment 3 is performed, when TRP 1 labeled 1101_1 transmits the first data group with frame 1 labeled 3151_1, the TRP transmits the first data group also with frame 2 labeled 3151_2.

However, data other than the first data group may be present in "frame 1 labeled 3151_1" and data other than the first data group may be present in "frame 2 labeled 3151_2."

FIG. 31C1 illustrates exemplary usage statuses of frequencies when TRP 1 labeled 1101_1 and NR-UE 1 labeled 1100_1 perform the communication as illustrated in FIG. 31A. Note that, in FIG. 31C1, a horizontal axis represents frequency.

As illustrated in FIG. 31C1, TRP 1 labeled 1101_1 uses first frequency (band) 3190_1 for "transmission of a downlink modulation signal and reception of an uplink modulation signal" and uses second frequency (band) 3190_2 to perform the "transmission of the downlink modulation signal." NR-UE 1 labeled 1100_1 uses first frequency (band) 3190_1 for "reception of the downlink modulation signal and transmission of the uplink modulation signal."

Incidentally, a case has been described where TRP 1 labeled 1101_1 and NR-UE 1 labeled 1100_1 use first frequency (band) 3190_1, but at this time, the frequency used by TRP 1 labeled 1101_1 in communication and the frequency used by NR-UE 1 labeled 1100_1 in communication may be partly the same frequency (band).

FIG. 31C2 illustrates exemplary communication statuses in time when TRP 1 labeled 1101_1 and NR-UE 1 labeled 1100_1 perform communication as illustrated in FIG. 31A and FIG. 31C1. Note that, in FIG. 31C2, a horizontal axis represents time.

As illustrated in the FIG. 31C2, TRP 1 labeled 1101_1 transmits frame 1 labeled 3151_1 (addressed to NR-UE 1 labeled 1100_1) in the first time using first frequency (band) 3190_1. Thus, NR-UE 1 labeled 1100_1 receives frame 1 labeled 3151_1 and obtains data. Further, TRP 1 labeled 1101_1 transmits frame 2 labeled 3151_2 (addressed to NR-UE 1 labeled 1100_1) in the first time using second frequency (band) 3190_2. Thus, NR-UE 1 labeled 1100_1 receives frame 2 labeled 3151_2 and obtains data.

NR-UE 1 labeled 1100_1 then transmits frame 1 labeled 3152_1 (addressed to TRP 1 labeled 1101_1) in the first time using first frequency (band) 3190_1. Thus, TRP 1 labeled 1101_1 receives frame 1 labeled 3152_1 and obtains data.

As described above, an uplink modulation signal and a downlink modulation signal are present at the same frequency and in the same time. TRP 1 labeled 1101_1 thus has time to perform transmission and reception simultaneously at the same frequency. Moreover, NR-UE 1 labeled 1100_1 has time to perform transmission and reception simultaneously at the same frequency.

Incidentally, "frame 1 labeled 3151_1" and "frame 1 labeled 3152_1" may be overlapped in any manner as long as there is an entirely overlapping time or a partly overlapping time.

In a situation where URLLC described in Embodiment 3 is performed, when TRP 1 labeled 1101_1 transmits the first data group with frame 1 labeled 3151_1, the TRP transmits the first data group also with frame 2 labeled 3151_2. Between "frame 1 labeled 3151_1" and "frame 2 labeled 3151_2," there may be an entirely overlapping time or a partly overlapping time, or no overlapping time. Incidentally, "frame 1 labeled 3151_1" and "frame 1 labeled 3152_1" may be overlapped in any manner as long as there is an entirely overlapping time or a partly overlapping time.

However, data other than the first data group may be present in "frame 1 labeled 3151_1" and data other than the first data group may be present in "frame 2 labeled 3151_2."

FIG. 32A illustrates an example of communication between a TRP and an NR-UE in the present embodiment. Note that the components that operate in the same manner as the components in FIG. 11A and FIG. 31A are denoted by the same reference numerals, and some descriptions thereof will be omitted.

TRP 1 labeled 1101_1 transmits modulation signal 3101_1 to NR-UE 1 labeled 1100_1 (it can be considered as downlink, accordingly.).

TRP 2 labeled 1101_2 transmits modulation signal 3101_2 to NR-UE 1 labeled 1100_1 (it can be considered as downlink, accordingly.).

NR-UE 1 labeled 1100_1 transmits modulation signal 3102_1 to TRP 1 labeled 1101_1 (it can be considered as uplink, accordingly.).

FIG. 32B1 illustrates exemplary usage statuses of frequencies when TRP 1 labeled 1101_1, TRP 2 labeled 1101_2, and NR-UE 1 labeled 1100_1 perform the communication as illustrated in FIG. 32A. Note that, in FIG. 32B1, a horizontal axis represents frequency.

As illustrated in FIG. 32B1, TRP 1 labeled 1101_1 uses first frequency (band) 3190_1 for "transmission of a downlink modulation signal and reception of an uplink modulation signal." Meanwhile, TRP 2 labeled 1101_2 uses first frequency (band) 3190_1 for the "transmission of the downlink modulation signal." NR-UE 1 labeled 1100_1 uses first frequency (band) 3190_1 for "reception of the downlink modulation signal and transmission of the uplink modulation signal."

Incidentally, a case has been described where the frequency used by TRP 1 labeled 1101_1 in communication, the frequency used by TRP 2 labeled 1101_2 in communication, and the frequency used by NR-UE 1 labeled 1100_1 in communication are the same frequency (band), but the frequency used by TRP 1 labeled 1101_1 in communication, the frequency used by TRP 2 labeled 1101_2 in communication, and the frequency used by NR-UE 1 labeled 1100_1 in communication may be partly the same frequency (band).

FIG. 32B2 illustrates exemplary communication statuses in time when TRP 1 labeled 1101_1, TRP 2 labeled 1101_2, and NR-UE 1 labeled 1100_1 perform communication as illustrated in FIG. 32A and FIG. 32B1. Note that, in FIG. 32B2, a horizontal axis represents time.

As illustrated in the FIG. 32B2, TRP 1 labeled 1101_1 transmits frame 1 labeled 3151_1 (addressed to NR-UE 1 labeled 1100_1) in the first time using first frequency (band) 3190_1. Thus, NR-UE 1 labeled 1100_1 receives frame 1 labeled 3151_1 and obtains data. Meanwhile, TRP 2 labeled 1101_2 transmits frame 2 labeled 3151_2 (addressed to NR-UE 1 labeled 1100_1) in the first time using first frequency (band) 3190_1. Thus, NR-UE 1 labeled 1100_1 receives frame 2 labeled 3151_2 and obtains data.

NR-UE 1 labeled 1100_1 then transmits frame 1 labeled 3152_1 (addressed to TRP 1 labeled 1101_1) in the first time using first frequency (band) 3190_1. Thus, TRP 1 labeled 1101_1 receives frame 1 labeled 3152_1 and obtains data.

As described above, an uplink modulation signal and a downlink modulation signal are present at the same frequency and in the same time. TRP 1 labeled 1101_1 thus has time to perform transmission and reception simultaneously at the same frequency. Moreover, NR-UE 1 labeled 1100_1 has time to perform transmission and reception simultaneously at the same frequency.

Incidentally, "frame 1 labeled 3151_1," "frame 2 labeled 3151_2," and "frame 1 labeled 3152_1" may be overlapped in any manner as long as there is an entirely overlapping time or a partly overlapping time.

For example, TRP 1 labeled 1101_1 and TRP 2 labeled 1101_2 perform transmit beamforming. NR-UE 1 labeled 1100_1 then performs receive beamforming to receive frame 1 labeled 3151_1 transmitted by TRP 1 labeled 1101_1 and frame 2 labeled 3151_2 transmitted by TRP 2 labeled 1101_2. At this time, the possibility of interference between a transmission beam of TRP 1 labeled 1101_1 and a transmission beam of TRP 2 labeled 1101_2 can be reduced, which brings about an effect of improving the reception quality of data in NR-UE 1 labeled 1100_1.

In a situation where URLLC described in Embodiment 3 is performed, TRP 1 labeled 1101_1 transmits the first data group with frame 1 labeled 3151_1, and TRP 2 labeled 1101_2 transmits the first data group also with frame 2 labeled 3151_2. Incidentally, "frame 1 labeled 3151_1" and "frame 1 labeled 3152_1" may be overlapped in any manner as long as t there is an entirely overlapping time or a partly overlapping time. Further, "frame 2 labeled 3151_2" and "frame 1 labeled 3152_1" may be overlapped in any manner as long as there is an entirely overlapping time or a partly overlapping time.

However, data other than the first data group may be present in "frame 1 labeled 3151_1" and data other than the first data group may be present in "frame 2 labeled 3151_2."

FIG. 32C1 illustrates exemplary usage statuses of frequencies when TRP 1 labeled 1101_1, TRP 2 labeled 1101_2, and NR-UE 1 labeled 1100_1 perform the communication as illustrated in FIG. 32A. Note that, in FIG. 32C1, a horizontal axis represents frequency.

As illustrated in FIG. 32C1, TRP 1 labeled 1101_1 uses first frequency (band) 3190_1 for "transmission of a downlink modulation signal and reception of an uplink modulation signal." TRP 2 labeled 1101_2 uses second frequency (band) 3190_2 to perform the "transmission of the downlink modulation signal."

NR-UE 1 labeled 1100_1 uses first frequency (band) 3190_1 for "reception of a downlink modulation signal and transmission of an uplink modulation signal." Further, NR-UE 1 labeled 1100_1 uses second frequency (band) 3190_2 for the "reception of the downlink modulation signal."

Incidentally, a case has been described where TRP 1 labeled 1101_1 and NR-UE 1 labeled 1100_1 use first frequency (band) 3190_1, but at this time, the frequency used by TRP 1 labeled 1101_1 in communication and the frequency used by NR-UE 1 labeled 1100_1 in communication may be partly the same frequency (band).

FIG. 32C2 illustrates exemplary communication statuses in time when TRP 1 labeled 1101_1, TRP 2 labeled 1101_2, and NR-UE 1 labeled 1100_1 perform communication as illustrated in FIG. 32A and FIG. 32C1. Note that, in FIG. 32C2, a horizontal axis represents time.

As illustrated in the FIG. 32C2, TRP 1 labeled 1101_1 transmits frame 1 labeled 3151_1 (addressed to NR-UE 1 labeled 1100_1) in the first time using first frequency (band) 3190_1. Thus, NR-UE 1 labeled 1100_1 receives frame 1 labeled 3151_1 and obtains data. Meanwhile, TRP 2 labeled 1101_2 transmits frame 2 labeled 3151_2 (addressed to NR-UE 1 labeled 1100_1) in the first time using second frequency (band) 3190_2. Thus, NR-UE 1 labeled 1100_1 receives frame 2 labeled 3151_2 and obtains data.

NR-UE 1 labeled 1100_1 then transmits frame 1 labeled 3152_1 (addressed to TRP 1 labeled 1101_1) in the first time using first frequency (band) 3190_1. Thus, TRP 1 labeled 1101_1 receives frame 1 labeled 3152_1 and obtains data.

As described above, an uplink modulation signal and a downlink modulation signal are present at the same frequency and in the same time. TRP 1 labeled 1101_1 thus has time to perform transmission and reception simultaneously at the same frequency. Moreover, NR-UE 1 labeled 1100_1 has time to perform transmission and reception simultaneously at the same frequency.

Incidentally, "frame 1 labeled 3151_1" and "frame 1 labeled 3152_1" may be overlapped in any manner as long as there is an entirely overlapping time or a partly overlapping time.

In a situation where URLLC described in Embodiment 3 is performed, TRP 1 labeled 1101_1 transmits the first data group with frame 1 labeled 3151_1, and TRP 2 labeled 1101_2 transmits the first data group also with frame 2 labeled 3151_2. Incidentally, between "frame 1 labeled 3151_1" and "frame 2 labeled 3151_2," there may be or need not be a time when all or part of them overlap. Further, "frame 1 labeled 3151_1" and "frame 1 labeled 3152_1" may be overlapped in any manner as long as there is an entirely overlapping time or a partly overlapping time.

However, data other than the first data group may be present in "frame 1 labeled 3151_1" and data other than the first data group may be present in "frame 2 labeled 3151_2."

FIG. 32D1 illustrates exemplary usage statuses of frequencies when TRP 1 labeled 1101_1, TRP 2 labeled 1101_2, and NR-UE 1 labeled 1100_1 perform the communication as illustrated in FIG. 32A. Note that, in FIG. 32D1, a horizontal axis represents frequency.

As illustrated in FIG. 32D1, TRP 1 labeled 1101_1 uses first frequency (band) 3190_1 for "reception of an uplink modulation signal." In addition, as illustrated in FIG. 32D1, TRP 1 labeled 1101_1 uses second frequency (band) 3190_2 to perform the "transmission of the downlink modulation signal."

TRP 2 labeled 1101_2 uses first frequency (band) 3190_1 to perform the "transmission of the downlink modulation signal."

NR-UE 1 labeled 1100_1 uses first frequency (band) 3190_1 for "reception of a downlink modulation signal and transmission of an uplink modulation signal." Further, NR-UE 1 labeled 1100_1 uses second frequency (band) 3190_2 for the "reception of the downlink modulation signal."

Incidentally, a case has been described where TRP 2 labeled 1101_2 and NR-UE 1 labeled 1100_1 use first frequency (band) 3190_1, but at this time, the frequency used by TRP 2 labeled 1101_2 in communication and the frequency used by NR-UE 1 labeled 1100_1 in communication may be partly the same frequency (band).

FIG. 32D2 illustrates exemplary communication statuses in time when TRP 1 labeled 1101_1, TRP 2 labeled 1101_2, and NR-UE 1 labeled 1100_1 perform communication as illustrated in FIG. 32A and FIG. 32D1. Note that, in FIG. 32D2, a horizontal axis represents time.

As illustrated in the FIG. 32D2, TRP 1 labeled 1101_1 transmits frame 1 labeled 3151_1 (addressed to NR-UE 1 labeled 1100_1) in the first time using second frequency (band) 3190_2. Thus, NR-UE 1 labeled 1100_1 receives frame 1 labeled 3151_1 and obtains data. Meanwhile, TRP 2 labeled 1101_2 transmits frame 2 labeled 3151_2 (addressed to NR-UE 1 labeled 1100_1) in the first time using first frequency (band) 3190_1. Thus, NR-UE 1 labeled 1100_1 receives frame 2 labeled 3151_2 and obtains data.

NR-UE 1 labeled 1100_1 then transmits frame 1 labeled 3152_1 (addressed to TRP 1 labeled 1101_1) in the first time using first frequency (band) 3190_1. At this time, TRP 1 labeled 1101_1 receives frame 1 labeled 3152_1 and obtains data.

As described above, an uplink modulation signal and a downlink modulation signal are present at the same frequency and in the same time. NR-UE 1 labeled 1100_1 thus has time to perform transmission and reception simultaneously at the same frequency.

Incidentally, "frame 2 labeled 3151_2" and "frame 1 labeled 3152_1" may be overlapped in any manner as long as there is an entirely overlapping time or a partly overlapping time.

In a situation where URLLC described in Embodiment 3 is performed, TRP 1 labeled 1101_1 transmits the first data group with frame 1 labeled 3151_1, and TRP 2 labeled 1101_2 transmits the first data group also with frame 2 labeled 3151_2. Incidentally, between "frame 1 labeled 3151_1" and "frame 2 labeled 3151_2," there may be or need not be a time when all or part of them overlap. Further, "frame 2 labeled 3151_2" and "frame 1 labeled 3152_1" may be overlapped in any manner as long as there is an entirely overlapping time or a partly overlapping time.

However, data other than the first data group may be present in "frame 1 labeled 3151_1" and data other than the first data group may be present in "frame 2 labeled 3151_2."

FIG. 33A illustrates an example of communication between a TRP and an NR-UE in the present embodiment.

Note that the components that operate in the same manner as the components in FIG. 11A and FIG. 31A are denoted by the same reference numerals, and some descriptions thereof will be omitted.

TRP 2 labeled 1101_2 transmits modulation signal 3101_2 to NR-UE 1 labeled 1100_1 (it can be considered as downlink, accordingly.).

TRP 3 labeled 1101_3 transmits modulation signal 3101_3 to NR-UE 1 labeled 1100_1 (it can be considered as downlink, accordingly.).

NR-UE 1 labeled 1100_1 transmits modulation signal 3102_1 to TRP 1 labeled 1101_1 (it can be considered as uplink, accordingly.).

FIG. 33B1 illustrates exemplary usage statuses of frequencies when TRP 1 labeled 1101_1, TRP 2 labeled 1101_2, TRP 3 labeled 1101_3, and NR-UE 1 labeled 1100_1 perform the communication as illustrated in FIG. 33A. Note that, in FIG. 33B1, a horizontal axis represents frequency.

In FIG. 33B1, TRP 1 labeled 1101_1 uses first frequency (band) 3190_1 for "reception of an uplink modulation signal."

Meanwhile, TRP 2 labeled 1101_2 uses first frequency (band) 3190_1 for "transmission of a downlink modulation signal," and TRP 3 labeled 1101_3 uses first frequency (band) 3190_1 for the "transmission of the downlink modulation signal."

NR-UE 1 labeled 1100_1 uses first frequency (band) 3190_1 for "reception of a downlink modulation signal and transmission of an uplink modulation signal."

Incidentally, a case has been described where the frequency used by TRP 2 labeled 1101_2 in communication, the frequency used by TRP 3 labeled 1101_3 in communication, and the frequency used by NR-UE 1 labeled 1100_1 in communication are the same frequency (band), but the frequency used by TRP 2 labeled 1101_2 in communication, the frequency used by TRP 3 labeled 1101_3 in communication, and the frequency used by NR-UE 1 labeled 1100_1 in communication may be partly the same frequency (band).

FIG. 33B2 illustrates exemplary communication statuses in time when TRP 1 labeled 1101_1, TRP 2 labeled 1101_2, TRP 3 labeled 1101_3, and NR-UE 1 labeled 1100_1 perform communication as illustrated in FIG. 33A and FIG. 33B1. Note that, in FIG. 33B2, a horizontal axis represents time.

As illustrated in the FIG. 33B2, TRP 2 labeled 1101_2 transmits frame 2 labeled 3151_2 (addressed to NR-UE 1 labeled 1100_1) in the first time using first frequency (band) 3190_1. Thus, NR-UE 1 labeled 1100_1 receives frame 2 labeled 3151_2 and obtains data.

Meanwhile, TRP 3 labeled 1101_3 transmits frame 3 labeled 3151_3 (addressed to NR-UE 1 labeled 1100_1) in the first time using first frequency (band) 3190_1. Thus, NR-UE 1 labeled 1100_1 receives frame 3 labeled 3151_3 and obtains data.

NR-UE 1 labeled 1100_1 then transmits frame 1 labeled 3152_1 (addressed to TRP 1 labeled 1101_1) in the first time using first frequency (band) 3190_1. Thus, TRP 1 labeled 1101_1 receives frame 1 labeled 3152_1 and obtains data

As described above, an uplink modulation signal and a downlink modulation signal are present at the same frequency and in the same time. NR-UE 1 labeled 1100_1 thus has time to perform transmission and reception simultaneously at the same frequency.

Incidentally, "frame 2 labeled 3151_2," "frame 3 labeled 3151_3," and "frame 1 labeled 3152_1" may be overlapped in any manner as long as there is an entirely overlapping time or a partly overlapping time.

For example, TRP 2 labeled 1101_2 and TRP 3 labeled 1101_3 perform transmit beamforming. NR-UE 1 labeled 1100_1 then performs receive beamforming to receive frame 2 labeled 3151_2 transmitted by TRP 2 labeled 1101_2 and frame 3 labeled 3151_3 transmitted by TRP 3 labeled 1101_3. At this time, the possibility of interference between a transmission beam of TRP 2 labeled 1101_2, a transmission beam of TRP 3 labeled 1101_3, and a transmission beam of NR-UE 1 labeled 1100_1 can be reduced, which brings about an effect of improving the reception quality of data in NR-UE 1 labeled 1100_1 and the reception quality of data in TRP 1 labeled 1101_1.

In a situation where URLLC described in Embodiment 3 is performed, TRP 2 labeled 1101_2 transmits the first data group with frame 2 labeled 3151_2, and TRP 3 labeled 1101_3 transmits the first data group also with frame 3 labeled 3151_3. Incidentally, "frame 1 labeled 3151_1" and "frame 2 labeled 3152_2" may be overlapped in any manner as long as there is an entirely overlapping time or a partly overlapping time. Further, "frame 3 labeled 3151_3" and "frame 1 labeled 3152_1" may be overlapped in any manner as long as there is an entirely overlapping time or a partly overlapping time.

However, data other than the first data group may be present in "frame 2 labeled 3151_2" and data other than the first data group may be present in "frame 3 labeled 3151_3."

FIG. 33C1 illustrates exemplary usage statuses of frequencies when TRP 1 labeled 1101_1, TRP 2 labeled 1101_2, TRP 3 labeled 1101_3, and NR-UE 1 labeled 1100_1 perform the communication as illustrated in FIG. 33A. Note that, in FIG. 33C1, a horizontal axis represents frequency.

As illustrated in the FIG. 33C1, TRP 1 labeled 1101_1 uses first frequency (band) 3190_1 for "reception of an uplink modulation signal."

Meanwhile, TRP 2 labeled 1101_2 uses first frequency (band) 3190_1 to perform "transmission of a downlink modulation signal." Further, TRP 3 labeled 1101_3 uses second frequency (band) 3190_2 to perform the "transmission of the downlink modulation signal."

NR-UE 1 labeled 1100_1 uses first frequency (band) 3190_1 for "reception of a downlink modulation signal and transmission of an uplink modulation signal."

Incidentally, a case has been described where TRP 2 labeled 1101_2 and NR-UE 1 labeled 1100_1 use first frequency (band) 3190_1, but at this time, the frequency used by TRP 2 labeled 1101_2 in communication and the frequency used by NR-UE 1 labeled 1100_1 in communication may be partly the same frequency (band).

FIG. 33C2 illustrates exemplary communication statuses in time when TRP 1 labeled 1101_1, TRP 2 labeled 1101_2, TRP 3 labeled 1101_3, and NR-UE 1 labeled 1100_1 perform communication as illustrated in FIG. 33A and FIG. 33C1. Note that, in FIG. 33C2, a horizontal axis represents time.

As illustrated in the FIG. 33C2, TRP 2 labeled 1101_2 transmits frame 2 labeled 3151_2 (addressed to NR-UE 1 labeled 1100_1) in the first time using first frequency (band) 3190_1. Thus, NR-UE 1 labeled 1100_1 receives frame 2 labeled 3151_2 and obtains data.

Meanwhile, TRP 3 labeled 1101_3 transmits frame 3 labeled 3151_3 (addressed to NR-UE 1 labeled 1100_1) in the first time using second frequency (band) 3190_2. Thus, NR-UE 1 labeled 1100_1 receives frame 3 labeled 3151_3 and obtains data.

NR-UE 1 labeled 1100_1 then transmits frame 1 labeled 3152_1 (addressed to TRP 1 labeled 1101_1) in the first time using first frequency (band) 3190_1. Thus, TRP 1 labeled 1101_1 receives frame 1 labeled 3152_1 and obtains data.

As described above, an uplink modulation signal and a downlink modulation signal are present at the same frequency and in the same time. NR-UE 1 labeled 1100_1 thus has time to perform transmission and reception simultaneously at the same frequency.

Incidentally, "frame 2 labeled 3151_2" and "frame 1 labeled 3152_1" may be overlapped in any manner as long as there is an entirely overlapping time or a partly overlapping time.

For example, TRP 2 labeled 1101_2 and TRP 3 labeled 1101_3 perform transmit beamforming. NR-UE 1 labeled 1100_1 then performs receive beamforming to receive frame 2 labeled 3151_2 transmitted by TRP 2 labeled 1101_2 and frame 3 labeled 3151_3 transmitted by TRP 3 labeled 1101_3. At this time, the possibility of interference between a transmission beam of TRP 2 labeled 1101_2, a transmission beam of TRP 3 labeled 1101_3, and a transmission beam of NR-UE 1 labeled 1100_1 can be reduced, which brings about an effect of improving the reception quality of data in NR-UE 1 labeled 1100_1 and the reception quality of data in TRP 1 labeled 1101_1.

In a situation where URLLC described in Embodiment 3 is performed, TRP 2 labeled 1101_2 transmits the first data group with frame 2 labeled 3151_2, and TRP 3 labeled 1101_3 transmits the first data group also with frame 3 labeled 3151_3. Incidentally, between "frame 2 labeled 3151_2" and "frame 3 labeled 3151_3," there may be or need not be a time when all or part of them overlap. Further, "frame 2 labeled 3151_2" and "frame 3 labeled 3151_3" may be overlapped in any manner as long as there is an entirely overlapping time or a partly overlapping time.

However, data other than the first data group may be present in "frame 2 labeled 3151_2" and data other than the first data group may be present in "frame 3 labeled 3151_3."

FIG. 34A illustrates an example of communication between a TRP and an NR-UE in the present embodiment. Note that the components that operate in the same manner as the components in FIG. 11A are denoted by the same reference numerals, and some descriptions thereof will be omitted.

TRP 1 labeled 1101_1 transmits modulation signal 3401_1_1 to NR-UE 1 labeled 1100_1 (it can be considered as downlink, accordingly.).

NR-UE 1 labeled 1100_1 transmits modulation signal 3402_1 and modulation signal 3402_2 to TRP 1 labeled 1101_1 (it can be considered as uplink, accordingly.).

FIG. 34B1 illustrates exemplary usage statuses of frequencies when TRP 1 labeled 1101_1 and NR-UE 1 labeled 1100_1 perform the communication as illustrated in FIG. 34A. Note that, in FIG. 34B1, a horizontal axis represents frequency.

As illustrated in FIG. 34B1, TRP 1 labeled 1101_1 uses first frequency (band) 3490_1 for "transmission of a downlink modulation signal and reception of an uplink modulation signal," and NR-UE 1 labeled 1100_1 uses first frequency (band) 3490_1 for "reception of the downlink modulation signal and transmission of the uplink modulation signal."

Incidentally, a case has been described where the frequency used by TRP 1 labeled 1101_1 in communication and the frequency used by NR-UE 1 labeled 1100_1 in communication are the same frequency (band), but the frequency used by TRP 1 labeled 1101_1 in communication and the frequency used by NR-UE 1 labeled 1100_1 in communication may be partly the same frequency (band).

FIG. 34B2 illustrates exemplary communication statuses in time when TRP 1 labeled 1101_1 and NR-UE 1 labeled 1100_1 perform communication as illustrated in FIG. 34A and FIG. 34B1. Note that, in FIG. 34B2, a horizontal axis represents time.

As illustrated in the FIG. 34B2, TRP 1 labeled 1101_1 transmits frame 1 labeled 3451_1 (addressed to NR-UE 1 labeled 1100_1) in the first time using first frequency (band) 3490_1. Thus, NR-UE 1 labeled 1100_1 receives frame 1 labeled 3451_1 and obtains data.

NR-UE 1 labeled 1100_1 then transmits frame 1 labeled 3452_1 (addressed to TRP 1 labeled 1101_1) in the first time using first frequency (band) 3490_1. Thus, TRP 1 labeled 1101_1 receives frame 1 labeled 3452_1 and obtains data. Further, NR-UE 1 labeled 1100_1 transmits frame 2 labeled 3452_2 (addressed to TRP 1 labeled 1101_1) in the first time using first frequency (band) 3490_1. Thus, TRP 1 labeled 1101_1 receives frame 2 labeled 3452_2 and obtains data.

As described above, an uplink modulation signal and a downlink modulation signal are present at the same frequency and in the same time. TRP 1 labeled 1101_1 thus has time to perform transmission and reception simultaneously at the same frequency. Moreover, NR-UE 1 labeled 1100_1 has time to perform transmission and reception simultaneously at the same frequency.

Incidentally, "frame 1 labeled 3451_1," "frame 1 labeled 3452_1," and "frame 2 labeled 3452_2" may be overlapped in any manner as long as there is an entirely overlapping time or a partly overlapping time.

In a situation where URLLC described in Embodiment 3 is performed, when NR-UE 1 labeled 1100_1 transmits the first data group with frame 1 labeled 3452_1, the NR-UE transmits the first data group also with frame 2 labeled 3452_2.

However, data other than the first data group may be present in "frame 1 labeled 3452_1" and data other than the first data group may be present in "frame 2 labeled 3452_2."

FIG. 34C1 illustrates exemplary usage statuses of frequencies when TRP 1 labeled 1101_1 and NR-UE 1 labeled 1100_1 perform the communication as illustrated in FIG. 34A. Note that, in FIG. 34C1, a horizontal axis represents frequency.

As illustrated in FIG. 34C1, TRP 1 labeled 1101_1 uses first frequency (band) 3490_1 for "transmission of a downlink modulation signal and reception of an uplink modulation signal," and uses second frequency (band) 3490_2 for "reception of the uplink modulation signal."

NR-UE 1 labeled 1100_1 uses first frequency (band) 3490_1 for "reception of a downlink modulation signal and transmission of an uplink modulation signal." Further, NR-UE 1 labeled 1100_1 uses second frequency (band) 3490_2 to perform the "transmission of the uplink modulation signal."

Incidentally, a case has been described where TRP 1 labeled 1101_1 and NR-UE 1 labeled 1100_1 use first frequency (band) 3490_1, but at this time, the frequency used by TRP 1 labeled 1101_1 in communication and the frequency used by NR-UE 1 labeled 1100_1 in communication may be partly the same frequency (band).

FIG. 34C2 illustrates exemplary communication statuses in time when TRP 1 labeled 1101_1 and NR-UE 1 labeled 1100_1 perform communication as illustrated in FIG. 34A and FIG. 34C1. Note that, in FIG. 34C2, a horizontal axis represents time.

As illustrated in the FIG. 34C2, TRP 1 labeled 1101_1 transmits frame 1 labeled 3451_1 (addressed to NR-UE 1 labeled 1100_1) in the first time using first frequency (band) 3490_1. Thus, NR-UE 1 labeled 1100_1 receives frame 1 labeled 3451_1 and obtains data.

NR-UE 1 labeled 1100_1 transmits frame 1 labeled 3452_1 (addressed to TRP 1 labeled 1101_1) in the first time using first frequency (band) 3490_1. Thus, TRP 1 labeled 1101_1 receives frame 1 labeled 3452_1 and obtains data. Further, NR-UE 1 labeled 1100_1 transmits frame 2 labeled 3452_2 (addressed to TRP 1 labeled 1101_1) in the first time using second frequency (band) 3490_2. Thus, TRP 1 labeled 1101_1 receives frame 2 labeled 3452_2 and obtains data.

As described above, an uplink modulation signal and a downlink modulation signal are present at the same frequency and in the same time. TRP 1 labeled 1101_1 thus has time to perform transmission and reception simultaneously at the same frequency. Moreover, NR-UE 1 labeled 1100_1 has time to perform transmission and reception simultaneously at the same frequency.

Incidentally, "frame 1 labeled 3451_1" and "frame 1 labeled 3452_1" may be overlapped in any manner as long as there is an entirely overlapping time or a partly overlapping time.

In a situation where URLLC described in Embodiment 3 is performed, when NR-UE 1 labeled 1100_1 transmits the first data group with frame 1 labeled 3452_1, the NR-UE transmits the first data group also with frame 2 labeled 3452_2. Between "frame 1 labeled 3452_1" and "frame 2 labeled 3452_2," there may be or need not be a time when all or part of them overlap.

However, data other than the first data group may be present in "frame 1 labeled 3452_1" and data other than the first data group may be present in "frame 2 labeled 3452_2."

FIG. 35A illustrates an example of communication between a TRP and an NR-UE in the present embodiment. Note that the components that operate in the same manner as the components in FIG. 11A and FIG. 34A are denoted by the same reference numerals, and some descriptions thereof will be omitted.

TRP 1 labeled 1101_1 transmits modulation signal 3401_1 to NR-UE 1 labeled 1100_1 (it can be considered as downlink, accordingly.).

NR-UE 1 labeled 1100_1 transmits modulation signal 3402_1 to TRP 1 labeled 1101_1 (it can be considered as uplink, accordingly.).

Further, NR-UE 1 labeled 1100_1 transmits modulation signal 3402_2 to TRP 2 labeled 1101_2 (it can be considered as uplink, accordingly.).

FIG. 35B1 illustrates exemplary usage statuses of frequencies when TRP 1 labeled 1101_1, TRP 2 labeled 1101_2, and NR-UE 1 labeled 1100_1 perform the communication as illustrated in FIG. 35A. Note that, in FIG. 35B1, a horizontal axis represents frequency.

As illustrated in FIG. 35B1, TRP 1 labeled 1101_1 uses first frequency (band) 3490_1 for "transmission of a downlink modulation signal and reception of an uplink modulation signal."

TRP 2 labeled 1101_2 uses first frequency (band) 3490_1 for the "reception of the uplink modulation signal."

NR-UE 1 labeled 1100_1 uses first frequency (band) 3490_1 for "reception of a downlink modulation signal and transmission of an uplink modulation signal."

Incidentally, a case has been described where the frequency used by TRP 1 labeled 1101_1 in communication and the frequency used by NR-UE 1 labeled 1100_1 in communication are the same frequency (band), but the frequency used by TRP 1 labeled 1101_1 in communication and the frequency used by NR-UE 1 labeled 1100_1 in communication may be partly the same frequency (band).

FIG. 35B2 illustrates exemplary communication statuses in time when TRP 1 labeled 1101_1, TRP 2 labeled 1101_2, and NR-UE 1 labeled 1100_1 perform communication as illustrated in FIG. 35A and FIG. 35B1. Note that, in FIG. 35B2, a horizontal axis represents time.

As illustrated in the FIG. 35B2, TRP 1 labeled 1101_1 transmits frame 1 labeled 3451_1 (addressed to NR-UE 1 labeled 1100_1) in the first time using first frequency (band) 3490_1. Thus, NR-UE 1 labeled 1100_1 receives frame 1 labeled 3451_1 and obtains data.

NR-UE 1 labeled 1100_1 then transmits frame 1 labeled 3452_1 (addressed to TRP 1 labeled 1101_1) in the first time using first frequency (band) 3490_1. Thus, TRP 1 labeled 1101_1 receives frame 1 labeled 3452_1 and obtains data. Further, NR-UE 1 labeled 1100_1 transmits frame 2 labeled 3452_2 (addressed to TRP 2 labeled 1101_2) in the first time using first frequency (band) 3490_1. Thus, TRP 2 labeled 1101_2 receives frame 2 labeled 3452_2 and obtains data.

As described above, an uplink modulation signal and a downlink modulation signal are present at the same frequency and in the same time. TRP 1 labeled 1101_1 thus has time to perform transmission and reception simultaneously at the same frequency. Moreover, NR-UE 1 labeled 1100_1 has time to perform transmission and reception simultaneously at the same frequency.

Incidentally, "frame 1 labeled 3451_1," "frame 1 labeled 3452_1," and "frame 2 labeled 3452_2" may be overlapped in any manner as long as there is an entirely overlapping time or a partly overlapping time.

For example, NR-UE 1 labeled 1100_1 performs transmit beamforming to form a first transmission beam and a second transmission beam. NR-UE 1 labeled 1100_1 then transmits "frame 1 labeled 3452_1 (addressed to TRP 1 labeled 1101_1)" using the first transmission beam and transmits "frame 2 labeled 3452_2 (addressed to TRP 2 labeled 1101_2)" using the second transmission beam. At this time, the possibility of interference between the first transmission beam and the second transmission beam, which brings about an effect of improving the reception quality of data in TRP 1 labeled 1101_1 and TRP 2 labeled 1101_2.

In a situation where URLLC described in Embodiment 3 is performed, when NR-UE 1 labeled 1100_1 transmits the first data group with frame 1 labeled 3452_1, the NR-UE transmits the first data group also with frame 2 labeled 3452_2. Incidentally, "frame 1 labeled 3451_1" and "frame 1 labeled 3452_1" may be overlapped in any manner as long as there is an entirely overlapping time or a partly overlapping time. Further, "frame 1 labeled 3451_1" and "frame 2 labeled 3452_2" may be overlapped in any manner as long as there is an entirely overlapping time or a partly overlapping time.

However, data other than the first data group may be present in "frame 1 labeled 3452_1" and data other than the first data group may be present in "frame 2 labeled 3452_2."

FIG. 35C1 illustrates exemplary usage statuses of frequencies when TRP 1 labeled 1101_1, TRP 2 labeled 1101_2, and NR-UE 1 labeled 1100_1 perform the communication as illustrated in FIG. 35A. Note that, in FIG. 35C1, a horizontal axis represents frequency.

As illustrated in FIG. 35C1, TRP 1 labeled 1101_1 uses first frequency (band) 3490_1 for "transmission of a downlink modulation signal and reception of an uplink modulation signal."

TRP 2 labeled 1101_2 uses second frequency (band) 3490_2 for "reception of an uplink modulation signal."

NR-UE 1 labeled 1100_1 uses first frequency (band) 3490_1 for "reception of a downlink modulation signal and transmission of an uplink modulation signal." Further, NR-UE 1 labeled 1100_1 uses second frequency (band) 3490_2 for the "transmission of the uplink modulation signal."

Incidentally, a case has been described where TRP 1 labeled 1101_1 and NR-UE 1 labeled 1100_1 use first frequency (band) 3490_1, but at this time, the frequency used by TRP 1 labeled 1101_1 in communication and the frequency used by NR-UE 1 labeled 1100_1 in communication may be partly the same frequency (band).

FIG. 35C2 illustrates exemplary communication statuses in time when TRP 1 labeled 1101_1, TRP 2 labeled 1101_2, and NR-UE 1 labeled 1100_1 perform communication as illustrated in FIG. 35A and FIG. 35C1. Note that, in FIG. 35C2, a horizontal axis represents time.

As illustrated in the FIG. 35C2, TRP 1 labeled 1101_1 transmits frame 1 labeled 3451_1 (addressed to NR-UE 1 labeled 1100_1) in the first time using first frequency (band) 3490_1. Thus, NR-UE 1 labeled 1100_1 receives frame 1 labeled 3451_1 and obtains data.

NR-UE 1 labeled 1100_1 then transmits frame 1 labeled 3452_1 (addressed to TRP 1 labeled 1101_1) in the first time using first frequency (band) 3490_1. Thus, TRP 1 labeled 1101_1 receives frame 1 labeled 3452_1 and obtains data. Further, NR-UE 1 labeled 1100_1 transmits frame 2 labeled 3452_2 (addressed to TRP 2 labeled 1101_2) in the first time using second frequency (band) 3490_2. Thus, TRP 2 labeled 1101_2 receives frame 2 labeled 3452_2 and obtains data.

As described above, an uplink modulation signal and a downlink modulation signal are present at the same frequency and in the same time. TRP 1 labeled 1101_1 thus has time to perform transmission and reception simultaneously at the same frequency. Moreover, NR-UE 1 labeled 1100_1 has time to perform transmission and reception simultaneously at the same frequency.

Incidentally, "frame 1 labeled 3451_1" and "frame 1 labeled 3452_1" may be overlapped in any manner as long as there is an entirely overlapping time or a partly overlapping time.

In a situation where URLLC described in Embodiment 3 is performed, when NR-UE 1 labeled 1100_1 transmits the first data group with frame 1 labeled 3452_1, the NR-UE transmits the first data group also with frame 2 labeled 3452_2. Between "frame 1 labeled 3452_1" and "frame 2 labeled 3452_2," there may be or need not be a time when all or part of them overlap.

However, data other than the first data group may be present in "frame 1 labeled 3452_1" and data other than the first data group may be present in "frame 2 labeled 3452_2."

FIG. 36A illustrates an example of communication between a TRP and an NR-UE in the present embodiment. Note that the components that operate in the same manner as the components in FIG. 11A and FIG. 34A are denoted by the same reference numerals, and some descriptions thereof will be omitted.

TRP 1 labeled 1101_1 transmits modulation signal 3401_1 to NR-UE 1 labeled 1100_1 (it can be considered as downlink, accordingly.).

Further, NR-UE 1 labeled 1100_1 transmits modulation signal 3402_2 to TRP 2 labeled 1101_2 (it can be considered as uplink, accordingly.).

NR-UE 1 labeled 1100_1 transmits modulation signal 3402_3 to TRP 3 labeled 1101_3 (it can be considered as uplink, accordingly.).

FIG. 36B1 illustrates exemplary usage statuses of frequencies when TRP 1 labeled 1101_1, TRP 2 labeled 1101_2, TRP 3 labeled 1101_3, and NR-UE 1 labeled 1100_1 perform the communication as illustrated in FIG. 36A. Note that, in FIG. 36B1, a horizontal axis represents frequency.

In FIG. 36B1, TRP 1 labeled 1101_1 uses first frequency (band) 3490_1 for "transmission of a downlink modulation signal."

TRP 2 labeled 1101_2 uses first frequency (band) 3490_1 for "reception of an uplink modulation signal," and TRP 3 labeled 1101_3 uses first frequency (band) 3490_1 for the "reception of the uplink modulation signal."

NR-UE 1 labeled 1100_1 uses first frequency (band) 3490_1 for "reception of a downlink modulation signal and transmission of an uplink modulation signal."

Incidentally, a case has been described where the frequency used by TRP 1 labeled 1101_1 in communication, the frequency used by TRP 2 labeled 1101_2 in communication, the frequency used by TRP 3 labeled 1101_3 in communication, and the frequency used by NR-UE 1 labeled 1100_1 in communication are the same frequency (band), but the frequency used by TRP 1 labeled 1101_1 in communication, the frequency used by TRP 2 labeled 1101_2 in communication, the frequency used by TRP 3 labeled 1101_3 in communication, and the frequency used by NR-UE 1 labeled 1100_1 in communication may be partly the same frequency (band).

FIG. 36B2 illustrates exemplary communication statuses in time when TRP 1 labeled 1101_1, TRP 2 labeled 1101_2, TRP 3 labeled 1101_3, and NR-UE 1 labeled 1100_1 perform communication as illustrated in FIG. 36A and FIG. 36B1. Note that, in FIG. 36B2, a horizontal axis represents time.

As illustrated in the FIG. 36B2, TRP 1 labeled 1101_1 transmits frame 1 labeled 3451_1 (addressed to NR-UE 1 labeled 1100_1) in the first time using first frequency (band) 3490_1. Thus, NR-UE 1 labeled 1100_1 receives frame 1 labeled 3451_1 and obtains data.

NR-UE 1 labeled 1100_1 then transmits frame 2 labeled 3452_2 (addressed to TRP 2 labeled 1101_2) in the first time using first frequency (band) 3490_1. Thus, TRP 2 labeled 1101_2 receives frame 2 labeled 3452_2 and obtains data. Further, NR-UE 1 labeled 1100_1 transmits frame 3 labeled 3452_3 (addressed to TRP 3 labeled 1101_3) in the first time using first frequency (band) 3490_1. Thus, TRP 3 labeled 1101_3 receives frame 3 labeled 3452_3 and obtains data.

As described above, an uplink modulation signal and a downlink modulation signal are present at the same frequency and in the same time. NR-UE 1 labeled 1100_1 thus has time to perform transmission and reception simultaneously at the same frequency.

Incidentally, "frame 1 labeled 3451_1," "frame 2 labeled 3452_2," and "frame 3 labeled 3452_3" may be overlapped in any manner as long as there is an entirely overlapping time or a partly overlapping time.

For example, NR-UE 1 labeled 1100_1 performs transmit beamforming to form a second transmission beam and a third transmission beam. NR-UE 1 labeled 1100_1 then transmits "frame 2 labeled 3452_2 (addressed to TRP 2 labeled 1101_2)" using the second transmission beam and transmits "frame 3 labeled 3452_3 (addressed to TRP 3 labeled 1101_3)" using the third transmission beam. At this time, the possibility of interference between the second transmission beam and the third transmission beam, which brings about an effect of improving the reception quality of data in TRP 2 labeled 1101_2 and TRP 3 labeled 1101_3.

Further, when NR-UE 1 labeled 1100_1 receives frame 1 labeled 3451_1 (addressed to NR-UE 1 labeled 1100_1), the interference between "frame 2 labeled 3452_2 (addressed to TRP 2 labeled 1101_2) and frame 3 labeled 3452_3 (addressed to TRP 3 labeled 1101_3)" is reduced, which brings about an effect of improving the reception quality of data in NR-UE 1 labeled 1100_1.

In a situation where URLLC described in Embodiment 3 is performed, when NR-UE 1 labeled 1100_1 transmits the first data group with frame 2 labeled 3452_2, the NR-UE transmits the first data group also with frame 3 labeled 3452_3. Between "frame 2 labeled 3452_2" and "frame 3 labeled 3452_3," there may be or need not be a time when all or part of them overlap.

However, data other than the first data group may be present in "frame 2 labeled 3452_2" and data other than the first data group may be present in "frame 3 labeled 3452_3."

FIG. 36C1 illustrates exemplary usage statuses of frequencies when TRP 1 labeled 1101_1, TRP 2 labeled 1101_2, TRP 3 labeled 1101_3, and NR-UE 1 labeled 1100_1 perform the communication as illustrated in FIG. 36A. Note that, in FIG. 36C1, a horizontal axis represents frequency.

In FIG. 36C1, TRP 1 labeled 1101_1 uses first frequency (band) 3490_1 for "transmission of a downlink modulation signal."

TRP 2 labeled 1101_2 uses first frequency (band) 3490_1 for "reception of an uplink modulation signal," and TRP 3 labeled 1101_3 uses second frequency (band) 3490_2 for the "reception of the uplink modulation signal."

NR-UE 1 labeled 1100_1 uses first frequency (band) 3490_1 for "reception of a downlink modulation signal and transmission of an uplink modulation signal." Further, NR-UE 1 labeled 1100_1 uses second frequency (band) 3490_2 for the "reception of the downlink modulation signal."

Incidentally, a case has been described where TRP 1 labeled 1101_1 and NR-UE 1 labeled 1100_1 use first frequency (band) 3490_1, but at this time, the frequency used by TRP 1 labeled 1101_1 in communication and the frequency used by NR-UE 1 labeled 1100_1 in communication may be partly the same frequency (band).

FIG. 36C2 illustrates exemplary communication statuses in time when TRP 1 labeled 1101_1, TRP 2 labeled 1101_2, TRP 3 labeled 1101_3, and NR-UE 1 labeled 1100_1 perform communication as illustrated in FIG. 36A and FIG. 36C1. Note that, in FIG. 36C2, a horizontal axis represents time.

As illustrated in the FIG. 36C2, TRP 1 labeled 1101_1 transmits frame 1 labeled 3451_1 (addressed to NR-UE 1 labeled 1100_1) in the first time using first frequency (band) 3490_1. Thus, NR-UE 1 labeled 1100_1 receives frame 1 labeled 3451_1 and obtains data.

NR-UE 1 labeled 1100_1 then transmits frame 2 labeled 3452_2 (addressed to TRP 2 labeled 1101_2) in the first time using first frequency (band) 3490_1. Thus, TRP 2 labeled 1101_2 receives frame 2 labeled 3452_2 and obtains data. Further, NR-UE 1 labeled 1100_1 transmits frame 3 labeled 3452_3 (addressed to TRP 3 labeled 1101_3) in the first time using second frequency (band) 3490_2. Thus, TRP 3 labeled 1101_3 receives frame 3 labeled 3452_3 and obtains data.

As described above, an uplink modulation signal and a downlink modulation signal are present at the same frequency and in the same time. NR-UE 1 labeled 1100_1 thus has time to perform transmission and reception simultaneously at the same frequency.

Incidentally, "frame 1 labeled 3451_1" and "frame 2 labeled 3452_2" may be overlapped in any manner as long as there is an entirely overlapping time or a partly overlapping time.

For example, NR-UE 1 labeled 1100_1 performs transmit beamforming to form a second transmission beam and a third transmission beam. NR-UE 1 labeled 1100_1 then transmits "frame 2 labeled 3452_2 (addressed to TRP 2 labeled 1101_2)" using the second transmission beam and transmits "frame 3 labeled 3452_3 (addressed to TRP 3 labeled 1101_3)" using the third transmission beam. At this time, the possibility of interference between the second transmission beam and the third transmission beam, which brings about an effect of improving the reception quality of data in TRP 2 labeled 1101_2 and TRP 3 labeled 1101_3.

Further, when NR-UE 1 labeled 1100_1 receives frame 1 labeled 3451_1 (addressed to NR-UE 1 labeled 1100_1), the interference between "frame 2 labeled 3452_2 (addressed to TRP 2 labeled 1101_2) and frame 3 labeled 3452_3 (addressed to TRP 3 labeled 1101_3)" is reduced, which brings about an effect of improving the reception quality of data in NR-UE 1 labeled 1100_1.

In a situation where URLLC described in Embodiment 3 is performed, when NR-UE 1 labeled 1100_1 transmits the first data group with frame 2 labeled 3452_2, the NR-UE transmits the first data group also with frame 3 labeled 3452_3. Between "frame 2 labeled 3452_2" and "frame 3 labeled 3452_3," there may be or need not be a time when all or part of them overlap.

However, data other than the first data group may be present in "frame 2 labeled 3452_2" and data other than the first data group may be present in "frame 3 labeled 3452_3."

In FIG. 31C1, FIG. 32C1, FIG. 32D1, and FIG. 33C1, the arrangement in the frequency axis of first frequency (band) 3190_1 and second frequency (band) 3190_2 is not limited to these examples. Therefore, first frequency (band) 3190_1 may be higher than second frequency (band) 3190_2, or first frequency (band) 3190_1 may be lower than second frequency (band) 3190_2.

In FIG. 34C1, FIG. 35C1, and FIG. 36C1, the arrangement in the frequency axis of first frequency (band) 3490_1 and second frequency (band) 3490_2 is not limited to these examples. Therefore, first frequency (band) 3490_1 may be higher than second frequency (band) 3490_2, or first frequency (band) 3490_1 may be lower than second frequency (band) 3490_2.

A modulation signal, a data group, a symbol group, and the like in the present embodiment may be included in any of UL-SCH, PUCCH, PUSCH, PRACH, and the like. In addition, a modulation signal, a data group, a symbol group, and the like in the present embodiment may be included in PCH, BCH, DL-SCH, BCCH, PCCH, CCCH, a common search space, PBCH, SS, PDCCH, PDSCH, and the like, without limitation to this.

In the present embodiment, a description has been given with reference to a TRP, but the same implementation is possible even when the TRP is replaced with any of "a base station, a repeater, an access point, a broadcast station, a gNodeB (gNB), an eNodeB (eNB), a node, a server, a satellite, a movable apparatus (e.g., electricity-based movable apparatus such as "electric vehicle, motor bike (e-bike), electric-powered vehicle, movable robot, electric-powered scooter, electric-assisted bicycle, and electric-assisted scooter," automobile, motorcycle, bicycle, vessel, aircraft, airplane), a terminal, a mobile phone, a smart phone, a tablet, a laptop, a personal computer, a home appliance (household electric appliance), an apparatus in a factory, communication equipment or broadcast equipment such as "Internet of Things (IoT) equipment, and the like." Accordingly, the TRP in the present embodiment may be referred to as "a base station, a repeater, an access point, a broadcast station, a gNB, an eNB, a node, a server, a satellite, a movable apparatus described above, a terminal, a mobile phone, a smart phone, a tablet, a laptop, a personal computer, a home appliance, an apparatus in a factory, communication equipment or broadcast equipment such as IoT equipment, and the like." The aforementioned points are the same in the present specification.

Further, in the present embodiment, a description has been given with reference to an NR-UE, but the same implementation is possible even when the NR-UE is replaced with any of "a TRP, a base station, a repeater, an access point, a broadcast station, a gNB, an eNB, a node, a server, a satellite, a movable apparatus described above, a terminal, a mobile phone, a smart phone, a tablet, a laptop, a personal computer, a home appliance, an apparatus in a factory, communication equipment or broadcast equipment such as IoT equipment, and the like." Accordingly, the NR-UE in the present embodiment may be referred to as "a TRP, a base station, a repeater, an access point, a broadcast station, a gNB, an eNB, a node, a server, a satellite, a movable apparatus described above, a terminal, a mobile phone, a smart phone, a tablet, a laptop, a personal computer, a home appliance, an apparatus in a factory, communication equipment or broadcast equipment such as IoT equipment, and the like." The aforementioned points are the same in the present specification.

FIG. 1A, FIG. 1B, FIG. 1C, FIG. 9, and FIG. 10 have been each given as, for example, an exemplary configuration of an apparatus such as a TRP or an NR-UE in the present embodiment, but configuration of the apparatus is not limited to these examples. An apparatus having a configuration to perform transmit beamforming and receive beamforming has been described, but the present embodiment can be implemented even by an apparatus configured not to have the configuration to perform the transmit beamforming and the receive beamforming. The aforementioned points are the same in the present specification.

In some cases, it is possible for an apparatus to obtain an effect of self-interference cancellation by performing the transmit beamforming and the receive beamforming. Additionally, without performing the beamforming, the self-interference cancellation may be achieved using a method of being provided with a function of performing the self-interference cancellation.

Further, for example, when an apparatus such as a TRP or an NR-UE transmits a modulation signal, one or more, or two or more modulation signals may be transmitted using one or more, or two or more transmission antennas. The aforementioned points are the same in the present specification.

In an exemplary radio communication system in the embodiment, the number of TRPs present in the radio system is two or three, but the implementation is possible with at least one TRP, or two or more TRPs.

In the present embodiment, a case has been described where a plurality of TRPs is present in a radio system. At this time, the plurality of TRPs may communicate with each other to share information or to control each other. Further, an apparatus that controls the plurality of TRPs may be present in the system. The aforementioned points are the same in the present specification.

(Supplement 1)

The embodiments described in the present specification may be implemented while combined with each other or combined with other contents.

Further, the embodiments and other contents are examples. For example, even though the "modulation scheme, error correction coding scheme (error correction code, code length, coding rate, and the like for use), control information, and the like" are illustrated as the examples, it is possible to implement the embodiments with a similar configuration even when a "modulation scheme, error correction coding scheme (error correction code, code length, coding rate, and the like for use), control information, and the like" different from those in the examples are applied.

Regarding the modulation scheme, the embodiments and other contents described in the present specification can be implemented also by using modulation schemes other than the modulation schemes described in the present specification. For example, amplitude phase shift keying (APSK) (e.g., 16APSK, 64APSK, 128APSK, 256APSK, 1024APSK, 4096APSK), pulse amplitude modulation (PAM) (e.g., 4PAM, 8PAM, 16PAM, 64PAM, 128PAM, 256PAM, 1024PAM, 4096PAM), phase shift keying (PSK) (e.g., BPSK, QPSK, 8PSK, 16PSK, 64PSK, 128PSK, 256PSK, 1024PSK, 4096PSK), quadrature amplitude modulation (QAM) (e.g., 4QAM, 8QAM, 16QAM, 64QAM, 128QAM, 256QAM, 1024QAM, 4096QAM), or the like may be applied, or uniform mapping and non-uniform mapping may be applied for each of the modulation schemes. The number of signal points in in-phase (I)-quadrature (phase) (Q) is not limited to those in the examples above, and may be an integer equal to or greater than 3.

In addition, the method of arranging signal points (e.g., 2, 4, 8, 16, 64, 128, 256, or 1024 signal points) on the I-Q plane (modulation scheme with 2, 4, 8, 16, 64, 128, 256, 1024, or other numbers of signal points) is not particularly limited to the signal point arrangement methods of the modulation schemes described in the present specification. Thus, the function of outputting an in-phase component and a quadrature component based on a plurality of bits is a function in a mapper, and performing a matrix operation (e.g., precoding) to perform MIMO transmission and phase changing for a baseband signal after the outputting function is one of the effective functions of the present disclosure.

In addition, when "∀" and "∃" are present in the present specification, "∀" represents a universal quantifier, and "∃" represents an existential quantifier.

Further, when the present specification describes a complex plane, the unit of phase, such as, e.g., an argument, is "radian."

The use of the complex plane allows representation of complex numbers in polar form as a representation of the complex numbers using polar coordinates. Letting a point (a, b) on the complex plane correspond to a complex number z = a + jb (where both of "a" and "b" are real numbers and "j" is an imaginary unit), when this point is expressed as [r, θ] with the polar coordinates, a = r × cosθ and b = r × sinθ, and the following Equation hold true:

$$r = \sqrt{a^2 + b^2} \qquad \text{... (Equation 11).}$$

The character "r" is the absolute value of z (r = |z|) and θ is the argument. Then, z = a + jb is expressed as r × $e^{j\theta}$.

In the present specification, the "gNB, NR-UE, terminal, base station, access point, gateway, etc." may each have a configuration in which a reception apparatus and an antenna of which are separate from each other. For example, the reception apparatus includes an interface for inputting, through a cable, a signal received by the antenna or a signal received by the antenna and subjected to frequency conversion, and the reception apparatus performs subsequent processing. Further, the data and information obtained by the reception apparatus are then converted into a video and sound, and displayed on a display (monitor), or outputted from a speaker in the case of sound. Further, the data and information obtained by the reception apparatus may be subjected to signal processing relevant to the video and sound (such signal processing does not have to be performed), and outputted from an RCA terminal (a video terminal and a sound terminal), universal serial bus (USB), high-definition multimedia interface (HDMI) (registered trademark), digital terminal, or the like provided in the reception apparatus.

It is contemplated that the transmission apparatus and/or transmitter in the present specification is included in, for example, communication equipment/broadcasting equipment such as a broadcasting station, base station, access point, terminal, mobile phone, smartphone, tablet, laptop PC, server, PC, personal computer, television, home appliance (household electrical machinery equipment), factory apparatus, and Internet of Things (IoT) equipment or the like, g Node B (gNB), repeater, node, vehicle, bicycle, motorcycle, ship, satellite, airplane, drone, mobile equipment, robot, transmission (Tx)/reception (Rx) point (TRP), or NR-UE. Meanwhile, it is contemplated that the reception apparatus and/or receiver is included in, for example, communication equipment such as a radio, terminal, personal computer, mobile phone, access point, and base station, communication equipment/broadcasting equipment such as a smartphone, tablet, laptop PC, server, PC, personal computer, television, home appliance (household electrical machinery equipment), factory apparatus, and Internet of Things (IoT) equipment or the like, g Node B (gNB), repeater, node, vehicle, bicycle, motorcycle, ship, satellite, airplane, drone, mobile equipment, robot, transmission (Tx)/reception (Rx) point (TRP), or NR-UE. Further, it is considered that the transmission apparatus and the reception apparatus in the present disclosure are devices having a communication function, and the devices are configured to be capable of connecting via a certain interface to an apparatus for executing an application of a television, a radio, a personal computer, a mobile phone, or the like. Further, it is considered that the communication apparatus in the present specification is included in, for example, communication equipment/broadcasting equipment such as a broadcasting station, base station, access point, terminal, mobile phone, smartphone, tablet, laptop PC, server, PC, personal computer, television, home appliance (household electrical machinery equipment), factory apparatus, and Internet of Things (IoT) equipment or the like, g Node B (gNB), repeater, node, vehicle, bicycle, motorcycle, ship, satellite, airplane, drone, mobile equipment, robot, transmission (Tx)/reception (Rx) point (TRP), or NR-UE.

In addition, symbols other than a data symbol (for example, a reference signal (preamble, unique word, postamble, reference symbol, pilot symbol, pilot signal, and the like), a control information symbol, a sector sweep, etc.) may be mapped in any manner in a frame in the present embodiments. Although the present specification uses the terms "reference signal," "control information symbol," and "sector sweep," the important part is the function itself. The sector sweep may be replaced by a sector-level sweep, for example.

It is contemplated that the reference signal and/or a signal relevant to sector sweep are, for example, known symbols modulated using PSK modulation by the transmitter and receiver (alternatively, the receiver may be capable of knowing a symbol transmitted by the transmitter by synchronization by the receiver), non-zero power signals, zero power signals, signals known to the transmitter and receiver, or the like. The receiver performs, using these signals, frequency synchronization, time synchronization, channel estimation (estimation of channel state information (CSI)) (for each modulation signal), signal detection, estimation of a reception state, estimation of a transmission state, or the like.

Further, the control information symbol is also a symbol for transmitting information (e.g., a modulation scheme, an error correction coding scheme, and a coding rate of the error correction coding scheme; configuration information in a higher layer; a modulation and coding scheme (MCS); a frame configuration; channel information; information on a using frequency band; information on the number of using channels; and the like used for communication) that needs to be transmitted to a communication counterpart to achieve communication (of an application or the like) other than data communication.

The transmission apparatus and/or reception apparatus sometimes need to be notified of a transmission method (MIMO, single-input single-output (SISO), multiple-input single-output (MISO), single-input multiple-output (SIMO), space-time block code, interleaving scheme, MCS, etc.), modulation scheme, and error correction coding scheme. This description may be omitted in some of the embodiments.

The terms such as "precoding," "precoding weight," etc. are sometimes used in the present specification, but they may be called in any manner and the important part is the signal processing itself in the present disclosure.

Although the MIMO transmission has been described in the present specification, a variation of the MIMO transmission may include a method of transmitting a plurality of symbols using a plurality of antennas by sharing some frequencies in the same time.

Regarding both the transmission panel antenna of the transmission apparatus and the reception panel antenna of the reception apparatus, a single antenna illustrated in the drawings may be composed of one antenna or a plurality of antennas.

Further, in the explanation of the embodiments and the like, the transmission panel antenna and the reception panel antenna may be described separately; however, a configuration of "transmission/reception panel antenna" serving as both of the transmission panel antenna and the reception panel antenna may be used.

In addition, the transmission panel antenna, reception panel antenna, and transmission/reception panel antenna may be referred to, for example, as an antenna port. The transmission panel antenna, reception panel antenna, and transmission/reception panel antenna may be referred to as another name, and a method of configuring the transmission panel antenna with one or more antennas or a plurality of antennas is conceivable. Additionally, a method of configuring the reception panel antenna with one or more antennas or a plurality of antennas is conceivable. Also, a method of configuring the transmission/reception panel antenna with one or more antennas or a plurality of antennas is conceivable. Further, an apparatus may be configured for each transmission panel antenna, an apparatus may be configured for each reception panel antenna, and an apparatus may be configured for each transmission/reception panel antenna. That is, it may be regarded as a multiple transmitter (TX)/receiver (RX) point (TRP) (multi TRP).

The antenna port may be a logical antenna (antenna group) composed of one or more physical antennas. That is, the antenna port does not necessarily refer to one physical antenna, but may refer to an array antenna or the like composed of a plurality of antennas. For example, the number of physical antennas composing the antenna port is not specified, but the number of physical antennas may be specified as the minimum unit in which a terminal station is capable of transmitting a reference signal. Further, the antenna port may also be specified as a unit or a minimum unit for multiplication by a precoding vector or a weight of a precoding matrix.

There are a plurality of methods of generating a modulation signal by a single-carrier scheme in the present specification, and the present embodiments can be implemented by using any of the schemes. For example, examples of the single-carrier scheme include "discrete Fourier transform (DFT)-spread orthogonal frequency division multiplexing (OFDM)" (DFT-S OFDM), "trajectory constrained DFT-spread OFDM," "constrained DFT-spread OFDM" (constrained DFT-S OFDM), "OFDM based single carrier (SC)," "single carrier (SC)-frequency division multiple access (FDMA)," "guard interval DFT-spread OFDM," a time-domain implementation single carrier scheme (e.g., single carrier (SC)-QAM), and the like.

It has been indicated above that the waveforms of the modulation signal transmitted by the communication apparatus herein may be either the single-carrier scheme or the multi-carrier scheme such as OFDM. In a case of using the multi-carrier scheme such as OFDM, a frame also includes a symbol on the frequency axis.

The configurations of the transmission panel antenna and the reception panel antenna of the communication apparatus in the present disclosure are not limited to the configurations in FIGS. 3 and 4. The transmission panel antenna and the reception panel antenna may be composed of one or more antennas and/or antenna elements and may be composed of two or more antennas and/or antenna elements.

Additionally, the antennas illustrated in FIGS. 3 and 4 may be composed of one or more antennas and/or antenna elements or may be composed of two or more antennas and/or antenna elements.

In the present specification, the embodiments have been described using OFDM as an example of multi-carrier schemes, but the embodiments in the present specification can be similarly implemented using another multi-carrier scheme.

By way of example, multi-carrier transmission may be implemented by assigning a "single-carrier scheme using a single frequency band" and assigning a "single-carrier scheme using one or more frequency bands" to the frequency band described in the present specification.

As another example, multi-carrier transmission may be implemented by assigning one or more carriers or two or more carriers to the frequency band described in the present specification. Note that the multi-carrier transmission scheme is not limited to the above examples.

Note that, in the present specification, "sections of describing configurations and operations of a base station or a gNB" may be considered as "configurations and operations of a terminal, an NR-UE, an AP, or a repeater." Likewise, "sections of describing configurations and operations of a terminal or an NR-UE" may be considered as "configurations and operations of a base station, a gNB, an AP, or a repeater."

In the present specification, a server may provide an application related to processing relevant to the reception apparatus and the receiver, and the terminal may implement the functions of the reception apparatus described in the present specification by installing this application. Note that the application may be provided to the terminal by connection of a communication apparatus including the transmission apparatus described in the present specification to the server via a network, or the application may be provided to the terminal by connection of a communication apparatus having another transmission function to the server via the network.

Likewise, in the present specification, a server may provide an application related to processing relevant to the transmission apparatus and the transmitter, and the communication apparatus may implement the functions of the transmission apparatus described in the present specification by installing this application. Note that a method can be envisaged in which this communication apparatus is provided with the application by connection of another communication apparatus to the server via the network.

Note that the present disclosure is not limited to the embodiments and can be implemented with various modifications. For example, the embodiments are performed by a communication apparatus in the description, but the present invention is not limited to this and the communication methods can be realized by software.

In addition, a program for performing the above communication methods may be stored in read only memory (ROM) in advance, for example, and the program may be executed by a central processor unit (CPU).

Further, a program for performing the communication method may be stored in a computer-readable storage medium, and the program stored in the storage medium may be recorded in a random access memory (RAM) of the computer so that the computer operates according to the program.

Each configuration in the each of the embodiments described above can be typically realized by a large scale integration (LSI), which is an integrated circuit. The LSI may be individually formed as chips, or one chip may be formed so as to include a part or all of the configurations in each embodiment. The LSI here may be referred to as an integrated circuit (IC), a system LSI, a super LSI, or an ultra LSI depending on a difference in the degree of integration. In addition, the technique of implementing an integrated circuit is not limited to the LSI and may be realized by using a dedicated circuit or a general-purpose processor. A field programmable gate array (FPGA) that can be programmed after the manufacture of the LSI or a reconfigurable processor in which the connections and the settings of circuit cells disposed inside the LSI can be reconfigured may be used.

Note that at least one of the FPGA and the CPU may be configured to download all or some of software required for implementing the communication methods described in the present disclosure by radio communication or wired communication. Further, at least one of the FPGA and the CPU may be configured to download all or some of software for updating by radio communication or wired communication. Then, the downloaded software may be stored in storage, and at least one of the FPGA and the CPU may be operated based on the stored software to execute the digital signal processing described in the present disclosure.

The device including at least one of the FPGA and the CPU may be connected to a communication modem by radio or wire, and the communication methods described in the present disclosure may be implemented by the device and the communication modem.

For example, a communication apparatus such as the base station, AP, and terminal described in the present specification may include at least one of the FPGA and the CPU, and the communication apparatus may include an interface for externally obtaining software for operating at least one of the FPGA and the CPU. Further, the communication apparatus may include storage for storing the externally-obtained software, and the FPGA and/or the CPU may be operated based on the stored software to implement the signal processing described in the present disclosure.

If future integrated circuit technology replaces LSIs as a result of the advancement of semiconductor technology or other derivative technology, the functional blocks could be integrated using the future integrated circuit technology. Biotechnology can also be applied.

The present disclosure is widely applicable to radio systems for transmitting different modulation signals from a plurality of antennas, respectively. It is also applicable to the case of using MIMO transmission in wired communication systems with a plurality of transmission points (e.g., power line communication (PLC) system, optical communication system, and digital subscriber line (DSL) system). The communication apparatus may be referred to as a radio apparatus.

The "data," "data symbol," and "data frame" may be, for example, a physical downlink shared channel (PDSCH) or a physical uplink shared channel (PUSCH).

In the present disclosure, it has been explained that the gNB and NR-UE form transmit beams, but not all the transmit beams need to be the same polarization. In a case where the gNB and NR-UE can generate transmit beam #1, transmit beam #2, transmit beam #3, and so forth, it may be configured so that transmit beam #1 is the first polarization, transmit beam #2 is the second polarization other than the first polarization, and so forth.

In addition, it has been explained that the gNB and NR-UE form receive beams, but not all the receive beams need to be the same polarization. In a case where the gNB and NR-UE can generate receive beam #1, receive beam #2, receive beam #3, and so forth, it may be configured so that receive beam #1 is the first polarization, receive beam #2 is the second polarization other than the first polarization, and so forth.

It has been explained that the gNB and NR-UE form transmit beams in the present disclosure, and the polarization of a transmit beam may be changed as time passes. For example, the first polarization is used for transmit beam #1 at the beginning and may be later changed to the second polarization other than the first polarization.

In addition, it has been explained that the gNB and NR-UE form receive beams, and the polarization of a receive beam may be changed as time passes. For example, the first polarization is used for receive beam #1 at the beginning and may be later changed to the second polarization other than the first polarization.

Note that "A and/or B" in the present specification may be interpreted as "A and B" or may also be interpreted as "A or B."

Although apparatuses in FIGS. 1A, 1B, 1C, 9, 10, and the like have been described as a configuration of NR apparatus such as gNB and NR-UE in the present specification, the configuration is not limited to these. For example, the NR apparatus may be an apparatus that includes "one or more or two or more transmission antennas" and "one or more or two or more reception antennas," transmits one or more modulation signals, and receives one or more modulation signals. The transmission antenna and the reception antenna may be a transmission and reception sharing antenna.

Further, in the present specification, the apparatus, the parts composing the apparatus, the signals, the symbols have been described with particular names, but the names are not limited to these, and the respective functions themselves are important.

The disclosure of Japanese Patent Application No. 2022-120648, filed on July 28, 2022, including the specification, drawings and abstract, is incorporated herein by reference in its entirety.

Industrial Applicability

The present disclosure is widely applicable to radio systems for transmitting modulation signals from one or more antennas, and is suitable for the application to, for example, a communication system using a single carrier and a communication system using a multi-carrier transmission scheme such as OFDM. The present disclosure is also applicable to wired communication systems such as, e.g., a power line communication (PLC) system, an optical communication system, and a digital subscriber line (DSL) system.

Reference Signs List

100 Control signal
101_i i-th data
102_i i-th transmitter

103_i i-th modulation signal

104 First processor

105_j j-th transmission signal

106_j Transmission panel antenna j

151_i Reception panel antenna i

152_i i-th received signal

153 Second processor

154 j-th signal-processing-subjected signal

155_j j-th receiver

156_j j-th control data

157_j j-th data

158 Third processor

200 Control signal

201 Data

202 Data symbol generator

203 Data symbol modulation signal

204 Reference signal generator

205 Rector sweep reference signal

206 Other-signal generator

207 Other signals

251 Processor

252 Frame configuration-based modulation signal

300 Control signal

301 Transmission signal

302 Distributor

303_1 First transmission signal

303_2 Second transmission signal

303_3 Third transmission signal

303_4 Fourth transmission signal

304_1, 304_2, 304_3, 304_4 Multiplier

305_1 Coefficient-multiplication-subjected first transmission signal

305_2 Coefficient-multiplication-subjected second transmission signal

305_3 Coefficient-multiplication-subjected third transmission signal

305_4 Coefficient-multiplication-subjected fourth transmission signal

306_1, 306_2, 306_3, 306_4 Antenna

400 Control signal

401_1, 401_2, 401_3, 401_4 Antenna

402_1 First received signal

402_2 Second received signal

402_3 Third received signal

402_4 Fourth received signal

403_1, 403_2, 403_3, 403_4 Multiplier

404_1 Coefficient-multiplication-subjected first received signal

404_2 Coefficient-multiplication-subjected second received signal

404_3 Coefficient-multiplication-subjected third received signal

404_4 Coefficient-multiplication-subjected fourth received signal

405 Coupler/combiner

406 Modulation signal

501 Constellation mapper

502 Serial/parallel converter

503 IFFT

601 Rx FE processing

602 FFT

603 Parallel/serial converter

604 Demapper

701 Rx FE processing

702 CP removal

703 FFT

704 Tone demapping
705 FDE
706 DFT
707 Demapper
801 Rx FE processing
802 Down-sampling and match filtering
803 TDE
804 CP removal
805 Demapper
x705_1 to x705_M Transmission-reception panel antenna 1 to transmission-reception panel antenna M
x805_1 to x805_m Transmission-reception panel antenna 1 to transmission-reception panel antenna m
1100_1 NR-UE
1101_i TRP
1120_1, 1121_1 Transmission beam
1130_1, 1131_i Received beam
1190_1, 3190_1, 3490_1 First frequency (band)
1190_2, 3190_2, 3490_2 Second frequency (band)
1203 Third frequency (band)
1251, 1261, 3151_i, 3152_1, 3451_1, 3452_i Frame
1301, 1351, 1401, 1451 Data
1302, 1402 Communication apparatus
1303, 1352, 1403, 1452, 5302, 5303 Modulation signal (group)
1304, 1314, 1353, 1404, 1414, 1453, 5300, 5601_i, 5801_i, 5811_i, 5901_i, 5911_i, 5921_i Control signal
1305, 1405 Transmission antenna (group)
1316, 1416 Reception antenna (group)
1354, 1454 Transmission/reception antenna (group)
1600 Control signal
1601 Transmission power controller
1602 Modulation signal
1603 Transmission-power-control-subjected modulation signal
2001_1, 2201_1_i, 2211_1_i, 2501_1_i, 2511_1_i, 2521_1_i Control signal
2002_1, 2202_1_i, 2212_1_i, 2502_1_i, 2512_1_i Reference signal
2103_1_1, 2203_1_i, 2503_1_i Downlink frame
2013_1_i, 2113_1_1, 2213_1_i, 2513_1_i Uplink frame
2701_1, 3001_1 First frequency block
2701_2, 3001_2 Second frequency block
3001_3 Third frequency block
3001_4 Fourth frequency block
2801, 2802, 3091, 3092 Frequency domain

**Claims**

1.  A communication apparatus, comprising:

    a communicator, which in operation, at a frequency band, transmits a first signal and receives the first signal in first time, under a situation where there is no signal transmission from another communication apparatus or a plurality of communication apparatuses, the frequency band being a band where at least one communication apparatus that performs processing of transmission and reception using the same frequency and the same time band is present and where the processing is possible; and
    a controller, which in operation, determines transmission power that is based on the received first signal, wherein the communicator, at the frequency band, transmits a second signal in second time to the another communication apparatus or a communication apparatus of the plurality of communication apparatuses, using the transmission power.

2.  The communication apparatus according to claim 1, wherein:

    the communicator, at the frequency band, transmits a third signal and receives the third signal in third time, and receives, in the third time, a fourth signal transmitted by the another communication apparatus or a communication apparatus of the plurality of communication apparatuses, and

the controller determines the transmission power that is based on the received first signal, the received third signal, and the received fourth signal.

3. The communication apparatus according to claim 2, wherein:

the communicator, at the frequency band, receives a fifth signal in fourth time, the fifth signal being transmitted by the another communication apparatus or a communication apparatus of the plurality of communication apparatuses under a situation where there is no signal transmission from the communication apparatus of the communicator or from the plurality of communication apparatuses other than the communication apparatus of the communicator and the communication apparatus of the plurality of communication apparatuses, and

the controller determines the transmission power that is based on the received first signal, the received third signal, the received fourth signal, and the received fifth signal.

4. The communication apparatus according to claim 1, wherein:

the communicator receives transmission power configuration information that is based on the received first signal, and

the controller determines the transmission power based on the transmission power configuration information.

5. The communication apparatus according to claim 1, wherein the communicator, at the frequency band, receives, in the second time, a sixth signal transmitted by the another communication apparatus or a communication apparatus of the plurality of communication apparatuses.

6. A communication method, comprising:

at a frequency band, transmitting a first signal and receiving the first signal, by a communication apparatus in first time, under a situation where there is no signal transmission from another communication apparatus or a plurality of communication apparatuses, the frequency band being a band where at least one communication apparatus that performs processing of transmission and reception using the same frequency and the same time band is present and where the processing is possible;

determining, by the communication apparatus, transmission power that is based on the received first signal; and

at the frequency band, transmitting, by the communication apparatus in second time, a second signal to the another communication apparatus or a communication apparatus of the plurality of communication apparatuses, using the transmission power.

FIG. 1A

EP 4 564 763 A1

FIG. 1B

FIG. 1C

FIG. 2

FIG. 3

EP 4 564 763 A1

FIG. 4

```
        501                    502                503
 ┌─────────────────┐   ┌─────────────────┐   ┌──────────┐
 │  Constellation  │   │  Serial/parallel │   │          │
─┤     mapper      ├──►│    converter     ├──►│   IFFT   ├──►
 └─────────────────┘   └─────────────────┘   └──────────┘
```

FIG. 5

FIG. 6

FIG. 7

FIG. 8

FIG. 9

FIG. 10

FIG. 11A

EP 4 564 763 A1

TRP1

| TDD OR FDD | DL/UL | TDD OR FDD |

FREQUENCY

NR-UE1

| TDD OR FDD | DL/UL | TDD OR FDD |

FREQUENCY

FIRST FREQUENCY
(BAND) 1190_1

FIG. 11B

FIG. 12A

EP 4 564 763 A1

EP 4 564 763 A1

TRP1

1251

FRAME (ADDRESSED TO NR-UE 1)

→ TIME

1261

NR-UE1

FRAME (ADDRESSED TO TRP 2) OR
FRAME (ADDRESSED TO TRP 1)

→ TIME

FIRST TIME

FIG. 12B

FIG. 12C

FIG. 12D

TRP1 — 1251 — FRAME (ADDRESSED TO NR–UE 1)

TIME

NR–UE1 — 1261 — FRAME (ADDRESSED TO TRP 2) OR FRAME (ADDRESSED TO TRP 1)

TIME

FIRST TIME

100

EP 4 564 763 A1

TRP1 — FRAME (ADDRESSED TO NR-UE 1) 1251

TIME

NR-UE1 — FRAME (ADDRESSED TO TRP 2) OR FRAME (ADDRESSED TO TRP 1) 1261

TIME

FIRST TIME

FIG. 12E

FIG. 13

FIG. 14

1101_1

TRP1

1501

NR−UE1

1100_1

FIG. 15A

EP 4 564 763 A1

TRP1

TDD OR FDD

→ FREQUENCY

NR-UE1

TDD OR FDD

→ FREQUENCY

FIRST FREQUENCY
(BAND) 1190_1

FIG. 15B

EP 4 564 763 A1

TRP1

1590_1

TDD OR FDD

TIME

NR-UE1

1591_1

TDD OR FDD

TIME

"SECOND TIME" OR
"FIRST TIME OR SECOND TIME"

FIG. 15C

EP 4 564 763 A1

TRP1

TDD OR FDD

FREQUENCY

NR-UE1

TDD OR FDD

FREQUENCY

SECOND FREQUENCY
(BAND) 1190_2

FIG. 15D

1601

1602 → TRANSMISSION POWER CONTROLLER → 1603

1600

FIG. 16

NR-UE

1701_1

FIRST FRAME OF UPLINK
MODULATION SIGNAL
USING FREQUENCY
(BAND) A

1701_2

SECOND FRAME OF
UPLINK MODULATION
SIGNAL USING
FREQUENCY (BAND) A

→ TIME

TRP

1711_1

FIRST FRAME OF
DOWNLINK MODULATION
SIGNAL USING
FREQUENCY (BAND) A

1711_2

SECOND FRAME OF
DOWNLINK MODULATION
SIGNAL USING
FREQUENCY (BAND) A

→ TIME

FIRST TIME

SECOND TIME

THIRD TIME

FOURTH TIME

FIG. 17

EP 4 564 763 A1

109

FIG. 18A

EP 4 564 763 A1

NR-UE

1801_1

FIRST FRAME OF UPLINK MODULATION SIGNAL
USING FREQUENCY (BAND) A

→ TIME

TRP

1811_1

FIRST FRAME OF DOWNLINK MODULATION SIGNAL
USING FREQUENCY (BAND) B

→ TIME

FIRST TIME

FIG. 18B

FIRST FRAME OF UPLINK MODULATION SIGNAL USING FREQUENCY (BAND) A

1801_1

FIRST FRAME OF DOWNLINK MODULATION SIGNAL USING FREQUENCY (BAND) B

1811_1

NR-UE

TRP

TIME

TIME

FIRST TIME

FIG. 18C

EP 4 564 763 A1

NR-UE

1801_1

FIRST FRAME OF UPLINK MODULATION SIGNAL
USING FREQUENCY (BAND) A

TIME

TRP

1811_1

FIRST FRAME OF DOWNLINK MODULATION
SIGNAL USING FREQUENCY (BAND) B

TIME

FIRST TIME

FIG. 18D

1101_1

TRP1

1901

NR-UE1

1100_1

FIG. 19

FIG. 20A

FIG. 20B

TRP1

2103_1_1

DOWNLINK FRAME

TIME

NR-UE1

2113_1_1

UPLINK FRAME

TIME 1

TIME 2

TIME

FIG. 21

TRP1

2201_1_1
CONTROL SIGNAL

2202_1_1
REFERENCE SIGNAL

2202_1_2
REFERENCE SIGNAL

2203_1_1
DOWNLINK FRAME

TIME

NR-UE1

2212_1_1
REFERENCE SIGNAL

2212_1_2
REFERENCE SIGNAL

2213_1_1
UPLINK FRAME

TIME

TIME 1 | TIME 2 | TIME 3 | TIME 4 | TIME 5

FIG. 22A

EP 4 564 763 A1

118

EP 4 564 763 A1

TRP1

2202_1_3

REFERENCE
SIGNAL

2202_1_4

REFERENCE
SIGNAL

2201_1_2

CONTROL
SIGNAL

2203_1_2

DOWNLINK FRAME

TIME

2212_1_3

2212_1_4

2211_1_2

2213_1_2

NR-UE1

REFERENCE
SIGNAL

REFERENCE
SIGNAL

CONTROL
SIGNAL

UPLINK FRAME

TIME

TIME 1

TIME 2

TIME 3

TIME 4

TIME 5

FIG. 22B

120

TRP1

| 2202_1_5 | 2201_1_3 | 2203_1_3 |
|---|---|---|
| REFERENCE SIGNAL | CONTROL SIGNAL | DOWNLINK FRAME |

TIME

NR-UE1  2212_1_5

2211_1_3

2213_1_3

| REFERENCE SIGNAL | CONTROL SIGNAL | UPLINK FRAME |
|---|---|---|

TIME

TIME 1     TIME 2     TIME 3

FIG. 22C

FIG. 23A

EP 4 564 763 A1

EP 4 564 763 A1

TRP1

| TDD OR FDD | DL | TDD OR FDD |

FREQUENCY

TRP2

| TDD OR FDD | UL | TDD OR FDD |

FREQUENCY

NR-UE1

| TDD OR FDD | DL/UL | TDD OR FDD |

FREQUENCY

FIRST FREQUENCY
(BAND) 1190_1

FIG. 23B

TRP1

2390_1

SIGNAL TRANSMISSION
ADDRESSED TO NR-UE 1

TIME

NR-UE1

2391_1

SIGNAL TRANSMISSION
ADDRESSED TO TRP 2

TIME

FIRST TIME

FIG. 23C

EP 4 564 763 A1

FIG. 24A

EP 4 564 763 A1

FIG. 24B

TRP1

| 2501_1_1 | 2502_1_1 | | 2502_1_2 | 2503_1_1 |
|---|---|---|---|---|
| CONTROL SIGNAL | REFERENCE SIGNAL | | REFERENCE SIGNAL | DOWNLINK FRAME |

TIME

TRP2

TIME

NR-UE1

| | | 2512_1_1 | 2512_1_2 | 2513_1_1 |
|---|---|---|---|---|
| | | REFERENCE SIGNAL | REFERENCE SIGNAL | UPLINK FRAME |

TIME

| TIME 1 | TIME 2 | TIME 3 | TIME 4 | TIME 5 |

FIG. 25A

TRP1

TRP2

NR-UE1

2503_1_2 — DOWNLINK FRAME
2501_1_2 — CONTROL SIGNAL
2502_1_4 — REFERENCE SIGNAL
2502_1_3 — REFERENCE SIGNAL
2521_1_2 — CONTROL SIGNAL
2521_1_1 — CONTROL SIGNAL
2513_1_2 — UPLINK FRAME
2511_1_2 — CONTROL SIGNAL
2512_1_4 — REFERENCE SIGNAL
2512_1_3 — REFERENCE SIGNAL

TIME
TIME
TIME

TIME 1   TIME 2   TIME 3   TIME 4   TIME 5   TIME 6   TIME 7

FIG. 25B

FIG. 25C

EP 4 564 763 A1

FIG. 26

FIG. 27A1

2701_1

2701_2

FIRST FREQUENCY BLOCK

SECOND FREQUENCY BLOCK

→ FREQUENCY

FIG. 27A2

FIG. 28A1

(a)

2701_1

2701_2

FIRST FREQUENCY BLOCK

SECOND FREQUENCY BLOCK

FREQUENCY

POWER

(b)

2810

FIRST-FREQUENCY-BLOCK SPECTRUM

2811_1

FIRST-FREQUENCY-BLOCK ADJACENT CHANNEL LEAKAGE POWER

2811_2

FIRST-FREQUENCY-BLOCK ADJACENT CHANNEL LEAKAGE POWER

2812_1

FIRST-FREQUENCY-BLOCK NEXT-ADJACENT CHANNEL LEAKAGE POWER

2812_2

FIRST-FREQUENCY-BLOCK NEXT-ADJACENT CHANNEL LEAKAGE POWER

FREQUENCY

POWER

(c)

2820

SECOND-FREQUENCY-BLOCK SPECTRUM

2821_1

SECOND-FREQUENCY-BLOCK ADJACENT CHANNEL LEAKAGE POWER

2821_2

SECOND-FREQUENCY-BLOCK ADJACENT CHANNEL LEAKAGE POWER

2822_1

SECOND-FREQUENCY-BLOCK NEXT-ADJACENT CHANNEL LEAKAGE POWER

2822_2

SECOND-FREQUENCY-BLOCK NEXT-ADJACENT CHANNEL LEAKAGE POWER

FREQUENCY

FREQUENCY DOMAIN 2801

FREQUENCY DOMAIN 2802

(a)

2701_1

FIRST FREQUENCY
BLOCK

2701_2

SECOND FREQUENCY
BLOCK

FREQUENCY

POWER

2810

2811_1

FIRST-
FREQUENCY-
BLOCK
SPECTRUM

2811_2

2812_1

FIRST-FREQUENCY-
BLOCK NEXT-ADJACENT
CHANNEL LEAKAGE
POWER

FIRST-FREQUENCY-
BLOCK ADJACENT
CHANNEL LEAKAGE
POWER

FIRST-FREQUENCY-
BLOCK ADJACENT
CHANNEL LEAKAGE
POWER

2812_2

FIRST-FREQUENCY-
BLOCK
NEXT-ADJACENT CHANNEL
LEAKAGE POWER

(b)

FREQUENCY

POWER

2820

2821_1

SECOND-
FREQUENCY-
BLOCK
SPECTRUM

2821_2

2822_1

SECOND-FREQUENCY-
BLOCK NEXT-ADJACENT
CHANNEL LEAKAGE
POWER

SECOND-
FREQUENCY-BLOCK
ADJACENT
CHANNEL LEAKAGE
POWER

SECOND-
FREQUENCY-BLOCK
ADJACENT
CHANNEL LEAKAGE
POWER

2822_2

SECOND-FREQUENCY-
BLOCK NEXT-ADJACENT
CHANNEL LEAKAGE
POWER

(c)

FREQUENCY

FREQUENCY
DOMAIN 2801

FREQUENCY
DOMAIN 2802

FIG. 28A2

FIG. 29A1

I (Real part)

Q (Imaginary part)

2951_3

2951_4

FIG. 29A2

FIG. 29B

FIG. 29C1

FIG. 29C2

(a)

3001_1 / 3001_2 / 3001_3 / 3001_4

| FIRST FREQUENCY BLOCK | SECOND FREQUENCY BLOCK | THIRD FREQUENCY BLOCK | FOURTH FREQUENCY BLOCK |

FREQUENCY

POWER

(b)

3012_1    3011_1    3010 FIRST-FREQUENCY-BLOCK SPECTRUM    3011_2    3012_2

3011_1, 3011_2: FIRST-FREQUENCY-BLOCK ADJACENT CHANNEL LEAKAGE POWER

3012_1, 3012_2: FIRST-FREQUENCY-BLOCK NEXT-ADJACENT CHANNEL LEAKAGE POWER

FREQUENCY

(c)

3022_1    3021_1    3020 SECOND-FREQUENCY-BLOCK SPECTRUM    3021_2    3022_2

3021_1, 3021_2: SECOND-FREQUENCY-BLOCK ADJACENT CHANNEL LEAKAGE POWER

3022_1, 3022_2: SECOND-FREQUENCY-BLOCK NEXT-ADJACENT CHANNEL LEAKAGE POWER

FREQUENCY

(d)

3032_1    3031_1    3030 THIRD-FREQUENCY-BLOCK SPECTRUM    3031_2    3032_2

3031_1, 3031_2: THIRD-FREQUENCY-BLOCK ADJACENT CHANNEL LEAKAGE POWER

3032_1, 3032_2: THIRD-FREQUENCY-BLOCK NEXT-ADJACENT CHANNEL LEAKAGE POWER

FREQUENCY

(e)

3042_1    3041_1    3040 FOURTH-FREQUENCY-BLOCK SPECTRUM    3041_2    3042_2

3041_1, 3041_2: FOURTH-FREQUENCY-BLOCK ADJACENT CHANNEL LEAKAGE POWER

3042_1, 3042_2: FOURTH-FREQUENCY-BLOCK NEXT-ADJACENT CHANNEL LEAKAGE POWER

FREQUENCY

FREQUENCY DOMAIN 3091    FREQUENCY DOMAIN 3092

FIG. 30

EP 4 564 763 A1

FIG. 31A

1101_1 — TRP1

3101_1_2

DL

DL

UL

3101_1_1

NR-UE1 — 1100_1

3102_1

TRP1

DL/UL

FREQUENCY

NR-UE1

DL/UL

FREQUENCY

FIRST FREQUENCY (BAND) 3190_1

FIG. 31B1

EP 4 564 763 A1

TRP1

3151_1

FRAME 1 (ADDRESSED TO NR-UE 1)

3151_2

FRAME 2 (ADDRESSED TO NR-UE 1)

TIME

NR-UE1

3152_1

FRAME 1 (ADDRESSED TO TRP 1)

TIME

FIRST TIME

FIG. 31B2

EP 4 564 763 A1

TRP1      DL/UL      DL

FREQUENCY

NR–UE1      DL/UL

FREQUENCY

FIRST FREQUENCY
(BAND) 3190_1

SECOND FREQUENCY
(BAND) 3190_2

FIG. 31C1

TRP1

FIRST FREQUENCY
(BAND) 3190_1

3151_1

FRAME 1 (ADDRESSED TO NR-UE 1)

SECOND FREQUENCY
(BAND) 3190_2

3151_2

FRAME 2 (ADDRESSED TO NR-UE 1)

TIME

NR-UE1

3152_1

FRAME 1 (ADDRESSED TO TRP 1)

TIME

FIRST TIME

FIG. 31C2

FIG. 32A

EP 4 564 763 A1

TRP1

DL/UL

→ FREQUENCY

TRP2

DL

→ FREQUENCY

NR-UE1

DL/UL

→ FREQUENCY

← FIRST FREQUENCY
(BAND) 3190_1 →

FIG. 32B1

TRP1

3151_1

| FRAME 1 (ADDRESSED TO NR-UE 1) |

→ TIME

TRP2

3151_2

| FRAME 2 (ADDRESSED TO NR-UE 1) |

→ TIME

NR-UE1

3152_1

| FRAME 1 (ADDRESSED TO TRP 1) |

→ TIME

←——————— FIRST TIME ———————→

FIG. 32B2

TRP1　　　　　　　　　DL/UL

→ FREQUENCY

TRP2　　　　　　　　　　　　　　　　DL

→ FREQUENCY

NR-UE1　　　　　　　　DL/UL

→ FREQUENCY

FIRST FREQUENCY
(BAND) 3190_1

SECOND FREQUENCY
(BAND) 3190_2

FIG. 32C1

FIG. 32C2

FIG. 32D1

EP 4 564 763 A1

TRP1    SECOND FREQUENCY (BAND) 3190_2

3151_1

FRAME 1 (ADDRESSED TO NR-UE 1)

TIME

TRP2    FIRST FREQUENCY (BAND) 3190_1

3151_2

FRAME 2 (ADDRESSED TO NR-UE 1)

TIME

NR-UE1

3152_1

FRAME 1 (ADDRESSED TO TRP 1)

TIME

FIRST TIME

FIG. 32D2

FIG. 33A

EP 4 564 763 A1

TRP1

⟶ FREQUENCY

TRP2

| DL |

⟶ FREQUENCY

TRP3

| DL |

⟶ FREQUENCY

NR–UE1

| DL/UL |

⟶ FREQUENCY

FIRST FREQUENCY
(BAND) 3190_1

FIG. 33B1

EP 4 564 763 A1

154

TRP2

3151_2

FRAME 2 (ADDRESSED TO NR-UE 1)

→ TIME

TRP3

3151_3

FRAME 3 (ADDRESSED TO NR-UE 1)

→ TIME

NR-UE1

3152_1

FRAME 1 (ADDRESSED TO TRP 1)

→ TIME

FIRST TIME

FIG. 33B2

TRP1

FREQUENCY

TRP2

DL

FREQUENCY

TRP3

DL

FREQUENCY

NR-UE1

DL/UL

FREQUENCY

FIRST FREQUENCY
(BAND) 3190_1

SECOND FREQUENCY
(BAND) 3190_2

FIG. 33C1

EP 4 564 763 A1

TRP2   FIRST FREQUENCY
       (BAND) 3190_1

3151_2

FRAME 2 (ADDRESSED TO NR-UE 1)

→ TIME

TRP3   SECOND FREQUENCY
       (BAND) 3190_2

3151_3

FRAME 3 (ADDRESSED TO NR-UE 1)

→ TIME

NR-UE1

3152_1

FRAME 1 (ADDRESSED TO TRP 1)

→ TIME

FIRST TIME

FIG. 33C2

EP 4 564 763 A1

1101_1

TRP1

3401_1

DL

UL

UL

3402_1_2

3402_1_1

NR-UE1

1100_1

FIG. 34A

TRP1

DL/UL

→ FREQUENCY

NR-UE1

DL/UL

→ FREQUENCY

FIRST FREQUENCY
(BAND) 3490_1

FIG. 34B1

EP 4 564 763 A1

TRP1

3451_1

FRAME 1 (ADDRESSED TO NR-UE 1)

→ TIME

NR-UE1

3452_1

FRAME 1 (ADDRESSED TO TRP 1)

3452_2

FRAME 2 (ADDRESSED TO TRP 1)

→ TIME

FIRST TIME

FIG. 34B2

FIG. 34C1

TRP1

3451_1 FRAME 1 (ADDRESSED TO NR-UE 1)

FIRST FREQUENCY (BAND) 3490_1

3452_1 FRAME 1 (ADDRESSED TO TRP 1)

TIME

NR-UE1

SECOND FREQUENCY (BAND) 3490_2

3452_2 FRAME 2 (ADDRESSED TO TRP 1)

FIRST TIME

TIME

FIG. 34C2

FIG. 35A

FIG. 35B1

EP 4 564 763 A1

TRP1

3451_1

FRAME 1 (ADDRESSED TO NR-UE 1)

TIME

NR-UE1

3452_1

FRAME 1 (ADDRESSED TO TRP 1)

3452_2

FRAME 2 (ADDRESSED TO TRP 2)

TIME

FIRST TIME

FIG. 35B2

FIG. 35C1

TRP1 | 3451_1
FRAME 1 (ADDRESSED TO NR-UE 1)

→ TIME

NR-UE1

FIRST FREQUENCY
(BAND) 3490_1 | 3452_1
FRAME 1 (ADDRESSED TO TRP 1)

SECOND FREQUENCY
(BAND) 3490_2 | 3452_2
FRAME 2 (ADDRESSED TO TRP 2)

→ TIME

FIRST TIME

FIG. 35C2

FIG. 36A

EP 4 564 763 A1

TRP1

DL

→ FREQUENCY

TRP2

→ FREQUENCY

TRP3

→ FREQUENCY

NR-UE1

DL/UL

→ FREQUENCY

FIRST FREQUENCY
(BAND) 3490_1

FIG. 36B1

EP 4 564 763 A1

TRP 1

3451_1

| FRAME 1 (ADDRESSED TO NR-UE 1) |
|---|

→ TIME

NR-UE1

3452_2

| FRAME 2 (ADDRESSED TO TRP 2) |
|---|

3452_3

| FRAME 3 (ADDRESSED TO TRP 3) |
|---|

→ TIME

FIRST TIME

FIG. 36B2

FIG. 36C1

EP 4 564 763 A1

EP 4 564 763 A1

TRP 1

3451_1

FRAME 1 (ADDRESSED TO NR-UE 1)

TIME

NR-UE1

FIRST FREQUENCY
(BAND) 3490_1

3452_2

FRAME 2 (ADDRESSED TO TRP 2)

SECOND FREQUENCY
(BAND) 3490_2

3452_3

FRAME 3 (ADDRESSED TO TRP 3)

TIME

FIRST TIME

FIG. 36C2

FIG. 37

EP 4 564 763 A1

## INTERNATIONAL SEARCH REPORT

| | International application No. |
|---|---|
| | **PCT/JP2023/010005** |

**A. CLASSIFICATION OF SUBJECT MATTER**

*H04L 27/36*(2006.01)i; *H04W 52/38*(2009.01)i
FI: H04L27/36; H04W52/38

According to International Patent Classification (IPC) or to both national classification and IPC

**B. FIELDS SEARCHED**

Minimum documentation searched (classification system followed by classification symbols)

H04L27/36; H04W52/38

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | US 2019/0260485 A1 (LG ELECTRONICS INC.) 22 August 2019 (2019-08-22) paragraphs [0057]-[0061], [0209]-[0220], fig. 1, 20 | 1, 6 |
| A | JP 2015-97415 A (LG ELECTRONICS INC) 21 May 2015 (2015-05-21) paragraph [0107], fig. 8 | 1-6 |
| A | JP 2007-27881 A (NEC CORP) 01 February 2007 (2007-02-01) paragraphs [0030]-[0044], fig. 1, 2 | 1-6 |

☐ Further documents are listed in the continuation of Box C.   ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **26 May 2023** | **06 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/010005**

| Patent document cited in search report | | | Publication date (day/month/year) | Patent family member(s) | | | Publication date (day/month/year) |
|---|---|---|---|---|---|---|---|
| US | 2019/0260485 | A1 | 22 August 2019 | WO | 2018/074708 | A1 | |
| JP | 2015-97415 | A | 21 May 2015 | US | 2012/0314640 | A1 | |
| | | | | paragraph [0121], fig. 8 | | | |
| | | | | WO | 2011/105856 | A2 | |
| | | | | EP | 2525618 | A2 | |
| | | | | CN | 102771173 | A | |
| | | | | KR | 10-2012-0130100 | A | |
| JP | 2007-27881 | A | 01 February 2007 | (Family: none) | | | |

**EP 4 564 763 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018152723 A
- JP 2022120648 A